Europäisches Patentamt

European Patent Office

Office européen des brevets

(19)

(11) EP 1 195 684 A1

(12) EUROPEAN PATENT APPLICATION
published in accordance with Art. 158(3) EPC

(43) Date of publication:
10.04.2002 Bulletin 2002/15

(51) Int Cl.⁷: G06F 12/14, G09C 1/00, H04L 9/00

(21) Application number: 01946961.8

(22) Date of filing: 26.01.2001

(86) International application number:
PCT/JP01/00525

(87) International publication number:
WO 01/55858 (02.08.2001 Gazette 2001/31)

(84) Designated Contracting States:
AT BE CH CY DE DK ES FI FR GB GR IE IT LI LU
MC NL PT SE TR
Designated Extension States:
AL LT LV MK RO SI

(30) Priority: 26.01.2000 JP 2000016469

(71) Applicants:
• Sony Corporation
Tokyo 141-0001 (JP)
• Sony Computer Entertainment Inc.
Tokyo 107-0052 (JP)

(72) Inventors:
• Asano, Tomoyuki
Shinagawa-ku, Tokyo 141-0001 (JP)

• Ishibashi, Yoshihito
Shinagawa-ku, Tokyo 141-0001 (JP)
• Shirai, Taizo
Shinagawa-ku, Tokyo 141-0001 (JP)
• Akishita, Toru
Shinagawa-ku, Tokyo 141-0001 (JP)
• Tanaka, Makoto,
Sony Computer Entertainment Inc.
Tokyo 107-0052 (JP)

(74) Representative: Turner, James Arthur et al
D. Young & Co.,
21 New Fetter Lane
London EC4A 1DA (GB)

(54) DATA RECORDING/REPRODUCING DEVICE AND SAVED DATA PROCESSING METHOD, AND PROGRAM PROVIDING MEDIUM

(57) A record reproducing player and save data processing methods capable of insuring security of save data are provided. Save data is stored in a recording device, encrypted with the use of a program's individual encryption key, e.g., a content key, or a save data encryption key created based the content key, and when reproducing the save data a decryption process is conducted on it with the use of the save data decryption key particular to the program. Furthermore, it is made possible to create save data encryption keys based on a variety of restriction information, such as performing the storing and reproducing of the save data by conducting encryption and decryption on the save data with the save data encryption keys and decryption keys created with the use of a record reproducing player's individual key or a user's password.

FIG. 69

EP 1 195 684 A1

**Description**

Technical Field

The present invention relates to a data record reproducing player and save data processing methods as well as program-providing media, and more particularly, to data record reproducing players and save data processing methods to prevent save data from being used and or tampered with by illegal third parties in process to have the save data of programs stored in a recording device and reproduced with the use of a data record reproducing player. (data processing system) capable of reproducing the content of game programs, etc., thereby securing save data.

Furthermore, the present invention relates to a data record reproducing player and save data processing methods capable of reproducing a variety of content of voices, images, games, programs, etc. available by means of recording media such as DVDs, CDs, etc., or over CATV, the Internet, or wired and/or wireless satellite communications means by a reproducing player owned by a user, and of storing save data such as game data in execution in an exclusive recording device such as a memory card, hard disk, or CD-R, etc., or reproducing stored save data with enough security and various use restrictions appended to it.

Background Art

Of late, a variety of software data such as game programs, voice data, image data, and document creation programs, etc. (referred to as "content" hereinafter), are distributed through networks such as the Internet, or by means of recording media such as DVDs, CD. These distribution contents can be stored in recording devices, such as memory cards, hard disks, etc. incorporated into recording/reproducing equipment such as PCs (personal computers) and game machines, etc. owned by users, and can be used after being reproduced from storage media.

The main composition elements of a memory card device used in conventional information equipment such as conventional video game machines and PCs include control means for controlling operations, connectors to be connected to the slots provided on the main unit of information equipment connected to control means, and nonvolatile memories and others for retaining data, connected to control means. A nonvolatile memory provided in the memory card is composed of an EEPROM, Flash memory, etc.

A variety of content of data retained in such a memory card, or other various programs are retrieved from a nonvolatile memory as commanded by a user at least either directly from game machines or PCs, etc. used as reproducing equipment, or through input means connected thereto, according to user's commands, and are reproduced with information equipment, or through a display unit or speaker, etc. connected thereto.

With regard to most of software contents such as game programs, music data, and image data, distribution rights are possessed of generally by creators and/or vendors. Accordingly, in distributing such contents some kind of security measures are generally taken: given restrictions on usage, so that only legal users are allowed to use software, thereby preventing against illegal copying, etc.

One of the ways to put use restrictions on users, is to have distribution contents processed with encryption. This means that in distributing a variety of contents of encrypted voice data, image data, and game programs, etc. over the Internet by way of example, decrypting means or decryption keys to decrypt encrypted contents distributed, are granted to those who are confirmed as legal users.

Encrypted data can be translated into decrypted data (ordinary messages) usable for ordinary use by means of decrypting processes according to a given procedure. This conventional method of data encryption and decryption has been well known since long; use of encryption keys for an information encrypting process, and decryption keys for a decryption process

Among various kinds of data encryption/decryption methods with use of encryption keys and decryption keys there is a so-called shared-key encryption method as an example. In the shared key encryption method the same keys are used in common both for data encryption processing and data decryption processing, which are granted to legal users as shared keys in common for encryption and decryption processes, preventing those having no shared keys from accessing data. The DES (Data Encryption Standard) is representative of this method.

Encryption keys and decryption keys used in the encryption and decryption processes are made available with application of unidirectional functions such as a Hash function based on a password for example. The unidirectional function is a function to make it extremely difficult to obtain the input backward from the output. For example, a unidirectional function is applied to a password determined by a user as an input based on the output, of which encryption keys and decryption keys are created. It is practically impossible to search for the password or original data backward with the encryption keys and decryption keys thus obtained. In this way it is made possible to have encrypted contents decrypted by legal users only with the use of such an encryption method.

There is a so-called public key encryption method, in which different algorithms are applied to processes made with an encryption key in encrypting, or to processes made with a decryption key in decrypting. The public key encryption method employs a public key unidentified users are allowed to access; a document to be encrypted for a particular individual is encrypted with a public key issued by that particular individual. The document encrypted with the public key can be decrypted with none other than the secret key corresponding to the public key used in the encryption processes. The secret key being owned by the only individual who issued the public key, documents encrypted with the public key can be decrypted by none other than a person having the secret key. The RSA (Rivest-Shamir-Adleman) encryption is representative of the public key encryption method.

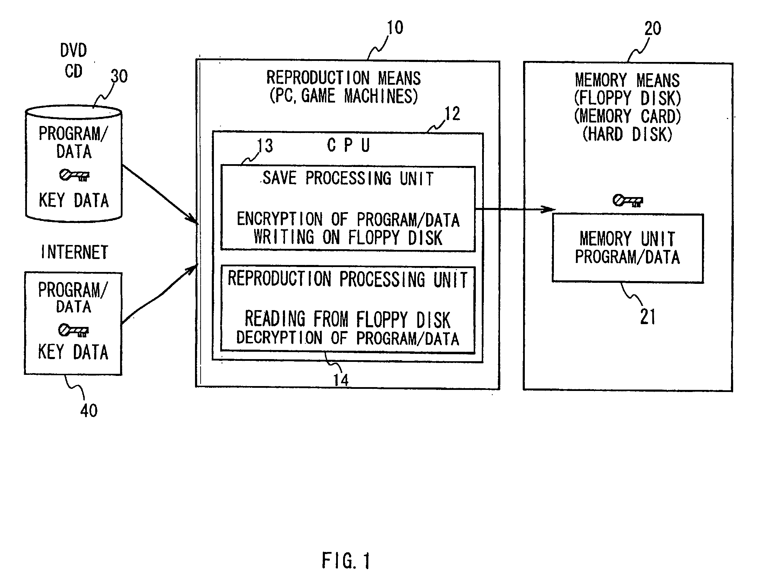

Furthermore, generally there exist a plurality of accessible recording devices in a reproducing player, e. g., DVDs, CDs, memory cards, and hard disks, etc. In case a user selects and executes a game program, for example, from among the plurality of devices, it is necessary for the user to confirm the content of content data inside each recording device by accessing each device one after another to determine a device storing the content to reproduce before executing the program so that it takes some time until the programs is set in motion. A simple explanation is given on the structure of a data processing system utilizing content, referring to Fig. 1.

Fig. 1 shows a typical example of structure where a program, voice data, or image data, etc. (content) obtained from data providing means such as a DVD, CD 30, over the Internet 40 is reproduced with reproducing means 10 such as a PC (personal computer), or game machine, and where the data obtained from the DVD, CD 30, or over the Internet 40, etc. can be retained in retaining means 20 such as a floppy disk, memory card, and hard disk.

The content of a program, voice data, and image data, etc. are encrypted and offered to users having reproducing means 10. Legal users obtain encrypted data as well as key data or encryption and decryption keys.

The reproducing means 10 having a CPU12 executes a reproduction process on input data at a reproduction processing unit 14. The reproduction processing unit 14 executes a decryption process on encrypted data to reproduce the program or content of the voice data or image data supplied.

A legal user performs a save process on the content of a program and data supplied to a retaining means 20 for reuse. The reproducing means 10 has a save processing unit 13 in it to execute a save process to save a content. The save processing unit 13 applies an encryption process to the data retained in the retaining means 20 in order to prevent against illegal use of the data, and executes a saving process.

A content encryption key is used in encrypting the content. The save processing unit 13 encrypts the content using a content encryption key, which are retained in the memory unit 21 of the retaining means 20 of an FD (floppy disk), memory card, or hard disk.

When a user retrieves a stored content from the retaining means 20, the encrypted data is retrieved from the retaining means 20 to be decrypted in the reproduction processing unit 14 of the reproducing means 10 with a key for decrypting the content, or a decryption key. Then, the resultant data decrypted from the encrypted data is reproduced.

In such a case that a content being executed in the reproducing means 10 is a game program, etc., when the game program is once interrupted and resumed in a given period of time, the going state of the game at the time of interruption is saved or stored in a recording device, which is retrieved at the time of resuming it. This so-called save data recording/reproducing process has been practiced hitherto.

The save data storage structure of recording/ reproducing equipment such as existing game machines and personal computers are built, for example, into a reproducing player, or employs a structure where save data is stored in an externally installable recording medium such as a memory card, floppy disk, game cartridge, or hard disk. However, no special security structure is formed for the security of save data, and so data is saved with use of common specifications in case of game application programs for example.

Accordingly, it happens that save data saved with a reproducing player A is used for a different game program, or doctored, or overwritten, with almost no consideration given to the security of save data.

Description of the Invention

A data record reproducing player in this invention offers a structure enabling save data to be secured. For instance, the save data of a certain game program is stored in a recording device, at least either encrypted based on the information particular to the game program. Or, it is stored in a recording device based on the information particular to the reproducing player. Due to these methods, use of save data can be limited to a particular device or program. Making use of the methods hitherto described, the present invention offers data record reproducing players and save data processing methods capable of ensuring the security of save data.

As the first aim of the present invention, a data record reproducing player capable of reproducing a program content comprises a recording device to record save data regarding the program content, an encryption processing unit to execute an encrypting process on save data stored in the recording device and a decrypting process on save data retrieved from the recording device for reproduction, an input means to enter use restriction information on save data, and a control unit to determine an encryption process method or a decryption process method with regard to save data. The control unit has a structure which; determines an encryption processing method for save data to be stored in the recording device according to use restriction information input from the input means, and which also, determines a decryption processing method for save data to be reproduced from the recording device, according to use restriction information on the save data set up in a data management file stored in a memory unit or recording device the control unit can access. And the encryption processing unit executes an encryption process or a decryption process on save data using different encryption keys in accordance with an encryption processing method or a decryption processing method determined by the control unit.

Furthermore, in a data record reproducing player employing the present invention, use restriction information on the save data is a program restriction permitting the use of save data on the premise of the identity (the sameness) of a content program, and the data management file is structured as a table storing program restriction information oriented to the identifier of a content program. The encryption processing unit, when use restriction information input from the input means or use restriction information on the setup of the data management file is input or set up with program restriction, executes an encryption process or a decryption process on save data with the use of the content program's individual encryption key, or a program's individual save data encryption key created based on at least either the content program's individual encryption key or individual information, and when use restriction information input from the input means, or use restriction information on the setup of the data management file is input or set up without a program restriction, executes an encryption process or a decryption process on save data with the use of a system-shared encryption key stored in the data record reproducing player, or a shared save data encryption key created based on the system-shared encryption key.

Furthermore, in a data record reproducing player employing the present invention, the content program's individual encryption keys are the content key $K_{con}$ stored in the header unit of the content data including the content program, and the system-shared encryption keys are system signature keys $K_{sys}$ stored commonly in a plurality of different data record reproducing players.

Furthermore, in a data record reproducing player employing the present invention, use restriction information on the save data is a reproducing player restriction permitting the use of save data on the premise of the identity (the sameness) of a data record reproducing player, and the data management file is structured as a table storing reproducing player restriction information oriented to the identifier of a content program. The encryption processing unit, when use restriction information input from the input means, or use restriction information on the setting of the data management file is input or set up with a reproducing player restriction, executes an encryption process or a decryption process on save data with the use of the data recording/ reproducing player's individual encryption key, or the data record reproducing player's individual save data encryption key created based on at least either the data record reproducing player's individual encryption key or individual information, and when use restriction information input from the input means, or use restriction information on the setting of the data management file is input or set up without a program restriction, executes an encryption process or a decryption process on save data with the use of a system-shared encryption key stored in the data record reproducing player, or a shared save data encryption key created based on the system-shared encryption key.

Furthermore, in a data record reproducing player employing the present invention, the data record reproducing player's individual encryption key is a signature key $K_{dev}$ stored in the data record reproducing player, and the system-shared encryption key is the system signature key $K_{sys}$ stored commonly in a plurality of data record reproducing players.

Furthermore, in a data record reproducing player employing the present invention, use restriction information on the save data is a user restriction permitting the use of save data on the premise of the identity (the sameness) of a user, and the data management file is structured as a table storing user restriction information oriented to the identifier of a content program. The encryption processing unit, when use restriction information input from the input means, or use restriction information on the setting of the data management file is input or set up with a user restriction, executes an encryption process or decryption process on save data with the use of a password input from the input mean, or a user's individual save data encryption key created based on the password, and when use restriction information input from the input means, or use restriction information on the setting of the data management file is input or set up without user restriction, executes an encryption process or a decryption process on save data with the use of a system-shared encryption key stored in the data record reproducing player, or a shared save data encryption key created based on the system-shared encryption key.

Furthermore, in a data record reproducing player employing the present invention; the system-shared encryption key is a system signature key $K_{sys}$ stored commonly in a plurality of record reproducing players.

Furthermore, the second indirect aim of the present invention consists in the save data processing method in a data record reproducing player capable of reproducing a program content, which comprises an encryption processing mode decision step to determine an encryption processing mode to store save data in a recording device, according to use restriction information input from input means, and an encryption key selection step to select an encryption key used in an encryption process according to an encryption process mode determined at the encryption process mode decision step. The encryption process of save data is performed with the use of the encryption key selected at the encryption key selection step.

Furthermore, in one mode of save data processing method employing the present invention, use restriction information on the save data is a program restriction permitting the use of save data on the premise of the identity (the sameness) of a content program, and so, in case there is a restriction on a program in the encryption key selection step, the content program's individual encryption key, or a program's individual save data encryption key created based on at least either a content program's individual encryption key or individual information, is selected as an encryption key suitable for an encryption process, and in case there is no restriction on a program in the encryption key selection step, a system-shared encryption key stored in the data recording/reproducing, or a shared save data encryption key created based on the system-shared encryption key, is selected as an encryption key suitable for an encryption process.

Furthermore, in one mode of save data processing method employing the present invention, in the save data processing method, use restriction information on the save data is a reproducing player restriction permitting the use of save data on the premise of the identity (the sameness) of a data record reproducing player, and so, in case there is a restriction on a record reproducing player in the save data processing method, the data record reproducing player's individual encryption key or a record reproducing player's individual save data encryption key created based on at least either the encryption key or information particular to a data record reproducing player, is selected as an encryption key suitable for an encryption process at the encryption key selection step, and in case there is no restriction on a record reproducing player at the encryption key selection step, a system-shared encryption key stored in the data record reproducing player or a shared save data encryption key created based on the system-shared encryption key is selected as an encryption key suitable for an encryption process.

Furthermore, in one mode of save data processing method employing the present invention, use restriction information on the save data is a user restriction to enable a user to use save data on the premise of the identity (the sameness) of a user, and so, in case there is a user restriction, the user's input password or the user's individual save data encryption key created based on the password is selected as the encryption key suitable for a process encryption, and in case there is no restriction on a record reproducing player (a user restriction), a system-shared encryption key stored in the data record reproducing player, or a shared save data encryption key created based on an encryption key in common for the system is selected as the encryption key to be used for an encryption process.

The third indirect aim of the present invention consists in a save data processing method in a data record reproducing player capable of reproducing a program content, which comprises, a decryption process mode decision step to determine a decryption process mode of save data to reproduce from a recording device, according to use restriction information set by a data management file stored in a retaining means or recording device, and a decryption key selection step to select a decryption key, according to the decryption process mode determined at the decryption process mode decision step. The decryption process of save data is performed with the use of the decryption key selected at the decryption key selection step.

Furthermore, in one mode of save data processing method employing the present invention, use restriction information on the save data is a restriction on programs, permitting the use of save data on the premise of the identity (the sameness) of a content program and so, in case there is a restriction on programs at the decryption key selection step, the content program's individual encryption key or a program's individual save data decryption key created based on at least either an encryption key or information particular to a content program, is selected as a decryption key suitable for a decryption process, and in case there is no restriction on programs at the decryption key selection step, a system-shared encryption key stored in the data record reproducing player or a shared save data decryption key created based on the system-shared encryption key is selected as the decryption key suitable for a decryption process.

Furthermore, in one mode of save data processing method employing the present invention, use restriction information on the save data is a restriction on data record reproducing players, permitting the use of save data on the premise of the identity (the sameness) of a reproducing player, and so, in case there is a restriction on a record reproducing player at the decryption key selection step, the data record reproducing player's individual encryption key or a record reproducing player's individual save data decryption key created based on at least either an encryption key or information particular to a data record reproducing player, is selected as the decryption key suitable for a decryption process at the decryption key selection step, and in case there is no restriction on reproducing players at the decryption key selection step, a system-shared encryption key stored in the data record reproducing player or a shared save data decryption key created based on the system-shared encryption key is selected as the decryption key suitable for a decryption process.

Furthermore, in one mode of save data processing method employing the present invention, use restriction information on the save data is restriction on users allowed the use of save data on the premise of the identity (the sameness) of a user, and so, at the decryption selection step, in case there is a restriction on users, a user-input password, or a user's individual save data decryption key created based on the password is selected as the decryption key suitable for a decryption process, and in case there is no restriction on users, the system-shared encryption key stored in the data record reproducing player or a shared save data decryption key created based on the system-shared encryption key is selected as the decryption key suitable for a decryption process.

Furthermore, the fourth indirect aim of the present invention consists in program-offering media offering a computer program to execute a save data process in a data record reproducing player capable of reproducing a program content on a computer system, wherein; the computer program is characterized in comprising; an encryption processing mode determining step to determine an encryption processing mode to store save data in a recording device, according to use restriction information input from input means, an encryption key selection step to select an encryption key to be used in an encryption process according to the encryption processing mode determined at the encryption processing mode determining step, and a step to execute an encryption process on save data with the use of the encryption key selected at the encryption key selection step.

Furthermore, the fifth indirect aim of the present invention consists in program-offering media offering a computer program to execute a save data process in a data record reproducing player capable of reproducing a program content on a computer system, wherein, the computer program is characterized in comprising; a decryption processing mode determining step to determine a decryption processing mode to reproduce save data from a recording device, according to the set use restriction information set up by the data management file stored in a retaining means or recording device, a decryption key selection step to select a decryption key used in a decryption process according to the decryption processing mode determined at the decryption processing mode determining step, and a step to execute a decryption process on save data with the use of the decryption key selected at the decryption key selection step.

Program-offering media relating to the present invention are media to offer computer programs in formats a computer can read to a general-purpose computer system capable of executing various program codes for example. The media include memory media such as CDs, FDs, and MOs, or a conveying medium such as a network, setting no restriction on modes.

A structural or functional synergistic relationship between a computer program and program offering-media is assumed in such program-offering media in order to have given functions of a computer program realized on a computer system. In other words, a synergistic operation is made available on a computer system by installing a computer program into a computer system through the program-offering media, thereby succeeding in obtaining functional effects similar to those in the other direct aims of the present invention.

Other objects, features, and advantages of the present invention will be seen from the detailed explanation based on the embodiments and the attached drawings of the present invention described later.

As described hitherto, the data record reproducing player and save data processing methods of the present invention are designed such that save data can be stored into a recording device, encrypted with the use of an encryption key particular to a certain program, e. g., a content key, or a save data encryption key created based on the content key, and furthermore that save data is stored into a recording device, encrypted by creating a save data encryption key with the use of a record reproducing player's individual key, e.g., a record reproducing player signature key, so that save data can be used only when the identity of a program or record reproducing player is secured, preventing against the use and tampering of save data by illegal third parties.

Furthermore, according to the data record reproducing player and save data processing methods of the present invention, it is made possible to store save data with the use of a user's individual save data encryption key created based on the user's individual information such as an input password. Also, it is possible to store save data in a recording device, with use restriction appended to the save data, employing various use restrictions such as the identity of a program, record reproducing player and user in adequate combination, thereby enabling the storage and reproduction processing of save data with a high level of security.

Brief Description of the Drawings

Fig. 1 is a diagram showing the structure of a conventional data processing system.
Fig. 2 is a diagram showing the structure of a data processing device the present invention is applied to.
Fig. 3 is a diagram showing the structure of a data processing device the present invention is applied to.
Fig. 4 is a diagram showing the data format of contents data on media and communication route.
Fig. 5 is a diagram showing usage policy contained in the header in contents data.
Fig. 6 is a diagram showing block information contained in the header in contents data.
Fig. 7 is a diagram showing the method for creating a digital signature using DES.
Fig. 8 is a diagram showing the method for creating a digital signature using triple DES.
Fig. 9 is a diagram describing the states of triple DES.
Fig. 10 is a diagram showing the method for creating a digital signature partially using triple DES.
Fig. 11 is a diagram showing the processing flow in the creation of a digital signature.

Fig. 12 is a diagram showing the processing flow in the verification of a digital signature.

Fig. 13 is a diagram describing the processing sequence of mutual authentication processing using the symmetric key encryption technology.

Fig. 14 is a diagram describing a public key certificate.

Fig. 15 is a diagram describing the processing sequence of mutual authentication using the asymmetric key encryption technology.

Fig. 16 is a diagram showing the processing flow of an encryption processing using the elliptic curve cryptogram.

Fig. 17 is a diagram showing the processing flow of a decryption processing using the elliptic curve cryptogram.

Fig. 18 is a diagram showing a data retaining state on the record reproduction player.

Fig. 19 is a diagram showing a data retaining state on the recording device.

Fig. 20 is a diagram showing the mutual authentication processing flow between the record reproduction player and recording device.

Fig. 21 is a diagram showing the relationship between the master keys of record reproduction players and the corresponding key blocks of recording devices.

Fig. 22 is a diagram showing the processing flow in downloading contents.

Fig. 23 is a diagram describing the method for creating the check Value A: $ICV_a$.

Fig. 24 is a diagram describing the method for creating the check value B: $ICV_b$.

Fig. 25 is a diagram describing the method for creating the total check value and record reproduction player's individual check value.

Fig. 26 is a diagram showing the format (use limitation information = 0) of contents data retained in the recording device.

Fig. 27 is a diagram showing the format (use limitation information = 1) of contents data retained in the recording device.

Fig. 28 is a diagram showing the processing flow in the reproduction processing of contents.

Fig. 29 is a diagram describing the method for executing commands in the recording device.

Fig. 30 is a diagram describing the method for executing commands in the contents storage processing in the recording device.

Fig. 31 is a diagram describing the method for executing commands in the contents reproduction processing in the recording device.

Fig. 32 is a diagram describing the structure of the format type 0 of the contents data format.

Fig. 33 is a diagram describing the structure of the format type 1 of the contents data format.

Fig. 34 is a diagram describing the structure of the format type 2 of the contents data format.

Fig. 35 is a diagram describing the structure of the format type 3 of the contents data format.

Fig. 36 is a diagram describing the processing method for creating the contents check value ICVi in the format type 0.

Fig. 37 is a diagram describing the processing method for creating the contents check value ICVi in the format type 1.

Fig. 38 is a diagram describing the processing method for creating the total check value and record reproduction player's individual check value in the format types 2 and 3.

Fig. 39 is a diagram showing the processing flow of the contents downloading processing in the format types 0 and 1.

Fig. 40 is a diagram showing the processing flow of the contents downloading processing in the format types 2.

Fig. 41 is a diagram showing the processing flow of the contents downloading processing in the format types 3.

Fig. 42 is a diagram showing the processing flow of the contents reproduction processing in the format type 0.

Fig. 43 is a diagram showing the processing flow of the contents reproduction processing in the format type 1.

Fig. 44 is a diagram showing the processing flow of the contents reproduction processing in the format type 2.

Fig. 45 is a diagram showing the processing flow of the contents reproduction processing in the format type 3.

Fig. 46 is a diagram (1) describing the creation and verification method of check values on the part of a contents creator and contents verifier.

Fig. 47 is a diagram (2) describing the creation and verification method of check values on the part of a contents creator and contents verifier.

Fig. 48 is a diagram (3) describing the creation and verification method of check values on the part of a contents creator and contents verifier.

Fig. 49 is a diagram describing the method to create a variety of keys individually using the master key.

Fig. 50 is a diagram (Example 1) showing a processing example on the part of a contents provider and a user regarding the method for creating various keys individually using the master key.

Fig. 51 is a diagram (Example 2) showing a processing example on the part of a contents provider and a user regarding the method for creating various keys individually using the master key.

Fig. 52 is a diagram describing the structure for executing use limitation by choosing a master key.

Fig. 53 is a diagram (Example 3) showing a processing example on the part of a contents provider and a user regarding the method for creating various keys individually using the master key.

Fig. 54 is a diagram (Example 4) showing a processing example on the part of a contents provider and a user regarding the method for creating various keys individually using the master key.

Fig. 55 is a diagram (Example 5) showing a processing example on the part of a contents provider and a user regarding the method for creating various keys individually using the master key.

Fig. 56 is a diagram showing the processing flow to store encryption keys the triple DES is applied to, using the single DES algorithm.

Fig. 57 is a diagram showing contents reproduction processing flow (Example 1) on a basis of priority order.

Fig. 58 is a diagram showing contents reproduction processing flow (Example 2) on a basis of priority order.

Fig. 59 is a diagram showing contents reproduction processing flow (Example 3) on a basis of priority order.

Fig. 60 is a diagram describing the structure for executing decryption (decompression) of compressed data in the contents reproduction processing.

Fig. 61 is a diagram showing the contents structure example (1).

Fig. 62 is a diagram showing the reproduction processing flow in the contents structure example (1).

Fig. 63 is a diagram showing the contents structure example (2).

Fig. 64 is a diagram showing the reproduction processing flow in the contents structure example (2).

Fig. 65 is a diagram showing the contents structure example (3).

Fig. 66 is a diagram showing the reproduction processing flow in the contents structure example (3).

Fig. 67 is a diagram showing the contents structure example (4).

Fig. 68 is a diagram showing the reproduction processing flow in the contents structure example (4).

Fig. 69 is a diagram describing the creation and storage processing of save data.

Fig. 70 is a diagram showing the processing flow regarding the storage processing example (Example 1) of save data.

Fig. 71 is a diagram showing the data management file structure (Example 1) used in the storage and reproduction processing of save data.

Fig. 72 is a diagram showing the processing flow regarding the reproduction processing example (Example 1) of save data.

Fig. 73 is a diagram showing the processing flow regarding the storage processing example (Example 2) of save data.

Fig. 74 is a diagram showing the processing flow regarding the reproduction processing example (Example 2) of save data.

Fig. 75 is a diagram showing the processing flow regarding the storage processing example (Example 3) of save data.

Fig. 76 is a diagram showing the data management file structure (example 2) used in the storage and reproduction of save data.

Fig. 77 is a diagram showing the processing flow regarding the reproduction processing example (Example 3) of save data.

Fig. 78 is a diagram showing the processing flow regarding the storage processing example (Example 4) of save data.

Fig. 79 is a diagram showing the processing flow regarding the reproduction processing example (Example 4) of save data.

Fig. 80 is a diagram showing the processing flow regarding the storage processing example (Example 5) of save data.

Fig. 81 is a diagram showing the data management file structure (Example 3) used in the storage and reproduction of save data.

Fig. 82 is a diagram showing the processing flow regarding the reproduction processing example (Example 5) of save data.

Fig. 83 is a diagram showing the processing flow regarding the storage processing example (Example 6) of save data.

Fig. 84 is a diagram showing the data management file structure (Example 4) used in the storage and reproduction of save data.

Fig. 85 is a diagram showing the processing flow regarding the reproduction processing example (Example 6) of save data.

Fig. 86 is a diagram describing the contents illegitimate user revocation structure.

Fig. 87 is a diagram showing the processing flow (Example 1) of the contents illegitimate user revocation.

Fig. 88 is a diagram showing the processing flow (Example 2) of the contents illegitimate user revocation.

Fig. 89 is a diagram describing the security chip structure (Example 1).

Fig. 90 is a diagram showing the processing flow in the manufacturing method of the security chips.

Fig. 91 is a diagrams describing the security chip structure (Example 2).

Fig. 92 is a diagram showing the processing flow in the data write processing in the security chip (Example 2).

Fig. 93 is a diagram showing the processing flow in the write data check processing in the security chip (Example 2).

Best Mode for Carrying Out the Invention

Explanation is given on the modes of carrying out the present invention in the following order:

(1) Structure of data pocesing system
(2) Content data format
(3) Outline of encryption processdx applicable to a data processing device of the present invention
(4) Structure of storage data of a recording/reproducing player
(5) Structure of storage data of a recording device
(6) Mutual authentication processing between a recording/ reproducing player and recording device
(6-1) Outline of mutual authentication processing
(6-2) Switching of key blocks in mutual authentication
(7) Downloading Processing from Record Reproducing player to Recording Device
(8) Reproducing process on recording device storage information in a record reproducing player
(9) Key exchange process after mutual authentication
(10) Downloading Processing to Recording Device and Reproducing Processing of Downloaded Content Oriented to Plurality of Content Data Formats and Each Format
(11) Check values (ICV) creation processing mode at a content provider
(12) Structure of encryption processing key creation based on master keys
(13) Controlling of the intensity of encryption in encryption processing
(14) Program start-up processing based on start-up priority in usage policy in content data
(15) Content structure and reproduction (decompression) processing
(16) Creation of save data and storing it in a recording device, and reproducing process
(17) Structure of revocation of illegal equipment
(18) Structure and manufacturing method of security chips

(1) Structure of Data Processing Device

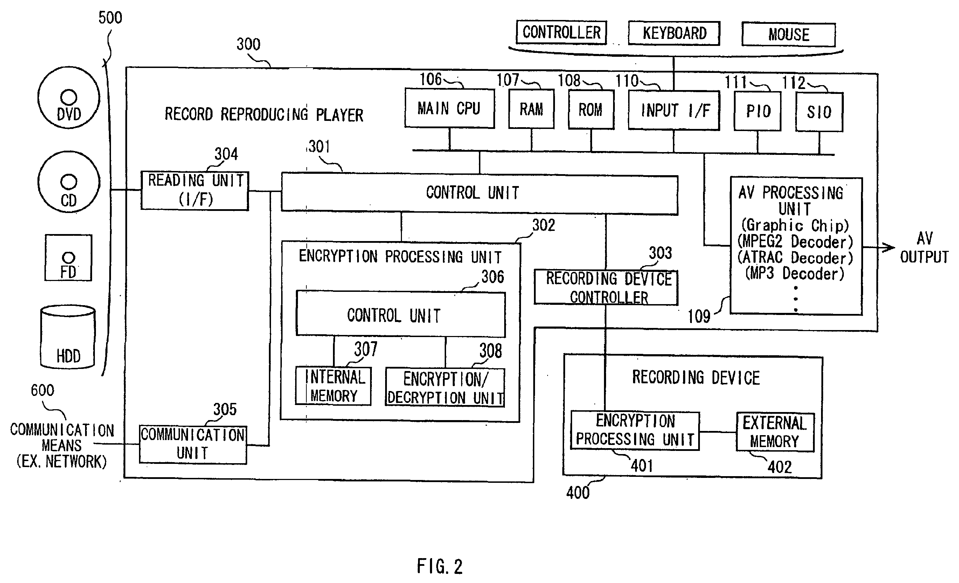

Fig. 2 is the block diagram of an overall structure relating to an embodiment of a data processing system of the present invention. A data processing system of the present invention comprises a reproducing player 300 and a recording device 400 as main structural elements.
A record reproducing player 300 is made up of a personal computer (PC: Personal Computer) or a game machine, etc. by way of an example. As shown in Fig. 2, the record reproducing player 300 comprises a control unit 301 executing supervising control including communication control with a recording device 400 in an encryption process in the record reproducing player 300, record reproducing player's encryption processing unit 302 controlling the whole processing, recording device 400 connected to the record reproducing player, recording device controller 303 performing writing-in by executing an authentication process, read unit 304 reading out at least data from media 500 such as DVDs, etc., and communication unit 305 conducting transmission and reception of data with the outside.
The record reproducing player 300 executes the downloading of content data to a recording device 400 and the reproducing of content data from the recording device 400 under the control of the control unit 301. The recording device 400 incorporates an external memory 402 composed of recording media preferably detachable to the record reproducing player 300, for example, nonvolatile memories such as a memory card, an EEPROM, a flash memory, hard disk, and RAM with battery.
Comprising a read unit 304 as an interface capable of retrieving content data stored in recording media such as a DVD, CD, FD, or HDD shown left, and a communication unit 305 as an interface capable of capturing content data distributed from a network such as the Internet, the record reproducing player 300 captures contents from the outside.
Having an encryption processing unit 302, the record reproducing player 300 executes authentication process, encryption process, decryption process, and furthermore data check process in downloading into the recording device 400 content data input from the outside through the read unit 304 and communication unit 305, or in reproducing content data from the recording device 400. The encryption processing unit 302 consists of a control unit 306 controlling the whole of the encryption processing unit 302, an internal memory 307 designed to retain information such as keys used in encryption process and not to permit data inside being retrieved easily from the outside, and an encryption/decryption unit 308 to perform an encryption process, decryption process, creation and check of data for authentication, and generation of random numbers.
The control unit 301 transmits an initialization command to the recording device 400 via a recording device controller 303 when the recording device 400 is installed onto the record reproducing player 300, or conducts a variety of intermediate processes such as mutual authentication, check value checking, encryption, and decryption, etc. carried out between the encryption/decryption unit 308 of the record reproducing player's encryption processing unit 302 and the encryption/ decryption unit 406 of the recording device's encryption processing unit 401.
Each of these processes will be described in detail in later paragraphs.
Comprised of an encryption processing control unit 306, internal memory 307, and encryption/decryption unit 308, the encryption processing unit 302 is a processing unit to execute authentication, encryption, decryption plus check processes and so on, as mentioned before.

The encryption processing unit 306 is a control unit to execute the control of an authentication process and the whole processes regarding encryption processes in the record reproducing player 300 such an encryption/ decryption process and to execute the control of the whole processes regarding encryption processes, for example, the setup of an authentication complete flag at the time of completion of an authentication process carried out between the record reproducing player 300 and recording device 400, various processes conducted in the encryption/decryption unit 308 of the record reproducing player's encryption processing unit 302, for example, execution commands for a check value generation process with respect to content data to download and reproduce, and execution commands, etc. to have various keys created.

The internal memory 307 stores keys or identification data and others necessary to various processes such as an mutual authentication process, check value collating process, encryption and decryption processes conducted in the record reproducing player 300.

In downloading content data input from the outside to a recording device 400, or reproducing the content data retrieved from the recording device 400, the encryption/ decryption unit 308 performs, with the use of key data and others stored in the internal memory 307, processes such as authentication process, encryption process, decryption process, and creation and check of given check values and digital signatures, check of data, and creation of random numbers.

Retaining important information such as encryption keys, the internal memory 307 of the record reproducing player's encryption processing unit 302 has to be so structured that information stored in it is very hard to be retrieved from the outside. So the encryption processing unit 302 is produced of semiconductor chips having a construction hard to be accessed from the outside and a multi-layer structure, with the memory inside sandwiched by dummy layers such as aluminum layers, or located at the lowest part. As well, it is structured as a tamper-resistant memory having characteristics such as a narrow range of operating voltage as well as a narrow frequency width, thereby making it hard for data to be retrieved illegally from the outside. This structure will be explained in detail later.

In addition to those encryption processing functions, the record reproducing player 300 is provided with a central calculation processing unit (main CPU: Central Processing Unit) 106, Random Access Memory (RAM) 107, Read Only Memory (ROM) 108, AV processing unit 109, input interface 110, parallel I/O (PIO) interface 111, and serial I/O (SIO) interface 112.

The central calculation processing unit (main CPU: Central Processing Unit) 106, Random Access Memory (RAM) 107, and Read Only Memory (ROM) 108 constitute a structural unit functioning as the control system of the record reproducing player 300 itself, which mainly functions as a reproduction processing unit to execute the reproduction of data decrypted with the record reproducing player's encryption processing unit 302. For instance, the central calculation processing unit (main CPU: Central Processing Unit) 106 performs controls with regard to the reproduction and execution of contents, such as outputting decrypted content data retrieved from a recording device under the control of the control unit 301 to an AV processing unit 109.

The RAM 107 is used as the main memory for various processes in the CPU106 as well as the working area for processes performed by the main CPU106. The ROM 108 stores basic programs and others to start up an OS and others driven from the main CPU106.

Concretely, comprising a data compression/ decompression processing mechanism of, for example, an MPEG2 decoder, ATRAC decoder, MP3 decoder, and others, the AV processing unit 109 executes a process to output data to data output equipment such as a display or speaker (not shown in figure) incorporated into or connected to a record reproducing player per se.

The input interface 110 outputs to the main CPU106 input data entered by various input means such as a controller, keyboard, and mouse connected to it. The main CPU106 performs processes according to instructions given by a user through the controller based on e.g., a game program being executed.

The parallel (PIO) I/O interface 111 and serial I/O (SIO) interface 112 are used as connection interfaces with memory units and portable electronic equipment such as memory cards, game cartridges.

The main CPU106 also conducts the controlling in retaining in the recording device 400 save data such as setup data with respect to games and others during execution. As to the retained data transferred to the control unit 301 during this processing the control unit 301 lets the encryption processing unit 302 execute, as required, an encryption process on save data, and lets the recording device 400 store the encrypted data. These encryption processes will be described in detail later.

A recording device 400 is produced of a recording medium such as a memory card preferably detachable to a record reproducing player 300 as mentioned before. The recording device comprises an encryption processing unit 401 and external memory 402.

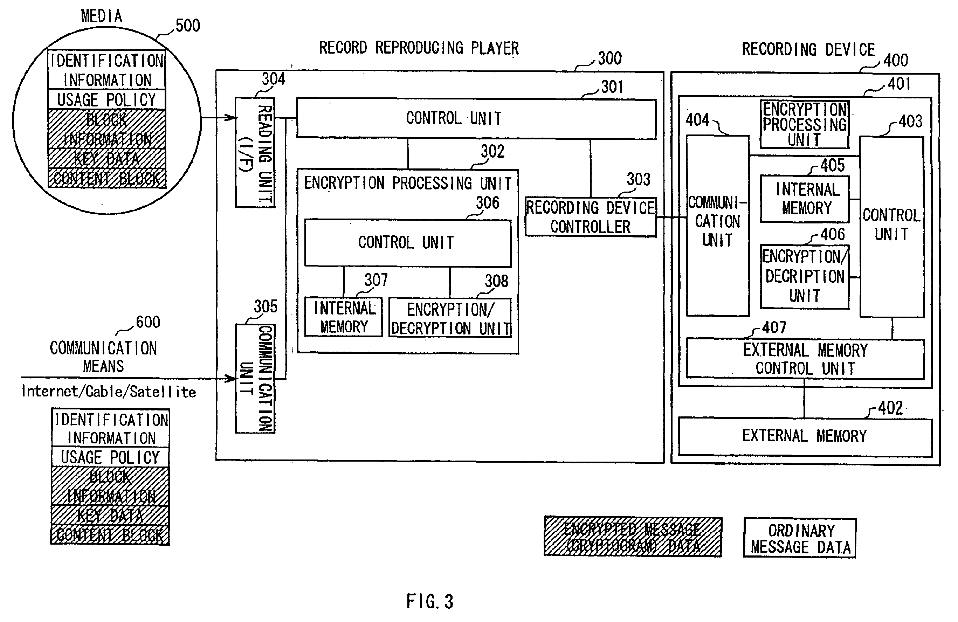

The recording device's encryption processing unit 401 is a processing unit to execute such processes as mutual authentication, encryption, decryption as well as data check processing between the record reproducing player 300 and recording device 400 during downloading content data from the record reproducing player 300, or reproducing content data from the recording device 400 to the record reproducing player 300. This processing unit comprises a control unit, internal memory, and encryption/decryption unit as does the encryption processing unit of the record reproducing player 300. Their details are shown in Fig. 3. As mentioned previously, the external memory 402, composed of the nonvolatile memory of a flash memory of e.g., an EEPROM, a hard disk, and RAM with battery, and others stores encrypted contents and others.

The Fig. 3 shows the outline of a data structure input from media 500 being content-providing means by which a data processing system employing the present invention receives data, and communication means 600 as well as the configuration as its center regarding encryption processes in the record reproduction player 300 and recording device 400 receiving contents from those content-providing means 500, 600.

The media 500 include optical disk media, magnetic disk media, magnetic tape media, and semiconductors, etc. The communication means 600 are means capable of performing data communication, such as the Internet communication, cable communication, satellite communication.

A record reproducing player 300 in Fig. 3 checks data entered by means of the media 500 and communication means 600: content-providing means, or contents conforming to a given format, which is then saved in a recording device 400.

Content data shown in the area of the media 500 and communication means 600 in Fig. 3, comprises the following structural units:

* Identification information: identification information as an identifier of content data
* Usage policy: Usage policy including structural information of content data, e.g., the size of a header constituting content data, size of a content portion, format version, content type indicating whether a content is a program or data, and furthermore, use restriction information defining whether the use of a content is permitted to the sole equipment with which downloading is made, or any other equipment.
* Block information: block information composed of the number of blocks, size of blocks, encryption flags indicating the existence of encryption.
* Key data: key data composed of encryption keys to encrypt the block information, or a content key to encrypt content blocks, etc.
* Content blocks: content blocks composed of program data, music, and image data, etc.: actual subjects of reproduction.

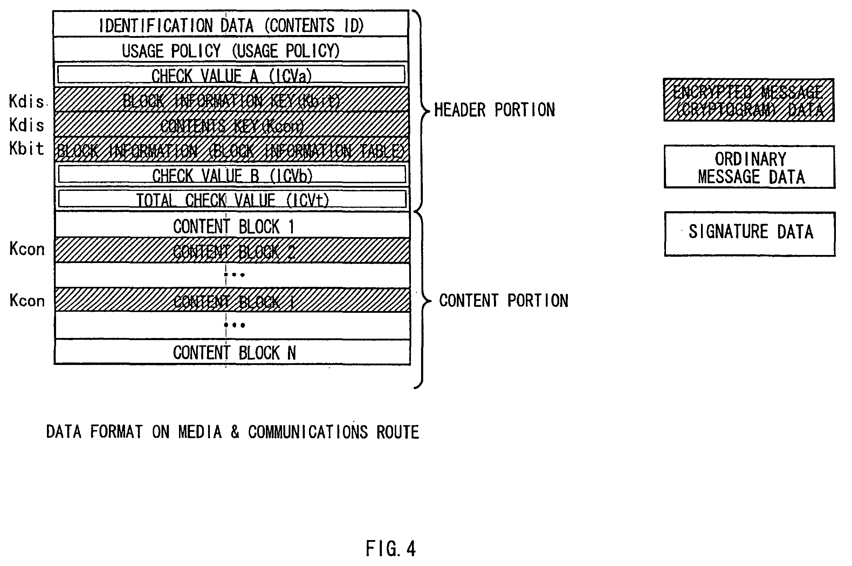

Detailed explanation will be given on content data later in this document, referring to Fig. 4 and other figures.

Encrypted with a content key (called "content key (Kcon)" hereinafter), content data is offered to a record reproducing player 300 from the media 500, communication means 600. A content can be stored into the external memory of the recording device 400 by means of the record reproducing player 300.

For instance, the recording device 400 retains in the external memory 402 a content contained in content data, and block information contained as header information of the content data, and a variety of key information, e.g., a content key Kcon; all encrypted, with the use of a recording device's individual key (called "storage key (Kstr)" hereinafter) stored in the internal memory 405 inside the recording device. In downloading content data from the record reproducing player 300 into the recording device 400, or in reproducing content data stored inside the recording device 400 with the record reproducing player 300, a given procedure is required, such as a mutual authentication process between devices, encryption and decryption process of content data. These processes will be explained in detail later in this document.

As shown in Fig. 3, a recording device 400 comprises an encryption processing unit 401 and external memory 402, and the encryption processing unit 401, control unit 403, communication unit 404, internal memory 405, encryption/ decryption unit 406, and external memory control unit 407.

Taking charge of overall encryption processing, the recording device 400 comprises the recording device's encryption processing unit 401 to control the external memory 402, to interpret commands from the record reproducing player 300 to execute such processes, and the external memory 402 to retain a content.

The record device's encryption processing unit 401 comprises a control unit 403 to control the whole of the recording device's encryption processing unit 401, communication unit 404 to transmit/receive data to/from a record reproducing player 300, internal memory 405 to retain information on key data for encryption processing, etc., and is designed so that it is hard for data to be retrieved from the outside, and an encryption/decryption unit 406 to perform an encryption process, decryption process, creation and check of data for authentication, and generation of random numbers, etc., and the external memory control unit 407 to read and write data stored in the external memory 402.

The control unit 403 is a control unit to execute the control relating to the overall encryption processes such as authentication process, and encryption/decryption process carried out in the recording device 400. For example, it sets up an authentication complete flag when an authentication process is completed between the record reproducing player 300 and recording device 400, and controls the whole of encryption processes, various processes carried out in the encryption/decryption unit 406 of the encryption processing unit 401 such as downloading, or executes commands for a check value creation process with respect to reproducing content data, and executes commands for creation of each of various key data and others.

Composed of a memory having a plurality of blocks, the internal memory 405, to be described in detail later, has a structure storing plural pairs of key data, identification data and other data needed in various processes such as a mutual authentication process, check value check process, and encryption/decryption process, carried out in the recording device 400.

As with the internal memory 307 of the record reproducing player's encryption processing unit 302 described before, the internal memory 405 of the recording device's encryption processing unit 401 retains so important information such as encryption keys that it must be constructed such that it is very hard to retrieve such information from the outside illegally. So the encryption processing unit 401 of the recording device 400 is produced of semiconductor chips having a construction hard to be accessed from the outside, and has a multi-layer structure, with a memory inside sandwiched by dummy layers such as aluminum layers, or located at the lowest part. As well, it is structured as a tamper-resistant memory having characteristics such as a narrow range of operating voltage as well as a narrow frequency width, thereby making it hard for data to be retrieved illegally from the outside. The record reproducing player's encryption processing unit 302 can be software so designed that secret information such as keys can not be leaked out easily.

The encryption/decryption unit 406 executes processes such as data checking, encryption, decryption, creation and checking of given check values and digital signatures, and generation of random numbers using key data and others stored in the internal memory 405 when downloading content data from the record reproducing player 300, reproducing content data stored in the external memory 402 of the recording device 400, and during mutual authentication between the record reproducing player 300 and recording device 400.

Connected to the recording device controller 303 of the record reproducing player 300, the communication unit 404 conducts the downloading and reproducing of content data, or communication of transfer data between the record reproducing player 300 and recording device 400 in mutual authentication under the control of the control unit 301 of the record reproducing player 300 or the control unit 403 of the recording device 400.

(2) Content Data Formats

Next, explanation is given on a data format of data stored in the media 500 in a system employing the present invention, or distributed over data communication means 600, referring to Figs. 4 to 6.

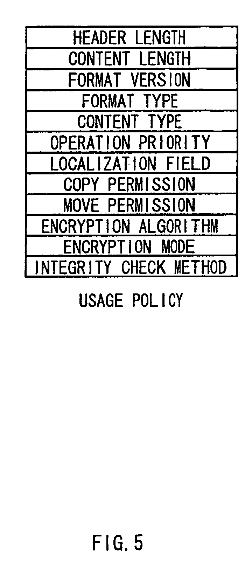

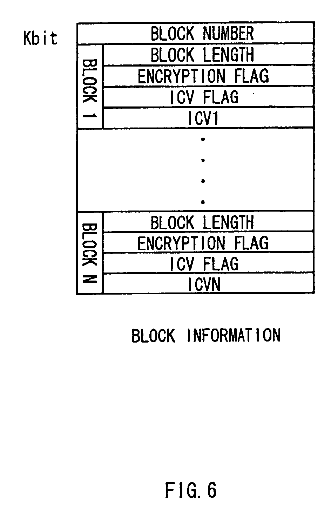

The structure shown in Fig. 4 is the format of the whole of content data, and that in Fig. 5 the details of the "usage policy" constituting a portion of the header unit of content data, and that in Fig. 6 the details of "block information" constituting a portion of the header unit of content data.

Explanation is given on a representative example of a data format applied to a system employing the present invention. The system of the present invention can use a plurality of different data formats, for example, a format suitable for game programs, and a format suitable for real-time processing such as music data, etc. The modes of these formats will be described in detail in a later chapter "(10) Downloading and Reproducing Processes Suitable for Plurality of Content Data Formats and Each Format".

In the data format shown in Fig. 4, the gray portions contain encrypted data, the double-line frames check data against tampering, the remaining white portions data of unencrypted ordinary sentences. The encryption key of each encrypted portion is located at the left margin. There exist encrypted data and unencrypted data mixed at each block (content block data) of content portions in the example shown in Fig. 4. These modes differ according to content data, and all the content block data contained in the data can be encrypted as well.

As shown in Fig 4, the data format is divided into a header part and content part, the header part consisting of a content ID (Content ID), usage policy, check value A (Integrity Check Value A ("ICVa" hereinafter), block information key (Block Information Table Key ("Kbit" hereinafter), content key Kcon, block information (Block Information Table ("BIT" hereinafter), check value B (ICVb), and total check value (ICVt), and the content part of a plurality of content blocks (e.g., an encrypted content and unencrypted content).

The content ID here means an individual identifier (Content ID) to identify a content. As shown in detail in Fig. 5, the usage policy is composed of header size indicating the size of the header portion (Header Length), content size (Content Length) indicating the size of the content portion, format version (Format Version) indicating the version information on the format, format type (Format Type) indicating the type of the format, content type (Content Type) indicating whether a content saved in the content portion is a program or data, operation priority order information (Operation Priority) defining the operation priority order when a content type is a program, use restriction information (Localization Field) indicating whether a content downloaded in accordance with this format can be used with the only equipment that downloaded the content, or with any other similar equipment, copy restriction information (Copy Permission) indicating whether the content downloaded in accordance with this format can be copied from the equipment that downloaded the content to any other similar equipment, move restriction information (Move Permission) indicating whether the content downloaded in accordance with this format can be moved from the equipment that downloaded the content to any other similar equipment, encryption algorithm (Encryption Algorithm) indicating an algorithm used for encrypting a content block inside the content portion, encryption mode (Encryption Mode) indicating the usage method of the algorithm used for encrypting the content inside a content portion, and check method (Integrity Check Method) indicating a method for creating check values.

The data items recorded in the above usage policy are just examples, and so a variety of other usage policy information can be recorded according to the mode of the corresponding content data. For example, as explained in detail in the chapter "(17) Structure of Revocation of Illegal Equipment", it is possible to employ a structure to eliminate the use of a content with illegal equipment by means of collation at the beginning of use by recording the identifiers of illegal record reproducing players as data.

The check values A (ICVa) is the check value for checking a content ID and the tampering of the usage policy. It is a check value for part of data, functioning as a partial check value, and not the whole of content data. The data block information key Kbit is used to encrypt block information, and the content key Kcon a content block. The block information key Kbit and content key Kcon are encrypted with a distribution key (Distribution key "Kdis" hereinafter, to be described later) on the media 500 and communication means 600.

The details of the block information are shown in Fig. 6. All the block information in Fig. 6 is data encrypted with a block information key Kbit as can be understood from Fig. 4. As shown in Fig. 6, the block information consists of the number of content blocks (Block Number) indicating the number of content blocks and the N pieces of content block information. The content block information is composed of the block size (Block Length), encryption flag (Encryption Flag) indicating whether or not it is encrypted, and check object flag (ICV Flag) indicating whether it is necessary to calculate a check value, and content check value (ICVi).

The content check value is a check value to check the tampering of each content block. A concrete example of the creation method of content check values will be explained in the chapter "(10) Downloading Processing to Recording Device and Reproducing Processing of Downloaded Content Oriented to Plurality of Content Data Formats and Each Format". The block information key Kbit encrypting the block information is further encrypted with a distribution key Kdis.

Explanation on the data format in Fig. 4 continues. The check value B (ICVb) is a check value to check the tampering of a block information key Kbit, content key Kcon and block information. It is a check value for a part of data, and not for the whole of the content data, and so functions as a part check value. The total check value ICVt is a check value to check ICVa, ICVb, check value of ICVi (if set) of each content block, part check values for them, or to check the tampering of all the data being subject to checking.

In Fig. 6 block size, encryption flags, check object flags can be set up as desired, but rules can be set up to some extent. For example, the encrypted message area and ordinary message area can be made a repetition of fixed size; or all the content data can be encrypted; or block information BIT can be compressed. Also a content key Kcon can be included into content blocks, not into the header part in order to make a content key Kcon different for every content block. Further detailed explanation will be given on an example of the content data format in the chapter "(10) Downloading Processing to Recording Device and Reproducing Processing of Downloaded Content Oriented to Plurality of Content Data Formats and Each Format".

(3) Outline of Encryption Process Applicable to Data Processing Device of Present Invention

Explanation is given on the modes of various encryption processes applied to a data processing system employing the present invention. This item "(3) Outline of encryption processing applicable to a data processing system" explains the outline of modes of the encryption processes based on which various processes in the data processing system of the present invention are explained in the chapters, for example a) an authentication process between a record reproduction player and recording device, b) a downloading process with respect to a recording device of a content, and c) a reproducing process of a content stored in a recording device. A concrete process performed between a record reproducing player 300 and recording device 400 will be explained in detail in the chapters (4) and the following by process by process.

(3-1) Message authentication by means of a shared key encryption method

First, explanation is given on the process of creating check data against tampering with use of the shared key encryption method. The tamper check data is data, attached to data by which to check tampering, for checking tampering and authenticating a creator.

The following data is created as tamper checking data: Each of the check values A, B, and total check value in the double-lined frame in the data structure explained in Fig. 4, and the content check values, etc. stored in each block of the block information shown in Fig. 6.

An example of using the DES in the shared key encryption method is explained here as an example of a processing method of creation of digital signature data. In addition to the DES, it is also possible to utilize Fast Encipherment Algorithm (FEAL) (NTT), and Advanced Encryption Standard (AES) (a next standard encryption in USA) etc. as a process in a similar shared key encryption method.

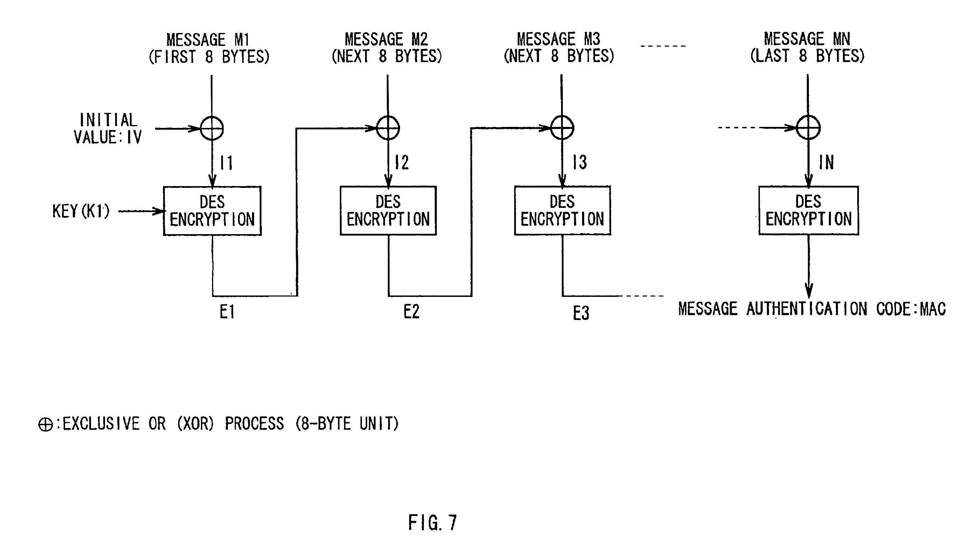

Explanation is given on a general method to create digital signatures using DES, referring to Fig. 7. First, prior to the creation of digital signatures, a message, a subject of a digital signature, is divided into the units of 8 bytes. (Each divided message is defined as "M1, M2, ···, MN" hereinafter). Then, the initial value (IV, hereinafter) and M1 are calculated based on the exclusive or (XOR) logic, (of which resultant is defined as "I1"). Next, put I1 into a DES encryption unit, and encrypt it with a key ("K1" hereinafter), (of which output is defined as "E1"). Subsequently, calculate E1 and M2 based on the XOR logic, and the output of which I2 is put into the DES encryption unit to be encrypted with the key K1 (output: E2). Apply an encryption process to the rest of all the divided messages, repeating this procedure. The "EN" output last is a digital signature. This value is generally called "Message Authentication Code: MAC", which is used in checking the tampering of the messages. The method for chaining encrypted messages in this way is called Cipher Block Chaining (CBC).

The MAC value output in the creation example in Fig 7, can be used as each of the check value A, B, and total check value in the double-lined frames in the data structure shown in Fig, 4, and the content check values ICV1 to ICVN stored in each block inside the block information shown in Fig. 6. When checking this MAC value, a checker creates an MAC value with a similar method as used for the creation. If the same value is obtained, the checking is judged as successful.

In the example shown in Fig. 7, the initial value IV is added to the first 8-byte message 1 based on the XOR logic, however, it also is possible to take a structure where the initial value is not calculated based on the XOR logic.

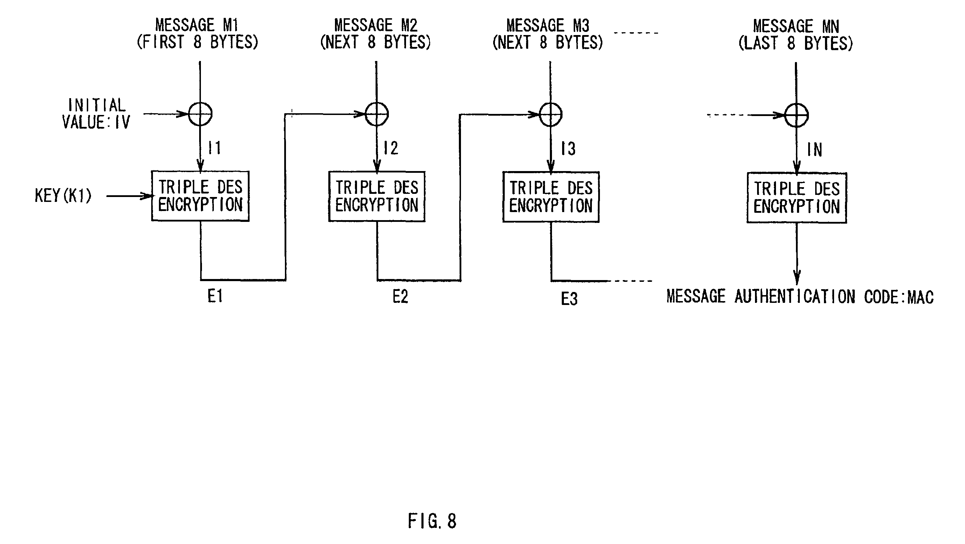

As against the MAC value creation method shown in Fig. 7, the diagram in Fig. 8 shows the processing structure of an MAC value creation method with enhanced security. Shown in Fig. 8 is an example where an MAC value is created using a triple DES, replacing a single DES in Fig. 7.

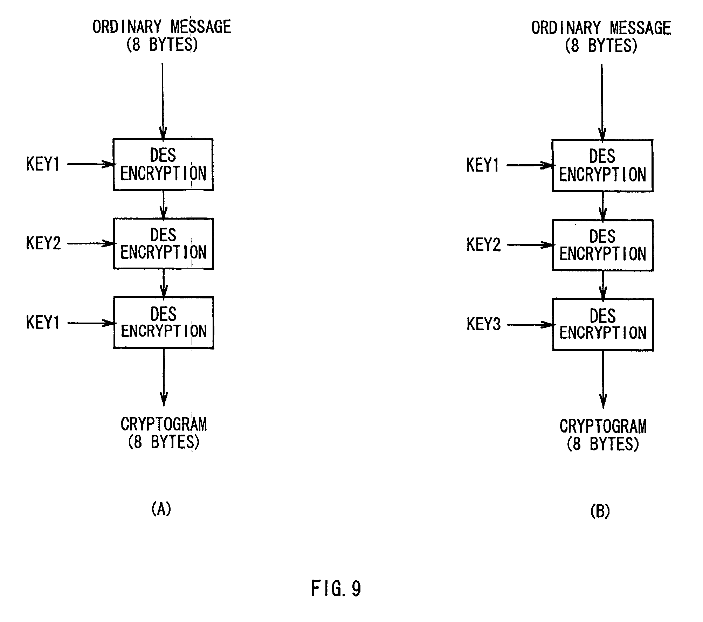

The Fig. 9 shows an example of the detailed structure of the structure unit of each triple DES (Triple DES) shown in Fig. 8. There are two different modes of structure as triple DES (Triple DES); shown in Fig. 9. Fig 9(a) shows an example using two encryption keys wherein the following processes are performed in order: an encryption process with the use of Key 1, a decryption process with the use of Key 2, and further, an encryption process with the use of Key 1. Two (2) keys are used in the order of K1, K2, and K1. Fig. 9(b) shows an example using three (3) keys, wherein encryption processing is conducted three times; encryption processing with K1, encryption processing with K2, and encryption processing with K3 in this order. Three different keys K1, K2 and K3 are used in this order. By using the structure where a plurality of processes are carried out in succession in this way, the intensity of security is increased compared to the single DES method. However, this triple DES has a weak point of taking three times the processing time the single DES consumes.

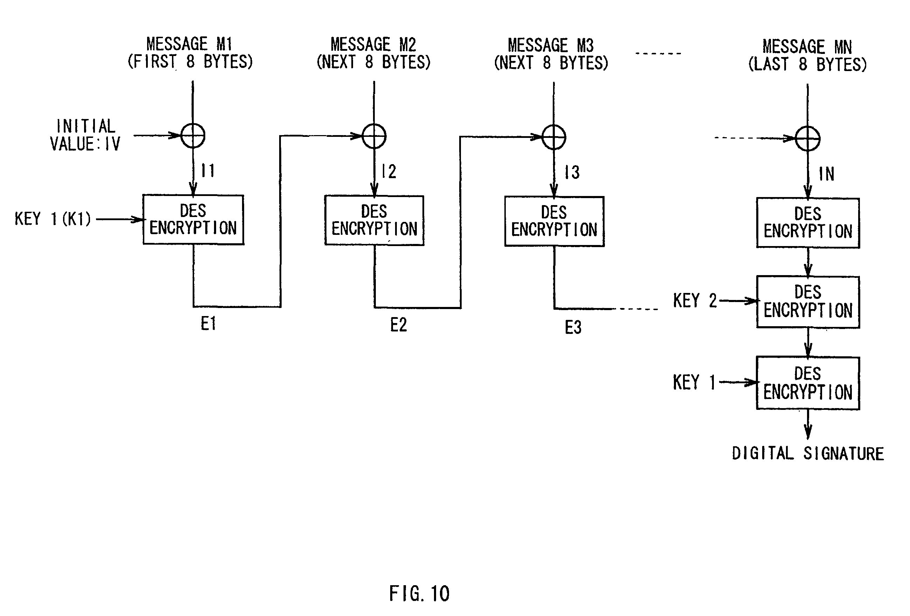

The Fig. 10 shows an example of an ameliorated MAC value creation structure of the triple DES structures explained in Fig. 8 and Fig. 9. In Fig. 10, the single DES process is applied to all the encryption processes beginning with the start of a message column: a subject of signature, to each message midway, and the triple DES (Triple DES) structure shown in the Fig. 9(a) is applied only to the encryption process for the last message.

By employing the structure shown in Fig. 10, it is made possible to reduce the processing time required to create the MAC value of a message to almost as short as required of an MAC value creation process by means of the single DES, and to obtain security more greater than by an MAC value with the single DES. The structure of the triple DES for the last message can be the one of the in Fig. 9(b).

(3-2) Digital Signatures by Means of Public Key Encryption Method

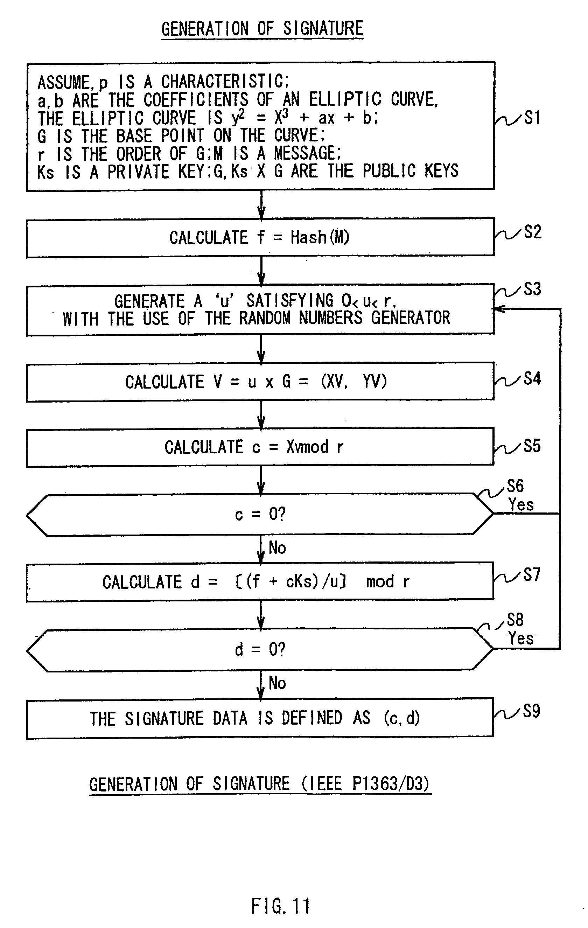

The above is a method for creating digital signature data employing the shared key encryption method as an encryption method. Now, explanation is given on another method for creating digital signatures using a public key encryption method as an encryption method, referring to Fig. 11. Shown in Fig. 11 is a process flow of creating digital signature data using (Elliptic Curve Digital Signature Algorithm (EC-DSA), IEEE P1363/D3). Explanation is given on an example using an elliptic curve cryptography (Elliptic Curve Cryptography: "ECC" hereinafter) as a public key encryption. Just for additional information, it is possible to use other similar public key encryption methods than the elliptic curve cryptography, for example, RSA encryption ((ANSI X9.31) such as (Rivest, Shamir, Adleman) for the data processing system of the present invention.

Each step in Fig. 11 is explained. At the step S1 let it be assumed that p is a characteristic, a, b, coefficients of an elliptic curve (elliptic curve: $y^2 = X^3 + ax + b$), G the base point on an elliptic curve, r the order of G, and Ks a secret key (0<Ks<r). Calculate the Hash value of the message M at the step 32, and define f=Hash(M).

Explanation is given on a method to obtain a Hash value using a Hash function. The Hash function is a function output as a Hash value by compressing a message as an input into a piece of data of a given bit length. The Hash function is characterized in that it is hard to predict an input from a Hash value (output), and to seek out different pieces of input data having the same Hash value because many bits of a Hash vary as one bit of data put into the Hash function changes. There is a case where MD4, MD5, or SHA-1, etc. is used as the Hash function while there is another case where DES-CBC similar to those explained in Fig.7 and others. In this case MAC (check value: an equivalent to ICV) being the last output value is the Hash value.

Subsequently, create a random number u (0<u<r) at the step S3, and calculate the coordinates V (Xv, Yv), the product of the base point times u at the step S4. An addition and a square on the elliptic curve are defined as follows:

$$P=(Xa, Ya) , Q= (Xb, Yb), R=(Xc, Yc)=P+Q$$

When P≠Q (addition),

$$Xc=\lambda^2-Xa-Xb$$

$$Yc= \lambda \times (Xa-Xc) -Ya$$

$$\lambda = (Yb-Ya) / (Xb-Xa)$$

When P=Q (square),

$$Xc=\lambda^2-2Xa$$

$$Yc=\lambda \times (Xa-Xc) -Ya$$

$$\lambda= (3 (Xa)^2+a) /2Ya) \qquad (1)$$

Calculate the product of the point G times u using the above expressions. (Slow in speed, but the most understandable calculation may be performed as follows: Calculate G, 2xG, 4xG··, expand u with the binary system, and add the corresponding $2^i$xG (a value of G times 2 to the ith power) where 1 is valid. (*i* is the bit position when counted from LSB of u.)

Calculate c=Xvmod r at the step S5, and judge if this value becomes 0 at the step S6, and if it is not 0, calculate d=[(f+cks)/u] mod r at the step S7, and judge if d is 0 at the step S8, and if d is not 0, output c and d as digital signature data at the step S9. Hypothesizing that r is the length of 160 bits, the digital signature data is 320 bits long.

If c is 0 at the step S6, return to the step S3 to re-create a new random number. Similarly, if d is 0 at the step S8, return to the step S3 to create a random number.

(3-3) Checking of digital signatures by means of public key encryption method

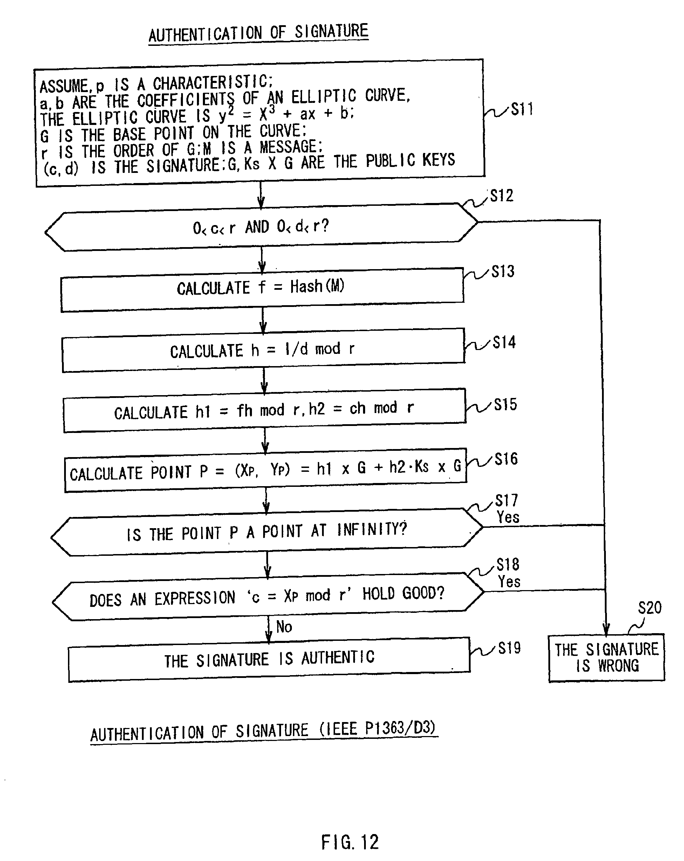

Next, explanation is given on a method for checking digital signatures using a public key encryption method, referring to Fig. 12. Let us assume at the step S11 that M is a message, p a characteristic, a and b coefficients on an elliptic curve (elliptic curve: $y^2=x^3+ax+b$), G the base point on the elliptic curve, r the order of G, and G and Ks x G the public key (0<Ks<r). Check at the step S12 whether the digital signature data c and d satisfy 0<c<r and 0<d<r. If satisfied, calculate the Hash value of the message M at the step S13, and assume that f=Hash(M). Next, calculate h=1/d mod r at the step S14, and h1=fh mod r, h2=ch mod r at the step S15.

Calculate the point P=(Xp, Yp)=h1 x G+h2·Ks x G at the step S16 using h1 and h2 already calculated. Since a checker of digital signatures knows the public key G and Ks x G, the multiplication of a scalar of the point on the elliptic curve can be done as at the step S4 in Fig. 11. Then, judge at the step S17 whether the point P is the infinite apoapsis (the infinite furthest point). If it is not the infinite apoapsis, proceed to the step S18. (In practice, this judgement of the infinite apoapsis can be made at the step S16. The addition of P=(X,Y), Q=(X, -Y) makes it impossible to calculate λ, thereby making it clear that P+Q is the infinite apoapsis. Calculate Xp mod r at the step S18 and compare the result with the digital signature data c. Finally, if these values agree each other, proceed to the step S19, whereby judging that the digital signature is authentic.

If the digital signature is judged as authentic, the data is not tampered, making it known that the digital signature is created by the owner of a secret key corresponding to the public key.

When the digital signature data c or d does not satisfy 0<c<-r, 0<d<r at the step S12, it proceeds to the step S20. As well, if the point P is the infinite apoapsis at the step S17, it proceeds to the step S20. Furthermore, if the value of Xp mod r does not agree with the digital signature data c at the step S18, it proceeds to the step S20.

If the digital signature is judged as unauthentic at the step S20, it can be known that the data has been tampered with, or that the digital signature was created by not a person supposed to own a secret key corresponding to the public key.

(3-4) Mutual authentication by means of shared key encryption method

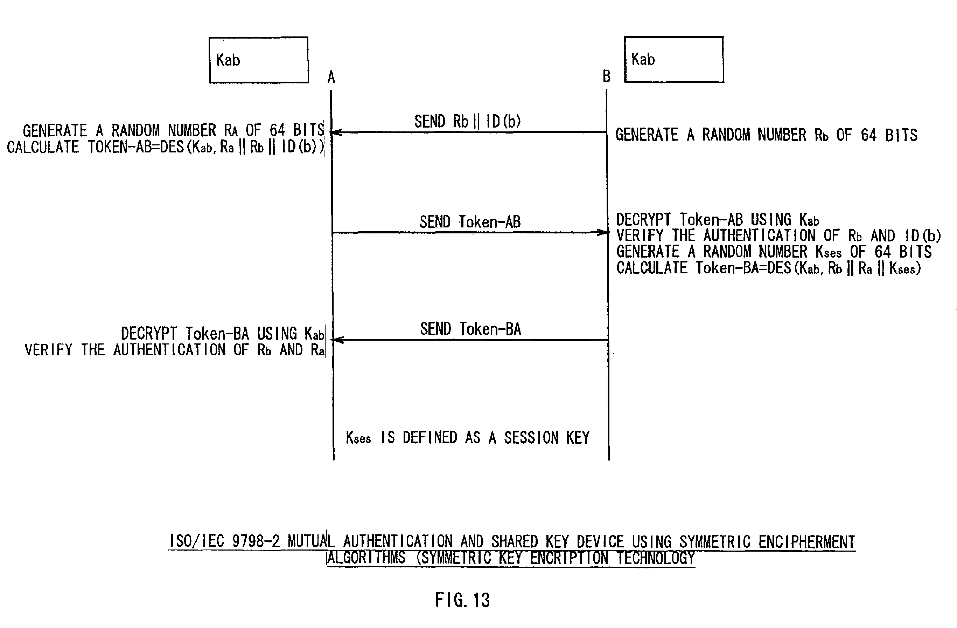

Next, explanation is given on a mutual authentication method using the shared key encryption system, referring to Fig. 13. The DES is used as the shared key encryption system in Fig. 13, however, any system can be used as long as it is similar to the shared key encryption system mentioned previously. In Fig. 13, the B first creates a random number Rb of 64 bits and transmits Rb and its own ID:ID (b) to A. Receiving them, A creates a new random number Ra of 64 bits and encrypts Ra, Rb and ID (b) in order using the key Kab in the CBC mode of the DES, which (encrypted data) is returned to B. According to the processing structure of the CBC mode of the DES shown in Fig. 7, Ra corresponds to M1, Rb to M2, and ID (b) to M3, and so the outputs E1, E2, and E3 with the initial value: IV=0 become encrypted messages.

The B decrypts the received data with the key Kab. The decryption method of the received data is, the encrypted message E1 is decrypted with the key Kab to obtain the random number Ra. Then, the encrypted message E2 is decrypted with the key Kab. The results obtained and E1 are operated on the XOR logic to obtain Rb. Finally the encrypted message E3 is decrypted with the key Kab, the result of which and E2 are operated on the XOR logic to obtain ID (b). Of Ra, Rb and ID(b) thus obtained, Rb and ID are checked to see if they agrees with what B transmitted. If this checking is approved, B authenticates A as legal.

Then, B creates a session key (Session Key ("Kses" hereinafter)) to be used (with use of a random number as a creation method) after authentication. Rb, Ra, and Kses are encrypted in this order with the key Kab in the CBC mode of the DES, which is returned to A.

Upon receiving the encrypted data received, A decrypts it with the key Kab. As the received data is decrypted by a process similar to that used for decrypting B, detailed explanation is omitted here. Of Rb, Ra and Kses thus obtained, Rb and Ra are checked to see if they agree with what A transmitted. If the authentication is approved, A authenticates B as authentic. After mutual authentication, the session key Kses is used as the shared key for secret communication after authentication.

Should illegalities or disagreement be found when checking the received data, mutual authentication is judged as a failure, resulting in interruption of the processing.

(3-5) Public Key Certificate

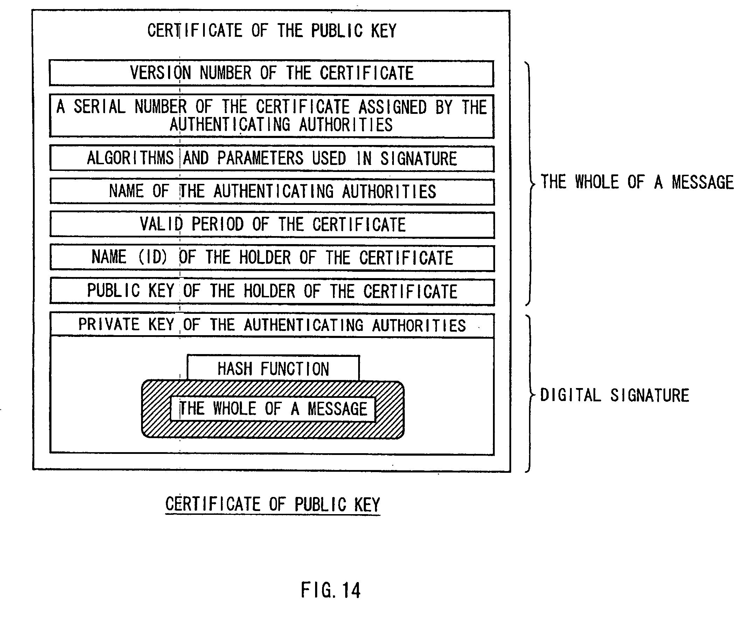

Explanation is given on the public key certificate, referring to Fig. 14. The public key certificate is a certificate issued by the certificate authorities (CA: Certificate Authority) with respect to the public key encryption method. It includes information such as the ID of the certificate authority, valid date, and furthermore, an authorizing signature is attached to it by the certificate authorities.

The public key certificate shown in Fig. 14, includes a version number of a certificate, serial number of a certificate assigned to a certificate user by the certificate authorities, algorithm and parameters used in a digital signature, name of certificate authorities, valid date of a certificate, name of a certificate user (a user's ID) as well as a certificate user's public key and digital signature.

A digital signature is data created by the certificate authorities with use of a secret key against the Hash values created by applying Hash functions to the whole of a version number of a certificate, serial number of a certificate assigned by the certificate authorities to a certificate user, algorithm and parameters using a digital signature, name of the certificate authorities, valid period of a certificate, certificate user's name and public key. The processing flow explained in Fig. 11 is applied to the creation of this digital signature by way of example.

The certificate authorities issues a public key certificate shown in Fig. 14, renews an expired public key certificate, and creates, manages and distributes the list of illegal users to be used in revoking users who conduct illegalities. (This is called "Revocation".) Also, the certificate authorities creates public keys and secret keys, as required.

Meanwhile, in using a public key certificate, a user checks the digital signature of a public key certificate using the public key of the certificate authorities the user holds, and after successfully checking the digital signature the user takes out the public key from the public key certificate and uses the public key. Accordingly it is necessary that all the users who use the public key certificates own the shared public key of the certificate authorities. The details on how to check a digital signature is omitted here since it was explained in Fig. 12.

(3-6) Mutual Authentication by Means of Public Key Encryption System

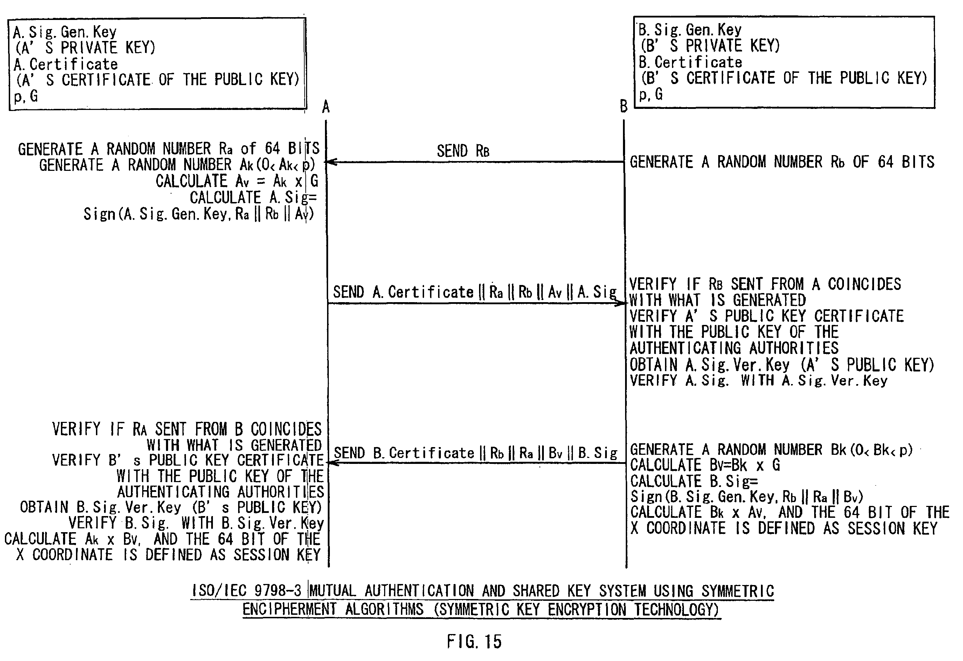

Explanation is given on the mutual authentication method with use of the elliptic curve encryption of 160-bit length, which is a public key encryption system, referring to Fig. 15. The ECC is used as a public key encryption system in Fig. 15, however, any system can be used as long as it is a similar public key encryption system as mentioned before. The size of a key may not be of the 160-bit length. In Fig. 15, B first creates a 64-bit random number of Rb, which is transmitted to A. Receiving it, A creates a random number Ra of 64 bits and a random number Ak smaller than the characteristic p. Then, obtain the point Av=Ak x g, the product of the base point multiplied by Ak to create a digital signature A.Sig for Ra, Rb, and Av (X coordinates and Y coordinates), which is returned to B, together with A's public key certificate. Because Ra and Rb are 64 bits respectively, and the X coordinates and Y coordinates of Av 160 bits respectively, a digital signature is created for a total of 448 bits. As the method of creating a digital signature is explained in Fig. 11, its details are omitted here. Also, as the public key certificate is explained in Fig. 14, its details are omitted here.

Upon receiving A's public key certificate, Ra, Rb, Av, and digital signature A.sig., B checks to see if Rb sent from A coincides with what B has created. As a result, if both agree each other, A checks a digital signature inside A's public key certificate with the public key of the certificate authorities and takes out A's public key. Since explanation is given on the checking of the public key certificate in Fig. 14, its details are omitted here. Then, the digital signature A.Sig is checked with A's public key taken out. Since explanation is given on the method for checking a digital signature in Fig. 12, its details are omitted here. After the digital signature is successfully checked, B authenticates A as being legitimate.

Next, B creates a random number Bk smaller than the characteristic p. Then, B obtains the point Bv=Bk x G, the product of the base point G multiplied by Bk, and creates a digital signature B.Sig for Rb, Ra, and Bv (X coordinates and Y coordinates), which are returned to A, along with B's public key certificate.

Upon receiving B's public key certificate, Rb, Ra, Av, and digital signature B.Sig., A check to see if Ra sent from B agrees with what A has created. As a result, if the agreement is confirmed, a digital signature inside B's public key certificate is checked with the public key of the certificate authorities, and B's public key is taken out. Then, the digital signature B.Sig is checked using B's public key taken out. After the checking of the digital signature is made successfully, A judges B as being authentic.

When both have succeeded in authentication, B calculates Bk x Av (though Bk is a random number, Av being a point on an elliptic curve), it is necessary to calculate scalar multiplication of the point on an elliptic curve. A calculates Ak x Bv, and the lower 64 bits of the X coordinates of these points are used as a session key in later communication (in case the shared key encryption is made to be a shared key encryption of 64-bit key length.) Of course, the session key can be produced from the Y coordinates, and other bits may be used than the lower 64 bits. Not only is transmitting data encrypted with the session key but a digital signature may be appended to it during secret communication after mutual authentication.

Should illegalities or disagreement be found in checking digital signatures and receiving data, processing is interrupted with mutual authentication regarded as a failure.

(3-7) Encryption Process Using Elliptic Curve Encryption

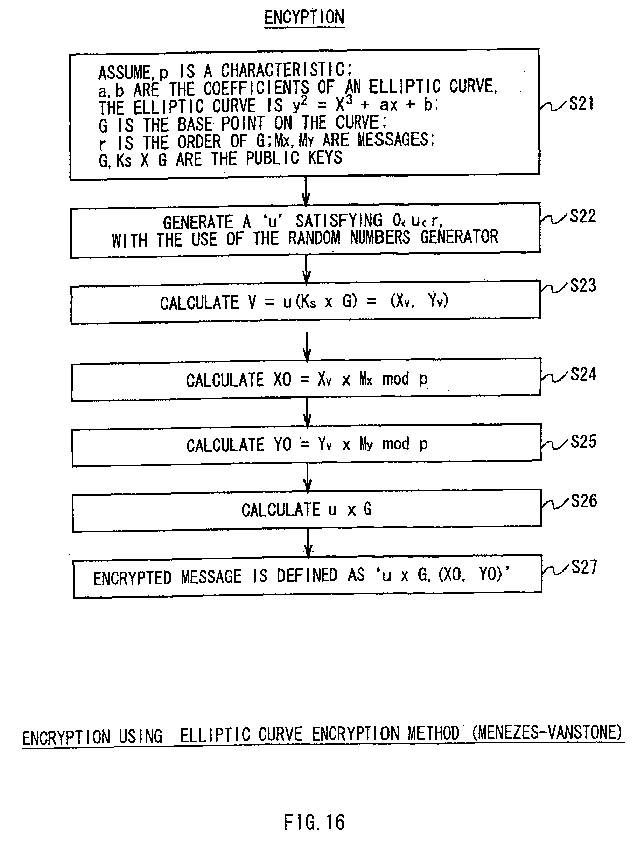

Next, explanation is given on encryption using elliptic curve encryption, referring to Fig. 16. Let us assume at the step S21 that Mx and My are messages, P a characteristic, a and b the coefficients of an elliptic curve (elliptic curve: $y^2=X^3+ax+b$), G the base point on the elliptic curve, r the order of G, G and Ks x G the public key (O<Ks<r). Create a random number u to satisfy O<u<r at the step S22, and calculate coordinates V, the product of the public key Ks x G multiplied by u at the step S23.

The scalar product on the elliptic curve is not explained here since it was done at the step S4 in Fig. 11. Obtain the remainder by dividing by p the product of X coordinates of V multiplied by Mx, and assume it (the remainder) as XO at the step S24, and obtain the remainder by dividing by p the product of Y coordinates of V multiplied by My at the step S25, and assume it (the remainder) as YO. In case the length of the message is smaller than the number of bits of p, use a random number for My, and destroy My at the decryption unit. Calculate u x G at the step S26, and obtain the encrypted messages u x G, (XO, YO) at the step S27.

(3-8) Decryption process using elliptic curve encryption

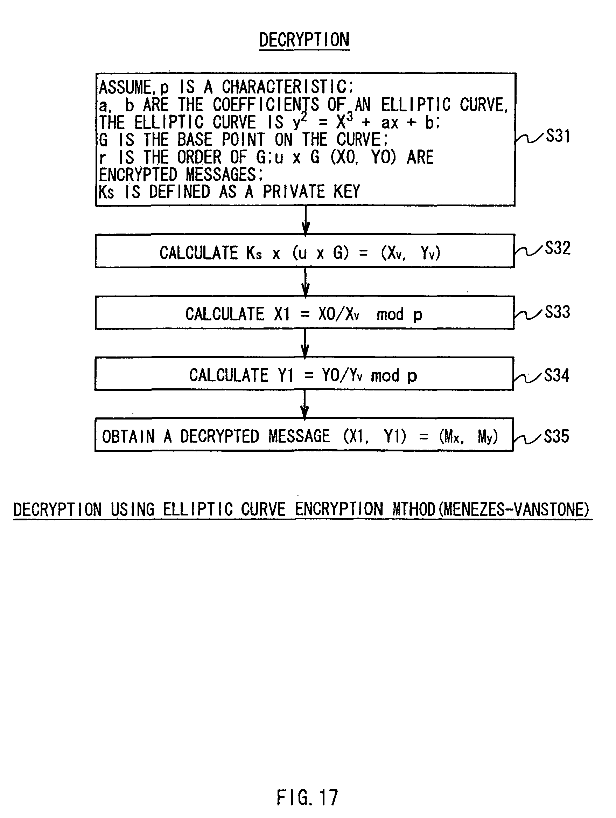

Next, explanation is given on decryption using elliptic curve encryption, referring to Fig. 17. Let us assume at the step S31 that u x G and (XO, YO) are encrypted data, P a characteristic, a and b the coefficients of an elliptic curve (elliptic curve: $y^2=X^3+ax+b$), G the base point on the elliptic curve, r the order of G, and Ks a secret key (O<Ks<r). Multiply the encrypted data, the product of u x G by the secret key Ks to obtain coordinates V(Xv, Yv) at the step S32. Extract X coordinates of (XO, YO) out of the encrypted data at the step S33, and calculate X1=XO/Xv mod p. Extract Y coordinates, and calculate Y1=YO/Yv mod p at the step S34. Define X1 as Mx at the step S35, and retrieve the message with Y1 as My. If My is not assumed as a message, destroy Y1.

Thus, by defining a secret key as Ks, and a public G as Ks x G, it is possible to make a different key for encryption and decryption respectively.

RSA encryption is known as another example of public key encryption, but detailed explanation is omitted here. (The details are found in PKCS #1 Version 2)

(3-9) Random number creating process

Explanation is given on how to create random numbers. Such random creation methods are well known as: an intrinsic random number creation method wherein random numbers are created from an A/D output obtained by amplifying thermal noises, and pseudorandom number creation method wherein random numbers are created by combining a plurality of linear circuits such as M-series, etc. Also, a creation method using a shared key such as DES, is also known. Here, explanation is given on a pseudorandom number creation method with use of DES. (ANSI X9.17 base)

Let us assume that the value of 64 bits obtained from data such as time (higher bits are 0 in the case of lower bits than 64 bits), is D, key information used for triple-DES Kr, and the seed for creation of random numbers S. At this time the random number R is calculated as follows:

$$I=\text{Triple-DES}(Kr, D) \qquad (2-1)$$

$$R=\text{Triple-DES}(Kr, S\char`\^|) \qquad (2-2)$$

$$S\text{-Triple-DES}(Kr, R\char`\^|) \qquad (2-3)$$

Let us assume here that in Triple-DES ( ) the first argument is encryption key information, the value of the second argument a function encrypted with Triple-DES, calculation^ XOR of 64 bits, and the value S finally created is to be renewed as a seed.

In creating random numbers in succession the expressions (2-2) and (2-3) shall be repeated afterwards.

Explanation has been given on a variety of processing modes in conjunction with encryption processes applicable to the data processing system employing the present invention. Next, detailed explanation is given on concrete processes made in the data processing system of the present invention.

(4) Storage Data Structure of Record Reproducing Player

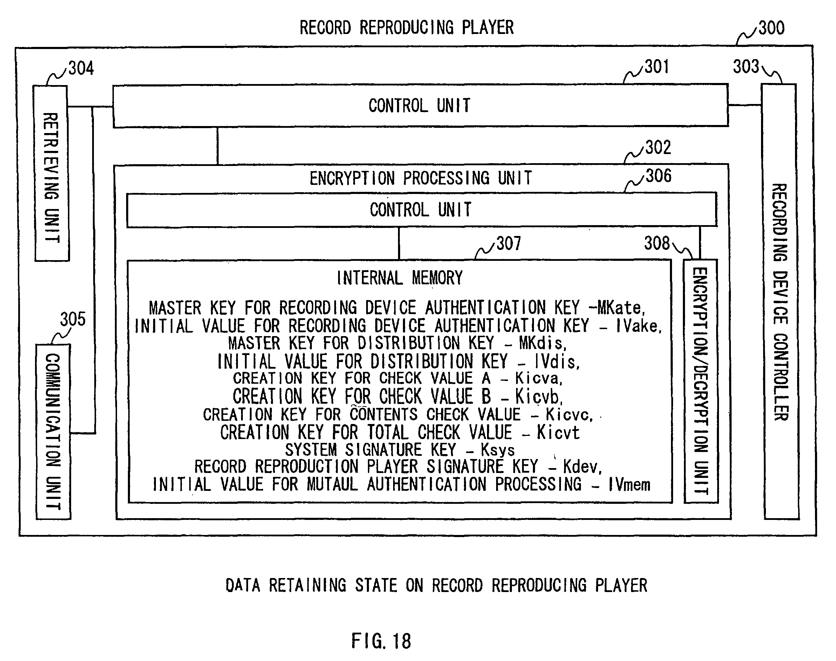

The figure 18 describes a content of data retained in the internal memory 307 incorporated into the record reproducing player's encryption processing unit 302 of the record reproducing player 300 shown in Fig. 3.

The following keys and data are stored in the internal memory 307 as shown in Fig. 18:

Mkake: Master key to recording device authentication keys to create an authentication key (Authentication and Key Exchange Key ("Kake" hereinafter) necessary to the mutual authentication process performed between the record reproducing player 300 and recording device 400 (Cf. Fig. 3).
IVake: Initial value for recording device authentication keys.
MKdis: Master key to distribution keys to create distribution keys Kdis.
IVdis: Initial value for creation of distribution keys
Kicva: Check value A creation key to create a check value ICVa.
Kicvb: Check value B creation key to create a check value ICVb.
Kicvc: Content check value creation key to create a check value ICVi (i=1~N) of each content block.
Kicvt: Total check value creation key to create a total check value ICVt.
Ksys: System signature key to append a signature or ICV common for a distribution system.
Kdev: Record reproducing player signature key, particular to and different for each record reproducing player, used when a record reproducing player appends a signature or ICV.
IVmem: Initial value used in encryption processing in mutual authentication processing, etc. Shared by recording devices.

These keys and data are stored in the internal memory 307 incorporated into the record reproducing player's encryption processing unit 302.

(5) Data Structure Stored in Recording Device

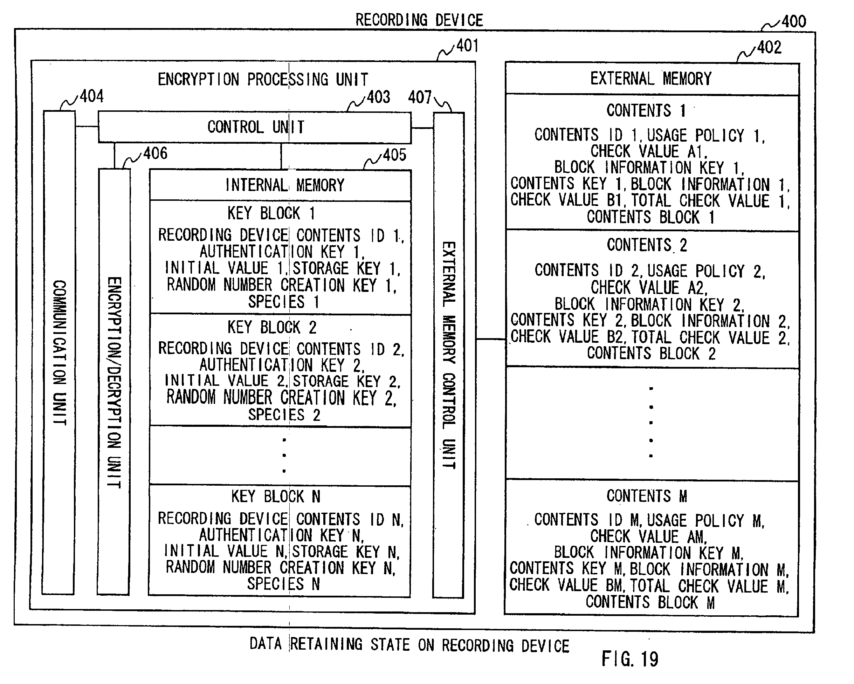

The figure 19 shows a data retaining status in a recording device. The internal memory 405 in Fig. 19 is divided into a plurality of blocks (N blocks in this instance), each of which stores the following keys and data:

IDmem: Recording device content ID: identification information particular to a recording device.
Kake: Authentication key: an authentication key used in mutual authentication with a record reproducing player 300.
IVmem: Initial value: the initial value used in the encryption processing such as mutual authentication processing, etc.
Kstr: an encryption key of content data of the storage key, block information key, etc.
Kr: a Random number creation key
S: seed

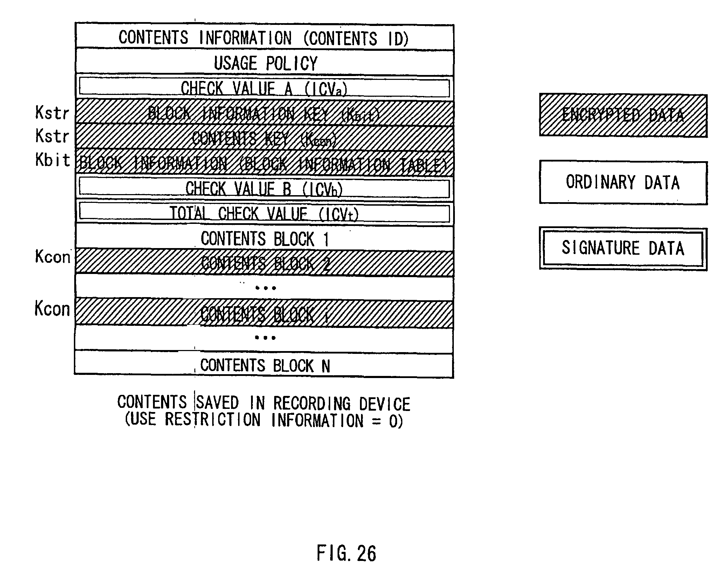

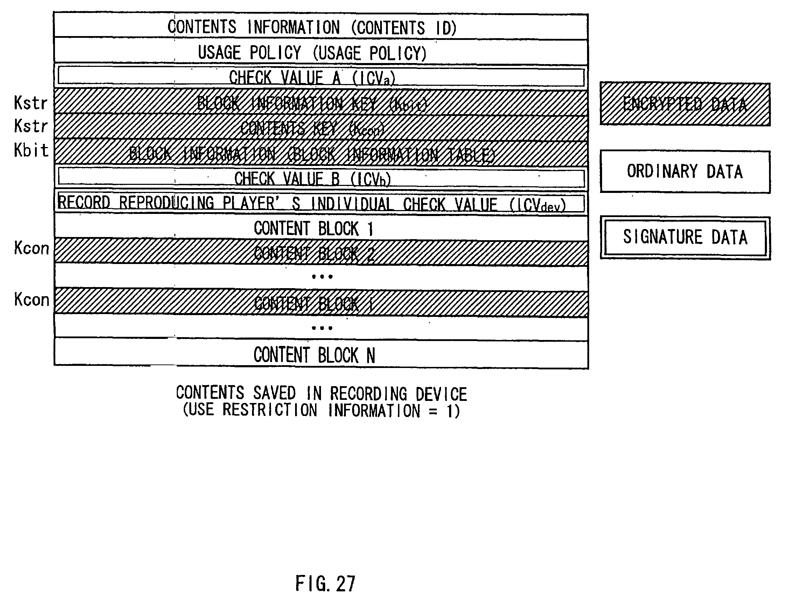

These kinds of data are retained in each block. The external memory 402 retains a plurality (M pcs. in this instance) of content data, such as data explained in Fig. 4 in the status described in Fig. 26 or Fig. 27. The differences in structure between Fig. 26 and Fig. 27 are explained in a later chapter.

(6) Mutual Authentication Processing between Record Reproducing Player and Recording Device

(6-1) Outline of mutual authentication process

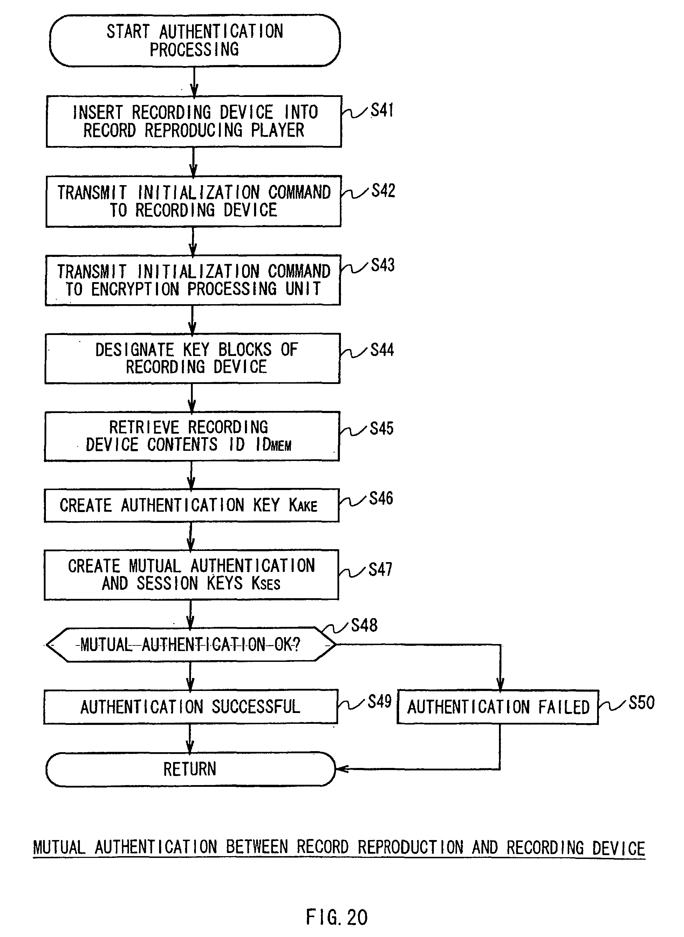

The figure 20 is a flowchart showing the authentication procedure between the record reproducing player 300 and recording device 400. A user inserts the recording device 400 into a record reproducing player 300 at the step S41. However, it is not necessary to do so if a recording device is one capable of making non-contact communication.

Upon the recording device 400 installed onto the record reproducing player 300, a record device's detection means (not shown in figure) inside the record reproducing player 300 shown in Fig. 3, informs the control unit 301 that the recording device 400 is installed. Next, at the step S42 the control unit 301 of the record reproducing player 300 transmits an initialization command to the recording device 400 through the record device controller 303. Upon receiving it, the recording device 400 receives the command at the control unit 403 of the record device's encryption processing unit 401 via the communication unit 404, and clears an authentication complete flag if it is set. It means the system is set to an unauthenticated state.

Next, at the step S43 the control unit 301 of the record reproducing player 300 transmits the initialization command to the record reproducing player's encryption processing unit 302, together with the number of an insertion slot the recording device is inserted into. The transmission of the recording device's insertion slot number makes it possible to have authentication processing, and data transmission/reception made with a plurality of recording devices 400 simultaneously if a plurality of recording devices are connected to the record reproducing player 300.

Upon receiving the initialization command, the record reproducing player's encryption processing unit 302 of the record reproducing player 300 clears an authentication complete flag corresponding to the recording device's insertion slot number, if set, at the control unit 306 of the record reproducing player's encryption processing unit 302. It means the system is set to an unauthenticated state.

Next, at the step S44 the control unit 301 of the record reproducing player 300 designates the key block number the recording device's encryption processing unit 401 of the recording device 400 uses. The details of the block numbers are described later. At the step S45 the control unit 301 of the record reproducing player 300 reads out the recording device content ID IDmem stored in the designated key block in the internal memory 405 of the recording device 400. At the step S46 the control unit 301 of the record reproducing player 300 transmits the recording device content ID IDmem to the record reproducing player's encryption processing unit 302 to have the authentication key Kake created on a basis of the recording device content ID IDmem. The authentication key Kake is created by the following expression by way of example:

$$Kake = DES (Mkake, IDmem^\wedge IVake) \qquad (3)$$

Stored in the internal memory 307 of the record reproducing player 300 as described previously, MKake is the master key to the recording device authentication keys to create an authentication key Kake necessary to mutual authentication processing performed between the record reproducing player 300 and recording device 400 (Cf. Fig. 3). IDmem is the recording device content ID particular to a recording device 400. IVake is the initial value for the recording device authentication key. The DES ( ) in the above expression is a function to encrypt the value of the second argument DES with DES, with the first argument as an encryption key, and the calculation≃ indicates the XOR of a 64-bit unit.

In the case of employing the DES structures shown in Figs. 7 and 8 by way of example, the output is the authentication key Kake, which is obtained by defining the Message M as recording device content ID: IDmem, the key Key 1 as the master key to device authentication keys: Mkake, and the initial value IV as IVake.

Next, creation processing is carried out for mutual authentication and a session key Kses at the step S47. The mutual authentication is conducted between the encryption/decryption unit 308 of the record reproducing player's encryption processing unit 302 and encryption/ decryption unit 406 of the recording device's encryption processing unit 401 with the intermediary performed by the control unit 301 of the record reproducing player 300.

The mutual authentication process can be carried out in accordance with the processes explained in Fig. 13 by way of example. In the structure shown in Fig. 13, A and B correspond to the record reproducing player 300 and recording device 400 respectively. First, the record reproducing player's encryption processing unit 302 of the record reproducing player 300 creates a random number Rb, which is transmitted to the recording device's encryption processing unit 401 of the recording device 400, together with its own ID or record reproducing player content ID IDdev. The record reproducing player content ID IDdev is a reproducing player's individual identifier retained in a memory incorporated into the record reproducing player 300. The record reproducing player content ID IDdev can be recorded in the internal memory of the record reproducing player's encryption processing unit 302.

Upon receiving the random number Rb and record reproducing player content ID IDdev, the recording device's encryption processing unit 401 of the recording device 400 creates a 64-bit random number Ra anew, and encrypts the data, namely Ra, Rb, and record reproducing player identification information IDdev in this order in the CBC mode of the DES with use of the authentication key Kake, which are returned to the record reproducing player's encryption processing unit 302 of the record reproducing player 300. For example, according to the CBC mode processing structure of the DES shown in Fig. 7, Ra corresponding to M1, Rb to M2, and IDdev to M3, and the outputs E1, E2, and E3 with the initial value: IV=IVmem are encrypted messages.

Upon receiving the encrypted messages E1, E2, and E3, the record reproducing player's encryption processing unit 302 of the record reproducing player 300 decrypts the data received with the authentication key Kake. With regard to the method to decrypt the data received, first the encrypted message E1 is decrypted with the authentication key Kake, the result of which and IVmem are calculated based the XOR logic to obtain the random number Ra. Then the encrypted message E2 is decrypted with the authentication key Kake, the result of which and E1 are calculated on the XOR logic to obtain Rb. Finally the encrypted message E3 is decrypted with the authentication key Kake, the result of which and E2 are calculated based on the XOR logic to obtain record a reproducing player content ID IDdev. Of the Ra, Rb, and record reproducing player identification information ID IDdev obtained, the Rb and record reproducing player content ID IDdev are checked to see if they agree with what the record reproducing player 300 transmitted. If the checking turns out to be satisfactory, the record reproducing player's encryption processing unit 302 of the record reproducing player 300 authenticates the recording device 400 as a legal one.

Next, the record reproducing player's encryption processing unit 302 of the record reproducing player 300 creates a session key (Session Ley ("Kses" hereinafter)) to be used after authentication. (Random numbers are used to create it.) Then, the Rb, Ra, and Kses are encrypted in this order in the CBC mode of the DES with the key Kake and initial value IVmem, which are returned to the recording device's encryption processing unit 401 of the recording device 400.

Upon receiving it (the encrypted data), the recording device's encryption processing unit 401 of the recording device 400 decrypts the data received with the key Kake. In decrypting the data received, as the same decryption process is used as in the record reproducing player's encryption processing unit 302 of the record reproducing player 300, the details are omitted here. Of the Rb, Ra, and Kses obtained, the Rb and Ra are checked to see if they agree with what the recording device 400 transmitted. If the checking turns out to be satisfactory, the record device's encryption processing unit 401 of the recording device 400 authenticates the record reproducing player 300 as a legal one. After they are authenticated each other, the session key Kses is used as the shared key in secret communication after the authentication.

Should any illegalities or disagreement be found in checking the data received, the processing is interrupted with the mutual authentication judged as a failure.

If the mutual authentication turns out to be successful, the processing proceeds from the step S48 to the step S49 to retain the session key Kses in the record reproducing player's encryption processing unit 302 of the record reproducing player 300, setting an authentication complete flag to indicate the finish of the mutual authentication. Should the mutual authentication fail, it proceeds to the step S50 and destroys the session key Kses created in the process of the authentication processing, clearing the authentication complete flag as well. If it is already cleared, the clearing process is not needed.

If the recording device 400 is removed out of the recording device insertion slot, the recording device detection means inside the record reproducing player 300 informs the control unit 301 of the record reproducing player 300 that the recording device 400 is removed. Upon receiving this notification, the control unit 301 of the record reproducing player 300 commands the record reproducing player's encryption processing unit 302 of the record reproducing player 300 to clear the authentication complete flag corresponding to the insertion slot number of the recording device. Upon receiving this command, the record reproducing player's encryption processing unit 302 of the record reproducing player 300 clears the authentication complete flag corresponding to the insertion slot number of the recording device.

The mutual authentication process has been exemplified so far in accordance with the procedure shown in Fig. 13, however, it is not limited to the above authentication example, and this process can be performed in accordance with the mutual authentication procedure explained in Fig. 15 by way of example. Also, in the procedure shown in Fig. 13, a mutual authentication process can be made by designating the A in Fig. 13 as a record reproducing player 300, B as a recording device 400, and the ID the B:

recording device 400 first sends to the A: record reproducing player 300 as the recording device content ID in the key block inside the recording device. Various other processes can be applied to the authentication process procedure carried out in the present invention, and so the above authentication process is not, ever, the sole one.

(6-2) Switching of key blocks in mutual authentication

One of the features of the mutual authentication process in the data processing system of the present invention consists in that a plurality of key blocks (ex. N pcs. of key blocks) are formed on the part of a recording device 400 and that a record reproducing player 300 performs an authentication process, designating one key block (Cf. Step S44 in the process flow in Fig. 20). As explained previously in Fig. 19, a plurality of key blocks are formed in the internal memory 405 incorporated into the encryption processing unit 401 of the recording device 400, each storing a variety of data including different key data, and ID information, etc. The mutual authentication process (explained in Fig. 20) performed between the record reproducing player 300 and recording device 400, is executed with regard to one key block out of the plurality of key blocks in the recording device 400 in Fig. 19.

In the structure where mutual authentication processing is conducted between a recording medium and reproducing player, it is general hitherto that a key used in mutual authentication i.e. an authentication key is used on a shared basis. Accordingly in such a case that an authentication key is modified by a destination (a country)products are shipped to, or by a product, it is necessary to have a key data needed in authentication processing modified at the both sides of the record reproducing player and recording device. This means that the key data necessary to authentication processing stored in a record reproducing player put on the market anew does not match the key data necessary to authentication processing stored in a recording device sold before, entailing a happening that a new record reproducing player can not access the recording devices of the old version. Conversely, a similar event may be caused in a relationship between the recording devices of a new version and the record reproducing players of an old version.

With the data processing system of the present invention, as key blocks are stored as a plurality of different key sets beforehand in the recording device 400 as shown in Fig. 19. Record reproducing players are set up with key blocks applicable to authentication processing, namely designated key blocks by, e.g., a destination (a country) products are shipped to, or by the products, type, version, or application. This setting information is stored in the memory unit of a record reproducing player, for example, in the internal memory 307 in Fig. 3, or inside other memory elements a record reproducing player 300 may have, with the result that the key block designation is carried out in authentication processing, according to the setting information the control unit 301 in Fig. 3 accesses.

The master key Mkake to the recording device authentication keys inside the internal memory 307 of the record reproducing player 300 is a master key to the authentication keys set up according to the setting of each of the designated key blocks, and is so designed as to match the designated key blocks only, precluding mutual authentication with other key blocks than the designated key blocks.

As can be understood from Fig. 19, N pieces (1 ~ N) of key blocks are set up in the internal memory 405 of the recording device 400, each key block storing recording device content ID, authentication key, initial value, storage key, random number generation key, and seed, in a way that at least the key data for authentication is stored as different data for each block.

Thus, the key data structure of the key blocks of the recording device 400 differs from block to block. Therefore it is the key block No. 1 for example that a certain record reproducing player 300 can perform an authentication process using the master key Mkake to the recording device authentication keys stored in the internal memory. Likewise it is possible to set up a different key block: key block No. 2 as the key block another record reproducing player B made to different specifications can authenticate.

When a content is stored in the external memory 402 of the recording device 400, it is encrypted with a storage key Kstr stored in each key block, which is explained in detail later. More concretely the content key to encrypt content blocks is encrypted with the storage key.

As shown in Fig. 19, a storage key is structured as a different key for each block. Accordingly it precludes the possibility of a content stored in the memory of a certain recording device being used by other devices on a shared basis between two differently set record reproducing players, each designated a different key block. In other words differently set record reproducing players can use the only content stored in a recording device conforming to each setting.

Data in each block can be made common if it is of that type, for instance, the key data for authentication and storage key data only can be structured differently.

There are specific examples of forming key blocks composed of a plurality of different key data in a recording device, for example, assigning different key block numbers to different types (desktop, or portable, etc.) of record reproducing players 300, or to different ways of application. In this way it is possible to form different key blocks for different regions, for example, with No. 1 to the key blocks regarding record reproducing players sold on the Japanese markets, and No. 2 to the products sold on the USA markets. By employing this kind of structure it can be made impossible that a content designed for a particular region and stored in a certain recording device with a particular storage key is used in a different region. For example, even if a content is transferred from Japan to USA, or vice versa by means of recording devices such as memory cards, it can not be used in an undesignated region because of a different key set up in a record reproducing player, thereby preventing the content stored in memory means from being used illegally or distributed disorderly. More concretely it precludes the possibility of a content key Kcon encrypted with a particular storage key Kstr being used in common in two countries.

Furthermore, at least one key block, e.g., a key block No. N out of the key blocks 1 to N in the internal memory 405 of the recording device 400 shown in Fig. 19, can be formed as a key block usable in common with any record reproducing player 300.

For instance, a content can be distributed with no regards to the models of record reproducing players 300, ways of application, and countries of destination, etc. by storing in all the players the master key MKake to the recording device authentication keys capable of being authenticated with the key block No. N. Accordingly an encrypted content stored in a memory card using the storage key stored in the key block No. N can be used by all the players. For example, data on the memory card can be decrypted for reproduction processing by encrypting music data, etc. on a memory card with the storage key of a key block usable in common, which (the memory card) is set to a portable audio reproducing player with a shared master key MKake to recording device authentication keys stored in it.

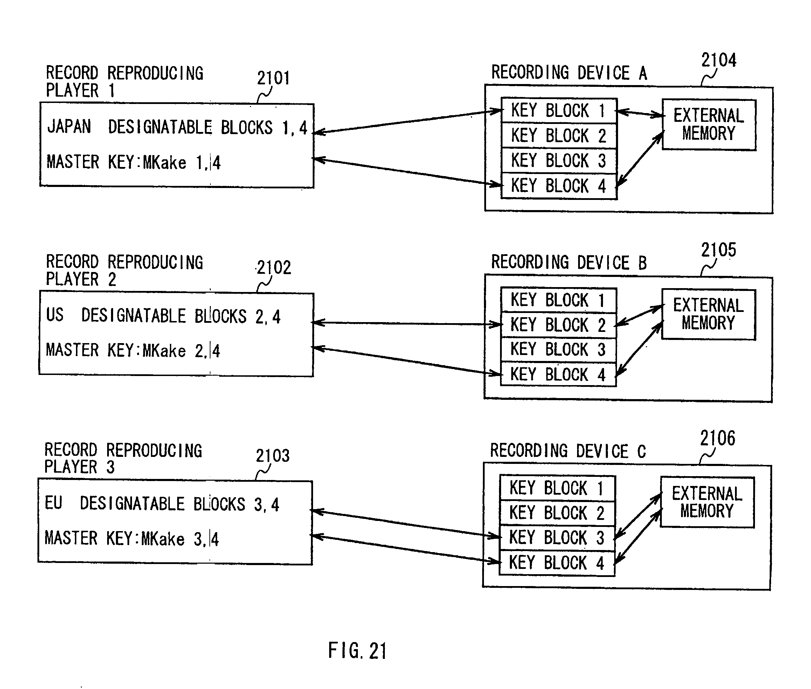

Shown in Fig. 21 are examples of using a recording device having a plurality of key blocks, of a data processing system of the present invention. A record reproducing player 2101 is a record reproducing player for the Japanese markets, having the master key to enable authentication processing between the key blocks 1 and 4 of the recording device. A record reproducing player 2102 is a record reproducing player for the US markets, having the master key to enable authentication processing between the key blocks 2 and 4 of the recording device. A record reproducing player 2103 is a record reproducing player for the EU markets, having the master key to enable authentication processing between the key blocks 3 and 4. of the recording device.

Take the record reproducing player 2101 for example. Authentication is established between a recording device A and the key block 1 or 4 of the recording device 2104, and encrypted content processed with use of a storage key stored in each of key blocks is stored in the external memory. As to the record reproducing player 2102, authentication is established between a recording device B and the key block 2 or 4 of the recording device 2105, and encrypted content processed with use of a storage key stored in each of key blocks is stored in the external memory. As to a record reproducing player 2103, authentication is established between a recording device C and the key block 3 or 4 of a recording device 2106, and encrypted content processed with use of a storage key stored in each of key blocks is stored in the external memory. When the recording device A:2104 is installed on the record reproducing player 2102, or the record reproducing player 2103, the encrypted content processed with the storage key of the key block 1 can not be used since authentication is not established between the record reproducing player 2102, or record reproducing player 2103 and the key block 1. Whereas, the encrypted content processed with the storage key of the key block 4 can be used since authentication is established between the record reproducing player 2102, or record reproducing player 2103 and the key block 4.

As described above, with the data processing system of the present invention, key blocks composed of a plurality of different key sets are formed in recording devices, Meanwhile, since a record reproducing player is so structured as to store a master key capable of granting authentication to a particular key block, it is possible to put a use restriction on a content oriented to various modes of use.

It also is possible to form a plurality of key blocks, e.g., 1 to K that can be assigned in one record reproducing player, and to form a plurality of key blocks p to q that can be assigned in another record reproducing player. Or, it also can be possible to form a plurality of key blocks usable in common.

(7) Downloading Processing from Record Reproducing player to Recording Device

Next, explanation is given on downloading a content from a record reproducing player 300 to the external memory of a recording device 400 relating to the data processing system of the present invention.

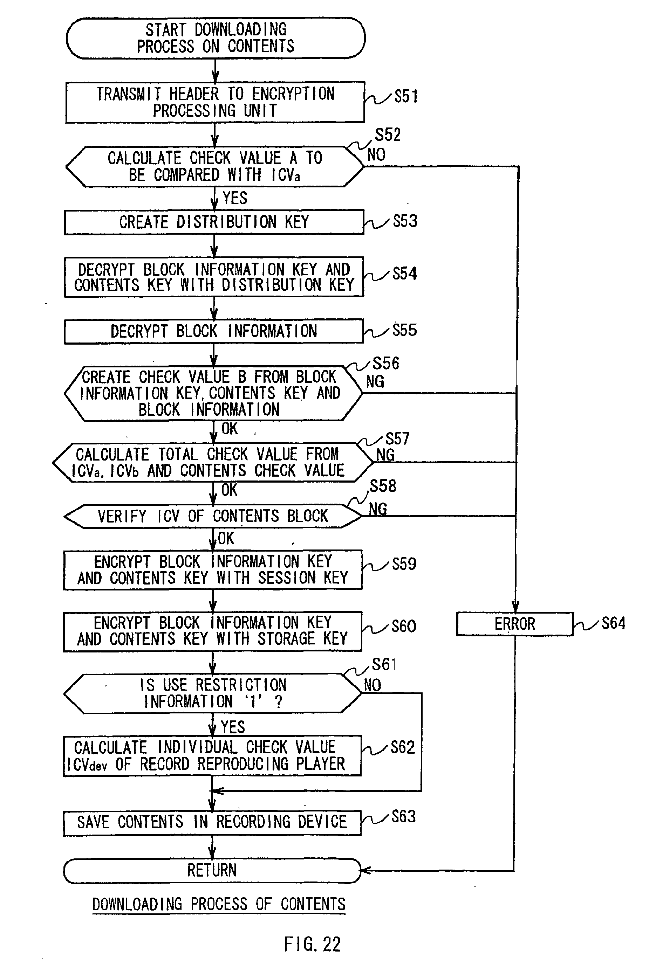

The figure 22 is a flowchart describing the procedure for downloading a content from the record reproducing player 300 into the recording device 400. It is assumed in Fig. 22 that the aforementioned mutual authentication processing has been already established between the record reproducing player 300 and recording device 400.

At the step S51 the control unit 301 of the record reproducing player 300 retrieves data from a medium 500 storing a content with use of a read unit 304 in accordance with a given format, or receives data from a communication means 600 with use of a communication unit 305 in accordance with a given format. Then, the control unit 301 of the record reproducing player 300 transmits the header (Header) portion inside the data to the record reproducing player's encryption processing unit 302 of the record reproducing player 300.

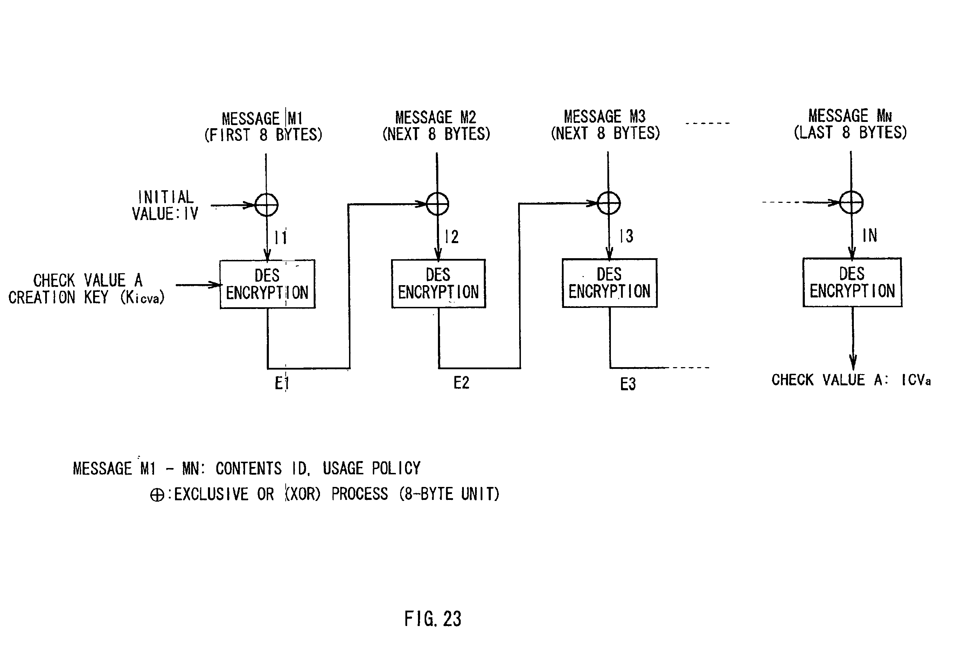

Next, upon receiving the header at the step S51 the control unit 306 of the record reproducing player's encryption processing unit 302 lets the encryption/decryption unit 308 of the record reproducing player's encryption processing unit 302 calculate a check value A at the step S52. As shown in Fig. 23, the check value A is calculated in accordance with the ICV calculation method explained in Fig. 7, with the check value A creation key Kicva retained in the memory inside the record reproducing player's encryption processing unit 302 as the key, and with a content ID (Content ID) and usage policy (Usage Policy) as messages. The initial value can be IV=0, or the initial value IVa for the check value A creation can be used, which is retained in the internal memory 307 of the record reproducing player's encryption processing unit 302. Finally the check value A and check value: ICVa stored in the header (Header) are compared, and if both agree each other, it proceeds to the step S53.

As already explained in Fig. 4, the check values A: ICVa is a check value used to check the tampering of the content ID and usage policy. With the check value A creation key Kicva kept in the internal memory 307 of the record reproducing player's encryption processing unit 302 as the key, and the content ID (Content ID) and usage policy as messages, if the check value A calculated following the ICV calculation method explained in Fig. 7, coincides with the check value: ICVa stored inside the header (header), it is judged that the content ID and usage policy are not tampered with.

At the next step S53 the control unit 306 of the record reproducing player's encryption processing unit 302 lets the encryption/decryption unit 308 of the record reproducing player's encryption processing unit 302 create a distribution key Kdis.

The following expression may be used as a method to create the distribution key Kdis by way of example.

$$Kdis=DES (MKdis, Content IDI^Vdis) \qquad (4)$$

The MKdis is the master key to distribution keys to create the distribution key Kdis, and is stored in the internal memory of the record reproducing player 300 as explained before. The Content ID is the content ID of the header portion of the content data, the IVdis the initial value for the distribution key. In the above expression the DES ( ) is a function to encrypt the value of the second argument with the first argument as an encryption key, and the calculation^indicates the XOR of a 64-bit unit.

At the step S54 the control unit 306 of the record reproducing player's encryption processing unit 302 lets the encryption/decryption unit 308 of the record reproducing player's encryption processing unit 302 perform an encryption process, with the use of the distribution key Kdis created at the step S53, on a block information key Kbit and content key Kcon stored in the header portion of the data received from the media 500 through the read means 304, or the communication means 600 via the communication unit 305. As shown in Fig. 4, these block information key Kbit and content key Kcon are encrypted in advance with use of the distribution key Kdis on media such as DVDs, CDs, and communication routes such as the Internet.

Furthermore, at the step S55 the control unit 306 of the record reproducing player's encryption processing unit 302 lets the encryption/decryption unit 308 of the record reproducing player's encryption processing unit 302 decrypt block information (BIT) with the block information key Kbit decrypted at the step S54. As shown in Fig. 4, the block information (BIT) is encrypted in advance with the block information key Kbit on meida such as DVD, CD, and over communication routes such as the Internet.

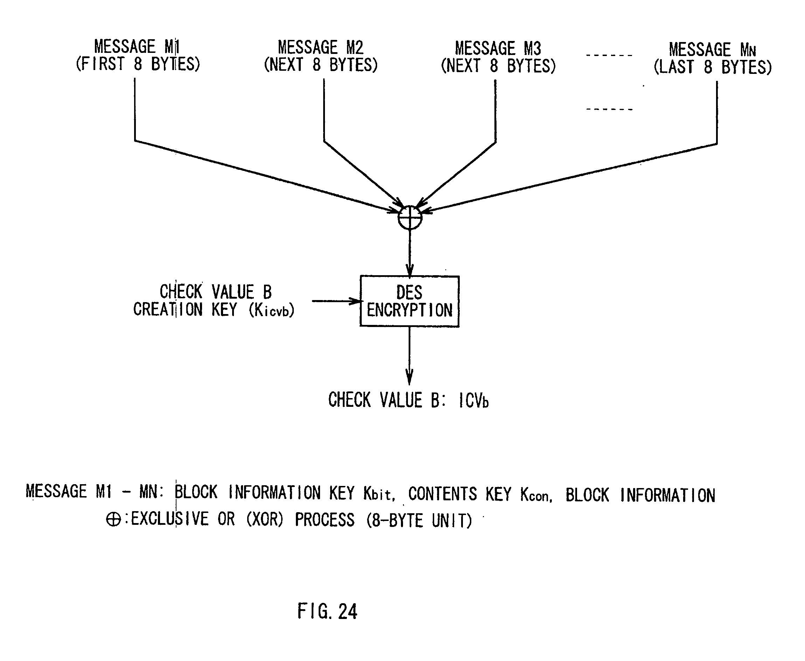

Furthermore, at the step S56 the control unit 306 of the record reproducing player's encryption processing unit 302 divides the block information key Kbit, content key Kcon, and block information (BIT) into 8-bit units, all of which are operated based on the XOR logic. (Any calculation of addition, subtraction, etc. is good.) Next, the control unit 306 of the record reproducing player's encryption processing unit 302 lets the encryption/decryption unit 308 of the record reproducing player's encryption processing unit 302 calculates the check value B (ICVb). As shown in Fig. 24, with the check value B creation key Kicvb retained in the internal memory 307 of the record reproducing player's encryption processing unit 302 as the key, the check value B creates the XOR value previously calculated and encrypts it with the DES. Finally the check value B is compared with the ICVb inside the header, and if they agree each other, it proceeds to the step S57.

As explained before in Fig. 4, the check value B: ICVb is a check value to check the tampering of the block information key Kbit, content key Kcon, and block information (BIT). With the check value B creation key Kicvb retained in the internal memory 307 of the record reproducing player's encryption processing unit 302 as the key, the block information key Kbit, content key Kcon, and block information (BIT) are divided into 8-bit units, which are operated based on the XOR logic, the value obtained as a result of which is encrypted with the DES to create the check value B. If this check value B coincides with the check value:ICVb retained in the header, it is judged that the block information key Kbit, content key Kcon, and block information are not tampered with.

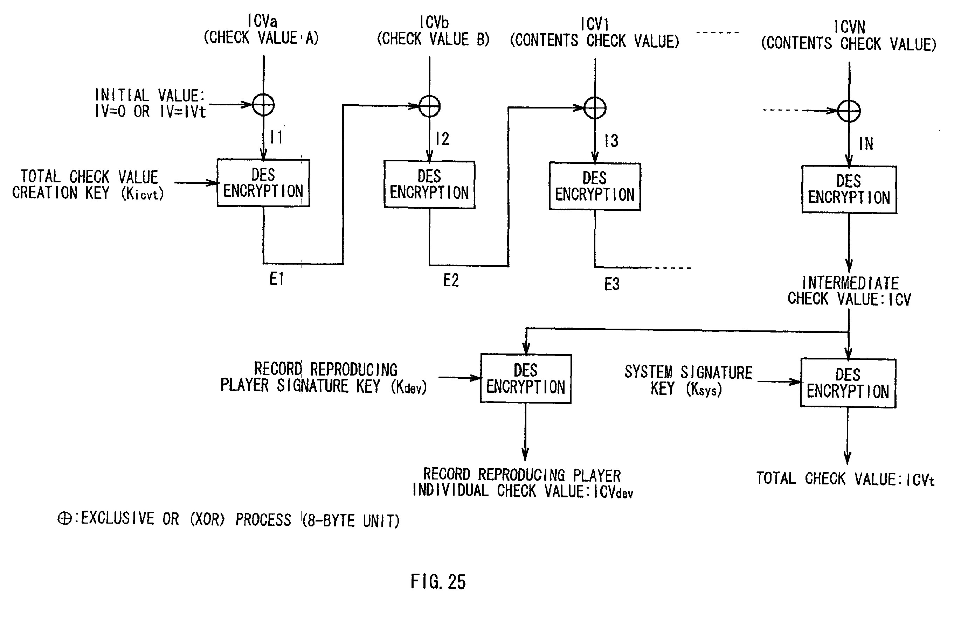

At the step S57 the control unit 306 of the record reproducing player's encryption processing unit 302 lets the encryption/decryption unit 308 of the record reproducing player's encryption processing unit 302 calculates an intermediate check value. As shown in Fig. 25, with the total check value creation key Kicvt retrained in the internal memory 307 of the record reproducing player's encryption processing unit 302 as the key, and with the check value A and check value B inside the header checked, and all the content check values retained as messages, the intermediate checj value is calculated following the ICV calculation method explained in Fig. 7. It can be possible to use the initial value IV=0, or the total check value creation initial value IVt once retained in the internal memory 307 of the record reproducing player's encryption processing unit 302. The intermediate check value created is retained in the record reproducing player's encryption processing unit 302 of the record reproducing player 300 if required.

This intermediate check value is created with the check value A, check value B, and all the content check value as messages. The checking of data subject to checking to each of these values can be performed by collating the intermediate check value. In this mode of carrying out the invention, however, because a check process on untampering nature as data in common for the whole system and a check process to distinguish as the exclusive data belonging to each record reproducing player 300 only after being downloaded can be made separately, a plurality of different check values, namely the total check value ICVt and record reproducing player's individual check value ICVdev are separately created from the intermediate check value based on the intermediate check value. These check values will be explained later.

The control unit 306 of the record reproducing player's encryption processing unit 302 lets the encryption/decryption unit 308 of the record reproducing player's encryption processing unit 302 calculates the total check value ICVt. As shown in Fig. 25, the total check value ICVt is created by encrypting the intermediate check value with the DES with the system signature key Ksys retained in the memory 307 inside the record reproducing player's encryption processing unit 302 as the key. Finally the total check value ICVt created and the ICVt saved inside the header at the step S51 are compared, and if they coincide each other, it proceeds to the step S58. The system signature key Ksys is a signature key common to a plurality of record reproducing players, namely the whole of a system assembly which conducts a record reproducing process on a certain piece of given data.

As explained before in Fig. 4, the total check value ICVt is a check value to check the tampering of all the check values, i.e. ICVa, ICVb, and check values of each content block. Therefore, when the total check value created by means of the above processes agrees with the check value: ICVt stored inside the header (Header), all the check values of ICVa, ICVb, and each content block are judged as not tampered with.

Next, at the step S58 the control unit 301 of the record reproducing player 300 retrieves content block information inside the block information (BIT) and checks if the content block is subject to checking. When the content block is subject to checking, the content check value is stored in the block information inside the header.

When a content block is subject to checking, the corresponding content block is read in from the medium 500 by means of the read unit 304 of the record reproducing player 300, or received by the communication unit 600 with the use of the communication unit 305 of the record reproducing player 300 to be transmitted to the record reproducing player's encryption processing unit 302 of the record reproducing player 300. Upon receiving it, the control unit 306 of the record reproducing player's encryption processing unit 302 lets the encryption/ decryption unit 308 of the record reproducing player's encryption processing unit 302 calculates the intermediate check value of the content.

The intermediate value of the content is created by decrypting a content block entered in the CBC mode of the DES using the content key Kcon decrypted at the step S54, the result of which is divided into 8-byte units, all of which are operated based on the XOR logic. (Any calculation will do, such as addition, subtraction, etc.)

Next, the control unit 306 of the record reproducing player's encryption processing unit 302 lets the encryption/decryption unit 308 of the record reproducing player's encryption processing unit 302 calculate a content check value. The content check value is created by encrypting a content intermediate value with the DES, with a content check value creation key Kicvc saved in the internal memory 307 of the record reproducing player's encryption processing unit 302 as the key. Then, at the step S51 the control unit 306 of the record reproducing player's encryption processing unit 302 compares the content check value and the ICV inside the content block received from the control unit 301 of the record reproducing player 300, the result of which is delivered to the control unit 301 of the record reproducing player 300. Upon receiving it, the control unit 301 of the record reproducing player 300, if authentication is successful, retrieves the next content block for checking, and lets the record reproducing player's encryption processing unit 302 of the record reproducing player 300 check it. Similar check processes are repeated until all the content blocks are checked. If adjusted to the creation side of the header, even with IV=0, it also can be allowed to use a content check creation initial value IVc once saved in the memory 307 of the record reproducing player's encryption processing unit 302. Also, all the content check values checked are to be retained in the record reproducing player's encryption processing unit 302 of the record reproducing player 300. Furthermore, the record reproducing player's encryption processing unit 302 of the record reproducing player 300 watches the checking order of content blocks for checking, and if the order is in the wrong, or if the same content block is checked more than two times, authentication is judged as a failure. And, if all the contents are authenticated, it proceeds to the step S59.

Next, at the step S59 the record reproducing player's encryption processing unit 302 of the record reproducing player 300 lets the encryption/decryption unit 308 of the record reproducing player's encryption processing unit 302 encrypt the block information key Kbit and content key Kcon decrypted at the step S54 with the session key Kses shared in mutual authentication. The control unit 301 of the record reproducing player 300 retrieves the block information key Kbit and content key Kcon encrypted with the session key Kses from the record reproducing player's encryption processing unit 302 of the record reproducing player 300, which are transmitted to the recording device 400 through the recording device controller 303 of the record reproducing player 300.

Next, at the step S60, upon receiving the block information key Kbit and content key Kcon transmitted from the record reproducing player 300, the recording device 400 lets the encryption/decryption unit 406 of the recording device's encryption processing unit 401 decrypt the data received with the session key Kses shared in mutual authentication, and re-encrypt it with the recording device's individual storage key Kstr saved in the internal memory 405 of the recording device's encryption processing unit 401. Finally the control unit 301 of the record reproducing player 300 retrieves the block information key Kbit and content key Kcon re-encrypted with the storage key Kstr from the recording device 400 through the recording device controller 303 of the record reproducing player 300. Then, these keys are replaced with the block information key Kbit and content key Kcon encrypted with the distribution key Kdis.

At the step S61 the control unit 301 of the record reproducing player 300 retrieves use restriction information from the usage policy of the header portion of the data to judge whether the content downloaded can be used only by the record reproducing player 300 that downloaded it, or by any similar record reproducing player 300 (In this case, the use restriction information is set to 0.). As a result, if the use restriction information is 1, it proceeds to the step S62.

At the step S62 the control unit 301 of the record reproducing player 300 lets the record reproducing player's encryption processing unit 302 of the record reproducing player 300 calculate the record reproducing player's individual check value. As shown in Fig. 25, the record reproducing player's individual check value creates an intermediate check value ICVdev encrypted with the DES from the intermediate check value ICVdev saved at the step S58, with the record reproducing player signature key Kdev saved in the internal memory 307 of the record reproducing player's encryption processing unit 302. The calculated record reproducing player's individual check value ICVdev overwrites the total check value ICVt.

As explained before, the system signature key Ksys is a system signature key used to append a shared signature or ICV to the distribution system. And, differing from record reproducing player to record reproducing player the record reproducing player signature key Kdev is a record reproducing player's signature a record reproducing player uses to append a signature or ICV. It means that the data signed by the system signature key Ksys is successfully checked by a system (record reproducing player) having the same system signature key, or that the total check values ICVt agree each other, enabling shared use. However, when a signature is made using the record reproducing signature key Kdev, the record reproducing player signature key should be the key particular to the record reproducing player. Therefore, the data signed with the record reproducing player signature key Kdev or data saved in the recording device after a signature is made, can not be reproduced because the check value ICVdev particular to the record reproducing player does not match, making it a failure, when trying to reproduce that data by installing a medium on which it is recorded onto other record reproducing players.

Therefore, it is possible for the data processing system employing the present invention, with use restrictions provided, to freely set up a content usable in common by systems, or a content usable only by appointed record reproducing players.

At the step S63 the control unit 301 of the record reproducing player 300 stores a content in the external memory 402 of the recording device 400.

The figure 26 shows the state of a content in a recording device with use restriction information=0. The figure 27 shows the state of the content in a recording device with use restriction information = 1. The only difference between the figures 26 and 4 lies in that the content block information key Kbit and content key Kcon are encrypted by the distribution key Kdis or the storage key Kstr. And, the difference between the figures 27 and 26 consists in that the intermediate check value is encrypted with the system signature key Ksys in Fig. 26 while with the record reproducing player signature key Kdev particular to a record reproducing player in Fig. 27.

If it fails in checking the check value A at the step S52, and if it fails in checking the check vale B at the step S56, and if it fails in checking the total check value ICVt at the step S57, and if it fails in checking the content check value of each content at the step S58, it proceeds to the step S64, and it displays a given error mark.

If use restriction information is 0 at the step S61, it goes to the step 63, skipping the step S62.

(8) Reproducing Process on Recording Device Storage Information in Record Reproducing Player

Explanation is given on a reproducing process, by a record reproducing player 300, of content information stored in the external memory 402 of the recording device 400.

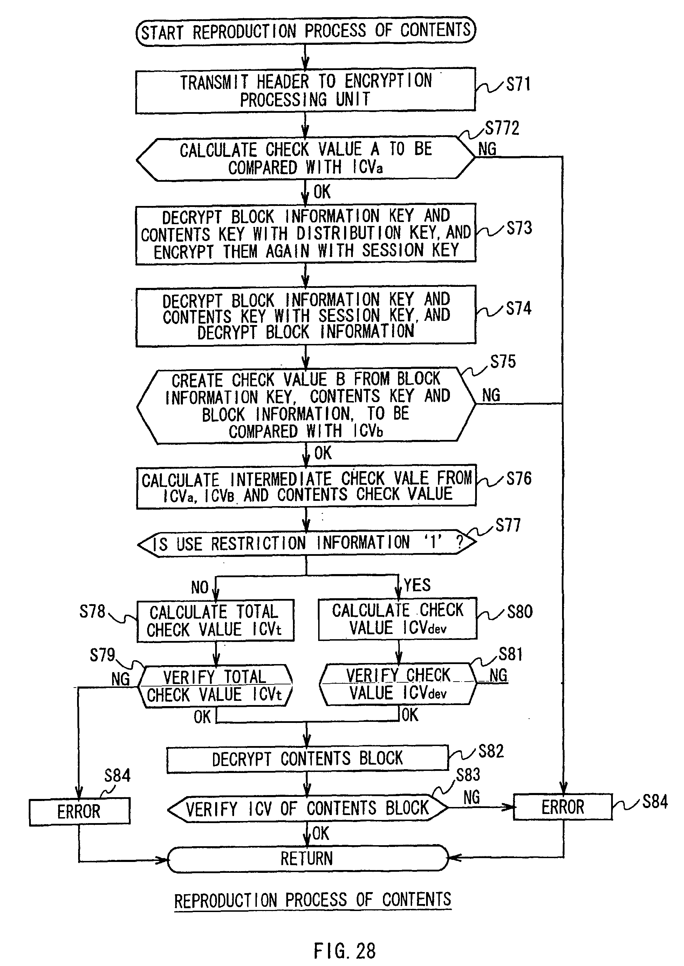

The figure 28 is a flowchart to explain a procedure to retrieve and use a content a record reproducing player 300 retrieves from a recording device 400. It is assumed in Fig. 28 that mutual authentication is already established between the record reproducing player 300 and recording device 400.

At the step S71 the control unit 301 of the record reproducing player 300 retrieves a content from the external memory 402 of the recording device 400 with the use of the recording device controller 303. Then the control unit 301 of the record reproducing player 300 transmits the header portion in the data to the record reproducing player's encryption processing unit 302 of the record reproducing player 300. Similar processes are performed at the step S72 to those explained in "(7) Downloading Processing from Record Reproducing Player to Recording Device". The control unit 306 of the record reproducing player's encryption processing unit 300 lets the encryption/decryption unit 308 of the record reproducing player's encryption processing unit 302 calculate a check value A. As explained before in Fig. 23, the check value A is calculated with an ICV calculation method similar to the one explained in Fig. 7, with the check value A creation key Kicva stored in the internal memory 307 of the record reproducing player's encryption processing unit 302 as the key, and with a content ID (Content ID) and usage policy as messages.

As explained before, the check value A:ICVa is a check value to check the tampering of the content ID and usage policy. With the check value A creation key Kicva stored in the internal memory 307 inside the record reproducing player's encryption processing unit 302 as the key, and with the content ID (Content ID) and usage policy as messages, if the check value A calculated following the ICV calculation method explained in Fig. 7, coincides with the check value: ICVa stored inside the header, the content ID and usage policy stored in the recording device 400 are judged as not tampered with.

Next, at the step S73 the control unit 301 of the record reproducing player 300 takes the block information key Kbit and content key Kcon out of the header portion retrieved, which is transmitted to the recording device 400 through the recording device controller 303 of the record reproducing player 300. Upon receiving the block information key Kbit and content key Kcon from the record reproducing player 300, the recording device 400 lets the encryption/decryption unit 406 of the recording device's encryption processing unit 401 decrypt the received data with the storage key Kstr particular to the recording device saved in the internal memory 405 of the recording device's encryption processing unit 401, which (the data) is reencrypted with the session keyKses shared in mutual authentication. Then, the control unit 301 of the record reproducing player 300 retrieves the block information key Kbit and content key Kcon reencrypted with the session key Kses from the recording device 400 via the recording device controller 303 of the record reproducing player 300.

Next, at the step S74 the control unit 301 of the record reproducing player 300 transmits the block information key Kbit and content key Kcon re-encrypted with the session key Kses received to the record reproducing player's encryption processing unit 302 of the record reproducing player 300.

Upon receiving the block information key Kbit and content key Kcon reencrypted with the session key Kses, the record reproducing player's encryption processing unit 302 of the record reproducing player 300 lets the encryption/decryption unit 308 of the record reproducing player's encryption processing unit 302 decrypt the block information key Kbit and content key Kcon encrypted with the session key Kses, with the use of the session key Kses shared in mutual authentication. Then, the block information received at the step S71 is decrypted with the decrypted block information key Kbit.

The record reproducing player's encryption processing unit 302 of the record reproducing player 300 replaces the decrypted block information key Kbit, content key Kcon, and block information BIT with the block information key Kbit, content key Kcon, and block information BIT received at the step S71, which are retained in the record reproducing player's encryption processing unit 302 of the record reproducing player 300. The control unit 301 of the record reproducing player 300 once retrieves the decrypted block information BIT from the record reproducing player's encryption processing unit 302 of the record reproducing player 300.

A process at the step S75 is similar to the one at the step S56 explained in the "(7) Downloading Processing from Record Reproducing Player to Recording Device". The block information key Kbit, content key Kcon, and block information (BIT) the control unit 306 of the record reproducing player's encryption processing unit 302 retrieved from the recording device 400 are divided into 8-bit units, all of which are operated based on the XOR logic. Next, the control unit 306 of the record reproducing player's encryption processing unit 302 lets the encryption/decryption unit 308 of the record reproducing player's encryption processing unit 302 calculate the check value B (ICVb). As shown in Fig. 24 explained before, with the the check value B creation key Kicvb stored in the internal memory 307 inside the record reproducing player's encryption processing unit 302 as the key, the check value B is created by encrypting with the DES the value of XOR calculated before. Finally the check value B and ICVb inside the header are compared, and if they agree, it proceeds to the step S76

As explained before, the check value B: ICVb is a check value to check the tampering of the block information key Kbit, content key Kcon, and block information. With the check value B creation key Kicvb saved in the internal memory 307 of the record reproducing player's encryption processing unit 302 as the key, if the check value B created by encrypting with the DES the value obtained as a result of dividing the block information key Kbit, content key Kcon, and block information (BIT) into 8-bit units, and by operating them based on the XOR logic, agrees with the check value: ICVb stored inside the header of the data retrieved from the recording device 400, the block information key Kbit, content key Kcon, and block information (BIT) of the data stored in the recording device 400 are judged as not tampered with.

At the step S76 the control unit 306 of the record reproducing player's encryption processing unit 302 lets the encryption/decryption unit 308 of the record reproducing player's encryption processing unit 302 calculate an intermediate check value. As explained before in Fig. 25, the intermediate check value is calculated following the ICV calculation method explained in Fig. 7 and others, with the total check value creation key Kicvt saved in the internal memory 307 inside the record reproducing player's encryption processing unit 302 as the key, and with the check value A, check value B inside the checked header, and all the content check values retained as messages. Even with the initial value=0, the total check value creation initial value: IVt can be used as well, which is once retained in the internal memory 307 of the record reproducing player's encryption processing unit 302. The intermediate check value created should be retained in the record reproducing player's encryption processing unit 302 of the record reproducing player 300, if necessary.

Next, at the step S77 the control unit 301 of a record reproducing player 300 takes out use restriction information from the usage policy contained in the header portion of the data retrieved from the external memory 402 of the recording device 400, and judges whether the content downloaded is permitted to be used only by the very record reproducing player 300 (use restriction information is 1), or by any of other record reproducing players 300 (use restriction information is 0). When the result of the judgement is use restriction information=1, in other words, the use restriction is so set as to permit the content to be used only by the very record reproducing player 300 that downloaded them, it proceeds to the step S80. However, if the use restriction information is 0, permitting other similar record reproducing players 300 to use the content, it proceeds to the S78. The process at the step S77 can be performed by the encryption unit 302.

A total check value ICVt calculation is performed at the step S78, similar to the one explained at the step S58 in the (7) Downloading Processing from Record Reproducing player to Recording Device. In other words the control unit 306 of the record reproducing player's encryption processing unit 302 lets the encryption/decryption unit 308 of the record reproducing player's encryption processing unit 302 calculate the total check value ICVt. As explained before in Fig. 25, the total check value ICVt is created by encrypting the intermediate check value with the DES, with the system signature key Ksys retained in the internal memory 307 of the record reproducing player's encryption processing unit 302 as the key.

Next, comparison is made at the step S79 between the total check value ICVt created at the step S78 and ICVt inside the header saved at the step S71, and if they agree, it proceeds to the step S82.

As explained before, the total check value ICVt is a check value to check the tampering of the ICVa, ICVb, and check value of each of content block. So if the total check value created in the above process agrees with the check value: ICVt stored in the header, all of the ICVa, ICVb, and check value of each of content blocks are judged as not tampered with, in respect to the data stored in the recording device 400.

In the judgement at the step 577, if a content downloaded is found to be set only to the very record reproducing player 300 that downloaded them, namely the information is set to 1, it proceeds to the step S80.

At the step S80 the control unit 306 of the record reproducing player's encryption processing unit 302 lets the encryption/decryption unit 308 of the record reproducing player's encryption processing unit 302 calculate the check value ICVdev particular to the record reproducing player. As explained before in Fig. 25, the check value ICVdev particular to the record reproducing player is created by encrypting the intermediate check value with the DES, with the record reproducing player signature key Kdev particular to the record reproducing player saved in the internal memory 307 of the record reproducing player's encryption processing unit 302 as the key. Comparison is made between the check value ICVdev particular to the record reproducing player calculated at the step S80 and the ICVdev inside the header saved at the step S71 at the step S81, if they agree, it proceeds to the step S82.

Thus, the data signed by the system signature key Ksys is successfully checked by a system (record reproducing player) having the same system signature key, or that the total check values ICVt agree each other, enabling shared use. However, when the signature is made using the record reproducing signature key Kdev, the record reproducing player signature key should be the key particular to the record reproducing player. Therefore, the data signed with the record reproducing player signature key Kdev or data saved in the recording device after a signature is made, can not be reproduced because the check value ICVdev particular to the record reproducing player does not match, making it a failure, when trying to reproduce that data by installing the medium with the data recorded on it onto other record reproducing players. Therefore, it is possible, with use restriction provided, to set up a content usable in common by systems, or a content usable only by the appointed record reproducing player.

At the step S82 the control unit 301 of the record reproducing player 300 retrieves the content block information inside the block information BIT once retrieved at the step S74, which is checked to see if the content block is subject to encryption. Should it be a subject of encryption, the corresponding content block is retrieved from the external memory 402 of the recording device 400 through the recording device controller 303 of the record reproducing player 300 and transmitted to the record reproducing player's encryption processing unit 302 of the record reproducing player 300. Upon receiving it, the control unit 306 of the record reproducing player's encryption processing unit 302 lets the encryption/ decryption unit 308 of the record reproducing player's encryption processing unit 302 decrypt the content, and if the content block is a subject of checking, the content check value is checked at the step S83.

A process at the step S83 is similar to the one at the step S58 explained in the "(7) Downloading Processing from Record Reproducing player to Recording Device". The control unit 301 of the record reproducing player 300 retrieves the content block information inside the block information (BIT) to judge whether or not the content block is a subject of checking from the storage state of the content check value. If the content block is found to be a subject of checking, the control unit 301 of the record reproducing player 300 receives the content block from the external memory 402 of the recording device 400 and transmits it to the record reproducing player's encryption processing unit 302 of the record reproducing player 300. Upon receiving it, the control unit 306 of the record reproducing player's encryption processing unit 302 lets encryption/decryption unit 308 of the record reproducing player's encryption processing unit 302 calculate a content intermediate value.

The content intermediate check value is created by decrypting the content block entered in the CBC mode of the DES with the content key Kcon decrypted at the step S74, the result of which is divided into 8-byte units, all of which are operated based on the XOR logic.

Next, the control unit 306 of the record-reproducing player's encryption processing unit 302 lets the encryption/decryption unit 308 of the record reproducing player's encryption processing unit 302 calculate a content check value. The content check value is created by encrypting the content intermediate value with the DES, with the content check value creation key Kicvc saved in the internal memory 307 of the record reproducing player's encryption processing unit 302 as the key. Then, the control unit 306 of the record reproducing player's encryption processing unit 302 compares the content check value with the ICV inside the content block received from the control unit 301 of the record reproducing player 300 at the step S71, the result of which is handed over to the control unit 301 of the record reproducing player 300. Upon receiving it, the control unit 301 of the record reproducing player 300, if the checking was successful, takes out a next content block to be checked, and lets the record reproducing player's encryption processing unit 302 of the record reproducing player 300 check it. Similar processing is repeated until all the content blocks are checked. Even with the initial value IV=0, the content check value creation initial value IVc is saved in the internal memory 307 of the record reproducing player's encryption processing unit 302, which can be used as well. All the content check values checked are retained in the record reproducing player's encryption processing unit 302 of the record reproducing player 300. Furthermore, the record reproducing player's encryption processing unit 302 of the record reproducing player 300 watches the checking order of the content blocks for checking, and if the order should be in the wrong, or if the same content block is checked more than twice, this authentication is judged as a failure.

The control unit 301 of the record reproducing player 300 receives the comparison results of the content check value (If they are not objects for checking, all the comparison results are judged as successful.), and if the checking was successful, takes out the decrypted content from the record reproducing player's encryption processing unit 302 of the record reproducing player 300. Then, the next content block for decryption is taken out to be decrypted by the record reproducing player's encryption processing unit 302 of the record reproducing player 300. This processing is repeated until all the content blocks are decrypted.

Note that if disagreement occurs in the checking process of the content check values at the step S83, the record reproducing player's encryption processing unit 302 of the record reproducing player 300 interrupts the processing at that moment regarding it as a failure and stops decrypting the rest of the content. As well, the record reproducing player's encryption processing unit 302 of the record reproducing player 300 watches the decrypting order for content blocks to be decrypted, and should the order be followed wrongly or should the same content block be decrypted more than twice, the decrypting is judged as a failure.

In such cases that the checking of the check value A fails at the step S72, or that the checking of the check value A fails at the step S75, or that the checking of the total check value ICVt fails at the step S79, or that the checking of the record reproducing player's individual check value ICVdev fails at the step S81, or that the checking of the content check value of each content block at the step S83, it proceeds to the step S84, and a given error indication is made.

As explained hitherto, when downloading and using a content, not only because important data or a content is hidden by means of encryption and tampering can be checked, but because the block information keys Kbits to decrypt block information BIT, and the content keys Kcon to decrypt content are stored with a recording device's individual storage key Kstr, it is impossible to decrypt the content correctly even if data on a certain recording medium is simply copied on other recording media. More concretely, since the data is encrypted with a different storage key Kstr in each recording device at the step S74 in Fig. 28 by way of example, it is impossible to decrypt the data correctly with use of a different recording device.

(9) Key Exchange Process after Mutual Authentication

One of the features of the data processing system of the present invention consists in that a recording device is made available for use only after mutual authentication processing is performed between the record reproducing player 300 and the recording device 400, thereby putting use restrictions on use modes.

In order to prevent against such a case, for example, that recording devices such as memory cards having a content illegally duplicated are installed onto record reproducing players for reproduction, the (encrypted) content can be transferred between a record reproducing player 300 and recording device 400 on the condition that authentication is obtained as a result of mutual authentication processing between a record reproducing player 300 and recording device 400.

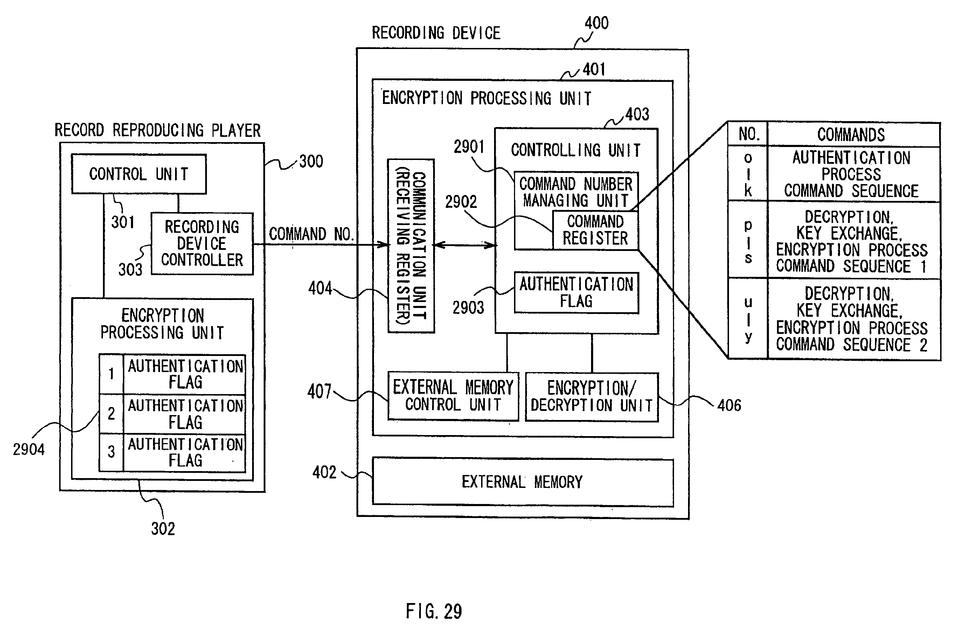

In order to have the above restriction processing made possible, in the data processing system of the present invention all the processes in the encryption processing unit 401 of the recording device 400 are conducted based on a preset command system. It means that a recording device has a command processing structure in which commands based on the command numbers are taken out in order from the register for execution. The figure 29 gives explanation on the command processing structure of this recording device.

As shown in Fig. 29, command numbers (No.) are output to the communication unit 404 (including a receive register) of the recording device 400 from the recording device controller 303 under the control of the control unit 301 of the record reproducing player 300 between the record reproducing player 300 having the record reproducing player's encryption processing unit 302 and recording device 400 having the recording device's encryption processing unit 401.

The recording device 400 has a command number managing unit 2901 in the control unit 403 inside the encryption processing unit 401. Having the command register 2902, the command number managing unit 2901 stores a command system corresponding to the command numbers output from the record reproducing player 300. As shown on the right side in Fig. 29, in the command system the execution commands are oriented to the command numbers 0 to y in order. The command number managing unit 2901 watches for command numbers output from the record reproducing player 300, and takes out corresponding commands from the command register 2092 for execution.

In the command sequence stored in the command register 2902 a row of commands regarding the authentication processing sequence are oriented to the preceding command numbers 0 to k. Furthermore, decryption, key exchange, and encryption processing command sequence 1 are oriented to the command numbers p to s after the command row regarding the authentication processing sequence, and yet furthermore, decryption, key exchange, and encryption processing command sequence 2 to the following command numbers u o y.

As explained in the authentication process flow in Fig. 20, when a recording device 400 is installed onto a record reproducing player 300, the control unit 301 of the record reproducing player 300 transmits the initialization command to the recording device 400 through the recording device controller 303. The recording device 400 receives the command at the control unit 403 of the recording device's encryption processing unit 401 through the communication unit 404, and clears an authentication flag 2903. In other words the recording device 400 is set to an unauthenticated state. Or, when power is supplied to the recording device 400 from the record reproducing player 300, the recording device 400 can be set to an unauthenticated state when power is turned on.

Next, the control unit 301 of the record reproducing player 300 transmits the initialization command to the record reproducing player's encryption processing unit 302, together with a recording device insertion slot number. The transmission of the recording device insertion slot number makes it possible to have authentication processing, and data transmission/reception with a plurality of recording devices 400 simultaneously if a plurality of recording devices 400 are connected to the record reproducing player 300.

Upon receiving the initialization command, the record reproducing player's encryption processing unit 302 of the record reproducing player 300 clears an authentication flag 2904 corresponding to the insertion number of the recording device at the control unit of the record reproducing player's encryption processing unit 302. It means that the recording device is set to the unauthenticated state.

With the initialization processing completed, the control unit 301 of the record reproducing player 300 outputs the command numbers in the rising order, starting with the command number 0 via the recording device controller 303. The command number managing unit 2901 of the recording device 400 watches for command numbers input from the record reproducing player 300, confirming that commands are input from 0 in order, and takes out corresponding commands from the command register 2902 to conduct various processes such as the authentication process. Should command numbers be not input in the prescribed order, it is judged as an error, resetting the command number reception value to the initial state, which means that the execution available command number is set to 0.

As shown in Fig. 29, the command numbers are designated to the command sequence stored in the command register 2902 so that the authentication process is performed first, and the processing sequence of decryption, key exchange, and encryption processes are stored in the following processes.

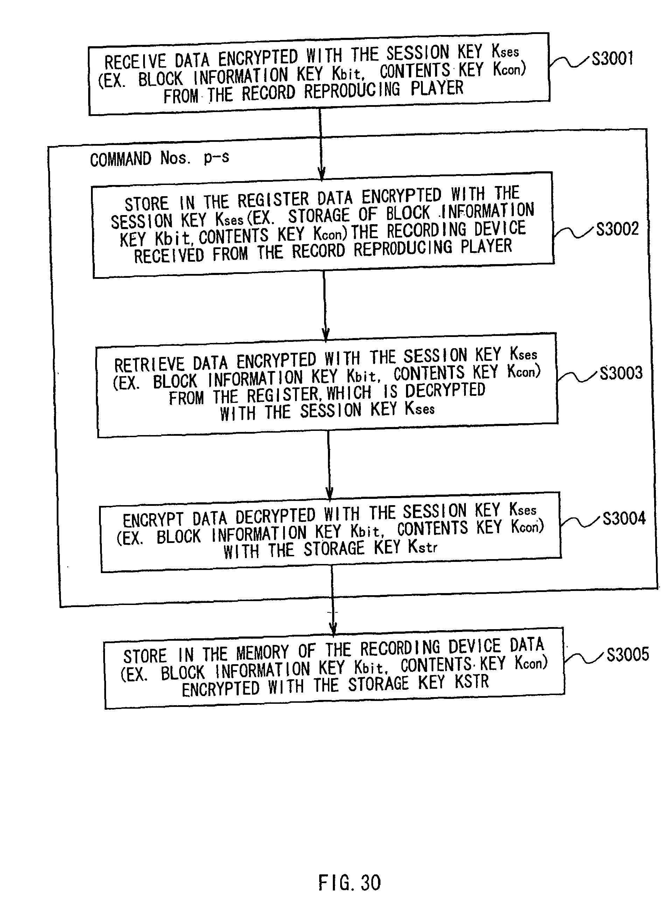

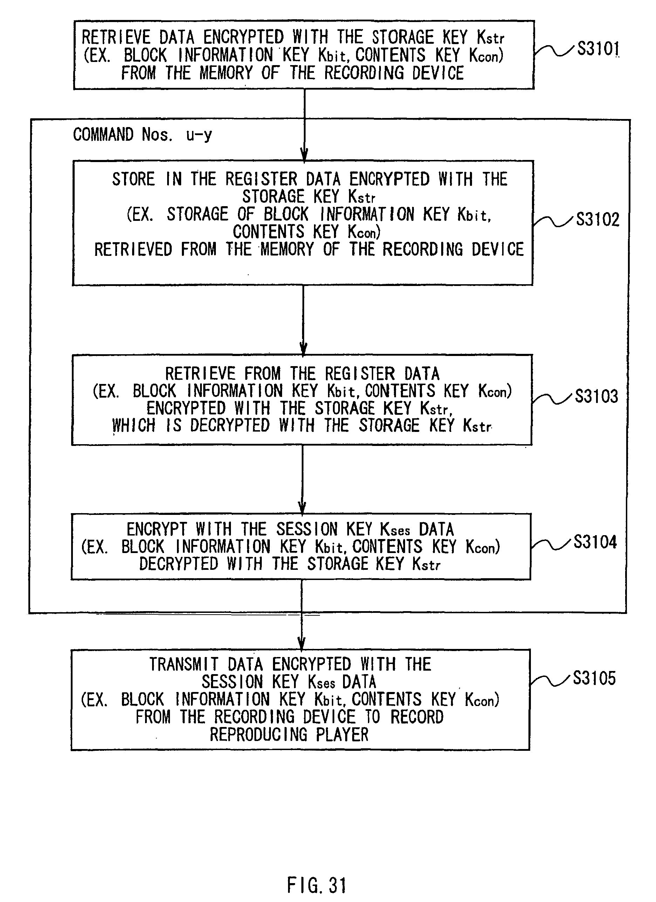

Explanation is given on a practical example of the processing sequence of decryption, key exchange, and encryption processes, referring to the Figs. 30 and 31.

The figure 30 shows a part of the structure of the processes performed in downloading a content to a recording device 400 from a record reproducing player 300 explained before in Fig. 22. They are processed concretely between the steps S59 to S60 in Fig. 22.

In Fig. 30 the step S3001 is a process where a recording device receives data (ex. block information key Kbit, content key Kcon) encrypted with the session key Kses from a record reproducing player. Subsequently the command row p to s shown in Fig. 29 begins. The command row p to s starts performing after the authentication processing commands 0 to k are completed, with authentication-done flags set to the authentication flags 2903 and 2904 shown in Fig. 29. This is guaranteed because the command number managing unit 2901 accepts the command numbers only in the rising order, starting with 0.

The step S3002 is a process to store in the register data (ex. block information key Kbit, content key Kcon) encrypted with the session key Kses the recording device received from the record reproducing player.

The step S3003 is a step where data (ex. block information key Kbit, content key Kcon) encrypted with the session key Kses is retrieved from the register to be decrypted with the session key Kses.

The step S3004 is a step to perform encryption processing, with the storage key Kstr, on data (ex. block information key Kbit, content key Kcon) decrypted with the session key Kses.

The above processing steps S3002 to S3004 are the processes included in the command numbers p to s in the command register explained before in Fig. 29. These processes are performed by the recording device's encryption processing unit 401 in order following the command numbers p to s the command number managing unit 2901 of the recording device 400 receives from the record reproducing player 300.

The next step S3005 is a step to store data (ex. block information key Kbit, content key Kcon) encrypted with the storage key Kstr in the external memory of the recording device. At this step it is also possible that the record reproducing player 300 retrieves data encrypted with the storage key Kstr from the recording device's encryption processing unit 401, which can be stored later in the external memory 402 of the recording device 400.

The above steps S3002 to S3004 an execution sequence to be executed continuously, not permitting interruptions. For example, if there is a data read command from the record reproducing player 300 at the time when the decryption process is completed at the step S3003, the command number managing unit 2901 does not accept the execution of the retrieving because the read command differs from a command number in the rising order set up for the command numbers p to s of the command register 2902. Therefore, it prevents against the illegal retrieval of key data and a content, making it impossible for a record reproducing player 300, for example, to retrieve decrypted data from without, which may occur in exchanging keys in a recording device 400.

The figure 31 is part of the structure of the processes performed in a record reproducing player 300 in reproducing a content retrieved from the recording device 400 explained before in Fig. 28. This is the process executed concretely at the step S73 in Fig. 28.

In Fig. 31, the step S3101 is a step to perform retrieving data (ex. block information key Kbit, content key Kcon) encrypted with the storage key Kstr from the external memory 402 of the recording device 400.

The step S3102 is a step to store in the register data (ex. block information key Kbit, content key Kcon) encrypted with the storage key Kstr retrieved from the memory of the recording device. At this step it is also possible that the record reproducing player 300 retrieves data encrypted with the storage key Kstr from the external memory 402 of the recording device 400, which can be stored later in the register of the recording device 400.

The step S3103 is a step to retrieve data (ex. block information key Kbit, content key Kcon) encrypted with the storage key Kstr from the register, which is decrypted with the storage key Kstr.

The step S3104 is a step to encrypt data (ex. block information key Kbit, content key Kcon) decrypted with the storage key Kstr, with the session key Kses.

The above processing steps S3102 to S3104 are processes contained in the command numbers u to y in the command register explained in the preceding Fig. 29. These processes are performed in order by the recording device's encryption/decryption unit 406 according to the command numbers u to y received at the command managing unit 2901 of the recording device from the record reproducing player 300.

The next step S3105 is a process to transmit data (ex. block information key Kbit, content key Kcon) encrypted with the session key Kses from the recording device to the record reproducing player.

The above steps S3102 to S3104 are an execution sequence to be executed continuously, not permitting interruptions. For example, if there is a data read command from the record reproducing player 300 at the time when the decryption process is completed at the step S3103, the command number managing unit 2901 does not accept the execution of the retrieving because the read command differs from a command number in the rising order set up for the command numbers u to y of the command register 2902. Therefore, it prevents against the illegal retrieval of key data and content, making it impossible for the record reproducing player 300, for example, to retrieve decrypted data from without, which may occur in exchanging keys in a recording device 400.

In the processes shown in Figs. 30 and 31, an example is given in which subjects of decryption and encryption by means of key exchange are block information key Kbit, content key Kcon. However, the command sequence stored in the command register 2902 shown in Fig. 29, can include encryption and decryption processing entailing the key exchange of content themselves so that objects for decryption and encryption by means of key exchange are not limited to the above example.

Explanation has been given on the key exchange processing after mutual authentication in the data processing system of the present invention. Thus, the key exchange processing in the data processing system of the present invention can be carried out only after authentication is made between a record reproducing player and recording device having a structure preventing against access to decrypted data in key exchange processing from the outside, thereby insuring a high degree of security of content and key data.

(10) Downloading and Reproducing Processes Oriented to Plurality of Content Data Formats and Each Format.

In the above mode of carrying out the present invention, explanation is given on the case where a data format in, for example, the media 500 or communication means 600 shown in Fig. 3 is the only data format shown in Fig. 4. However, data formats in media 500 or over communication means 600 are not limited to the above format shown Fig. 4, but it is desirable to employ a data format suitable for the content, say, of music, image data, game programs, etc. Explanation is given on a downloading process onto a recording device and a reproducing process suitable to a plurality of different data formats and each of them.

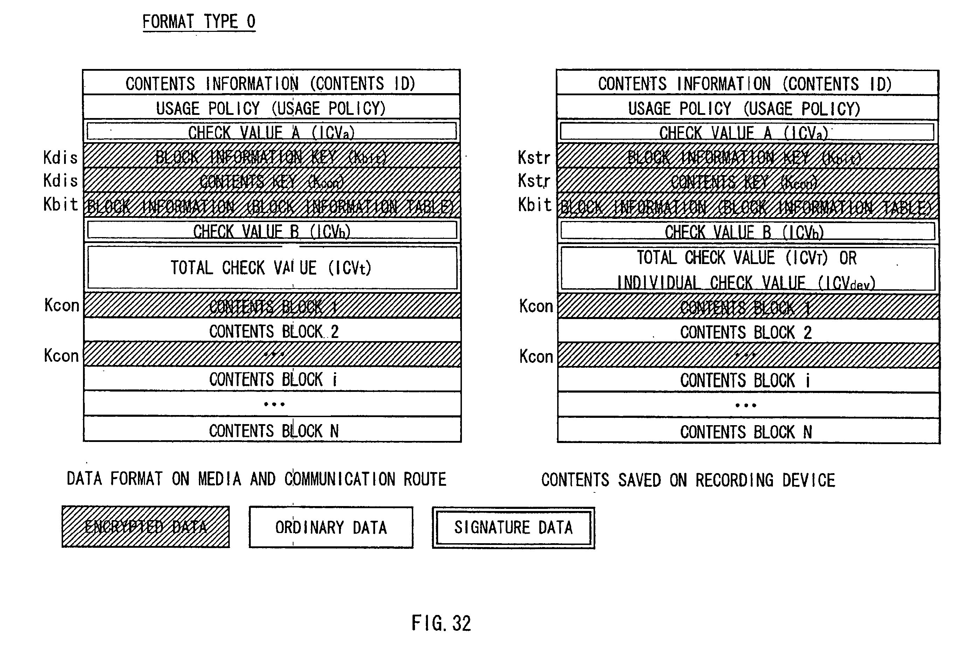

Four different data formats are shown in Figs. 32 to 35. Shown on the left side of each figure are data formats on the media 500 or communication means 600 show in Fig. 3, on the right side of each figure data formats stored in the external memory 402 of the recording device 400. First, explanation is given on the outline of the data formats shown in Figs. 32 to 35, then on the content of each of data in each format, and differences in data in each format.

Shown in the figure 32 are of the format type 0, or same one which is shown in the above explanation as an example. This format type 0 is characterized in that the whole of data is divided into N pieces of data blocks in desired size, namely block 1 to block N, each block being encrypted freely. It means that data can be produced of encrypted blocks, and unencrypted blocks or ordinary message blocks in mix. The encryption of the blocks is performed with the content key Kcon, which is encrypted with the distribution key Kdis on the media, and which is encrypted with the storage key Kstr stored in the internal memory of the recording device when stored in the recording device. The block information key Kbit, too, is encrypted with a distribution key Kdis on the media, and is encrypted with a storage key Kstr stored in the internal memory inside the recording device when stored in the recording device. These key exchanges are conducted following the processes explained before in the "(9) Key Exchange Process after Mutual Authentication".

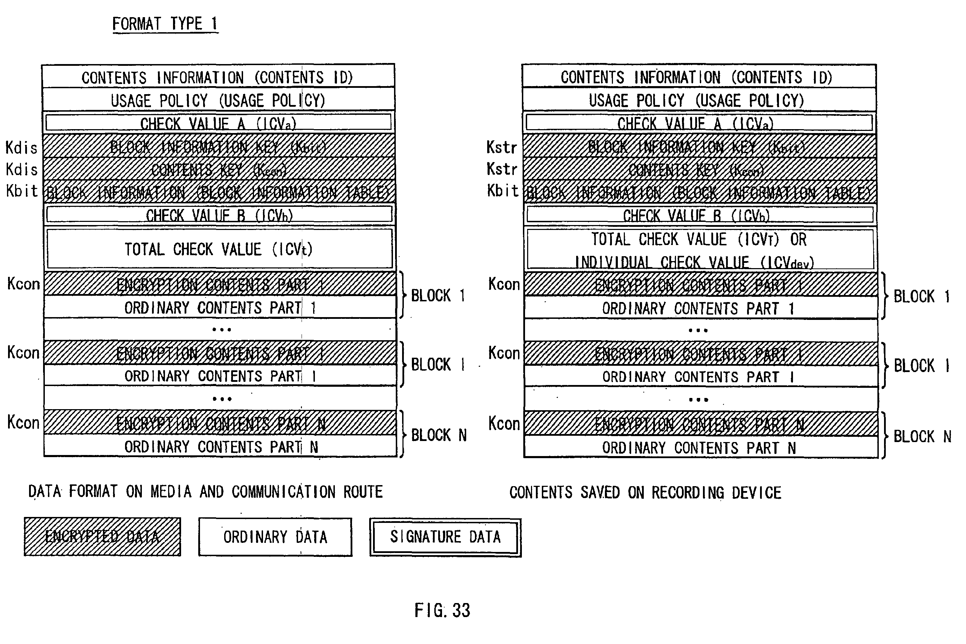

Shown in Fig. 33 is a format type 1. As is similar to the format type 0, the format type 1 also divides the whole of data into N pieces of data blocks, namely block 1 to block N. However, it differs from the type 0 in that the size of each block of the N pieces are made to be the same. The processing mode of encrypting blocks with a content key Kcon is similar to the one of the aforementioned format type 0. The same structure as employed in the format type 0 is also used for the format type 1, in which a content key Kcon and block information key Kbit are encrypted with a distribution key Kdis on the media, and with the storage key Kstr stored in the internal memory inside the recording device when stored in the recording device. Differing from the format type 0, the format type 1 employs a fixed block structure so that the structural data of data length, etc. of each block can be simplified, resulting in reduction of the memory size of block information, compared to the format type 0.

In the structure example in Fig. 33, each block consists of a set of an encrypted part and an unencrypted part (ordinary message). Regulating the length and structure of a block makes it unnecessary to confirm the length of each block and block structure in conducting decryption processing, enabling efficient decrypting and encrypting processing. With he format 1, parts forming each block, namely an encrypted part and unencrypted (ordinary message) part, are so structured that each part can be defined as a subject of checking. So, in the case of a block containing part required to be checked, that block is defined as a content check value ICVi.

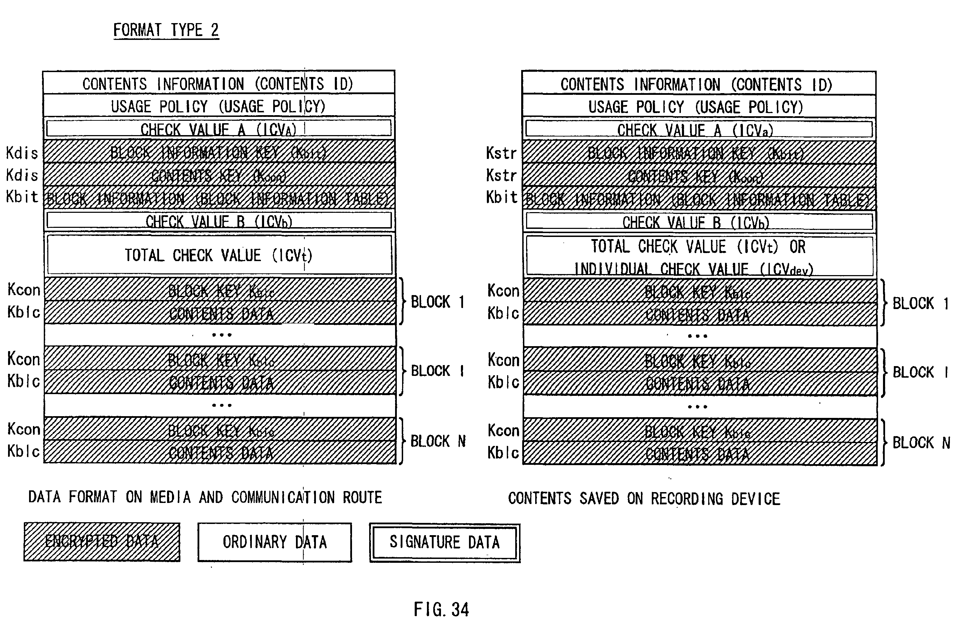

Shown in Fig. 34 is a format type 2. The format type 2 is characterized in that a block is divided into N pieces of data blocks of the same size, namely block 1 to block N, each block encrypted with its individual block key Kblc. The encryption of each block key Kblc is performed with the content key Kcon. The content key Kcon is encrypted with the distribution key Kdis on the media, and with the storage key Kstr stored in the internal memory of the recording device when saved in the recording device. The block information key Kbit, too, is encrypted with a distribution key Kdis on the media, and with a storage key Kstr stored in the internal memory of the recording device when saved in the recording device.

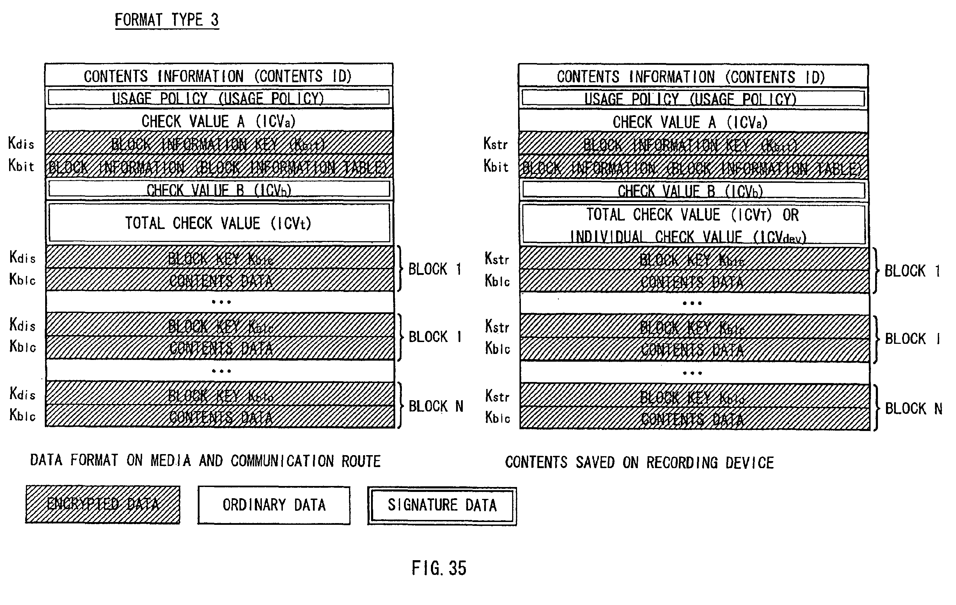

Shown in Fig. 35 is a format type 3. The format type 3 is characterized in that, as for the format type 2, a block is divided into N pieces of data blocks of the same size, namely block 1 to block N, each block encrypted with its individual block key Kblc, and that the encryption of each block key Kblc is done with the distribution key Kdis on the media without using a content key, and with a storage key Kstr on the recording device. A content key Kcon exists neither on the media nor on the device. The block information key Kbit is encrypted with a distribution key Kdis on the media, and with a storage key Kstr stored in the internal memory of the recording device when saved in a recording device.

Explanation is given on the content of data of the above format types 0 to 3. As explained before, data is largely classified into a header portion and content portion. The head portion includes a content identifier, usage policy, check value A, check value B, total check value, block information key, content key, and block information.

The usage policy stores a data length of content, header length, format type (formats 0 to 3 to be explained), content type indicating whether it is, for example, a program or data, etc., localization flag: a flag to determine whether or not a content can be used individually with a certain record reproducing player only as explained in the paragraph regarding downloading/ reproducing a content from/into the recording device, furthermore, copying a content, permission flag regarding move process, and yet furthermore, content encryption algorithm, mode, variety of use restriction information regarding content, and processing information.

The check value A: ICVa is a check value for content ID and usage policy, and is created by means of the method explained before in Fig. 23.

The block information key Kbit is a key to encrypt block information, and as explained before, is encrypted with a distribution key Kdis on the media, and with a storage key Kstr stored in the internal memory of a recording device when stored in a recording device.

The content key Kcon is a key used in encrypting content, and in conjunction with the format types 0 and 1, is encrypted with the distribution key Kdis on the media as in the case of the block information key Kbit, and with a storage key Kstr stored in the internal memory of a recording device when stored in the recording device. As regards the format type 2, the content key Kcon is also used in encrypting a block key Kblc formed in each block of content. As to the format type 3, content keys Kcon do not exist.

The block information is a table describing information on each block, and includes block size and a flag in conjunction with encryption: the information is stored, which indicates whether or not each block is a subject (ICV) to checking. If a block is a subject of checking, a check value ICVi (check value of the block i) of a block is defined in the table and stored (in the block information). The block information is encrypted with a block information encryption key Kbit.

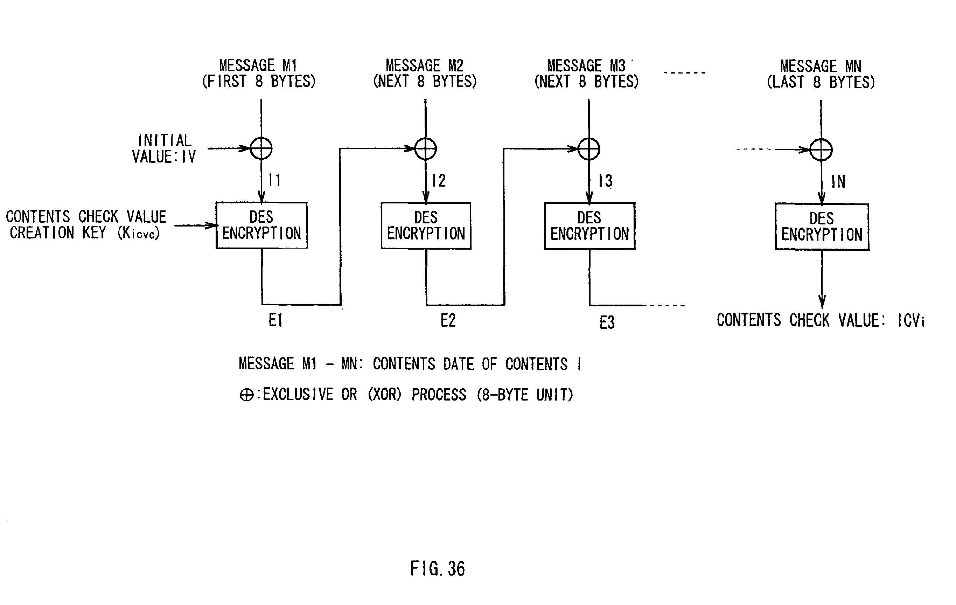

When a block is encrypted, the check value of a block, namely a content check value ICVi, is created as a value obtained by encrypting the value obtained as a result of operating the whole of an ordinary message (decrypted message) in 8-byte units based on the XOR logic, with the content check value creation key Kicvc stored in the internal memory 307 of the record reproducing player 300. When a block is not encrypted, the check value of a block, or content check value ICVi is created as a value obtained by inputting the whole of block data (ordinary message) in 8-byte units into a tampering check value creation function shown in Fig. 36 (DES-CBC-MAC, content check value creation key Kicvc as the key). Shown in Fig. 36 is a structure example to create the check value ICVi of a content block. Each of the message M forms each 8-byte unit of decrypted data or ordinary data.

As to the format type 1, when at least one out of parts inside a block is subject data of a check value ICVi, namely a part required to be checked, a content check value ICVi is defined regarding that block. If the part j is encrypted, the check value P-ICVij of the part j in the block i is created as a value obtained by encrypting with a content check value creation key Kicvc a value obtained by operating the whole of an ordinary message (decrypted message) based on the XOR logic with 8-byte units. If the part j is not encrypted, the check value P-ICVij of the part j in the block i is created as a value obtained by inputting the whole of data (ordinary message) of a block of the part in 8-byte units into a tampering check value creation function (DES-CBC-MAC, content check value creation key Kicvc as the key) shown in Fig. 36.

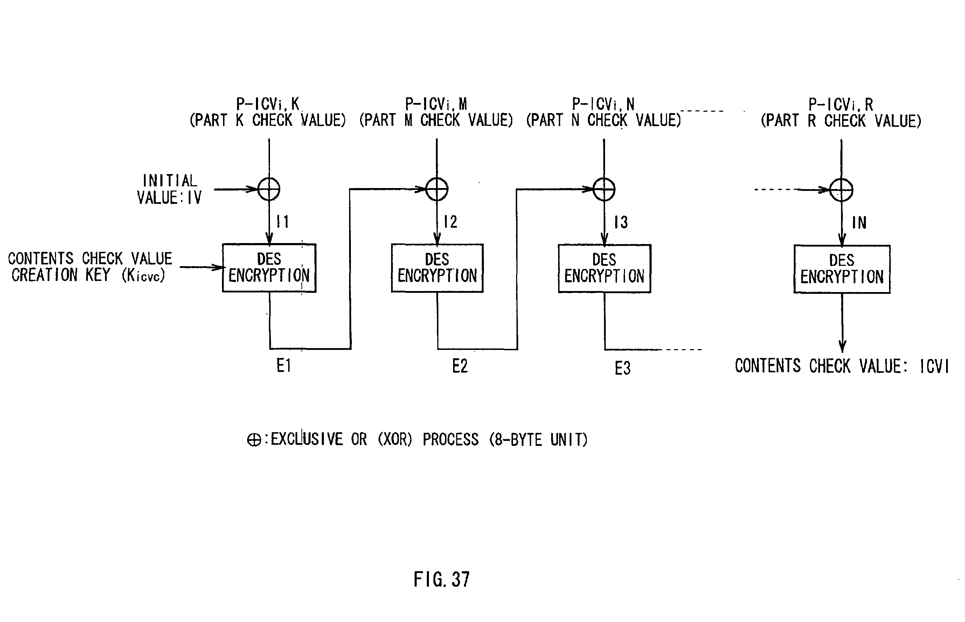

Furthermore, when there exists the only part with [ICV flag = subject of ICV] inside a block i subject to checking, namely a part required to be checked, the check value P-ICVij created in the above method is defined as the check value ICVi of the block as it is. If there exist a plurality of parts with [ICV flag = subject of ICV] inside a block i, indicating that they are required to be checked, the check value ICVi is created as a value obtained by inputting a plurality of part check values P-ICVij as data connected in the order of part numbers in 8-byte units into a tampering check value creation function (DES-CBC-MAC, content check value creation key Kicvc as the key) shown in Fig. 37. The figure 37 shows a structure example to create the content check values ICVi of content blocks.

As to the format types 2 and 3, the check value ICVi of a block is not defined.

The check value B: ICVb is a check value for all of the block information keys, content keys, and block information, and is created by the method explained in Fig. 24 by way of example.

The total check value ICVt is a check value for all the above check value A: ICVa, check value B: ICVb, and check value ICVi contained in each block whose content are subjects of checking, and is created by encrypting with a system signature key Ksys an intermediate check value produced of each check value of the check value A: ICVa, etc. as explained before in Fig. 25

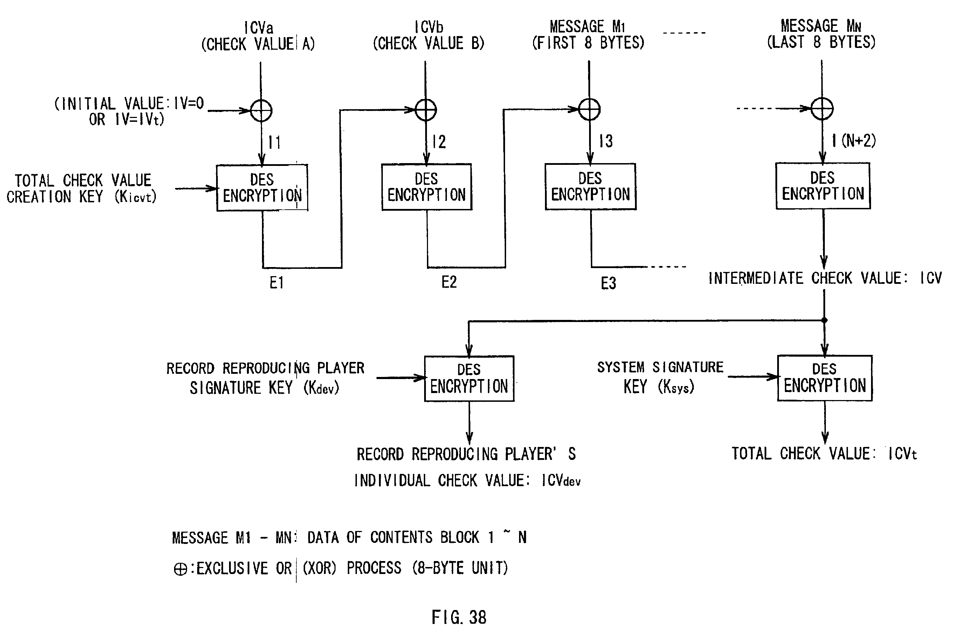

As to the format types 2 and 3, the total check value ICVt is created by encrypting with a system signature key Ksys an intermediate check value created by connecting content data, namely the whole content data from the block key of the block 1 to the last block, to the above check value A: ICVa and check value B: ICVb. Shown in Fig. 38 is an example of a structure to create the total check value ICVt in the format types 2 and 3.

When the localization flag described above is set to 1, that is, a content is permitted to be used individually with a record reproducing player, the individual check value ICVdev is a check value replaceable with the total check value ICVt. With the format types 0 and 1, the individual check value ICVdev is created as a check value for the check value A: ICVa, check value B: ICVb, and the whole check values ICVi contained in each block with a content subject to checking. In practice, as explained in Fig. 25 or Fig. 38, it is created by encrypting with a record reproducing player signature key Kdev a intermediate check value produced from each check value such as the check value A: ICVa, etc. as explained in Fig. 38.

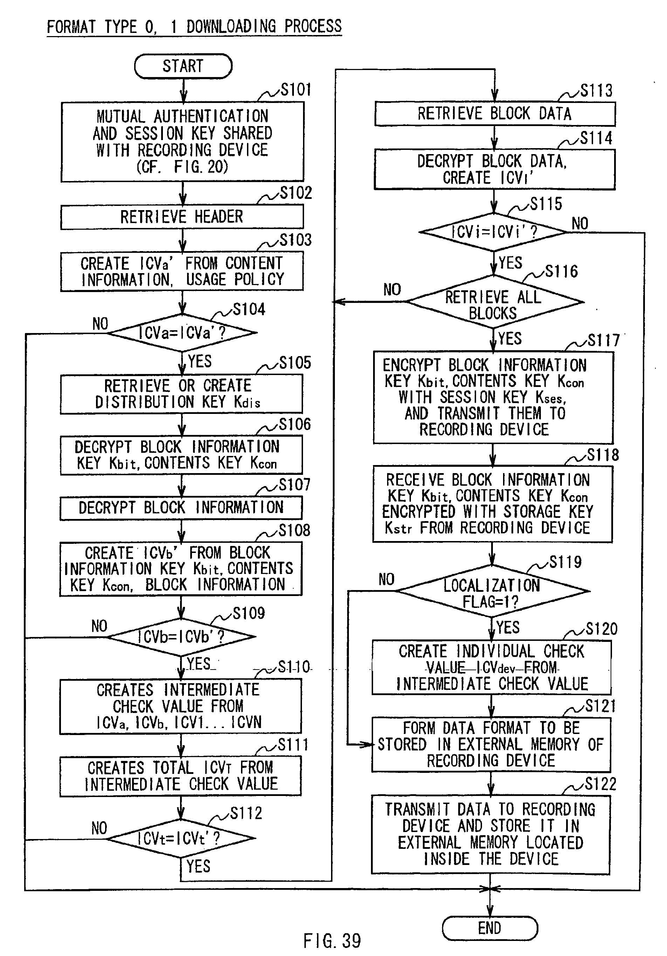

Next, explanation is given on a process, in each of the format types 0 to 3, to download a content from a record reproducing player 300 to a recording device 400, and a reproducing process in the record reproducing player 300 of the content downloaded from the recording device 400, referring to the flowcharts in Figs. 39 to 44.

First, explanation is given on the downloading process on content in the format types 0 and 1, referring to Fig. 39.

The processes shown in Fig. 39 starts with the installation of a recording device 400 onto a record reproducing player 300 as shown in Fig. 3 by way of example. The step S101 is an authentication processing step between a record reproducing player and recording device, which is executed following the authentication processing flow explained before in Fig. 20.

With the authentication process completed and an authentication flag set up at the step S101, the record reproducing player 300 retrieves via the read unit 304 data at the step S102, conforming to a given format from a medium 500 storing content data for example, or receives data conforming to a given format from a communication means 600 using the communication unit 305, then, the control unit 301 of the record reproducing player 300 transmits the header portion (Header) inside the data to the record reproducing player's encryption processing unit 302 of the record reproducing player 300.

At the next step S103 the control unit 306 of the encryption processing unit 302 lets the encryption/decryption unit 308 of the record reproducing player's encryption processing unit 302 calculates a check value A.

As shown in Fig. 23, the check value A is calculated following the ICV calculation method explained in Fig. 7, with a check value A creation key Kicva retained in the internal memory 307 of the record reproducing player's encryption processing unit 302 as the key, and with content ID (Content ID) and usage policy as messages. Next, at the step S104 the check value A and a check value: ICVa stored in the head are compared, and if they agree, it proceeds to the step S105.

As explained before, the check value A:ICVa is a check value to check the tampering of a content ID and usage policy. With the check value A creation key Kicva retained in the internal memory 307 of the record reproducing player's encryption processing unit 302 as the key and content ID (Content ID) and usage policy as messages, if the check value A calculated following the ICV calculation method for example agrees with a check value: ICVa stored inside the header, the content ID and usage policy are judged as not tampered with.

Next, at the step S105 the control unit 306 of the record reproducing player's encryption processing unit 302 lets the encryption/decryption unit 308 of the record reproducing player's encryption processing unit 302 retrieve or create a distribution key Kdis. The distribution key Kdis is created with the use of the master key MKdis to the distribution keys for example, a similar method used at the step S53 in Fig. 22 explained before.

Next, at the step S106 the control unit 306 of the record reproducing player's encryption processing unit 302 lets the encryption/decryption unit 308 of the record reproducing player's encryption processing unit 302 decrypt with a distribution key Kdis created the block key Kbit and content key Kcon received from the medium 500 through the read unit 304 or stored in the header of the data received from the communication means 600 through the communication unit 305.

Furthermore, at the step S107 the control unit 306 of the record reproducing player's encryption processing unit 302 lets the encryption/decryption unit 308 of the record reproducing player's encryption processing unit 302 decrypt the block information with the decrypted block information key Kbit.

Furthermore, at the step 108 the control unit 306 of the record reproducing player's encryption processing unit 302 creates a check value B (ICVb') from the block information key Kbit, content key Kcon, and block information (BIT). As shown in Fig. 24, the check value B is created by encrypting with the DES the value of the XOR (exclusive or) composed of the block information key Kbit, content key Kcon, and block information (BIT), with the check value B creation key Kicvb retained in the internal memory 307 of the record reproducing player's encryption processing unit 302 as the key. Then, at the step S109 the check value B and the ICVb inside the header are compared, and if they agree, it proceeds to the step S110.

As explained before, the check value B: ICVb is a check value to check the tampering of the block information key Kbit, content key Kcon, and block information (BIT). With the check value B creation key Kicvb retained in the internal memory 307 of the record reproducing player's encryption processing unit 302 as the key, if the check value B created by encrypting with the DES the value of the XOR by dividing the block information key Kbit, content key Kcon, and block information (BIT) into 8-byte units agrees with the check value: ICVB stored in the header, it is judged that the block information key Kbit, content key Kcon, and block information (BIT) are not tampered with.

At the step S110 the control unit 306 of the record reproducing player's encryption processing unit 302 lets the encryption/decryption unit 308 of the record reproducing player's encryption processing unit 302 calculate an intermediate check value. As shown in Fig. 25, with the total check value creation key Kicvt saved in the internal memory 307 of the record reproducing player's encryption processing unit 302 as the key, and with the check value A and check value B inside the header, and all the content values retained, all already checked, as messages, the intermediate value is calculated following the ICV calculation method explained in Fig. 7 and others. The intermediate check value is retained, if need be, in the record reproducing player's encryption processing unit 302 of the record reproducing player 300.

Next, at the step S111 the control unit 306 of the record reproducing player's encryption processing unit 302 lets the encryption/decryption unit 308 of the record reproducing player's encryption processing unit 302 calculate the total check value ICVt' as shown in Fig. 25. The total check value ICVt' is created by encrypting the intermediate value with the DES, with the system signature key Ksys saved in the internal memory 307 of the record reproducing player's encryption processing unit 302 as the key. Next, at the step S112 the total check value ICVt' created and the ICVt in the header are compared, and if they agree, it proceeds to the step S113.

As explained in Fig. 4, the total check value ICV is a check value to check the tampering of all of the ICVa, ICVb, and the check value of each content block. So if the total check value created in the above processing agrees with the check value: ICVt stored inside the header (Header), it is judged that all the values of the ICVa, ICVb, and check value of each content block are not tampered with.

Next, at the step S113 the control,unit 301 of the record reproducing player 300 retrieves the content block information inside the block information (BIT), and checks to see if the content block is subject to be checked. Should the content block be found to be a subject of checking, a content check value is stored in the block information inside the header.

If the content block is found to be a subject to be checked, at the step S114 the control unit 301 of the record reproducing player 300 lets the read unit 304 of the record reproducing player 300 retrieve the corresponding content block from the medium 500, or lets the communication unit 305 of the record reproducing player 300 receive the corresponding content block from the communication means 600, which is then transmitted to the record reproducing player's encryption processing unit 302 of the record reproducing player 300. Upon receiving it, the control unit 306 of the record reproducing player's encryption processing unit 302 lets the encryption/decryption unit 308 of the record reproducing player's encryption processing unit 302 calculate the content check value ICVi'.

As explained before, when a block is encrypted, a content check value ICVi' is created by first decrypting the input content block with the content Key Kcon in the CBC mode of DES, and then by encrypting, with a content check value creation key Kicvc stored in the internal memory 307 of the record reproducing player 300, the content intermediate value created by operating the result obtained in the preceding decryption with the XOR in 8-byte units. When a block is not encrypted, the content check value ICVi' is created as a value obtained by inputting the whole of data (ordinary message) into a tampering check value creation function shown in Fig. 36 (DES-CBC-MAC, content check value creation key Kicvc as the key) in 8 byte units.

Next, at the step S115 the control unit 306 of the record reproducing player's encryption processing unit 302 compares the content check value and ICV inside the content block received from the control units 301 of the record reproducing player 300 at the step S102, the result of which is handed over to the control unit 301 of the record reproducing player 300. Upon receiving it, and if the checking has been successful, the control unit 301 of the record reproducing player 300 retrieves the next content block to be checked, and lets the record reproducing player's encryption processing unit 302 of the record reproducing player 300 check it. Similar checking processes are repeated until all the content blocks are checked (Step S116).

Should the check values not agree at any of the steps S104, S109, S112, and S115, the downloading processes end judged as failed.

Next, at the step S117 the record reproducing player's encryption processing unit 302 of the record reproducing player 300 lets the encryption/decryption unit 308 of the record reproducing player's encryption processing unit 302 encrypt the block information key Kbit and content key Kcon decrypted at the step S106 with the session key Kses shared in mutual authentication. The control unit 301 of the record reproducing player 300 retrieves the block information key Kbit and content key Kcon encrypted with the session key Kses from the record reproducing player's encryption processing unit 302 of the record reproducing player 300, which is transmitted to the recording device 400 via the recording device controller 303 of the record reproducing player 300.

Next, at the step 118, upon receiving the block information key Kbit and content key Kcon transmitted from the record reproducing player 300, the recording device 400 lets the encryption/decryption unit 406 of the recording device's encryption processing unit 401 decrypt the data received with the session key Kses shared in mutual authentication, and reencrypt the data with the recording device's individual storage key Kstr saved in the internal memory 405 of the recording device's encryption processing unit 401. The control unit 301 of the record reproducing player 300 retrieves the block information key Kbit and content key Kcon re-encrypted with the storage key Kstr from the recording device 400 via the recording device controller 303 of the record reproducing player 300. That is to say, the distribution key Kdis, with which the block information key Kbit and content key Kcon were encrypted, is replaced with the storage key Kstr. (key exchange)

Next, at the step 119 the control unit 301 of the record reproducing player 300 retrieves use restriction information from the usage policy of the header portion of the data, and judges whether or not a content downloaded can be used by the very record reproducing player 300 only that downloaded them. This judgment indicates that, in the case of the localization flag (use restriction information) = 1, the content downloaded can be used by the very record reproducing player 300 only that downloaded them, and that in the case of the localization flag (use restriction information) = 0, the content downloaded can be used by other record reproducing players 300 as well. Should the result of the judgement be the localization flag (use restriction information) = 1, it proceeds to the step S120.

At the step S120 the control unit 301 of the record reproducing player 300 lets the record reproducing player's encryption processing unit 302 of the record reproducing player 300 calculate the check value particular to the record reproducing player. As shown in Fig. 25, the check value particular to the record reproducing player is created by encrypting with the DES the intermediate check value created at the step S110, with the record reproducing player signature key Kdev particular to the record reproducing player saved in the internal memory 307 of the record reproducing player's encryption processing unit 302 as the key. The record reproducing player's individual check value ICVdev calculated overwrites the total check value ICVt.

As explained before, the system signature key Ksys is a system signature key to append a shared signature or ICV to distribution systems, while a record reproducing player signature key Kdev, differing for each record reproducing player, is a record reproducing player signature key a record reproducing player uses to append a signature or ICV. That is, data signed with the system signature key Ksys can be used in common because it is successfully checked with a system (record reproducing player) having the same system signature key, namely the total check values ICVt agree. However, when a signature is made with the record reproducing player signature key Kdev, data signed with the record reproducing player signature key Kdev, or data stored in the recording device after the signature is made, can not be reproduced because the check values ICVdev particular to the record reproducing player do not match, the record reproducing player signature key being the key particular to that record reproducing player, making it a failure, when trying to reproduce that the data by installing the medium with the data recorded on it onto other record reproducing players. Therefore, the present invention makes it possible, with use restriction provided, either to set up content usable in common with systems, or to set up content usable only with designated (particular) record reproducing players.

Next, at the step S121 the control unit 301 of the record reproducing player 300 lets the record reproducing player's encryption processing unit 302 execute the formation of storage data format. As explained before, there are the three format types 0 to 3, each of which is set up in the usage policy (Cf. Fig. 5) in the header. Data is formed according to the above setting and the storage formats on the right side explained in Fig. 32 to 35. The flow shown in Fig. 39 is for either of 0 or 1 so that data in formed as in either of Fig. 32 or 33.

When the formation of. storage data formatting is finished at the step S121, the control unit 301 of the record reproducing player 300 lets the external memory 402 of the recording device 400 store content at the step S122.

The foregoing explanation is given on the processing mode of the downloading of content data in the format type 0 and 1.

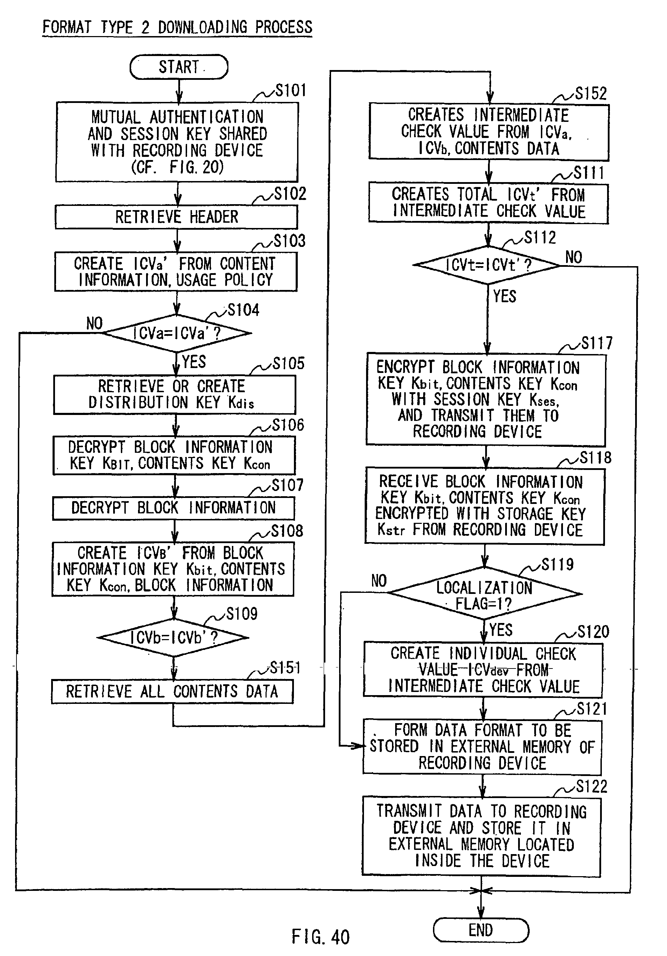

Next, explanation is given on the downloading process of content data in the format type 2, referring to Fig. 40. Explanation is mainly given focusing on differences in downloading process from the above format types 0 and 1.

Explanation on the steps S101 to S109 is omitted here as downloading processes are the same as those used in the format type 0 and 1.

With the content check value ICVi not defined on the format type 2, as explained before, the block information does not have a content check value ICVi in itself. As shown in Fi. 38, the intermediate check value in the format type 2 is created by encrypting with the system signature key Ksys an intermediate check value created based on the check value A, check value B, and data connecting the whole of content data from the lead data in the first block (block key of Block 1) to the last block.

Accordingly, in the download processing of the format type 2, content data is retrieved at the step S151, and the creation of the intermediate value is performed at the step S152 based on the check value A, check value B, and content data retrieved. Even if the content data is encrypted, no decrypting process is carried out.

Faster processing is possible with the format type 2 since no process is performed on the decryption of block data and collation of content check values as done in processing with the format types 0 and 1.

Explanation on the steps S111 on is omitted here as processes are the same as those used in the format type 0 and 1.

The above is the mode of download process of content data in the format type 2. As explained above, the download processing does not require the decrypting of block data and collating of content values as done in processing with the format types 0 and 1, so that faster processing is possible, making it suitable for real-time data processing of music data, etc.

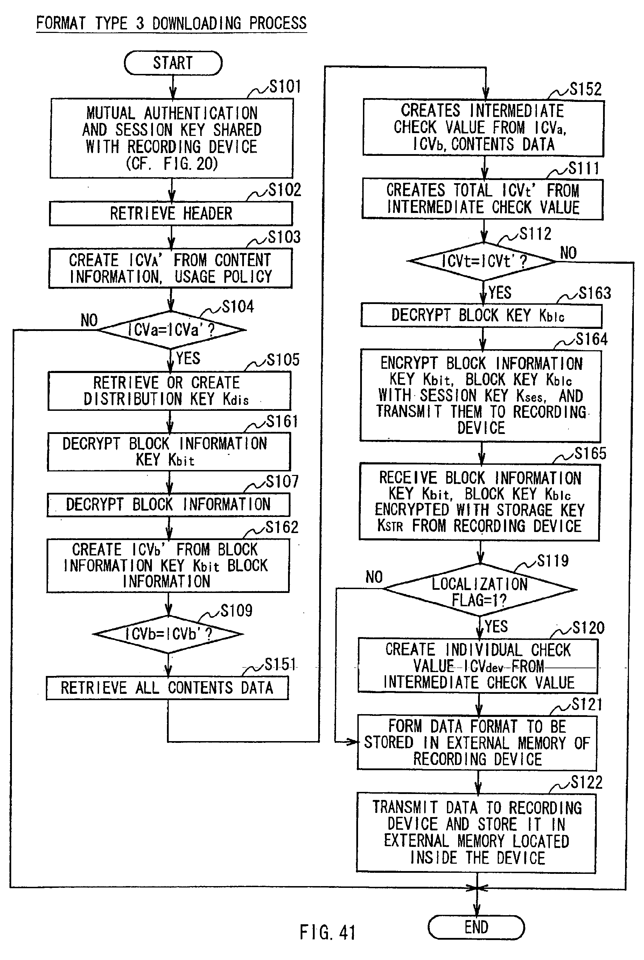

Next, explanation is given on the downloading process of content data in the format type 3, referring to Fig. 41. Explanation is mainly given focusing on differences in a downloading process from the aforementioned format types 0, 1 and 2.

Explanation on the steps S101 to S105 is omitted here as downloading processes are the same as those used in the aforementioned format type 0, 1 and 2.

Basically the format type 3 has a lot in common with the format type 2 in processing. However, the format type 3 differs from the format type 2 in that it has no contents keys, and that a block key Kblc is stored in a recording device, encrypted with a storage key Kstr.

Explanation is given mainly on differences in the download processing of the format type 3 from the format type 2. With the format type 3, block information keys are decrypted at the step S161 coming next to the step S105. The control unit 306 of the record reproducing player's encryption processing unit 302 lets the encryption/decryption unit 308 of the record reproducing player's encryption processing unit 302 perform decrypting processing with the distribution key Kdis created at the step S105 on the block information key Kbit stored in the header portion of the data received from either the medium 500 through the read unit 304 or the communication means 600 through the communication unit 305. No decrypting processing is performed on the content key Kcon because no content keys Kcon exist in data with the format type 3.

At the next step S107 block information is decrypted with use of a block information key Kbit decrypted at the step S161, and further at the step S162 the control unit 306 of the record reproducing player's encryption processing unit 302 creates a check balue B (ICVb') from the block information key Kbit and block information (BIT). The check value B is created by encrypting with the DES the value of XOR composed of the block information key Kbit and block information (BIT), with the check value B creation key Kicvb saved in the internal memory 307 of the record reproducing player's encryption processing unit 302 as the key. At the step S109 comparison is made between the check value B and the ICVb inside the header, and if they agree, it proceeds to the step S151.

With the format type 3 the check value B and ICVb function as a check value to check the tampering of the block information key Kbit and block information. If the check value B created agrees with the check value:

ICVb stored inside the header, it is judged that the block information key Kbit and block information are not tampered with.

Explanation on the steps S151 to S112 is omitted here because it is the same as on the processes of the format type 2.

At the step S163 the block key Kblc contained in the content data retrieved at the step S151 is decrypted with the distribution key Kdis created at the step S105.

Next, at the step S164 the record reproducing player's encryption processing unit 302 of the record reproducing player 300 lets the encryption/decryption unit 308 of the record reproducing player's encryption processing unit 302 encrypt the block information key Kbit decrypted at the step S161 and block key Kblc decrypted at the step S163 with the session key Kses shared in mutual authentication. The control unit 301 of the record reproducing player 300 retrieves the block information key Kbit and block key Kblc encrypted with the session key Kses from the record reproducing player's encryption processing unit 302 of the record reproducing player 300, which are transmitted to the recording device 400 through the recording device controller 303 of the record reproducing player 300.

Next, at the step S165 the recording device 400, having received the block information key Kbit and block key Kblc transmitted from the record reproducing player 300, lets the encryption/decryption unit 406 of the recording device's encryption processing unit 401 decrypt data received with the session key Kses shared in mutual authentication, and reencrypt it with the recording device's individual storage key Kstr saved in the internal memory 405 of the recording device's encryption processing unit 401. Then, the control unit 301 of the record reproducing player 300 retrieves the block information key Kbit and block key Kblc reencrypted with the storage key Kstr from the recording device 400 via the recording device, controller 303 of the record reproducing player 300. That is to say, the block information key Kbit and block key Kblc once encrypted with the distribution key Kdis are replaced with the block information key Kbit and block key Kblc re-encrypted with the storage key Kstr.

Explanation on the steps S119 to S122 is omitted here because it is the same as on the foregoing format types 0, 1, and 2.

Explanation has been given so far on the mode the downloading processes of content data as regard the format type 3. Since the downloading process of the format type 3 does neither the decryption of block data nor the collating of content check values as is the case with the format type 2, faster processing is possible, making it a suitable format for real-time data processing needed for music data and others. Also, since the range of encrypted content to be protected with the block key blc is localized, a higher level of security is available, compared to the format type 2.

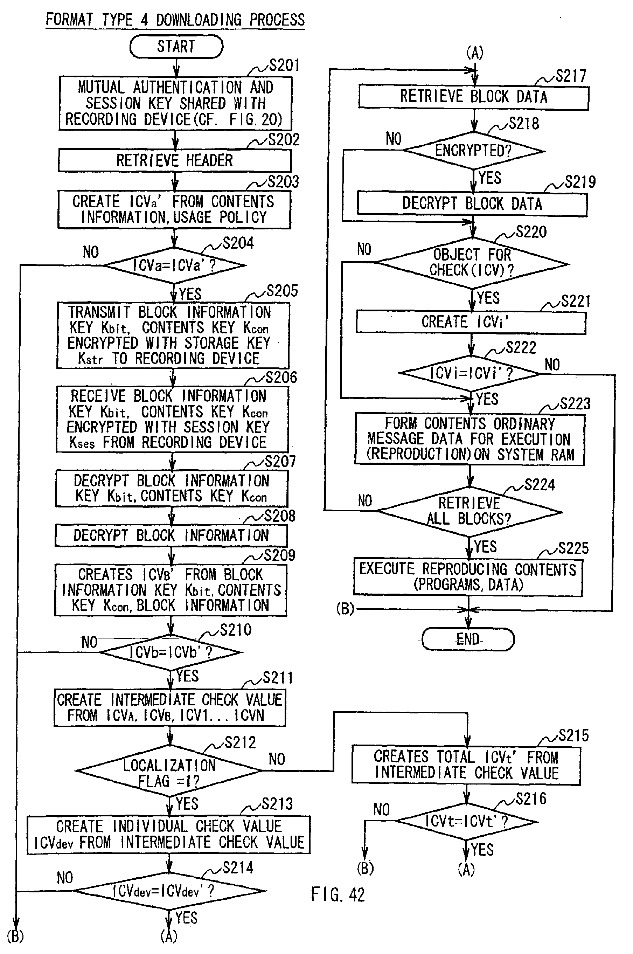

Next, explanation is given on reproducing processing in each of the format types 0 to 3, by which the record reproducing player 300 reproduces data retrieved from the recording device 400, referring to Figs. 42 to 45.

First, explanation is given on reproducing processes on content with regard to the format type 0, referring to Fig. 42.

The step S201 is an authentication processing step between a record reproducing player and recording device, which is conducted following the authentication processing flow explained previously in Fig. 20.

With the authentication processing finished at the step S201 and authentication flag set up the record reproducing player 300 retrieves the header of data conforming to a given format from the recording device 400 at the step 202, which is transmitted to the record reproducing player's encryption processing unit 302 of the record reproducing player 300.

Next, at the step 203 the control unit 306 of the record reproducing player's encryption processing unit 302 lets the encryption/decryption unit 308 of the record reproducing player's encryption processing unit 302 calculate a check value A. As explained before in Fig. 23, the check value A is calculated with the check value A creation key Kicva stored in the internal memory 307 of the record reproducing player's encryption processing unit 302 as the key, and Content ID and usage policy as messages. Then, at the step S204 comparison is made between the check value A calculated and the check value: ICVA stored inside the header, and if they agree, it proceeds to the step S205.

The check value A: ICVa is a check value to check the tampering of the contend ID and usage policy. If the check value A calculated agrees with the check value: ICVa stored inside the header, it is judged that the content ID and usage policy stored in the header are not tampered with.

Next, at the step S205 the control unit 301 of the record reproducing player 300 retrieves the block information key Kbit and content key Kcon encrypted with the recording device's individual storage key Kstr from the header reed out, which are transmitted to the recording device 400 through the recording device controller 303.

Having received the block information key Kbit and content key Kcon transmitted from the record reproducing player 300, the recording device 400 lets the encryption/decryption unit 406 of the recording device's encryption processing unit 401 decrypt the data received with the recording device's individual storage key Kstr saved in the internal memory 405 of the recording device's encryption processing unit 401, and reencrypt them with the session key Kses shared in mutual authentication. This processing has been already explained in detail in the chapter "(9) Key Exchange Process after Mutual Authentication".

At the step S206 the control unit 301 of the record reproducing player 300 receives the block information key Kbit and content key Kcon reencrypted with the session key Kses from the recording device 400 via the recording device controller 303 of the record reproducing player 300.

Next, at the step 207 the control unit 301 of the record reproducing player 300 transmits received to the record reproducing player's encryption processing unit 302 of the record reproducing player 300. Then, upon receiving the block information key Kbit and content key Kcon reencrypted with the session key Kses the record reproducing player's encryption processing unit 302 of the record reproducing player 300 lets the encryption/decryption unit 308 of the record reproducing player's encryption processing unit 302 decrypt the block information key Kbit and content key Kcon encrypted with the session key Kses, with use of the session key Kses shared in mutual authentication.

Furthermore at the step S208 the block information retrieved at the step S202 is decrypted with the decrypted block information key Kbit. The record reproducing player's encryption processing unit 302 of the record reproducing player 300 replaces and retains the decrypted block information key Kbit, content key Kcon, and block information BIT with the block information key Kbit, content key Kcon, and block information BIT contained in the header read out at the step S202. Also, the control unit 301 of the record reproducing player 300 once retrieves the decrypted block information BIT from the record reproducing player's encryption processing unit 302 of the record reproducing player 300.

Furthermore, at the step S209 the control unit 306 of the record reproducing player's encryption processing unit 302 creates a check value b (ICVb') from the block information key Kbit, content key Kcon, and block information (BIT). As shown in Fig. 24, the check value B is created by encrypting with the DES the XOR value composed of the block information key Kbit, content key Kcon, and block information (BIT), with the check value B creation key Kicvb saved in the internal memory 307 of the record reproducing player's encryption processing unit 302 as the key. Then, at the step S210 the check value B and the ICVb inside the header are compared, if the agree, it proceeds to the step S211.

The check value B: ICVb is a check value with which to check the tampering of the block information key Kbit, content key Kcon, and block information. If the check value B created agrees with the check value: ICVb stored inside the header, it is judged that the block information key Kbit, content key Kcon, and block information inside the data saved in the recording device 400 are not tampered with.

At the S211 the control unit 306 of the record reproducing player's encryption processing unit 302 lets the encryption/decryption unit 308 of the record reproducing player's encryption processing unit 302 calculate an intermediate check value. As shown in Fig. 25, the intermediate check value calculated following the ICV calculation method explained in Fig. 7 and others, with the total check value creation key Kicvt saved in the internal memory 307 of the record reproducing player's encryption processing unit 302 as the key, and with the check value A, check value B inside the header checked, and all the content check values in the block information as the messages. The intermediate value created is saved in the record reproducing player's encryption processing unit 302 of the record reproducing player 300 if required.

Next, at the step S212 the control unit 301 of the record reproducing player 300 extracts the use restriction information from the usage policy contained in the header of the data retrieved from the external memory 402 of the recording device 400 to check whether a content to be reproduced can be used with the only record reproducing player 300 (use restriction information=1), or can be used with any similar record reproducing players 300 (use restriction information=0). As a result, if use restriction information is 1, that is, a content to be reproduced can be used with the only record reproducing player 300, it proceeds to the step S213. On the other hand, if use restriction information is 0, that is, it is set such that the content may be used with any other similar record reproducing players 300, it proceeds to the step S215. The processing at the step S212 can be done by the record reproducing player's encryption processing unit 302.

At the step S213 the control unit 301 of the record reproducing player 300 lets the record reproducing player's encryption processing unit 302 of the record reproducing player 300 calculate the check value ICVdev' particular to the record reproducing player. As shown in Fig. 25, the record reproducing player's individual check value ICVdev' is created by encrypting with the DES the intermediate check value retained at the step S211, with the record reproducing player signature key Kdev saved in the internal memory 307 of the record reproducing player's encryption processing unit 302 as the key.

Next, at the step S214 comparison is made between the record reproducing player's individual check value ICVdev' calculated at the step S213 and ICVdev inside the header retrieved at the step S202, and if they agree, it proceeds to the step S217.

Meanwhile, at the step S215 the control unit 306 of the record reproducing player's encryption processing unit 302 lets the encryption/decryption unit 308 of the record reproducing player's encryption processing unit 302 calculate the total check value ICVt. As shown in Fig. 25, the total check value ICVt' is created by encrypting the intermediate check value with the DES, with the system signature key Ksys saved in the internal memory 307 of the record reproducing player's encryption processing unit 302 as the key. Then, at the step S216 comparison is made between the total check value ICVt' created and ICVt inside the header, and if they agree, it proceeds to the step S217.

The total check value ICVt and record reproducing player's individual check value ICVdev are check values to check the tampering of the ICVa, ICVb, and all the check values of each content block. Therefore, if the check value created in the above processing agrees with the check value: ICVt or ICVdev stored in the header, it is judged that ICVa, ICVb, and all the check values of each content block stored in the recording device 400 are not pampered with.

Next, at the step S217 the control unit 301 of the record reproducing player 300 retrieves block data from the recording device 400. Furthermore, at the step S218 it is judged whether or not the block data is encrypted. If encrypted, the block data is decrypted in the record reproducing player's encryption processing unit 302 of the record reproducing player 300. If the block data is not encrypted, it proceeds to the step S220, skipping the step S219.

Next, at the step 220 the control unit 301 of the record reproducing player 300 checks whether the content block is a subject of checking based on the content block information inside the block information (BIT). Should the content block be a subject of checking, a content check value is stored in the block information in the header. If the content block is a subject of checking, the content check value ICVi' of the corresponding content block is calculated at the step S221. Should the content block not be a subject of checking, it proceeds to the step S223, skipping the steps 221 and 222.

When a block is encrypted as explained before in Fig. 36, a content check value ICVi' is created by decrypting an input content block in the CBC mode of the DES, and by encrypting a content intermediate value obtained by operating the results obtained in the previous process based on the XOR logic all in 8-byte units, with the content check value creation key Kicvc stored in the internal memory 307 of the record reproducing player 300. When a block is not encrypted, a content check value ICVi' is created as a value created by inputting the whole data (ordinary message) in 8-byte units into a tampering check value creation function (with DES-CBC-MAC, content check value creation key Kicvc defined as the key).

At the step S222 the control unit 306 of the record reproducing player's encryption processing unit 302 makes comparison between the content check value ICVi' created and content check value ICVi stored in the header portion received from the recording device 400 at the step S202, the result of which is handed over to the control unit 301 of the record reproducing player 300. Upon receiving it, if the checking is successful, the control unit 301 of the record reproducing player 300 stores the content ordinary data for execution (reproducing) on the RAM of the record reproducing player system at the step S223. Furthermore, the control unit 301 of the record reproducing player 300 retrieves the next content block, a next subject of checking, and lets the record reproducing player's encryption processing unit 302 of the record reproducing player 300 check it. Similar checking processing and RAM storage processing are repeated until all the content blocks are checked. (Step S224)

Should the agreement of the check values be not obtained at any of the steps S204, S210, S214, S216, and S222, the reproduction processing terminates judged as an error.

If the judgement determines that all the blocks are read out at the step S224, it proceeds to the step S225, and content (program, data) starts being executed or reproduced.

The above is the mode of reproduction processing of content data with the format type 0.

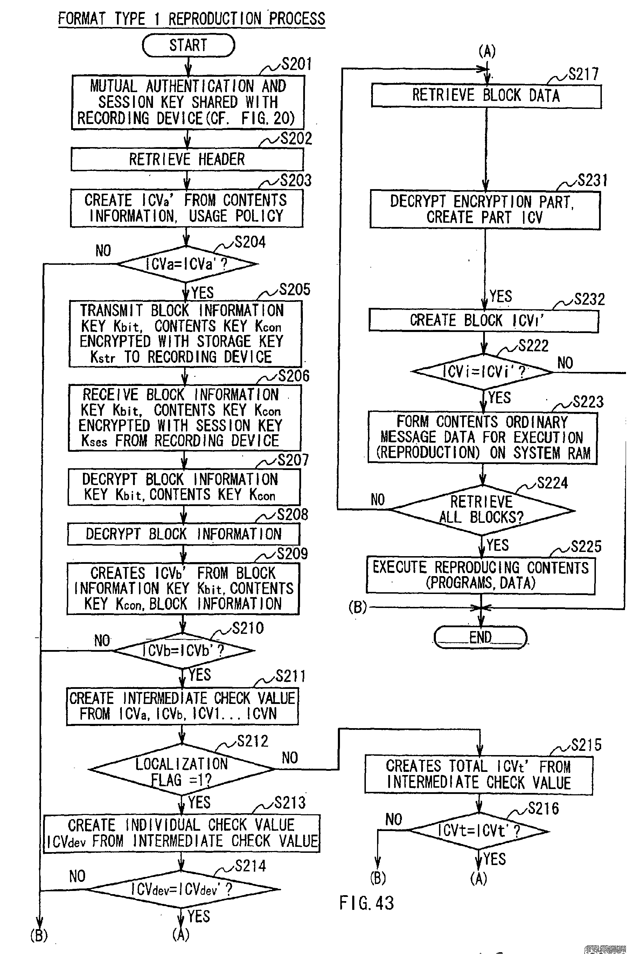

Next, explanation is given on the reproduction processing of content data with the format type 1, focusing on differences in reproduction processing from that with the format type 0, referring to Fig. 43.

Explanation on the processes at the steps 201 to 217 is omitted here because it is the same as the reproducing processes with the format type 0.

As to the format type 1 decryption of encryption parts is carried out at the step S231, resulting in creation of parts ICV. Furthermore, a block ICVi' is created at S232. As explained before, with the format type 1, if at least more than one part out of the parts inside the block is a subject data of the check value ICVi, the content check value ICVi is defined as regards that block. When the part j is encrypted, the check value P-ICVij of the part j in the block i is created as a value obtained as a result of encrypting the value obtained by operating in 8-byte units the whole of an ordinary message (decrypted message) based on the XOR logic. If the part j is not encrypted, the check value P-ICVij is created as a value obtained by inputting the whole data (ordinary message) in 8-byte units into the tampering check value creation function (DES-CBC-MAC, content check value creation key Kicvc as the key) shown in Fig. 36.

Furthermore, when there exists the only part in one block i indicating that it is a subject of checking [ICV flag = subject of ICV], the check value P-ICVij created by the above method is defined as the check value ICVi of the block as it is. When there exist a plurality of parts in one block i indicating that they are subjects of checking [ICV flag = subject of ICV], a check value ICVi is created as a value obtained by inputting the whole of data connecting the data of the plurality of part check values P-ICVi, j in the order of parts numbering into the tampering check value creation function (DES-CBC-MAC, content check value creation key Kicvc as the key) shown in 8-byte units in Fig. 36. This is exactly the same as explained before in Fig. 37.

It means that with the format type 1 the comparison processing of content check values created in the above procedure is performed at the step S222. Explanation on processes of the steps S223 and following is omitted here because they are the same as those for the format type 0.

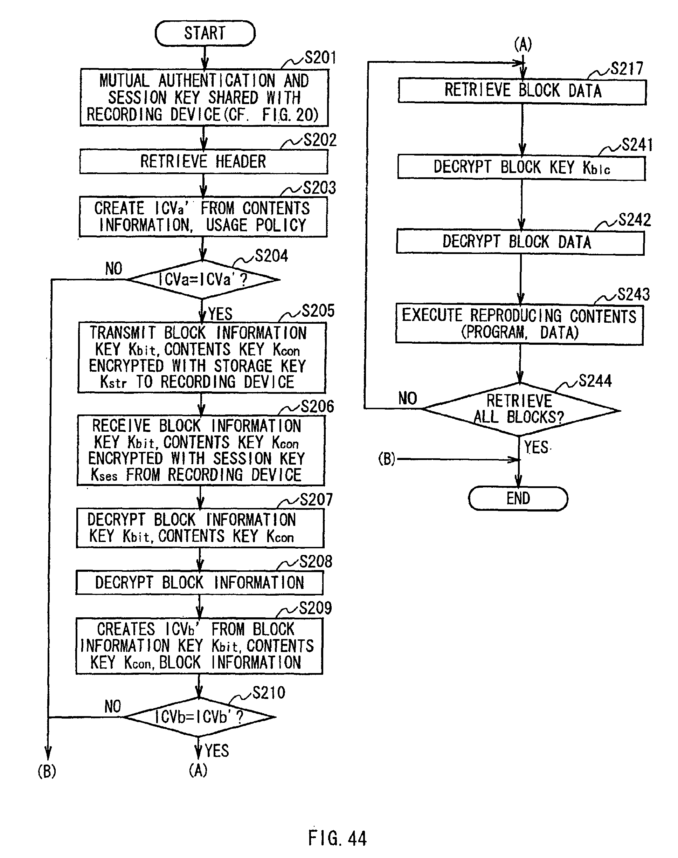

Next, explanation is given on the reproduction processing of content data with the format type 2, referring to Fig. 44, focusing on differences in reproduction processing from the aforementioned format types 0 and 1.

Explanation on the steps S201 to S210 is omitted here because it is the same as on reproduction processing with the above format types 0 and 1.

The steps S211 to S216 as done with the format types 0 and 1, are not carried out with regard to the format type 2. Also, since the format type 2 has no content values, the checking of content values conducted at the step S222 with the format type 0 and 1 is not executed.

In the data reproduction processing of the format type 2 it proceeds to the step S217 after the check value B is checked at the step S210, and block data is retrieved by the control unit 301 of the record reproducing player 300. Furthermore, at the step S241 decrypting processing is carried out on the block key Kblc contained in the block data by the encryption processing unit 306 of the record reproducing player 300. The block key Kblc stored in the recording device 400 is encrypted by the content key Kcon as shown in Fig. 34, and is decrypted with the content key Kcon decrypted at the preceding step S207.

Next, at the step S242 decrypting processing is performed on the block data with the use of the block key Kblc decrypted at the step S241. Furthermore, at the step S243 execution or reproduction processing is conducted on content (program, data). The processing of the steps S217 to S243 is repeated until all the blocks are checked. If it is judged at the step S244 that all the blocks are retrieved, reproduction processing terminates.

With the checking process of check values such as the total check values omitted from the processes of the format type 2, it can be the to be a structure suitable for performing high-speed decryption processing, and is a suitable format for processing music data and others requiring real-time processing.

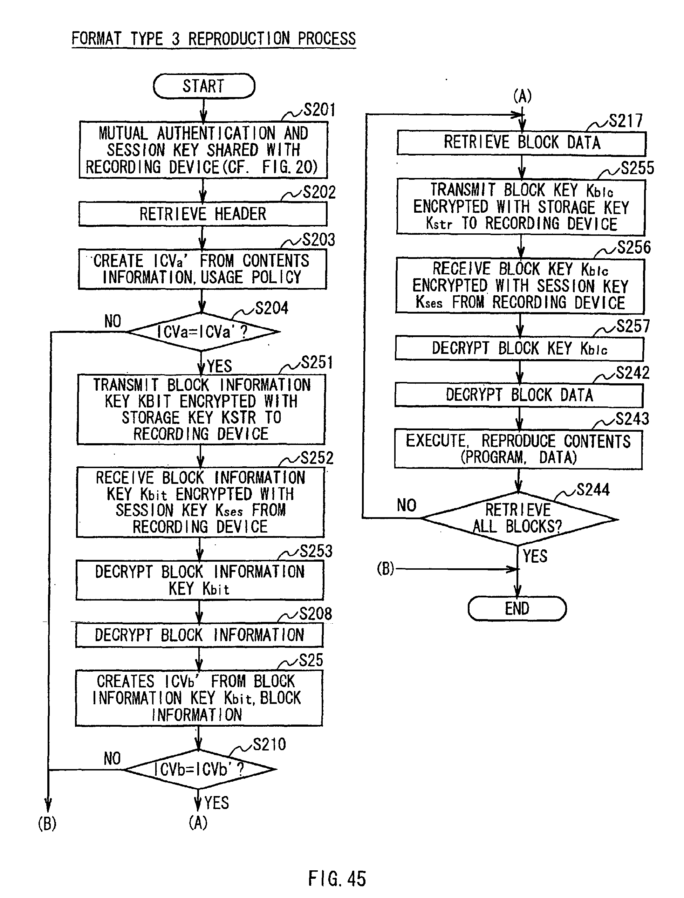

Next, explanation is given on the reproduction processing of content data with the format type 3, referring to Fig. 45, focusing on differences in reproduction processing from the format types 0, 1 and 2.

Basically the format type 3 has a lot in common with the format type 2 in processing, but it has no content keys as explained in Fig. 35. It also differs from the format type 2 in that the block keys Kblc are stored, encrypted with the storage key Kstr in the recording device.

The format type 3 is structured such that the processing at the steps S251, S252, S253 and S254 does not contain content keys, differing from the corresponding processing at the steps S201 to S210 with the format types 0. 1. and 2.

At the step S251 the control unit 301 of the record reproducing player 300 retrieves the block information key Kbit encrypted with the recording device's individual storage key Kstr from the header read out, which is transmitted to the recording device 400 via the record device controller 303 of the record reproducing player 300.

Receiving the block information key Kbit transmitted from the record reproducing player 300, the recording device 400 lets the encryption/decryption unit 406 of the recording device's encryption processing unit 401 decrypt the data received with the recording device's individual storage key Kstr saved in the internal memory 405 of the recording device's encryption processing unit 401, which is re-encrypted with the session key Kses shared in mutual authentication. This processing has been already described in detail in the chapter "(9) Key exchange process after mutual authentication".

At the step S252 the control unit 301 of the record reproducing player 300 receives the block information key Kbit re-encrypted with the session key Kses from the recording device 400 via the recording device controller 303 of the record reproducing player 300.

Next, at the step S253 the control unit 301 of the record reproducing player 300 transmits the block information key Kbit re-encrypted with the session key Kses received to the record reproducing player's encryption processing unit 302 of the record reproducing player 300. Upon receiving the block information key Kbit re-encrypted with the session key Kses, the record reproducing player's encryption processing unit 302 of the record reproducing player 300 lets the encryption/decryption unit 308 of the record reproducing player's encryption processing unit 302 decrypt the block information key Kbit encrypted with the session key Kses, with the session key Kses shared in mutual authentication.

Furthermore, at the step S208 the block information retrieved at the step S202 is decrypted with the decrypted block information key Kbit. The record reproducing player's encryption processing unit 302 of the record reproducing player 300 replaces the decrypted block information key Kbit and block information BIT with the block information key Kbit and block information BIT contained in the header retrieved at the step S202, which are retained. The control unit 301 of the record reproducing player 300 once retrieves the decrypted block information BIT from the record reproducing player's encryption processing unit 302 of the record reproducing player 300.

Furthermore, at the step S254 the control unit 306 of the record reproducing player's encryption processing unit 302 creates a check value B (ICVb') from the block information key Kbit and block information BIT. As shown in Fig. 24, the check value B is created by encrypting with DES the XOR value consisting of the block information key Kbit and block information BIT, with the check value B creation key Kicvb retained in the internal memory 307 of the record reproducing player's encryption processing unit 302 as the key. Next, at the step S210 comparison is made between the check value B and ICVb inside the header, and if they agree, it proceeds to the step S211.

Furthermore, with the format type 3, because block keys are encrypted with a storage key when stored into the recording device, it is necessary to conduct decrypting processing with the storage key, and encrypting processing with the session key in the recording device 400, and furthermore decrypting processing with the session key in the record reproducing player 300. A series of these processes are shown at the steps S255 and S256.

At the step 255 the control unit 301 of the record reproducing player 300 retrieves the block key Kblc encrypted with recording device's individual storage key Kstr read out at the step S217, which is transmitted to the recording device 400 through the recording device controller 303 of the record reproducing player 300.

Receiving the block key Kblc transmitted from the record reproducing player 300, the recording device 400 lets the encryption/decryption unit 406 of the recording device's encryption processing unit 401 decrypt the block key Kblc with the recording device's individual storage key Kstr saved in the internal memory 405 of the recording device's encryption processing unit 401, which is reencrypted with the session key Kses shared in mutual authentication. This process is exactly the same as described in detail in the chapter "(9) Key exchange process after mutual authentication".

At the step S256 the control unit 301 of the record reproducing player 300 receives the block key Kblc re-encrypted with the session key kses from the recording device 400 through the through the recording device controller 303 of the record reproducing player 300.

Next, at the step S257 decryption processing is performed on the block key Kblc with the session key Kses by the encryption processing unit 306 of the record reproducing player 300.

Next, at the step S242 the block data is decrypted with the block key Kblc decrypted at the step S257. Furthermore, the content (program, data) is executed or reproduced at the step S243. The processes from the step 217 to the step S243 are repeated against all the blocks. If it is judged at the step S244 that all the blocks are read out, reproduction processing terminates.

The above is reproduction processing on content with the format type 3. It seems similar to the format type 2 in that the check process of the total check value is omitted, but the inclusion of a key exchange process for block keys contributes to the processing structure of a higher security level, compared to the format type 2.

(11) Check Value (ICV) Creation Processing Mode at Content Providers

In the above mode of carrying out the present invention, it is described that the check processing of various check values ICV is executed at the stage of downloading content or reproduction processing. Now, explanation is given on the modes of creation processes and check processes of each check value (ICV).

Recapping each check value explained in the example of embodying the invention, the check values ICV used in the data processing system of the present invention are as follows:

Check value A, ICVa: A check value to check the tampering of identification information in content data and usage policy.
Check value B, ICVb: A check value to check the tampering of block information keys Kbit, content keys Kcon and block information.
Content check value ICVi: A check value to check the tampering of each content block of content.
Total check value ICVt: A check value to check the tampering of the check values ICVa, check values ICVb, all the check values of each content block.

Record reproducing player's individual check value ICVdev:
When the localization flag is set to 1, that is, content can be used individually by record reproducing player, this value is . replaced with the total check value ICVt and created as a check value to check said check value A: ICVa, check value B: ICVb, and furthermore all the check values ICVi contained in each block being subjected to content checking.

With regard to formats, there can be a case that it is content itself, and not the check value of each content block that the ICVt and ICVdev are included into subjects of checking.

Each of those check values are used for the data processing system of the present invention. For the check value A, check value B, total check value, and content check value out of them, an ICV value is created based on respective data subjected to checking by a content provider offering content data, or content supervisor as shown in Figs. 32 to 35, and Fig. 6 for example, which (ICV value), stored in data together with content, is offered to users of record reproducing players 300. Users of record reproducing players, or content users are to create an ICV for checking based on respective subject data of checking in downloading content data into a recording device or reproducing it, and to have it compared with the ICV stored in the record reproducing player. When the content indicates that it can be used individually by a particular record reproducing player, the record reproducing player's individual check value ICVdev is a value to be stored in a recording device, replaced with the total check value ICVt.

The processing of creating check values is explained in the foregoing embodiment as a creation processing structure composed of mainly DES-CBC. However, the ICV creation processing mode is not limited to the above method, but there are a variety of modes available for creation processing and check processing. A variety of the following ICV creation and check processing structures are available, in particular in regard to relationships between content providers or supervisors and content users.

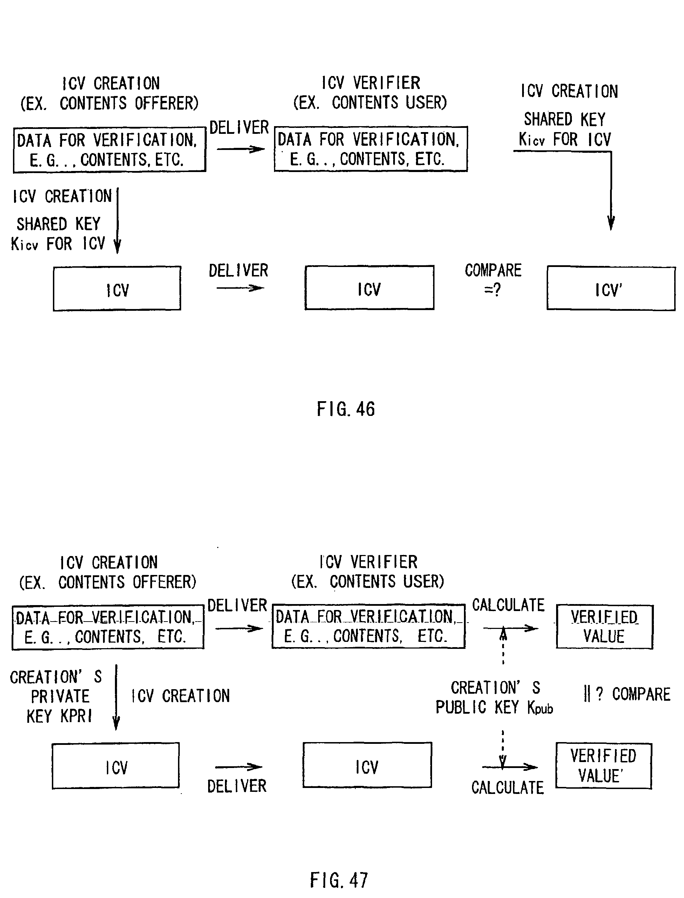

Shown in Figs. 46 to 48 are diagrams to explain the processing of creating check values ICV by a creator, and check processing by a checker.

The figure 46 is a structure where the creation processing of ICV by means of DEC-CBC explained in the foregoing embodiment, is carried out by, for example, an ICV creator being a content provider or supervisor, and where an ICV created is offered, together with a content, to a user of a record reproducing player, namely a checker. In this case the key needed for the user of a record reproducing player, namely the checker in check processing is each check value creation key stored in the internal memory 307 shown in Fig. 18 for example. The checker (the user of the record reproducing player) being a content user is to create a check value by applying DEC-CBC to the data of a subject for checking, with the use of the check value creation key stored in the internal memory 307, which (the check value created) is compared with the check value stored (in the record reproducing player). In this case each check value creation key is structured as the key shared secretly by the ICV creator and checker.

The figure 47 is a diagram where an ICV creator being a content provider or supervisor creates an ICV by means of a digital signature of a public key encryption system, which is, together with content, offered to a content user, namely a checker. It is structured such that the content user or checker keeps the public key of the ICV creator, by use of which check processing is performed. In this case it is not necessary to make secret the public key of the ICV creator the content user (the user of the record reproducing player), namely a checker possesses, resulting in easier management. This system is a suitable mode for such a case that the creation and management of an ICV is conducted by one entity under the control of a high-level security management.

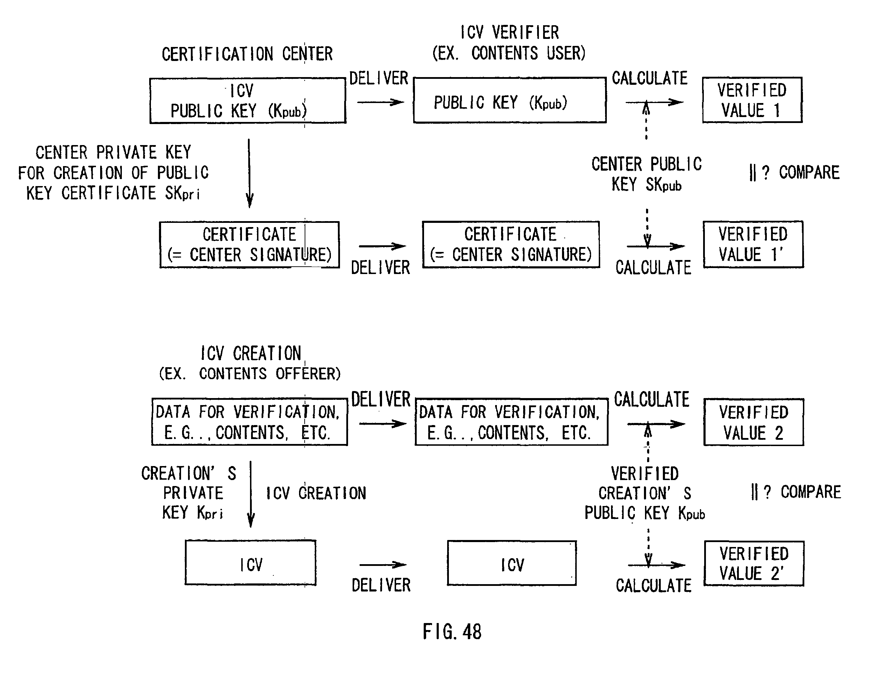

The figure 48 is a diagram where an ICV creator being a content provider or supervisor creates an ICV by means of a digital signature of a public key encryption system. The ICV created is provided to a content user, namely a checker, together with content. Furthermore, a public key used by the checker in checking is stored in the public key certificate (Cf. Fig. 14 for example), which (the public key) is, along with the content data, offered to a user of a record reproducing player, namely a checker. When there exist a plurality of creators of an ICV, each creator is to have the date (public key certificate) certifying the authenticity of the public key issued by the key supervising center.

A content user being a checker of an ICV is to possess the public key of the key supervising center, and conducts the checking of the public key certificate using the public key of the key supervising center. As a result, if the authenticity is confirmed, the user is to take out the public key of the ICV creator retained in the public key certificate. Then, the checking of the ICV is performed with the use of the public key of the creator of the ICV taken out.

This method is an effective mode for such a case where there exist a plurality of ICV creators, and where the management maintenance system is established by the center which conducts the management.

(12) Structure of Encryption Processing Key Creation Based Master key

Next, explanation is given on the creation structure with regard to various encryption processing keys based on the master key, one of representative characteristics of the data processing system of the present invention.

As explained previously referring to Fig. 18, various master keys are stored in the internal memory of the record reproducing player 300 of the data processing system of the present invention, each of which is used to create, e.g., authentication keys Kake (Cf. Numeral 3), or distribution keys Kdis (Numeral 4).

Up until now, in conducting operations such as secret communication, mutual authentication, MAC creation, and checking, between two entities, that is, between a content provider and content user, or between a record reproducing player 300 and recording media 400 of the data processing system of the present invention, secret information, e.g., key information is retained in each entity on a shared basis. However, for the relationship of one to a plurality, for example, one content provider to a plurality of content users, or one record reproducing player to multiple recording media, it is designed such that secret information such as key information is provided to all the entities, namely a plurality of content users, or is stored into multiple recording media. Or, one content provider supervises secret information (ex. keys) of each of many a content user individually, using such information adequately for each individual.

In the case of one-to-multiple relationship like the above, in which secret information (ex. keys) is shared by all, however, there is a demerit that the leakage of information at one part affects all the parties using that same secret information (ex. keys). As well, when one supervisor, e.g., a content provider, supervises secret information (ex. keys) of each of many a content user individually, using such information adequately for each individual, it is necessary to identify all the users and to prepare a list oriented to secret information (ex.

keys) particular to the identification data, entailing great burdens in the maintenance and supervision of the list as the number of users increases.

With the data processing system of the present invention, these conventional problems on shared secret information between entities have been solved by employing a structure where master keys are possessed of (by the entities), and where a variety of individual keys are created from the master keys. Explanation is given on this structure following.

With the data processing system of the present invention, when different keys are required individually to conduct various processes such encryption and authentication between a recording device and medium storing content or a record reproducing player, these keys are created from individual information such as identifiers (ID) particular to devices and medium by means of an individual key creation method prescribed inside a record reproducing player 300. Due to this structure, should the individual keys created be specified, damages to the whole of a system can be avoided if the master keys are preventing from being leaked. This also obviates the need for the supervision of lists oriented to the structure of creation of keys by the master keys.

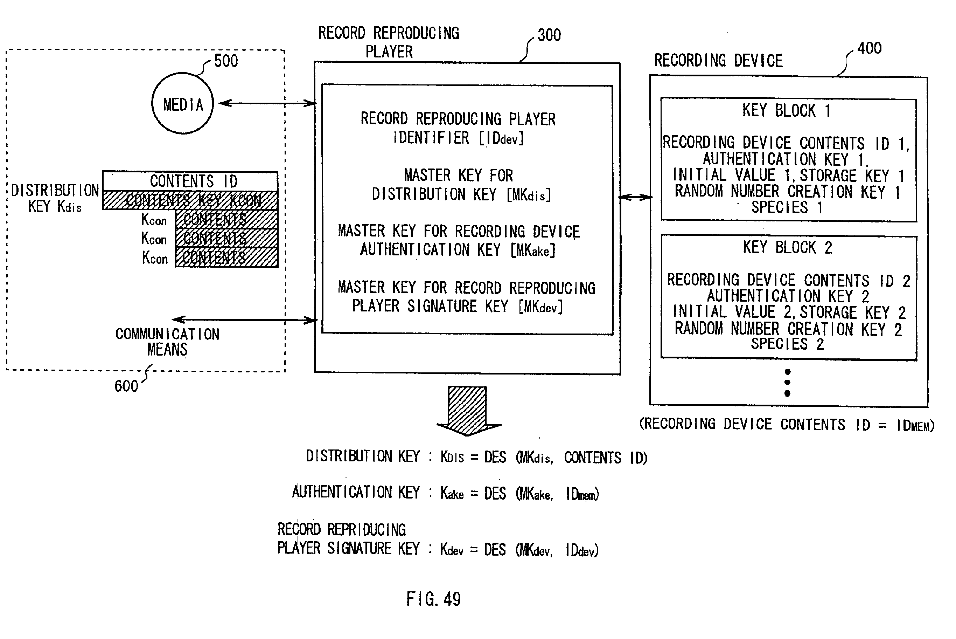

A practical structure example is explained below using diagrams. The figure 49 is a diagram to describe a structure where a variety of keys are created with the use of various keys a record reproducing player 300 possesses. As is the case with the actual examples already explained, content is entered from the recording media 500 and communication means 600 shown in Fig. 49. A content is encrypted with a content key Kcon, which is in turn encrypted by a distribution key Kdis.

In such a case that content is retrieved by a record reproducing player 300 from the media 500, communication means 600 to be downloaded onto a recording device 400 by way of example, it is necessary for the record reproducing player 300 to obtain the distribution key Kdis encrypting the content key as explained in Figs. 22, 39 to 41. It also can be possible to obtain this key . Kids directly from the media 500, communication means 600 or for the record reproducing player 300 to obtain it in advance and store it in the memory of the record reproducing player 300, however, the distribution structure dealing with a plurality of key users is charged with a possibility of information being leaked, consequently affecting the whole system as explained before.

As shown in the lower part of Fig. 49, the data processing system of the present invention employs a structure where distribution keys Kdis are created with a master key MKdis to the distribution keys stored in the memory of the record reproducing player 300, and by means of a process based on a content ID, that is, Kdis = DES (MKdis, content ID). According to the present structure it is neither necessary to have individual distribution keys Kdis distributed through the media and over communication means, etc., nor is it necessary to have them stored in each of record reproducing players 300 even when there exist a plurality of content providers in the content distribution structure between content providers supplying contents through media 500, or over communication means 600 and record reproducing players 300 or content users, thereby resulting in maintaining a high level of security.

Creation of authentication keys Kake is explained following. Mutual authentication processing (Cf. Fig. 20)is needed to be conducted between a record reproducing player 300 and recording medium 400 in the downloading processing from the record reproducing player 300 onto the recording medium 400 in Figs. 22, 39 to 41, or in having the record reproducing player 300 reproduce content stored in the recording medium 400 explained in Figs, 28, 42 to 45.

As explained in Fig. 20, an authentication key Kake is needed for the record reproducing player 300 in this authentication processing. It can be possible for the record reproducing player 300 to obtain an authentication key directly from the recording medium 400 for example and to store it into the memory of the record reproducing player 300. However, as is the case with the aforementioned distribution keys, such a distribution structure dealing with a plurality users may be pregnant with a possibility of leakage of information, affecting the whole of a system.

As shown in the lower part of Fig. 49, the data processing system of the present invention employs structure where authentication keys Kake are created with the master key MKake to the authentication keys and a recording device identification ID: IDmem stored in the memory of the record reproducing player 300, that is, by means of a process based on a recording device identification ID, namely, Kake = DES (MKake, IDmem).

In the downloading processing from the record reproducing player 300 onto the recording medium 400 in Figs. 22, 39 to 41, or in having the record reproducing player 300 reproduce a content stored in the recording medium 400 explained in Figs, 28, 42 to 45, a similar structure applied to the aforementioned distribution keys and authentication keys can be employed for record reproducing player signature keys Kdev needed in the creation process of record reproducing players' individual check values ICVdev if a content can be used individually by particular record reproducing players. It is structured, in the above practical example, such that a record reproducing signature key Kdev is stored in the internal memory. However, it is practical as well to employ a structure where the master key MKdev to record reproducing player signature keys is stored in the memory, not storing a record reproducing player signature key Kdev in the internal memory. The record reproducing player signature key Kdev may be called for, as required as shown in the lower part of Fig. 49, by means of Kdev = DES (MKdev, IDdev) based on the record reproducing player identifier: IDdev and master key MKdev to record reproducing player signature keys. This structure has a benefit of making it unnecessary to provide a record reproducing player signature key Kdev to players individually.

Thus, with the data processing system of the present invention employing a structure where information such as keys necessary for a procedure with respect to encryption information processing between two entities, for example, a provider and a record reproducing player, or between a record reproducing player and recording device is created in order with the use of the master key and each ID, so that the scope of possible damages by individual keys may be limited should key information be leaked from each entity, obviating the need to supervise the key list by the individual entity as mentioned before.

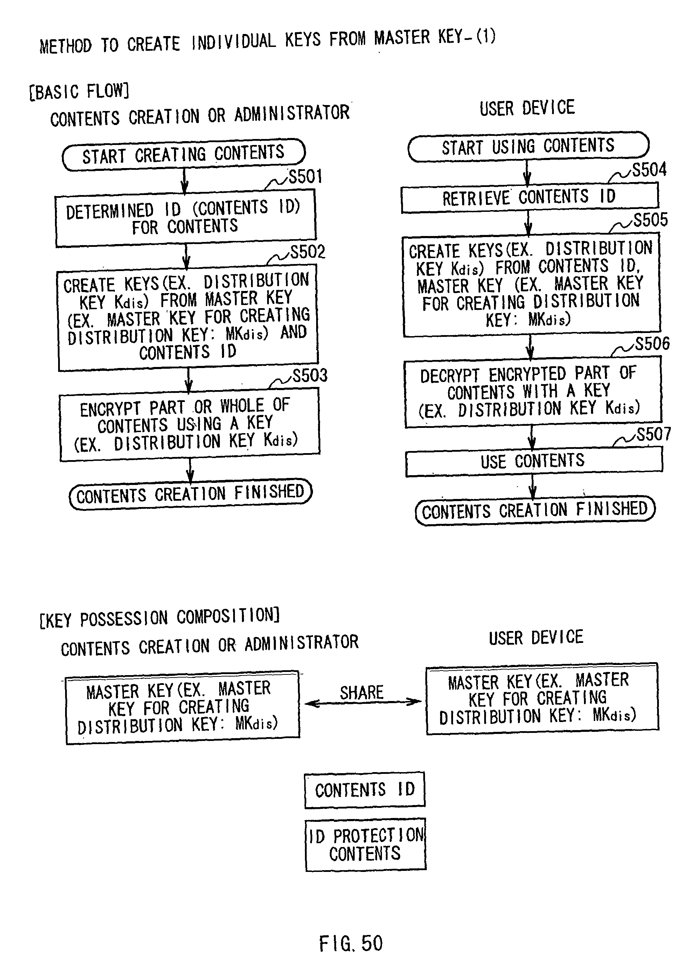

Explanation is given on a plurality of processing examples with respect to the present structure, using a flowchart. The figure 50 gives an example of encryption processing of content and others using a master key at the place of a content manufacturer or supervisor, and of decryption processing of encrypted data using a master key in a user's device, e.g., a record reproducing player 300 in the above practical example.

The step S501 at the place of a content manufacturer or supervisor is a step to giving an identifier (content ID) to a content. The step S502 is a step to create keys to encrypt content and others based on the master keys belonging to the content manufacturer or supervisor and the content ID. Assuming this step as a process to create distribution keys Kdis for example, the distribution keys are created by the above Kdis = DES (MKdis, content ID). The next step S503 is a step to encrypt part or the whole of the content with a key, (e.g., a distribution key Kdis).

Encrypted content coming through these steps is distributed through the media such as DVDs and communication means, by content manufacturers

Meanwhile, on the side of a user device such as a record reproducing player 300, a content ID is retrieved out of the content data received over the media, or communication means, etc. at the step S504. Next, at the step S505 a key to be applied in decrypting the encrypted content is created based on the content ID retrieved and the master key belonging to the player. This creation process is, if intended to obtain a distribution key Kdis, turns to be, for example, a distribution key Kdis = DES (MKids, content ID). The content is decrypted with this key at the step S506, and at the step S507 a decrypted content is used, meaning that the content is reproduced or that a program is executed.

As shown in the lower part of Fig. 50, both the content manufacturer or supervisor and user device possess a master key (e.g. master key MKdis to distribution keys) in this example, and distributions keys necessary for the encryption and decryption of content are created one by one based on the respectively owned master key and each ID (content ID).

With this system, should the distribution key be leaked to the third parties, a content could be decrypted by a third party, but other contents having different ID's can be prevented from being decrypted, so that it is prevented that the influence to the whole system by the leakage of one content key can be effectively minimized. It also results in making it unnecessary to maintain a list oriented to a key for every content at the end of a user's device or a record reproducing player.

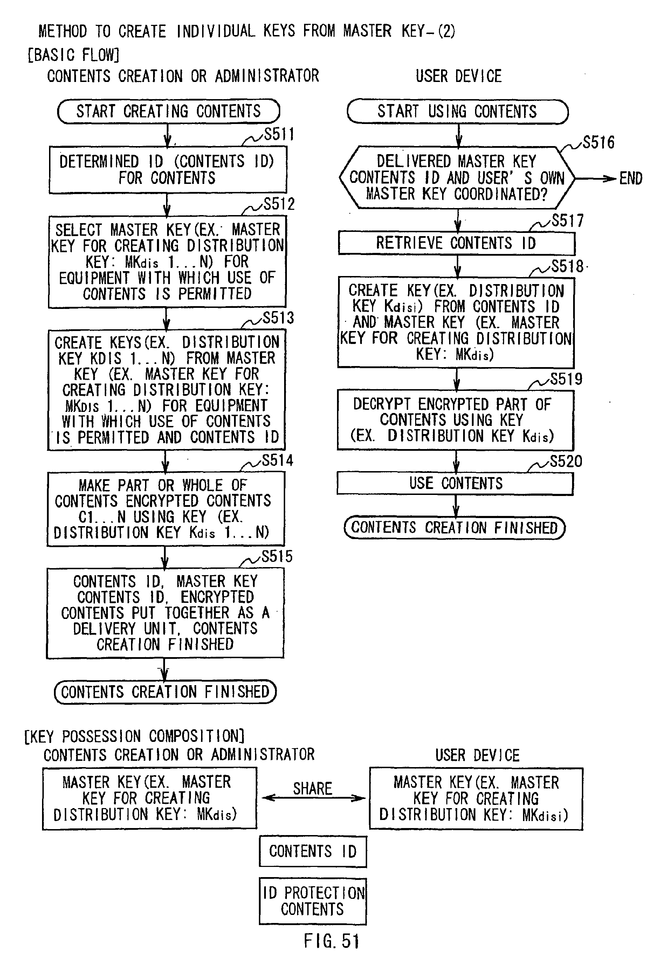

Next, explanation is given on an example, referring to Fig. 51, in which a content manufacturer or supervisor possesses plural master keys to conduct processing a content to be distributed.

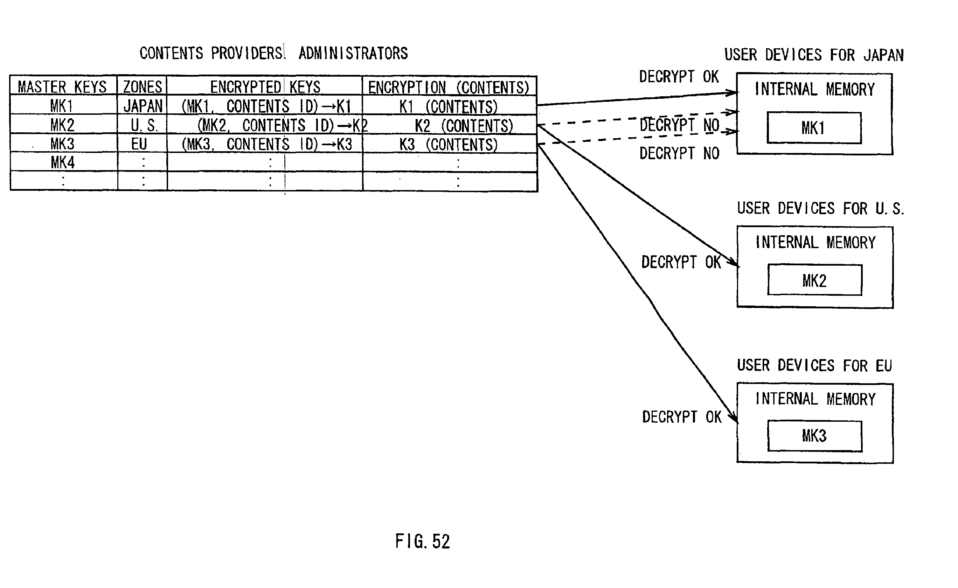

The step S511 at the side of the content manufacturer or supervisor is a step to append an identifier (content ID) to the content. The step S512 a step to select one master key our of a plurality of master keys (e. g., a plurality of master keys to distribution keys creation) owned by the content manufacturer or supervisor. With this selection processing to be explained further in Fig. 52, applicable master keys are set up in advance by the countries of content users, models, or versions of models, according to which execution is made.

Next, at the step S513 a key for encryption is created based on the master key selected at the step S512 and the content ID determined at the step S511. Assuming that this is a process to create a distribution key Kdis, it is created by Kdisi = DES (MKdisi, content ID). The next step S514 is a step to encrypt part or the whole of the content with a key (e.g., distribution Key Kdisi). At the step S515 the content manufacturer distributes encrypted content, with the content ID, master key identification information used, and encrypted content as a distribution unit, through media such as DVDs, communication means, and others.

Meanwhile, on the side of a user device such as a record reproducing player 300, it is judged at the step S516 whether or not the player itself possesses a master key oriented to the master key identification information in the content data distributed via media such as DVDs or communication means. If it has no master key corresponding to the master key identification information in the content data, the distributed content can not be used by the user device, with the processing terminated.

If the record reproducing player 300 possesses the master key oriented to the master key identification information in distributed content data, a content ID is retrieved out of the content data received through media or communication means at the step S517. Next, a key suitable for decrypting the encrypted content is created based on the content ID retrieved and the master key of its own at the step S518. If this creation process is to obtain a distribution key Kdisi, it should be: the distribution key Kdisi = DES (MKdisi, content ID) for example. The content is decrypted with this key at the step S519, and the decrypted content is used at the step S520. That is, it is reproduced, or the program is executed.

As shown in the lower part of Fig. 51, the content manufacturer or supervisor owns a plurality of master keys, for example, a set of master keys composed of a plurality of distribution key creation master keys MKdis 1 to n. On the other hand the user device is provided with one master key, for example, one distribution key creation master key KKdisi, and the user device is able to decrypt and use the content, only when the content is encrypted with the MKdisi by the content manufacturer or supervisor.

An example is given in Fig. 52 where different master keys are applied by the country as a practical example of the mode exemplifying the flowchart in Fig. 51. Possessing the master keys MK1 to N, the content provider use the MK1 to create a key to execute an encryption process on the content distributed to user devices in Japan. For example, the encryption key K1 is created from the content ID and MK1, and then the content is encrypted with the K1. Likewise, the MK2 is used to create a key to encrypt content to be distributed for user devices in USA, and MK3 in Europe.

The master key MK1 is stored in the memory of user devices, more concretely record reproducing players such as PCs and game machines to be sold in Japan, and the master key MK2 in USA, and the master key MK3 in Europe.

With such a structure a content provider performs encryption process on content to be distributed to user devices with the use of a master key selected out of the master keys MK1 to n, corresponding to user devices capable of using content. For instance, to make content usable only with the user devices for the Japanese market, content is encrypted with the key K1 created using the master key MK1. This encrypted content can be decrypted only with the master key MK1 stored in the user devices for the Japanese market, or it is possible to have the decryption key created. However, it is impossible to decrypt the encrypted content with the use of the master keys MK2 or MK3 stored in the user devices for USA or EU because the key K1 can not be created from the MK2 or MK3.

Thus, selective use of a plurality of master keys by a content provider enables various modes of use restriction to be set to content. The figure 52 shows an example where the master keys of user devices are distinguished for each country, however, a variety of use modes can be possible with master keys changed according to models and versions of user models for example as mentioned before.

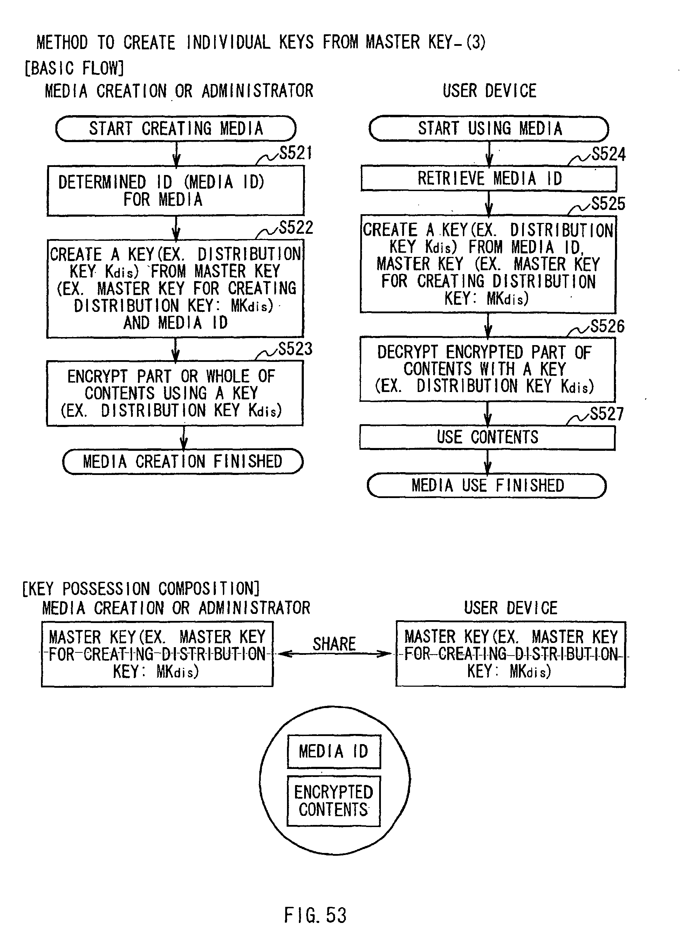

Next, a processing example is shown in Fig. 53 where media's individual identifiers, namely media IDs and mater keys are used in combination. The media here include media containing content such as DVDs and CDs. The media ID can be individualized for each medium; by the titles of movies, or by the production lots. Like this, a variety of methods can be employed in assigning IDs to media.

Identifiers (media ID) are assigned to media at the step S521 on the part of a media manufacturer or supervisor. The step S522 is a step to create a key to encrypt content stored on a medium based on the media manufacturer's or supervisor's master key and media ID. Assuming that this is a process to create a distribution key Kdis by way of example, the distribution key Kdis is created by the aforementioned Kdis = DES (MKdis, media ID). The step S523 is a step to encrypt part or the whole of the content stored in a medium with a key (e.g., a distribution key Kdis). Media manufacturers offer media storing content with encryption processes applied to them through those steps.

Whereas, on the part of user devices such as a record reproducing player 300, a media ID is read out from a medium provided at the step S524. Next, at the step S525 a key suitable for the decryption of the encrypted content is created based on the media ID retrieved and player's own master key. Assuming that this creation process is to obtain a distribution key Kdis, it should be the distribution key Kdis = DES (MKdis, media ID). The content is decrypted with this key at the step S526, and the decrypted content is used, that is, it is reproduced, or a program is executed at the step S527.

As shown in the lower part of Fig. 53, in this example both the media manufacturer or supervisor, and a user device owns a master key (e.g., a distribution key creation master key MKdis), so that distribution keys needed to the encryption and decryption of content are created one by one based on the respective master key and each ID (media ID).

With this system, should a media key be leaked to third parties the content inside a medium may be decrypted by the third parties. However, it has a strength that the influence upon the whole system caused by the leakage of one media key can be minimized because a content stored in another medium with a different media ID can be prevent from being decrypted. It also gives a merit that it is not necessary to hold a list oriented to keys for every medium on both sides of the user device and record reproducing player. Also, the content size encryptable with one media key limited to the capacity storable inside the medium, there is small possibility of information amounting to a quantity good enough to attack encrypted messages, thus reducing the possibility of encryption to be decrypted.

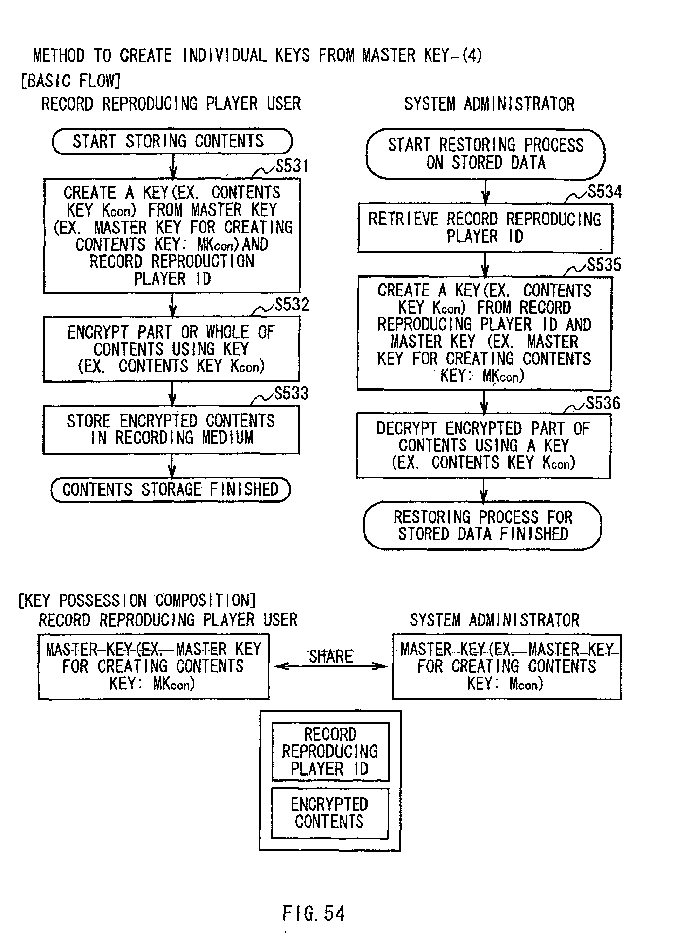

Shown in Fig. 54 is an processing example using record reproducing player's individual identifiers, namely record reproducing player's IDs and master keys in combination.

The step S531 at a user's place of a record reproducing player is a step to create a key to encrypt content and others based on a master key stored in the internal memory of a record reproducing player for example and the ID of the record reproducing player. Assuming that this is a process to create a content key Kcon for example, the content key Kcon is created by Kcon = DES (MKcon, record reproducing player ID). The next step S532 is a step to encrypt with a key (e.g., a distribution key Kdis) part or the whole of the content to be stored. Encrypted content is stored into a recording device such as a hard disk at the step S533.

Whereas, on the side of a system supervisor controlling record reproducing players, when the restoration of the stored data is called for from the user of the record reproducing player, the record reproducing player's ID is retrieved from the record reproducing player at the step S534. Then, at the step 535 a key applied to the decryption of the encrypted content is created based on the retrieved record reproducing player's ID and its own master key. Assuming that this creation process is to obtain a content key Kcon, it should be the content key Kcon = DES (MKcon, record reproducing player's ID). The content is decrypted with this key at the step S536.

In this example, as shown in the lower part of Fig. 54 both the user of the record reproducing player and system supervisor possess a master key (e.g., content key creation master key MKcon), and create distribution keys one by one needed for the encrypting and decrypting of the content based on their respective master keys and the ID (the record reproducing player's ID).

With this system, should the content key be leaked to the third parties the content may be decrypted by the third parties. However, it has a strength that the influence upon the whole system caused by the leakage of one content key can be minimized because content encrypted for another record reproducing player with a different record reproducing player ID can be prevented from being decrypted. It also gives a merit that it is not necessary to hold a list oriented to keys for every content on both sides of a system supervisor and device user.

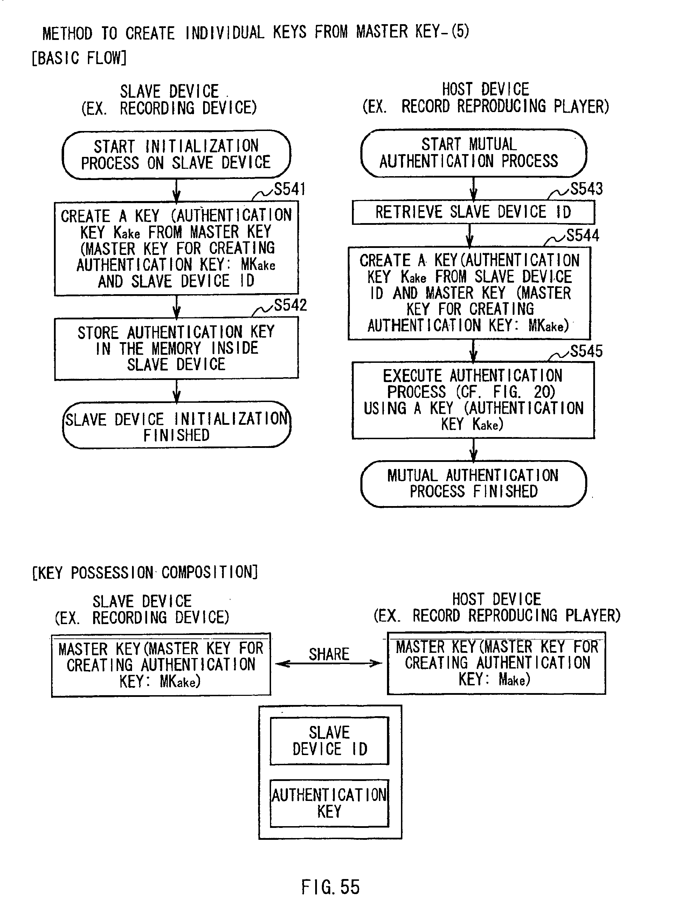

The figure 55 shows structure where an authentication key used in mutual authentication processing between a slave device such as a recording device, e.g., a memory card and host device such as a record reproducing player is created based on the master keys. In the authentication processing explained before (Cf. Fig. 20), it is structured so that an authentication key is stored in the internal memory of a slave device in advance, however, it also is possible to employ structure where the authentication key is created based on the master key in authentication processing as shown in Fig. 55.

A slave device being, e.g., a recording device, creates an authentication key Kake used in mutual authentication processing based on the master key stored in the internal memory of a recording device or slave device and slave device ID at the step S541 as the initial processing before starting authentication processing. This is created by a Kake = DES (MKake, slave device ID) for example. Then, the created authentication key is stored into the memory at the step S542.

Meanwhile a host device such as a record reproducing player, retrieves a slave device ID from the recording device installed, namely the slave device through communication means at the step S543. At the next step S544 am authentication key used in mutual authentication processing is created based on the retrieved slave device ID and its own authentication key creation master key. In this creation processing it should be authentication key Kake = DES (MKake, slave device ID). Authentication processing is executed with the use of the authentication key at the step S545.

As shown in the lower part of Fig. 55, in this example both the slave device and master device possessing the master key, namely authentication key creation master key Mkake, create authentication keys needed for mutual authentication processing one by one based on the respective master keys and slave device ID.

With this system, when should the authentication key be leaked to a third party authentication can not be established with other slave devices because the authentication key is effective for that particular slave device only, thus minimizing the influence possibly caused by the leakage of the key.

Thus, it is structured in the data processing system of the present invention such that information such as keys needed for the procedure regarding encryption information processing between two entities, such as between a content provider and record reproducing player, or between a record reproducing player and recording device, is created in order based on the master keys and each ID. As a result, should the key information be leaked from the respective entities the scope of damages caused by the leakage of individual keys may be limited, thereby obviating the need for the supervision of the key list for each individual entity mentioned above.

(13) Controlling of Intensity of Encryption in Encryption Processing

In the above practical example, encryption processing between a record reproducing player 300 and recording device 400 has been explained with use of the example given in encryption processing by means of the single DES structure explained referring to Fig. 7, for easier understanding. However, an encryption processing method applied to the data processing system of the present invention is not limited whatsoever to the single DES system, and so any encryption method can be employed as long as it is suitable for dealing with the circumstances regarding security for particular needs.

The triple DES method with the structure as explained in Fig. 8 to 10 can be employed by way of example. It is possible to employ structure where the triple DES system can be conducted at both the record reproducing player's encryption processing unit 302 of the record reproducing player 300 and encryption processing unit 401 of the recording device 400 shown in Fig. 3 for example, so that processing oriented to the encryption processing by means of the tripe DES method is carried out as explained in Fig. 8 to 10.

However, there is such a case that a content provider can design a content key Kcon in a 64-bit key structure of the single DES method with priority put on the processing speed as content may require, or that a content key Kcon may be made in a 128-bit or 192-bit key structure by means of the tripe DES method with priority given on security. Therefore, it is not preferable to employ structure in the record reproducing player's encryption processing unit 302 of the record reproducing player 300 and the encryption processing unit 401 of the recording device 400 that is oriented to either of only the triple DES method or single DES method. In other words it is desirable to employ structure in the record reproducing player's encryption processing unit 302 of the record reproducing player 300 and the recording device's encryption processing unit 401 of the recording device 400 that can deal with either of the single DES or triple DES method.

However, to employ a structure in both the record reproducing player's encryption processing unit 302 of the record reproducing player 300 and the recording device's encryption processing unit 401 of the recording device 400 that can deal with either of the single DES or triple DES method, it is necessary to provide a separate circuit and logic for each method. For example, it is necessary to put a set of commands of the triple DES into the command register shown in Fig. 29 to have a process of the triple DES performed in the recording device 400, which contributes to making the structure of the processing unit of the recording device 400 complicated.

Now, a new configuration is proposed for the data processing unit of the present invention that makes it possible to configure the logic in the recording device's encryption processing unit 401 of a recording device 400 with the single DES, which is also oriented to be capable of performing the triple DES decryption process, and to have encrypted data (keys, contents, etc.) with the triple DES method stored in the external memory 402 of the recording device.

In the example of the data format type 0 shown in Fig. 32 for example, in executing the downloading of content data from a record reproducing player 300 onto a recording device 400, authentication processing shall be performed at the step S101 in the flowchart for downloading with the format type 0 explained in Fig. 39, with a session key Kses created at the same step. Furthermore, at the step S117 the encrypting processing of the content key Kcon is executed with the session key Kses at the record reproducing player's encryption processing unit 302 of the record reproducing player 300, which (encrypted key Kcon) is transferred to the recording device 400 through communication means, and then at the step S118, upon receiving this encrypted key the encryption processing unit 403 of the recording device 400 performs decrypting processing on the content key Kcon with the use of the session key Kses. Furthermore, encrypting processing is executed on the content key Kcon with the storage key Kstr, which (encrypted key Kcon) is transferred to the record reproducing player's encryption processing unit 302 of the record reproducing player 300, which forms a data format (stes S121). The formatted data is transmitted to the recording device 400, which lets the external memory 402 store the data received.

If the encryption process at the recording device's encryption processing unit 401 of the recording device 400 conducted between the steps S117 and S118 in the above process can be done selectively either by the single DES or tripe DES, content data offered by a content provider can be used regardless of conforming to which of triple DES or single DES the content Key Kcon is used.

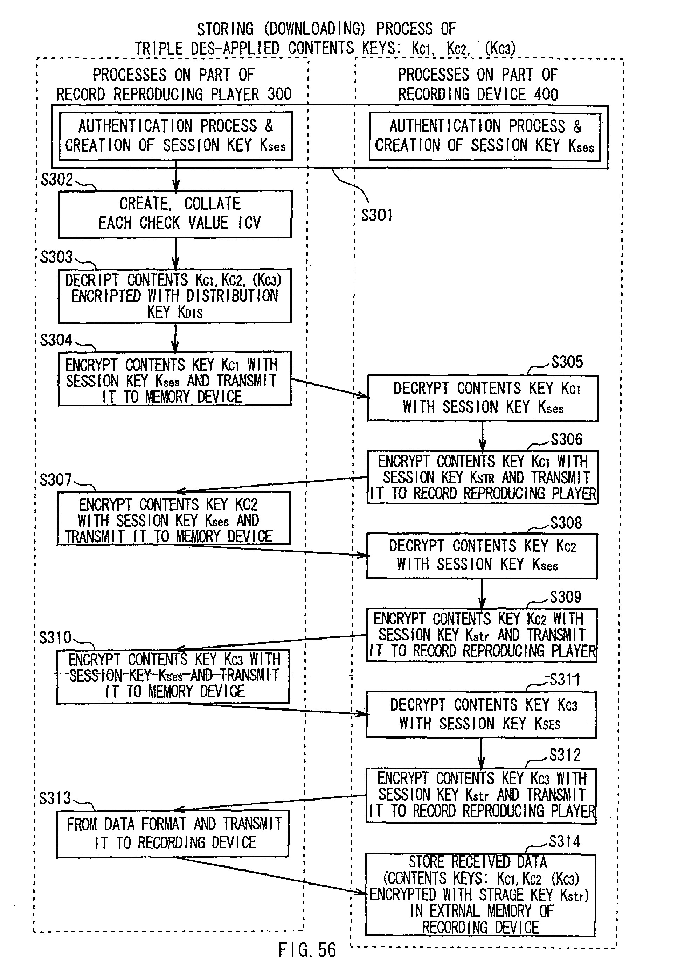

Shown in Fig. 56 is a flowchart describing the structure where an encryption process is conducted according to the triple DES using both of the record reproducing player's encryption processing unit 302 of the record reproducing player 300 and the recording device's encryption processing unit 401 of the recording device 400 in a data processing system of the present invention. Shown in Fig. 56 is an example of the encryption processing on the content key Kcon using the storage key Kstr to be executed in downloading content data from the record reproducing player 300 onto .the recording device 400, with the content key Kcon being of the triple DES method. The similar processing can be applied to other keys, content, and other data although a content key Kkon is used in this processing example as a representative.

As explained previously in Figs. 8 to 10, keys are configured with 64 bits in the single DES, while with 128 or 192 bits in the triple DES method, using two or three keys in processing. These three content keys are defined as Kcon 1, Kcon 2, and (Kcon 3). The Kcon 3 is put into parentheses because it may not be used in some cases.

Explanation is given on the processing in Fig. 56. The step S301 is a mutual authentication processing step between a record reproducing player 300 and recording device 400. This mutual authentication processing step is executed according to the processing explained before in Fig. 20. Session keys Kses are created during this authentication processing.

With the authentication processing finished at the step S302, collating processing is performed on each of check values, check value A, check value B, content check value, total check value, and each ICV at the step S301.

If it is judged that no data tampering exists as a result of the collation processing on those check values (ICV), it proceeds to the step S303, where the control unit 306 of the record reproducing player's encryption processing unit 302 in the record reproducing player 300 lets the encryption/decryption unit 308 record reproducing player's encryption processing unit 302 decrypt with a distribution key Kdis retrieved previously or created the content key Kcon stored in the header of data received from the communication means 600 through the medium 500 or communication unit 305. Content keys in this case are of the triple DES method: content key Kcon 1, Kcon 2, and (Kcon 3).

Next, at the step 304 the control unit 306 of the record reproducing player's encryption processing unit 302 lets the encryption/decryption unit 308 record reproducing player's encryption processing unit 302 encrypt the only content key Kcon 1 out of the content key Kcon 1, Kcon 2, and (Kcon 3) decrypted at the step S303, using the session key Kses shared in mutual authentication.

The control unit 301 of the record reproducing player 300 retrieves the data including the content key Kcon 1 encrypted with the session key Kses from the record reproducing player's encryption processing unit 302 of the record reproducing player 300, which (the retrieved data) is transmitted to the recording device 400 via the recording device controller 303 of the record reproducing player 300.

Next, at the step S305, upon receiving the content key Kcon 1 transmitted from the record reproducing player 300, the recording device 400 lets the encryption/decryption unit 406 of the recording device's encryption processing unit 401 decrypt the content key Kcon 1 received with the session key Kses shared in mutual authentication. Furthermore, at the step S306 the decrypted content key Kcon 1 is reencrypted with the recording device's individual storage key Kstr retained in the internal memory 405 of the recording device's encryption processing unit 401, which is transmitted to the record reproducing player 300 through the communication unit 404.

Next, at the step 307 the control unit 306 of the record reproducing player's encryption processing unit 302 lets the encryption/decryption unit 308 of the record reproducing player's encryption processing unit 302 encrypt the only content key Kcon 2 out of the content key Kcon 1, Kcon 2, and (Kcon 3) decrypted at the step S303, using the session key Kses shared in mutual authentication.

The control unit 301 of the record reproducing player 300 retrieves the data including the content key Kcon 2 encrypted with the session key Kses from the record reproducing player's encryption processing unit 302 of the record reproducing player 300, which (the retrieved data) is transmitted to the recording device 400 via the recording device controller 303 of the record reproducing player 300.

Next, at the step S308, upon receiving the content key Kcon 2 transmitted from the record reproducing player 300, the recording device 400 lets the encryption/decryption unit 406 of the recording device's encryption processing unit 401 decrypt the content key Kcon 2 with the session key Kses shared in mutual authentication. Furthermore, at the step S309 the decrypted content key Kcon 2 is re-encrypted with the recording device's individual storage key Kstr retained in the internal memory 405 of the recording device's encryption processing unit 401, which is transmitted to the record reproducing player 300 through the communication unit 404.

Next, at the step 310 the control unit 306 of the record reproducing player's encryption processing unit 302 lets the encryption/decryption unit 308 of the record reproducing player's encryption processing unit 302 encrypt the only content key Kcon 3 out of the content key Kcon 1, Kcon 2, and (Kcon 3) decrypted at the step S303, using the session key Kses shared in mutual authentication.

The control unit 301 of the record reproducing player 300 retrieves the data including the content key Kcon 3 encrypted with the session key Kses from the record reproducing player's encryption processing unit 302 of the record reproducing player 300, which (the retrieved data) is transmitted to the recording device 400 via the recording device controller 303 of the record reproducing player 300.

Next, at the step S311, upon receiving the content key Kcon 3 transmitted from the record reproducing player 300, the recording device 400 lets the encryption/decryption unit 406 of the recording device's encryption processing unit 401 decrypt the content key Kcon 3 with the session key Kses shared in mutual authentication. Furthermore, at the step S312 the decrypted content key Kcon 3 is reencrypted with the recording device's individual storage key Kstr retained in the internal memory 405 of the recording device's encryption processing unit 401, which is transmitted to the record reproducing player 300 through the communication unit 404.

At the next step S313 the record reproducing player's encryption processing unit 302 of the record reproducing player 300 forms the various data formats explained in Figs. 32 to 35, which are transmitted to the recording device 400.

Finally the step S314 the recording device 400 lets the external memory 402 store the received data with format formation finished. This format data includes the content key Kcon 1, Kcon 2, and (Kcon 3) encrypted with the storage key Kstr.

By carrying out the foregoing processing, it is made possible to store a content key to be stored in the recording device 400 as the key encrypted with the triple DES method. The processing at the steps S310 to S312 is omitted if contents keys are the two keys of the Kcon 1 and Kcon 2.

Thus, the recording device 400 is able to have keys processed with the triple DES stored in the memory by repeating the same mode of processing, namely the processing steps S305 and S306 plural times with the subject only changed. When a content key Kcon is of the single DES method, the steps S305 and S306 are first performed, then they can be stored in the memory by conducting the formatting processing at the step S313. With this kind of configuration, commands to execute the processing at the step S305 and S306 are stored into the command register explained before in Fig. 29, and, depending upon the mode of a content key, that is, of the triple DES method or single DES method, this processing can be tried one to three times as the necessity arises. Consequently it is possible to conduct processing of both the triple DES method and single DES method without including the triple DES processing method in the processing logic of the recording device 400. As to an encryption method, it can be recorded in the usage policy inside the header of content data, and judgment can be made referring to it.

(14) Program Start-Up Processing Based on Start-Up Priority Order in Usage Policy in Content Data

As can be understood from the content data structure explained previously in Fig. 4 to 6, a content type and startup priority order information is included into the usage policy stored in the header of content data to be used with the data processing system of the present invention. When there exist a plurality of accessible content data recorded in a recording device 400, or a variety of recording media such as DVDs, CDs, hard disks, and game cartridges, the record reproducing player 300 comprised in the data processing system of the present invention, determines the startup order of content according to the startup priority order information.

After an authentication process is done with each of recording devices, such as a.DVD device, CD drive device, and hard disk drive device, the record reproducing player 300 executes the program of the content data with the highest priority order according to the priority order information in content data. Explanation is given on the "Program Start-Up Processing Based on Start-Up Priority in Usage Policy in Content Data".

In describing the practical example of the data processing system of the present invention hitherto, explanation has been focused on the case where the record reproducing player 300 reproduces or executes content data from the only recording device 400. However, as shown in Fig. 2, a record reproducing player 300 generally is structured such that in addition to a recording device, a DVD, CD, or hard disk, and furthermore, a variety of other recording media such as a memory card, game cartridge can be connected through a read unit 304, or PI0111 and SI0112 respectively. To simplify the diagram the only read unit 304 is described in Fig. 2, but different recording media such as a DVD, CD, floppy disk, or hard disk can be installed in the record reproducing player 300 in parallel.

A record reproducing player 300 is capable of accessing a plurality of recording media, into each of which is stored content data. Content data supplied by third party content providers such as CD manufacturers, is stored in the media in the data configuration shown in Fig. 4. And, when content data is downloaded through such media or communication means, it is stored in various recording media such as a memory card in the content data configuration in Figs. 26 and 27. More concretely, content data is stored onto media and recording devices in different formats in accordance with the format type of content data as shown in Figs. 32 to 35. In any case a content type and startup priority order information is contained in the usage policy in the header of content data.

Explanation is given on the content startup processing of a record reproducing player capable of accessing the plurality of content data, following the flowchart.

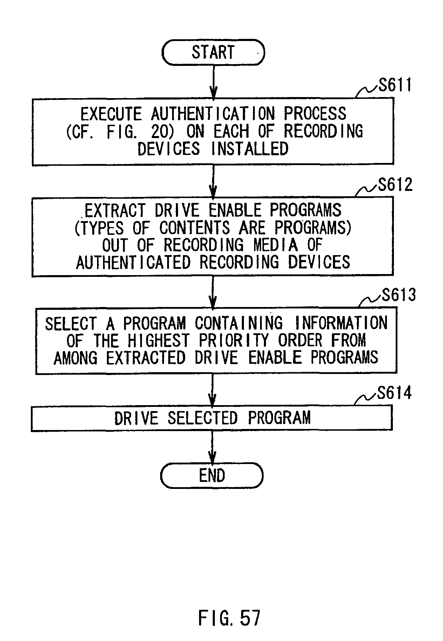

The figure 57 is the processing flow of a processing example (1) when there exist a plurality of startup standing-by contents. The step S611 is a step to execute authentication processing on a recording device the record reproducing player 300 can access. Included into accessible recording devices are memory cards, DVD devices, CD drives, and hard disks, still more, game cartridges, etc. to be connected through, for example, PI0111 and SI0112. Authentication processing is conducted against each recording device under the control of the control unit 301 shown in Fig. 2, following the procedure explained previously in Fig. 20 for example.

Next, at the step S612 startup standing-by program are detected from content data stored in the memory inside the recording device that passed authentication. More concretely this is executed as processing to extract content whose type are a program, contained in the usage policy of content data.

Next, at the step S613 the startup priority order is judged on the startup standing-by programs extracted at the step S612. This is practically a process to select the highest priority order compared with the priority information contained in the usage policy in the header of the plurality of startup standing-by content data selected at the step S612.

The selected program is driven up at the next step S614. If the same priority order is set to plural startup standing-by programs, priority order is set to default between recording devices, executing a content program stored in a device with the highest priority.

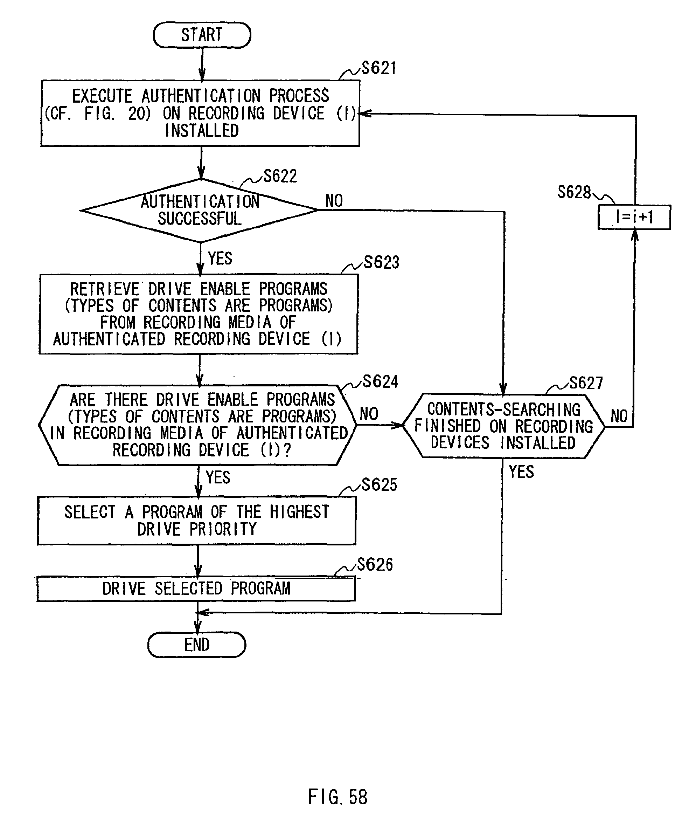

The figure 58 gives a processing mode, namely a processing example (2) when there exist a plurality of startup standing-by content, where identifiers are set to a plurality of recording devices, and where authentication processing and content program detection are performed in order on recording devices, each with an identifier appended to.

The step S621 is a step to perform authentication processing (Cf. Fig. 20) on a recording device (i) installed onto the record reproducing player 300. The identifiers 1 to n are appended in order to a plurality (n pieces) of recording devices.

The authentication at the step S621 is judged at the step S622. If it is successful, it proceeds to the step S623 and retrieves a startup standing-by program from the recording medium installed onto the recording device (i). If unsuccessful, it proceeds to the step S627 and judgment is made anew on the existence of a recording device having retrievable content. If there is no retrievable content, the processing terminates. If there exists a recording device with a content, it proceeds to the step S628 and renews the recording device identifier i, repeating the authentication processing steps S621 and on.

The processing at step S623 is a process to retrieve startup standing-by programs from content data stored in the recording device (i). This is practically conducted as a process to extract content whose type is program, contained in the usage policy of the content data.

Judgment is made on the content extracted to determine if it is of the program type at the step S624, and if programs are extracted, one with the highest priority order is selected out of the extracted programs at the step S625, and the selected program is executed at the step S626.

When it is judged that no content of the program type is extracted at the step S624, it proceeds to the step S627 and judgment is made on whether there is a recording device with such a program. If nothing is found, the processing terminates. If there is a recording device, it proceeds to the step S628 and renews the recording device identifier i, repeating the authentication process of the steps S621 and following.

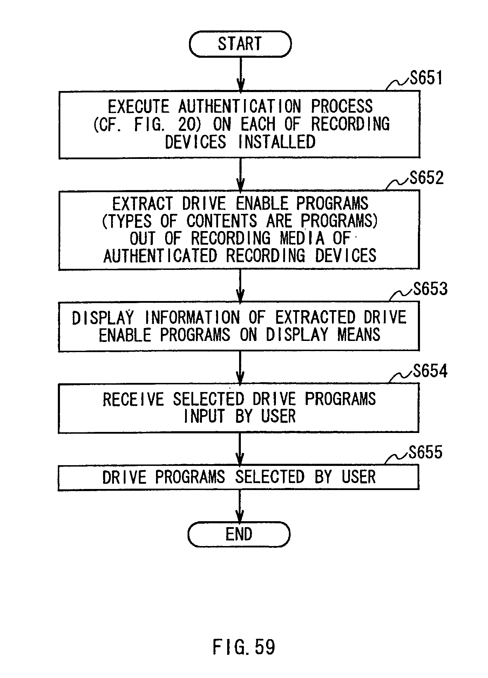

The figure 59 is the processing flow of a processing example (3) when there exist a plurality of startup standing-by contents. The step S651 is a step to execute authentication processing on a recording device the record reproducing player 300 can access. Authentication processing is performed on accessible recording media such as DVD devices, CD drives, and hard disks, memory cards, and, game cartridges, etc. Authentication processing is conducted against each recording device under the control of the control unit 301 shown in Fig. 2, following the procedure explained previously in Fig. 20 for example.

Next, at the step S652 a startup standing-by program is detected from the content data stored in the memory inside the recording device successfully authenticated, which passed authentication. This is practically conducted as a process to extract content whose type is program, contained in the usage policy of the content data.

Next, at the step S653 the name and other information of a startup standing-by program extracted at the step S652 is indicated on the display means. Though the display means is not shown in Fig. 2, it is structured such that data output as AV output data (not shown in Fig.) is output on the display mean. Information to be offered to users, including the program name of each content data, is stored in the identification information of the content data. Program information such as the name of a program of each of content data already authenticated is output at the output means through the control unit 301 under the control of the main CPU106 shown in Fig. 2.

At the next step S654 the main CPU106 receives program selection information selected by a user by means of an input interface, controller, mouth, or keyboard, etc., shown in Fig. 2 through the input interface 110, and a user-selected program is executed according to the selection input at the step S655.

Thus, with the data processing system of the present invention, information on the program startup priority is stored in the usage policy in the header inside the content data, and a record reproducing player 300 starts up a program according to this priority order, or startup program information is displayed on the display means based on the selection made by the user, which obviates the need for the user to detect a program, resulting in saving of time to start up and of the user's labor. Also, since a startup standing-by program starts up only after all authentication processing is made on all recording devices, or since a program is indicated as a startup standing-by program, complexity is eliminated in conducting processing such as the confirmation of authenticity after a program is selected.

(15) Content Structure and Reproduction (Decompression) Processing

With the data processing system of the present invention, as explained hitherto, a record reproducing player 300 downloads content from medium 500 or communication means 600, or performs reproduction processing with a recording device 400. The above explanation has been given focusing on the downloading of content, or on the processing of encrypted data in reproduction processing.

The control unit 301 of the record reproducing player 300 in Fig. 3 controls the overall operations, ranging from the downloading and reproducing processes of content data from devices such as DVDs 500, communication means 600 and recording devices that offer content data, to authentication processing, encrypting and decrypting.

A reproducible content obtained as a result of such processing includes voice data, image data, etc., decrypted data is put under the control of the main CPU shown in Fig. 2 from the control unit 301, and is output at an AV output unit suitable for audio data, or image data. If, however, a content is audio data compressed by MP3, decryption processing is done on the audio data by the MP3 decoder of the AV output unit shown in Fig 2. If content data is image data compressed by MPEG2, decompression processing is done by the MPEG2 decoder of the AV processing unit. As described, data contained in content data may, or may not be compressed (coded), so that a suitable process is applied to a content before being output.

However, there are various kinds of compression processing and decompression processing programs, so that if compressed data is offered by a content provider, it can not be reproduced unless a suitable decompression process executing program is available.

Such being the case, with the data processing system of the present invention the structure is disclosed that stores . compressed data and its decompression (expansion) processed program into the data content, or that stores linkage information between compressed data and decompression (expansion) processing programs as header information of content data.

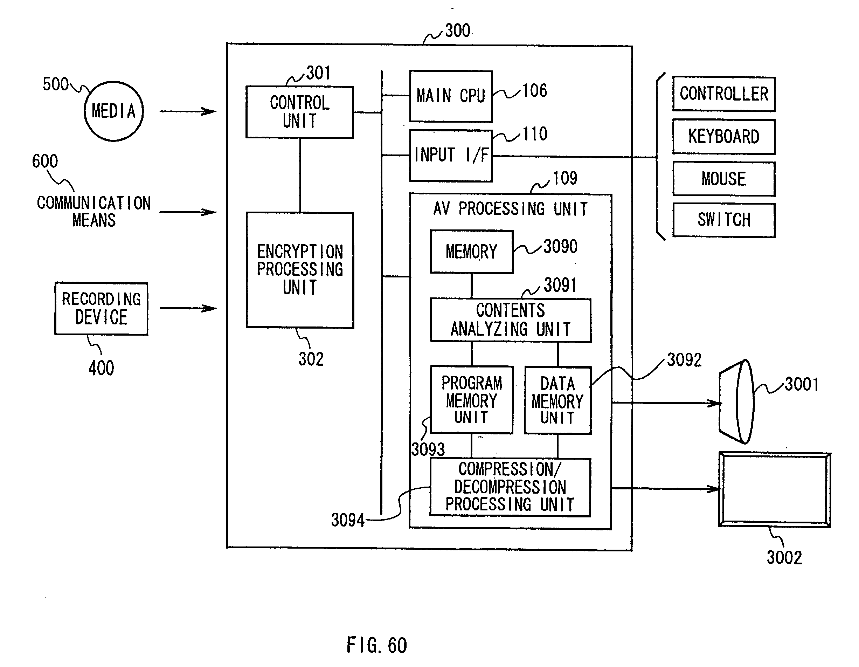

The figure 60 is a concise diagram of elements and related elements relating to the present structure, transferred from the overall picture of data processing shown in Fig. 2. A record reproducing player 300 is offered a variety of content from devices 500 such as DVDs, CDs, or communication means 600, or recording devices 400 such as memory cards storing content. These kinds of contents include a variety of either encrypted or unencrypted, or compressed or uncompressed such as audio data, still images, moving image data, and program data.

When a content received is encrypted, decryption processing is conducted with the methods under the control of the control unit 301 and by means of encryption processing by the record reproducing player's encryption processing unit 302, which have been all explained in the foregoing chapters. Decrypted data is transferred to a AV processing unit 109 under the control of the main CPU106, and after being stored in the memory 3090 of the AV processing unit 109, its content structure is analyzed at a content analyzing unit 3091. If a data decompression program is stored in content for example, the program is stored in a program memory unit 3093. If data such as audio data and image data is contained, it is retained in a data memory unit 3092. A decompression processing unit 3094 conducts the decompression processing of compressed data retained in the data memory unit 3902 with the use of a decompression processing program such as MP3 retained in the program memory unit. Finally the decompressed data is output at a speaker 3001 and monitor 3002.

Next, explanation is given on some examples of structure and processing of data received through the control unit 301 of the AV processing unit 109. Audio data is exemplified here as a example of content, and MP3 as a compressed program, but the present structure is applicable not only to audio data but to image data as well as a compression/decompression program not only to MP3 but to other various programs processed with MPEG2 and 4.

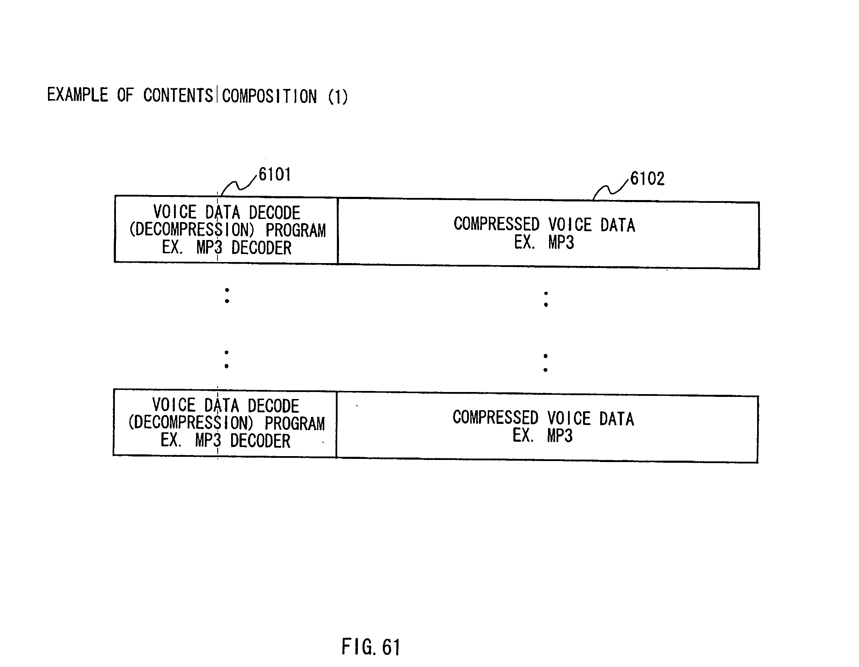

The figure 61 is an example of content structure. Shown in Fig. 61 is an example of a structure merging music data 6102 compressed with MP3 and a MP3 decompressed (expansion) processing program 6101 into one content. They are stored into a medium 500 or a recording device 400 as one content, or distributed over communication means 600. Assuming that the content be encrypted as explained previously, the record reproducing player 300 lets the encryption processing unit 303 perform decryption processing on the content, which is transferred to the AV processing unit 109.

The content analyzing unit 3091 of the AV processing unit 109 analyzes the content received and retrieves the audio data decompression program (MP3 decoder) part from the content consisting of an audio data decompression program (MP3 decoder) part and a compressed audio data part. The program is retained in the program memory unit 3093, and the compressed audio data in the data memory unit 3092. The content analyzing unit 3901 can receive information such as the name of the content received and content structure information in addition to the content, or can perform an analysis on the content based on the data indicating the name, identification data, length, and structure contained in the content. Next, the compression/decompression processing unit 3094 conducts decompression processing on the MP3-compressed audio data retained in the data memory unit 3092 according to the audio data decompression program (MP3 decoder) retained in the program memory unit 3093. Then, the AV processing unit 109 outputs the audio data decompressed at the speaker 3001.

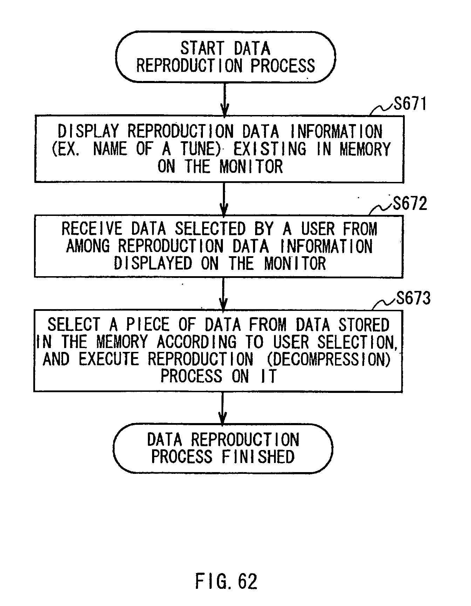

The figure 62 shows the flow of an example of reproduction processing of data having the content structure in Fig. 61. At the step S671 the data name stored in the memory 3090 of the AV processing unit 109, for example, information such as the name of a music if the content is music data, is retrieved from information received separately from the content, or from the data in the content, which is displayed on the monitor 3020. User-selected data is received at the step S672 from various input means such as switches and key boards through the input interface 110, then, reproduction processing commands based on the user-input data is output at the AV processing unit 109 under the control of the CPU106. Then, the extraction and expansion processes are conducted at the AV processing unit at the step S673.

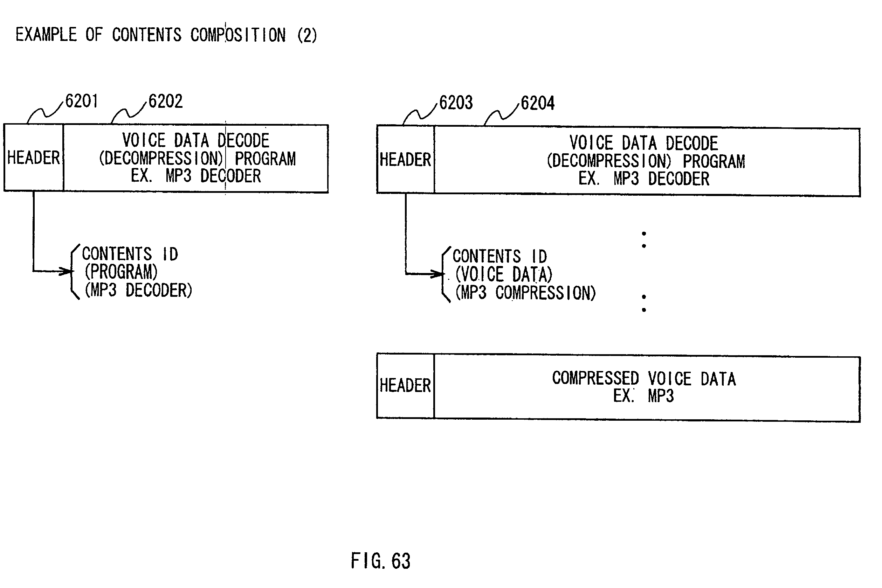

The Fig. 63 is an example of structure where either of compressed audio data or decompression processing program is contained in one content. Still more, content information indicating what is contained in the content as header information of each content is contained in it.

As shown in Fig. 63, when a content is a program 6202, content identification information is contained in it, which indicates that the content is a program as header information 6201 and that the program is of the MP3-decompressed program type. On the other hand, if audio data 6204 is contained as a content, the content information of the header 6203 includes the information that the content is MP3-compressed data. It is possible to append this header information to a content transferred to the AV processing unit 109 by selecting the only information needed for reproduction from the data contained in the usage policy (Cf. Fig. 5) in the content data structure shown in Fig. 4 by way of example. Practically it is possible to append the identification values of the usage policy data needed at the encryption processing unit 302 at the time of reproduction processing at the AV processing unit 109 to each structure data in the "Usage Policy" shown in Fig. 5, and to extract as head information the only information that indicates these identification values are needed at the AV processing unit 109.

Upon receiving each content shown in Fig. 63, the content analyzing unit 3091 of the AV processing unit 109 lets the program memory unit 3093 retain the program content if the content is a program following the header information, and lets the data memory unit 3092 retain the data content if the content is data. Then the compression/decompression processing unit 3094 retrieves the data from the data memory unit, which is output, being decompressed with the MP3 program retained in the program memory unit 3093. When a similar program is already stored in the program memory unit 3093, this program storage process can be omitted.

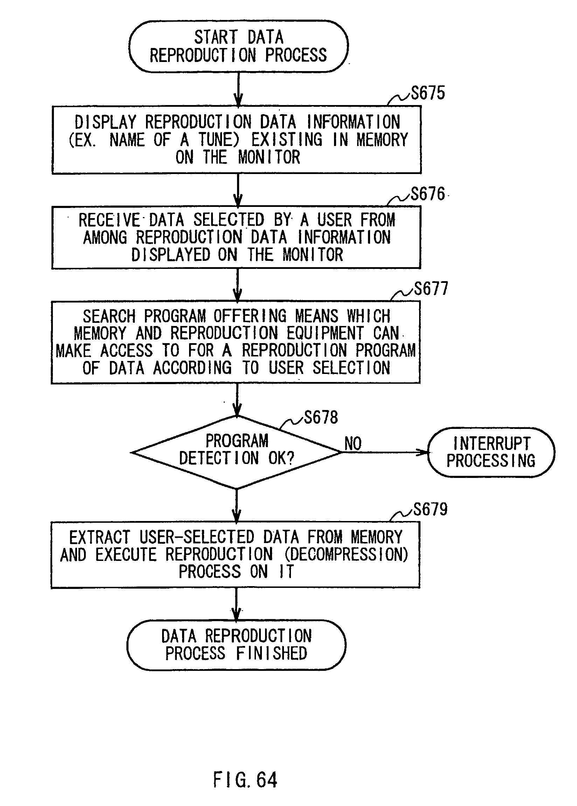

The figure 63 shows the flow of an example of reproduction processing of data having the content structure in Fig. 64. At the step S675 the data name stored in the memory 3090 of the AV processing unit 109, for example, information such as the name of a music if the content is music data, is retrieved from information received separately from the header inside the content, or from the data in the content, which is displayed on the monitor 3020. User-selected data is received at the step S676 from various input means such as switches and key boards through the input interface 110.

A data reproduction program (ex. MP3) is retrieved at the step S677, which meets the user selection. As to subjects of this program retrieval, it is preferable to put limits on the maximum retrieval scope a record reproducing player 300 can access, which may include each medium 500, communication means 600, and recording devices 400, etc. shown in Fig. 60 for example.

The only data portion of a content is handed to the AV processing unit 109, while a program content may be stored onto another recording medium inside a record reproducing player 300, or may be supplied from a content provider through media such as DVDs and CDs. Accordingly the retrieval scope is limited to a scope the record reproducing player 300 can access. When a reproduction program is found as a result of retrieval, the reproduction processing command based on the user-input data is output at the AV processing unit 109 under the control of the CPU 106. The AV processing unit 109 conducts the extracting and decompressing of the user-selected data at the step S679. It can be practical, too, as another example, to retrieve a program before the step S675, and to show the only data from which a program is retrieved at the step S675.

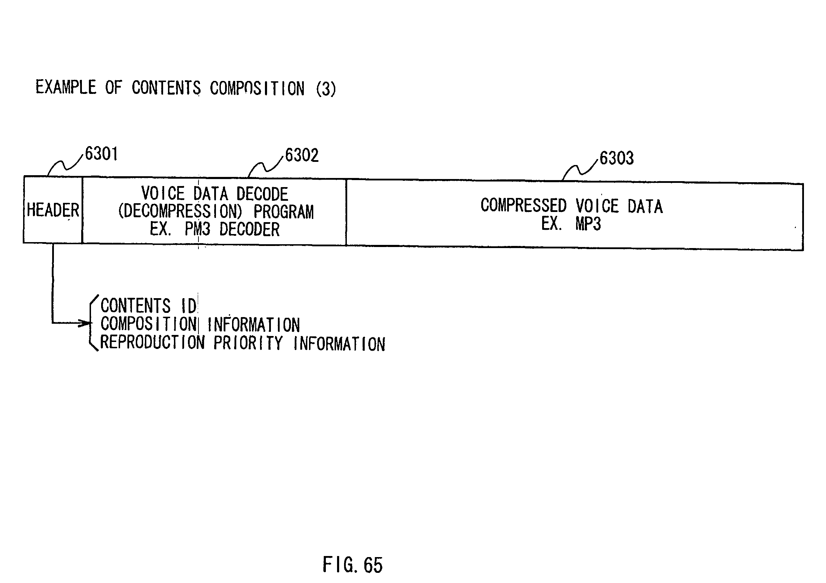

The Fig. 65 is an example of structure where both the compressed audio data 6303 and decompression processing program 6302 are contained in one content. Still more, content reproduction priority order information is contained in the content as header information 6301 of the content. This is an example of appending reproduction priority order information as header information to the content structure in Fig. 61. As in "(14) Program Start-Up Processing Based on Start-Up Priority Order in Usage Policy in Content Data", this determines a reproduction order based on the reproduction priority order set up among the contents the AV processing unit 109 has received.

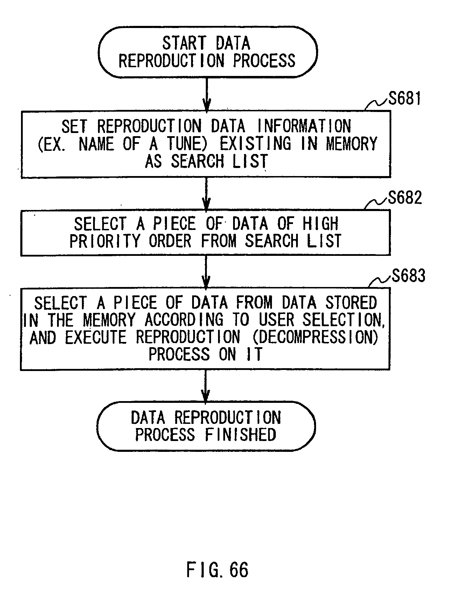

The figure 66 shows a flow indicating an example of the reproduction processing of data having the content structure in Fig. 65. Data, or data information on data to be reproduced, stored in the memory 3090 of the AV processing unit 109 is set to a retrieval list at the step S681. The retrieval list is set up with the use of a partial area of the memory inside the AV processing unit 109. At the next step S682 data having a high priority order is selected from the retrieval list at the content analyzing unit 3091 of the AV processing unit 109, and reproduction processing is conducted on the selected data at the step S683.

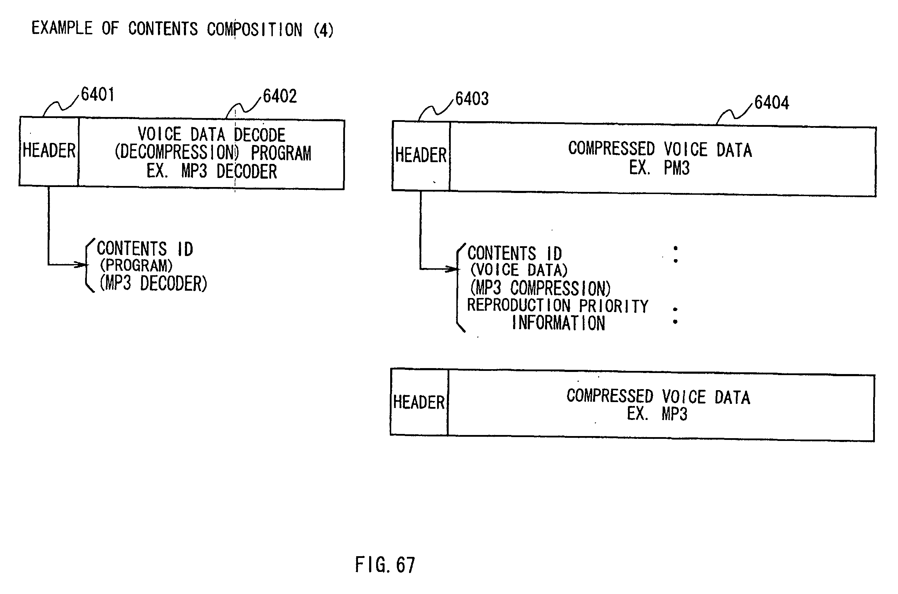

Next, shown in Fig. 67 is an example where one content contains a combination of header information and program data 6402, or header information 6403 and compressed data 6404. Reproduction priority order information is appended to the header 6403 only of data content in this example.

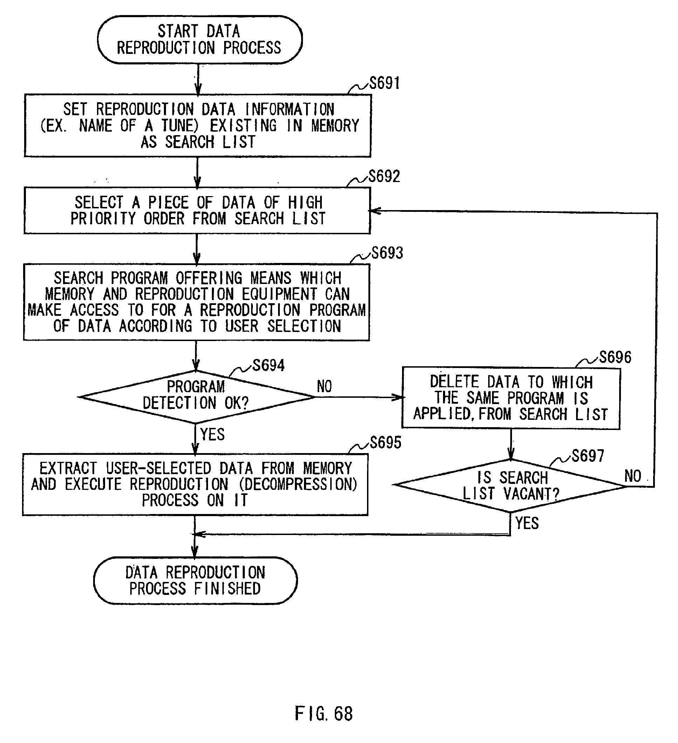

The figure 68 shows a flow indicating an example of the reproduction processing of data having the content structure in Fig. 67. Data, namely data information on data to be reproduced, stored in the memory 3090 of the AV processing unit 109 is set to a retrieval list at the step S691. The retrieval list is set up with the use of a partial area of the memory inside the AV processing unit 109. At the next step S692 data having a high priority order is selected from the retrieval list at the content analyzing unit 3091 of the AV processing unit 109.

A data reproduction program (ex. MP3) is retrieved at the step S693, which meets selected data. As to subjects of this program retrieval, similarly to the processing in the flow in Fig. 64 it is preferable to put limits on the maximum retrieval scope a record reproducing player 300 can access, which may include each medium 500, communication means 600, and recording devices 400, etc. shown in Fig. 60 by way of example.

When a program to reproduce is detected ("Yes" at the step S694) as a result of retrieving, decompression/ reproduction processing is conducted at the step S695, with the use of a program obtained as a result of retrieving selected data.

Should a program not be detected as a result of retrieving ("Yes" at the step S694), it proceeds to the step S696, and part of the data having the identical program, for which reproduction processing is required, is deleted from other data contained in the retrieval list set up at the step S691. This is done because it is apparent that no program will be detected if a reproduction retrieval process is conducted on that data anew. Furthermore, it is judged if the retrieval list is vacant at the step 697, and if no, it returns to the step S692, where data of the next high priority order is extracted, and program retrieval processing is carried out.

Thus, according to the present structure, when a content processed with compression is structured along with a decompression (expansion) program, or that a content is produced of compressed data only, or that a content is the only program processed with decompression, each content contains header information indicating what kind of compressed data it is, or how it should be processed, so that a processing unit (ex. AV processing unit) conducts decompression reproduction processing using a decompression processing program appended to compressed data, or retrieve a decompression processing program based on the header information of the compressed data, based on the result of which decompression reproduction processing is performed, which obviates the need for the selection and retrieval processing of decompression programs of data by users, resulting in reduction of users's burdens and in efficient reproduction of data. Still more, if the header is structured with reproduction priority order information contained in it, it is feasible to set reproduction priority automatically, making it unnecessary for users to set up priority on reproduction.

In the above practical example, explanation has been given on a compressed audio data content and MP3 as being a decompression processing program for audio compressed data, however, the present structure can also be applicable to a content containing compressed image data and a content having a decompression processing program for compressed data. accomplishing similar effects.

(16) Creation of Save Data and Storing It in Recording Device, and Reproduction Processing

In such a case that execution in a record reproducing player 300 of a content, for example, a game program, is interrupted and resumed later, it is possible with the data processing system of the present invention to save or store the state of an interrupted game into a recording device and to retrieve and resume it later when the game is resumed after a given period of time.

The save data retaining structure of conventional record reproducing players such as game machines and personal computers are capable of storing save data onto memory media such as a memory card, floppy disk, game cartridge, or hard disk built into or connected externally to a record reproducing player for example. However, they are not provided with security measures for save data. Game application programs are saved with common specifications for example.

Under the circumstances, such a case may occurs that save data retained in a certain record reproducing player is used with other game programs or rewritten, with almost no considerations paid to the security of save data up to now.

The data processing system of the present invention offers a configuration enabling the security of save data to be insured. For example, the save data of a game program is stored into a recording device, encrypted based on information usable with that particular game program only. Or, it is stored into a recording device, encrypted based upon information particular to a record reproducing player. Due to these methods, it is possible to have the use of save data limited to particular equipment and programs, thereby insuring the security of the save data. Explanation is given hereunder on the "Creation of Save Data and Storing It in Recording Device, and Reproduction Processing" with respect to the data processing system of the present invention.

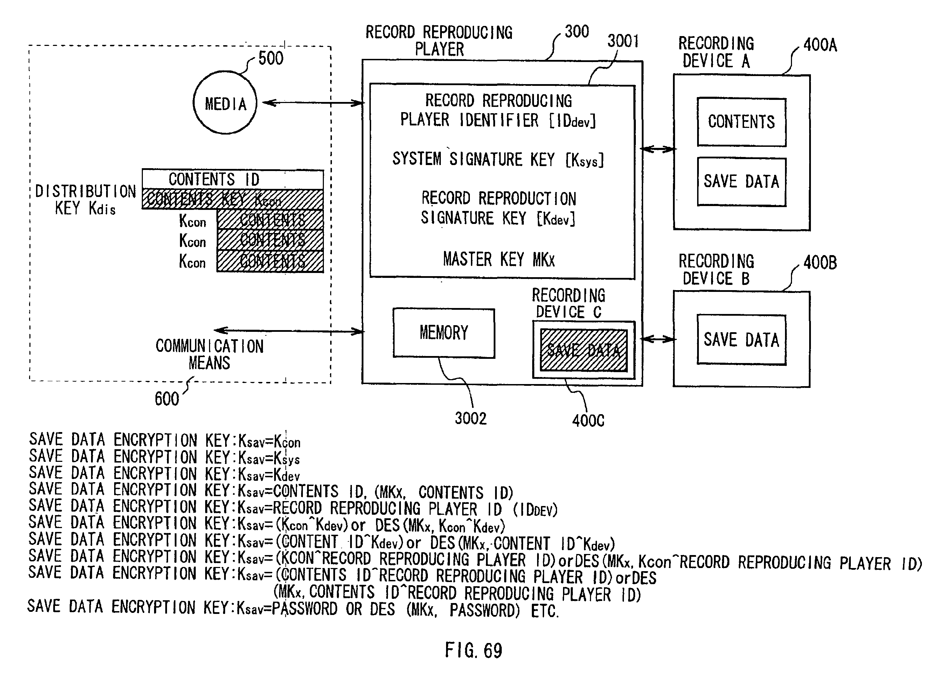

The figure 69 is a block diagram describing a save data storage process in the data processing system of the present invention. A content is offered from media 500 such as a DVD, CD, or over communication means 600 to a record reproducing player 300. The content offered is encrypted with a content key Kcon, a key particular to the content as explained before. The record reproducing player 300 obtains a content key following the processes explained in the chapter "(7) Downloading Processing from Record Reproducing player to Recording Device" (Cf. Fig. 22), and decrypts the encrypted content, which is stored in a recording device 400. Here, explanation is given on a series of processes where; the record reproducing player 300 decrypts and reproduces a content program retrieved from media or over communication means; the save data obtained is stored into any of various recording devices 400A, 400B, and 400C such as a memory card, hard disk and others, which is built into or connected externally to the record reproducing player; a content is downloaded onto a recording device 400, which reproduces it; the save data is stored into any of various recording devices 400A, 400B and 400C such as a memory card, hard disk, which is installed into a process recording device 400.

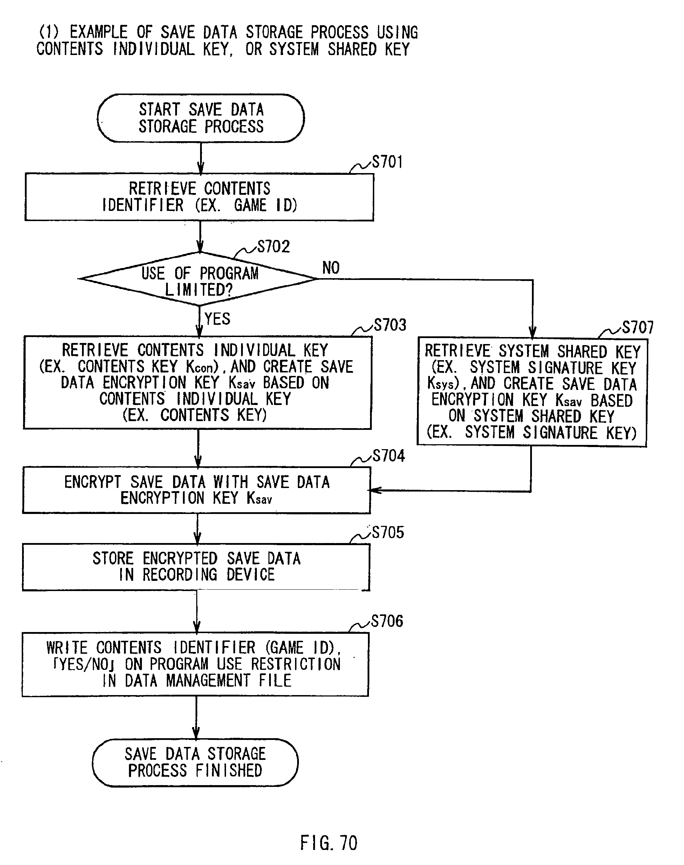

As explained before, the record reproducing player 300 comprises a record reproducing player identifier IDdev, system-shared system signature key Ksys, record reproducing player signature key Kdev being a signature key particular to each record reproducing player, and still more a master key to create a variety of individual keys. As explained in detail in the chapter "(12) Structure of encryption processing key creation base the master key", the master key is a key to create a distribution key Kdis, authentication key Kake, or other keys. A master key is defined here as MKx representing all the master keys the record reproducing player 300 possesses, not limiting their types. Shown in the lower part of Fig. 69 is an encryption key Ksav for save data. The save data encryption key Ksave is an encryption key used in encryption processing when storing save data in various recording devices 400A ~ C, and decryption processing when reproducing data from a variety of recording devices 400A ~ C. Explanation is given on examples of storage and reproduction processing of save data, referring to Fig. 70 and following.

The figure 70 is a flowchart for storing save data into any of the recording devices 400A ~ C with either a content's individual key or system-shared key. The processing at each step is conducted by the record reproducing player, and a recording device to store save data at each step can be any of the recording devices 400A ~ C of the built-in type or externally mounted type, putting no limits on the type.

The step S701 is a process where the record reproducing player 300 retrieves a content identifier, e. g., a game ID. This is data contained in identification information in the content data shown in Figs. 4, 26, 27, 32 to 35 explained before and where the main CPU106 receives the storage processing demand of the save data via the input interface 110 shown in Fig. 2, and commands the control unit 301 to read the content identifier.

The control unit 301 retrieves identification information contained in the header inside the content data through the read unit 304 when an executable program is a content in the process of execution through a read unit 304 such as a DVD or CD-ROM, or retrieves identification information through the recording device controller 303 when an executable program is a content stored in the recording device 400. When the record reproducing player 300 is executing a content program with the content identifier already stored in the RAM of the record reproducing player or other accessible recording media, the identification information contained in the data retrieved can be used.

The next step S702 is a step to change a process, depending upon whether use restriction is put on a program. The program use restriction is a use restriction to set restriction on save data to be saved so that the save data can be used individually by that particular program. Accordingly, when it can be used individually for a particular program only, it is defined as "program use restriction", and when no restriction is put on a program to use save data, it is defined as "no program use restriction". This setting may be done by a user freely, or a content manufacturer may set it, of which information can be stored in the content program. Use restriction set up is stored in a recording device 400A ~ C shown in Fig. 69 as the data management.

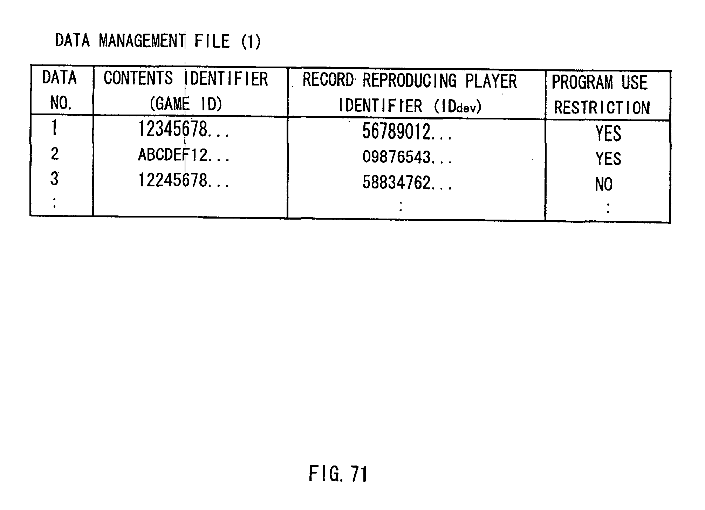

An example of the data management file is shown in Fig. 71. The data management file is created as a table containing the items of a data number, content identifier, record reproducing player identifier, and program use restriction. The content identifier is the identification data of a content program being a subject to store save data. The record reproducing player identifier is the identifier, e.g., [IDdev] shown in Fig. 69, of a record reproducing player storing the save data. As explained above, the use restriction is set to "Yes" when save data to save is usable individually for that particular program only, and to "No" when no restriction is put on the use of the corresponding program. The setting of a program use restriction may be done as desired by a user using content programs, or a content manufacturer may set it, of which information can be stored in the content program.

Explanation on the flow continues, returning to the figure 70. When the program use restriction is set to "Yes" the step S702, it proceeds to the step S703, where content's individual key is created, for example, by retrieving a content key Kcon explained before, which may be defined as a save data encryption key Ksav. Or, a save data encryption key Ksav is created based on the content's individual key.

On the other hand, when the program use restriction is set to "No" at the step S702, it proceeds to the step S707, where a system-shared key stored in the record reproducing player 300, e.g., a system signature key Kses stored in the internal memory 307 of the record reproducing player 300, is retrieved, which may be defined as a save data encryption key Ksav. Or, a save data encryption key Ksav is created based on the system signature key. Or, another encryption key different from other keys can be used as a save data encryption key Ksav.

Next, at the step S704 an encryption process is performed on the save data with the save data encryption key Ksav selected or created at the step S703 or S707. This encryption processing is conducted by the encryption processing unit 302 in Fig. 2, following the DES algorithm mentioned before, for example.

The save data processed with encryption at the step S704 is stored into a recording device at the step S705. If there are a plurality of recording devices that can store the save data as shown in Fig. 69, a user is to select any of the recording devices 400A ~ C as a save data storage place. Furthermore, at the step S706 program use restriction information set up at the step S702 is written into the data management file explained before at the step S706, referring to Fig. 71, that is to say, "Yes" or "No" is written as regards the program use restriction.

The storage processing of the save data terminates here. "Yes" or "Program use restricted" is selected at the step S702. The save data processed with encryption with the save data encryption key Ksav created based on the content's individual key at the step S703, can not be decrypted with a content program having no content's individual key information, making the save data usable for the only content program having the same content key information. However, since the save data encryption key Ksav here is not created based on a record reproducing player's individual information, save data stored in a detachable recording device such as a memory card can be reproduced by a different record reproducing player, provided that it is used with a corresponding content program.

When "No", namely "Program use not restricted", is selected at the step S702, the save data processed with encryption with the save data encryption key Ksav based on the system-shared key at the step S707 can be reproduced even with a program having a different content identifier, or a different record reproducing player.

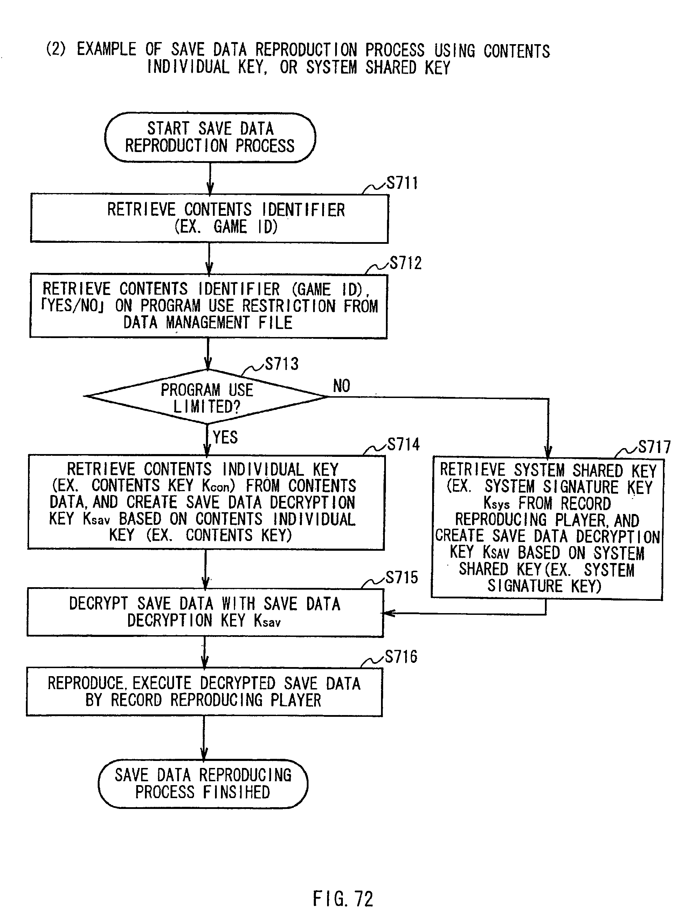

The figure 72 is a flowchart showing the process of reproducing save data stored by means of the save data storage processing in Fig. 70.

The step S711 is a process where a record reproducing player 300 retrieves a content identifier, e.g., a game ID. This is the similar process to the save data storage process at the step S701 explained before in Fig. 70, where data contained in the identification information inside the content data is retrieved.

Next, at the step S712 the data management file explained using Fig. 71, is retrieved from a recording device 400A ~ C shown in Fig. 69. The retrieved content identifier and use program restriction information set up correspondingly are extracted at the step S711. If the program use restriction set up in the data management file is set to "Yes", it proceeds to the step S714, and if "No" to S717.

At the step S714 a content's individual key, for example, the content key Kcon explained before, is retrieved from the content data, which is defined as a save data decryption key Ksav, or a save data decryption key Ksav is created based on the content's individual key. A processing algorithm oriented to the encryption key creation processing is applied to this decryption key creation processing as well. That is, a decryption key creation algorithm is applied to the data encrypted based on a certain content's individual key so that it is can be decrypted with a decryption key created based on the same content's individual key.

On the other hand, when the data management file is set to "No" in respect to the program use restriction at the step S712, a system-shared key, e.g., a system signature key Ksys, stored in the record reproducing player 300 is retrieved from the internal memory 307 of the record reproducing player 300 at the step S717, which (the system signature key Ksys) may be defined as a save data decryption key Ksav, or save data decryption key Ksav is created based on the systen signature key. Another alternative is, another encryption key different from other keys saved in the internal memory 307 of the record reproducing player 300 can be used as a save data encryption key Ksav.

Next, at the step S715 decryption processing is conducted on the save data with the use of the save data decryption key Ksav selected or created at the step S714 or S717, and the decrypted save data is reproduced or executed by the record reproducing player 300 at the step S716.

The reproduction processing of save data is now finished. As described above, when "Program use restriction applied" is set up in the data management file, a save data decryption key is created based on the content's individual key, and when "Program use restriction not applied" is set up, a save data decryption key is created based on a system-shared key. With the "Program use restriction applied", it is impossible to obtain a decryption key to decrypt save data unless the content identifier of a content in use is the same, thereby enabling the security of save data to be increased.

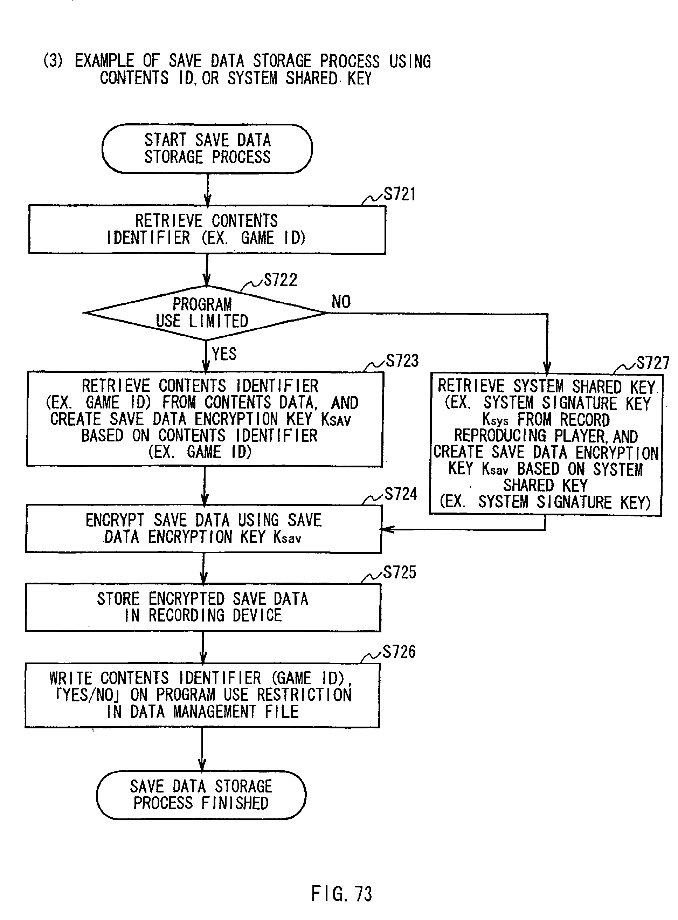

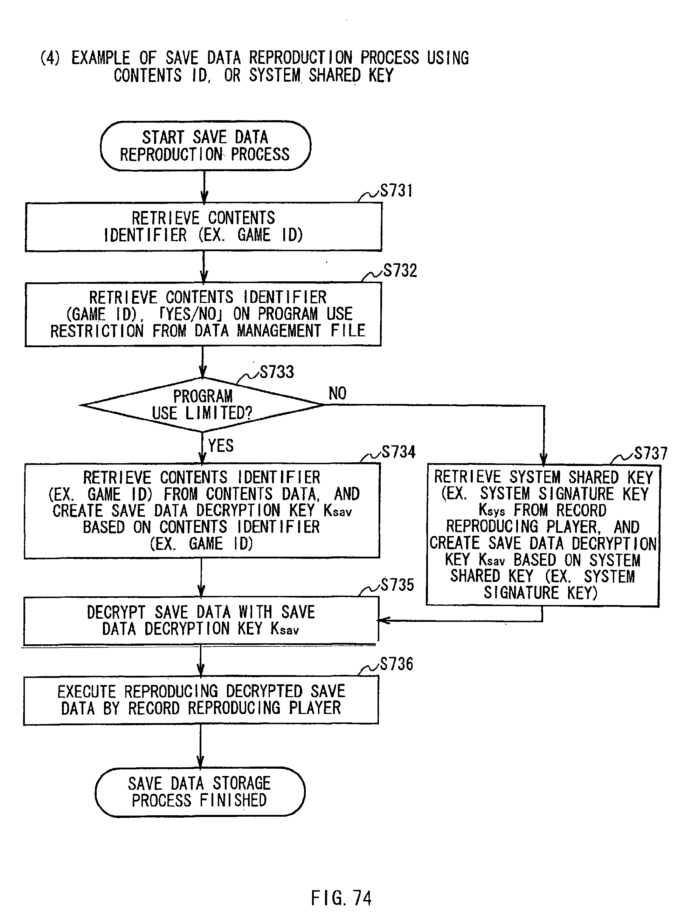

The figures 73 and 74 are a save data storage processing flowchart (Fig. 73) and save data reproduction processing flowchart (Fig. 74) to create a save data encryption key and decryption key using a content identifier.

Explanation on the steps S721 to S722 in Fig. 73, is omitted here because processing there is similar to that at the steps S701 to S702 in Fig. 70.

As regards the save data storage processing flow in Fig. 73, when "Program use restriction applied" is set up at the step S722, the content identifier, namely the content ID retrieved from the content data at the step S723 is defined as the save data encryption key Ksav, or the save data encryption key Ksav is created based on the content ID. It is possible to obtain a save data encryption key Ksav with DES (MKx, content ID) for example, by letting the encryption processing unit 307 of a record reproducing player 300 apply a master key MKx stored in the internal memory of the record reproducing player 300 to a content ID retrieved from the content data. Or, it also can be practical to use as a save data encryption key Ksav another encryption key different of other keys saved separately inside the internal memory 307 of the record reproducing player 300.

On the other hand, when the "Program use restriction" is set to "No" at the step S722, a system-shared key, e.g., a system signature key Ksys stored in the record reproducing player 300 is retrieved from the internal memory 307 of the record reproducing player 300 at the step 727, which may be defined as the save data encryption key Ksav, or the save data encryption key Ksav is created based on the system signature key. Or, it also can be practical to use as a save data encryption key Ksav another encryption key different of other keys saved separately inside the internal memory 307 of the record reproducing player 300.

The processes at the steps S724 and on, are similar to those at the steps S704 and on in the processing flow in the previous Fig. 70, so that explanation is omitted here.

Furthermore, the figure 74 is a processing flow describing the reproduction and execution of save data stored in a recording device in the save data storage processing flow in Fig. 73, where the steps S731 to S733 are the same as the corresponding steps in Fig. 72, with the step S734 only excepted. At the step S734 a content identifier, namely a content ID, is retrieved from content data, which (the content ID) is defined as the save data decryption key Ksav, or the save data decryption key Ksav is created based on the content ID. A processing algorithm oriented to the encryption key creation processing is applied to this decryption key creation processing. A decryption key creation algorithm is applied to the data encrypted based on a certain content identifier so that it can be decrypted with a decryption key created based on the same content identifier.

Explanation on the steps S735, S736, and S737 is omitted since it is the same as on the corresponding steps in Fig. 72. According to the save data storage and reproduction processing in Figs. 73 and 74, when the program use restriction is set up with structure where a save data encryption key and decryption key are created with the use of a content ID, the save data can not be used, except when the corresponding content program is matched as in with save data storage and reproduction processing with the use of the previously mentioned content's individual key, thereby enabling save data to be kept with a high level of security.

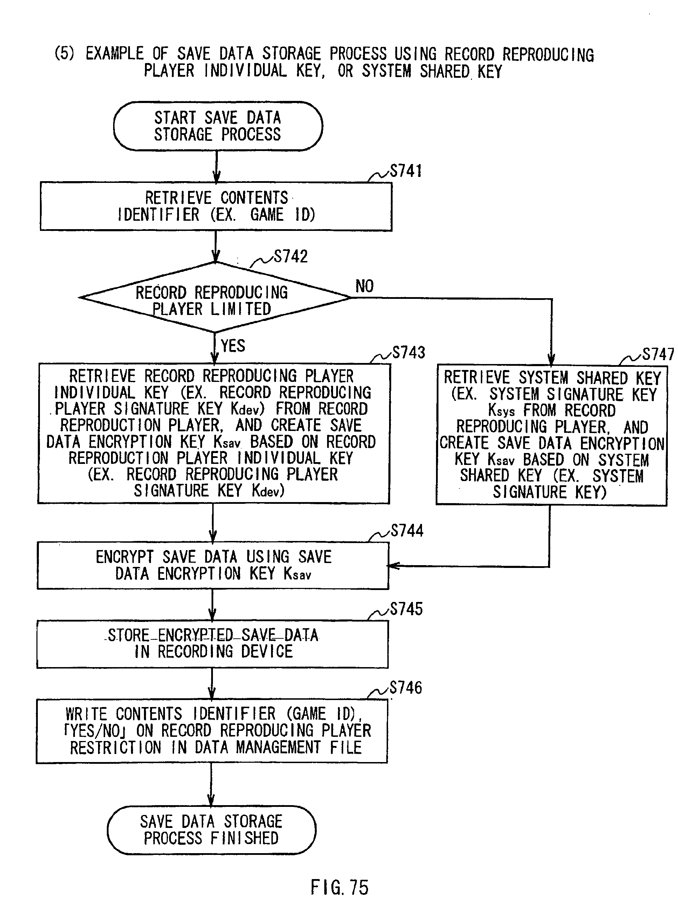

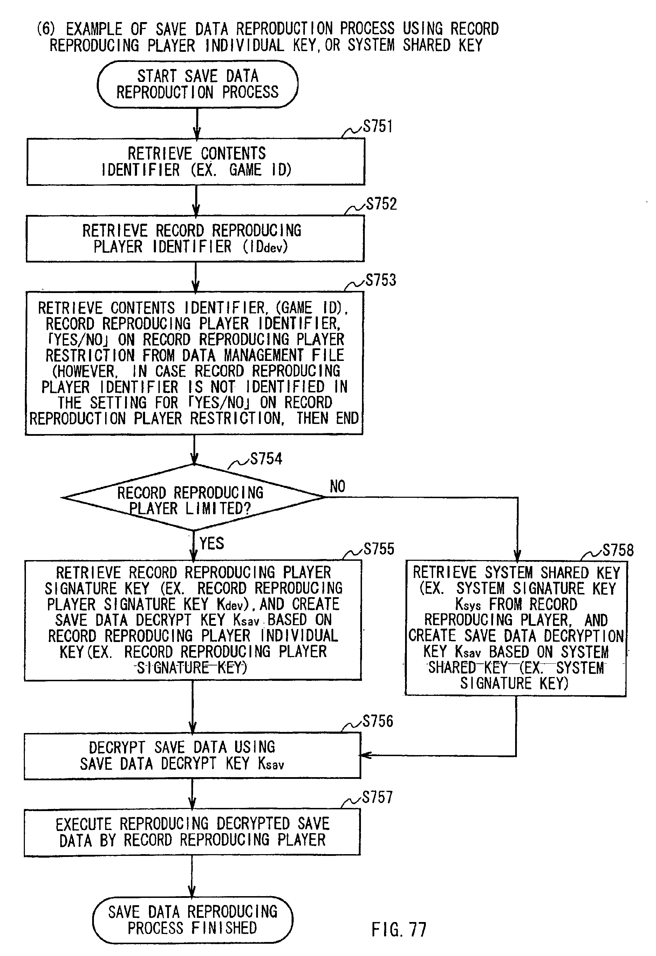

The figures 75 and 77 are the save data storage processing flow (Fig. 75) and save data reproduction processing flow (Fig. 77) based on which encryption and decryption keys for save data are created with a record reproducing player's individual key.

The step S741 in Fig. 75 is a step similar to the step S701 in Fig. 70, so that explanation is omitted. The step S742 is a step to determine whether or not to set up use restriction on record reproducing players. As to the record reproduction player use restriction, it is set to "Yes" when save data created and stored in a record reproducing player can be used with-the only that particular player, and it is set to "No" when save data may be used with other record reproducing players as well. When "Record reproducing player restriction applied" is set at the step S742, it proceeds to the step S743, and when "No", to the step S747.

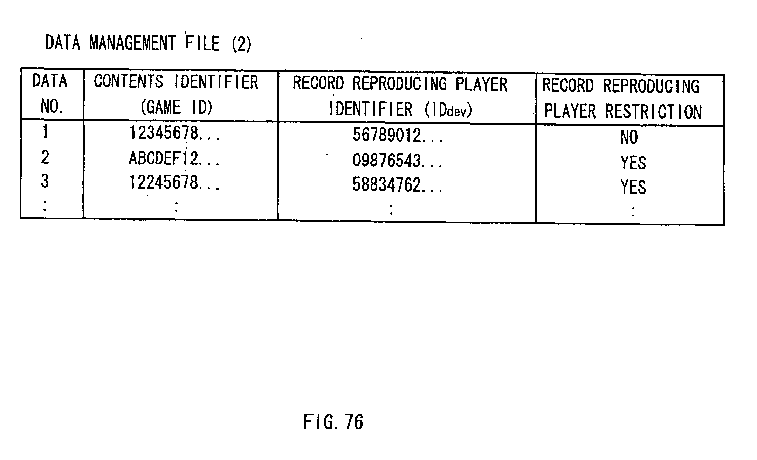

An example of the data management file is shown in Fig. 76. The data management file is created as a table containing the items of a data number, content identifier, record reproducing player identifier, and record reproducing player restriction. The content identifier is the identification data of a content program being a subject to store save data. The record reproducing player identifier is the identifier, e.g., [IDdev] shown in Fig. 69, of a record reproducing player storing the save data. Use restriction is set to "Yes" when save data is intended to be used only with that particular record reproducing player only that created and stored the save data in it, and to "No" to enable any record reproducing player to use the save data. The setting of the use restriction on record reproducing players may be done as desired by a user using content programs, or a content manufacturer may set it, of which information can be stored in the content program.

As to the save data storage processing flow in Fig. 75, when "Record reproducing player restricted" is set at the step S742, a record reproducing player's individual key, e.g., a record reproducing player signature key Kdev, is retrieved from the internal memory 307 of a record reproducing player 300 at the step 743, and the retrieved record reproducing player signature key Kdev may be defined as the save data encryption key Ksav, or the save data encryption key Ksav is created based on the record reproducing player signature key Kdev. Or, another encryption key different from other keys saved separately in the internal memory 307 of the record reproducing player 300 can be used as the save data encryption key Ksav.

On the other hand, when record reproducing player restriction is set to "No" at the step S742, a system-shared key, e.g., a system signature key Ksys stored in the record reproducing player 300, is retrieved from the internal memory 307 of the record reproducing player 300 at the step S747, which (the retrieved system signature key Ksys) may be defined as the save data encryption key Ksav, or the save data encryption key Ksav is created based on the system signature key. Or, another encryption key different from other keys saved separately in the internal memory 307 of the record reproducing player 300 can be used as the save data encryption key Ksav.

Explanation on the processing at the steps S744 and S745 is omitted here because it is the same as on the corresponding processing in the processing flow in the previous Fig. 70.

A content identifier and record reproducing player identifier, and the record reproducing player usage information "Yes/No" set up by a user at the step S742, are written in the data management file (Cf. Fig. 76) at the step S746.

Furthermore, the figure 77 is the processing flow, according to which the save data stored in the recording device in the process of the save data storage processing flow in the Fig. 75, is reproduced or executed. The content identifier is retrieved at the step S751 as in the corresponding process in the previous Fig. 72. Next, the record reproducing player identifier (IDdev) stored inside the memory of the record reproducing player 300 is retrieved at the step S752.

At the step S753 information on each of the content identifier, record reproducing player identifier, record reproducing player use restriction information "Yes/No"(already chosen), is retrieved from the data management file (Cf. Fig. 76). When the record reproducing player use restriction information is set to "Yes" at the entry where the content identifier in the data management file should be identified, if a record reproducing player identifier at the table entry differs from the record reproducing player identifier retrieved at the step S752, the processing is brought to an end.

Next, at the step S754, when the setting in the data management file is in the mode of "Record reproducing player restricted", it proceeds to the step S755, and if "No", to the step S758.

At the step S755 a record reproducing player's individual key, e.g., a record reproducing player signature key Kdev, is retrieved from the internal memory 307 of the record reproducing player 300, which (the record reproducing player signature key Kdev) may be defined as the save data decryption key Ksav, or the save data decryption key Ksav is created based on the record reproducing player signature key Kdev. The processing algorithm corresponding to the encryption key creation processing is applied to this decryption key creation processing, and a decryption key creation algorithm decryptable with a decryption key created based on the same record reproducing player's individual key, is applied to data encrypted based on a certain record reproducing player's individual key. Or, another encryption key different from other keys saved separately in the internal memory 307 of the record reproducing player 300 can be used as the save data encryption key Ksav.

On the other hand, at the step S758 a system-shared key stored inside a record reproducing player 300, e.g., a system signature key Ksys is retrieved from the internal memory 307 of the record reproducing player 300, which (the system signature key Ksys) may be defined as the save data decryption key Ksav, or the save data decryption key Ksav is created based on the system signature key. Or, another encryption key different from other keys saved separately in the internal memory 307 of the record reproducing player 300 can be used as the save data encryption key. The steps S756 and S757 are the same steps as in the previously mentioned save data reproduction processing flow.

According to the save data storage, reproduction processing flows in Figs. 75 and 77, save data for which "Record reproducing player restricted" is selected, is already encrypted or decrypted with the record reproducing player's individual key, so that that save data can be decrypted and used by a record reproducing player having exactly the same record reproducing player's individual key, that is, by the very record reproducing player only.

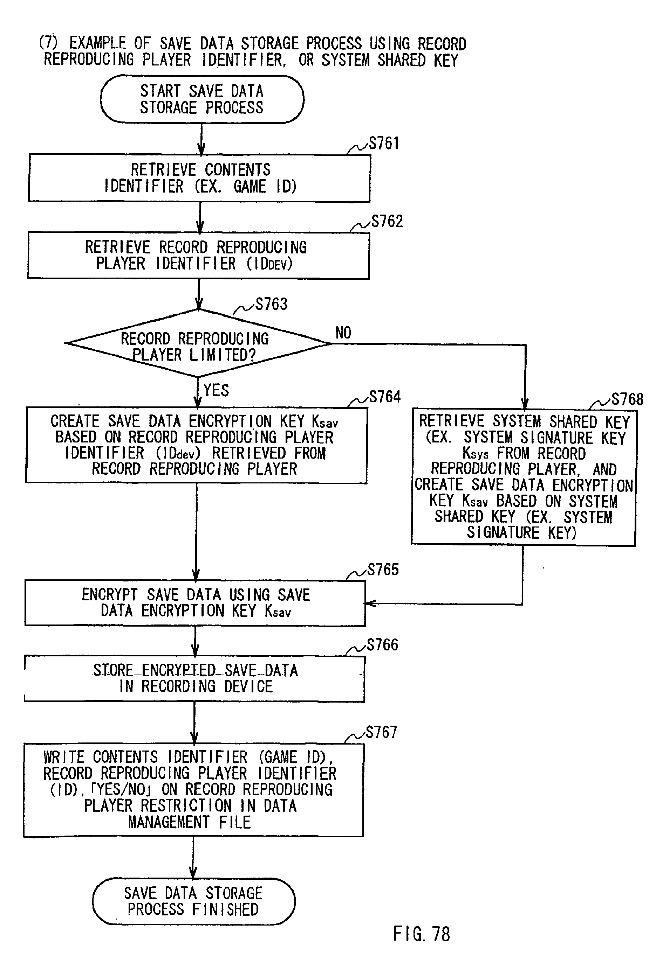

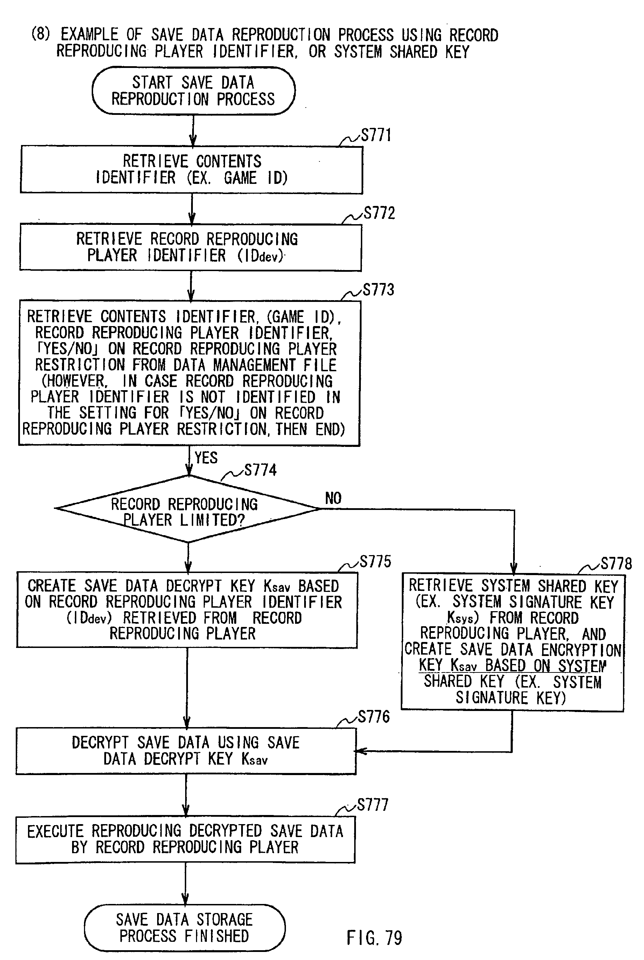

Next, shown in Figs. 78 and 79 are the processing flows for the creation, storage and reproduction of encryption and decryption keys of save data with use of record reproducing player identifiers.

In Fig. 78 save data is encrypted with a record reproducing player identifier, which is stored in a recording device. The steps S761 to S763 are the same processes as in Fig. 75. A save data encryption key Ksav is created with the record reproducing player identifier (IDdev) retrieved from the record reproducing player at the step S764. A save data encryption key Ksav is created based on the IDdev in such a way as to obtain the save data encryption key Ksav by DES (MKx, IDdev) by applying either the IDdev or a master key MKx stored in the internal memory of the record reproducing player 300 as the save data encryption key Ksav. Or, another encryption key different from other keys saved separately in the internal memory 307 of the record reproducing player 300 can be used as the save data encryption key Ksav.

The following steps S765 to S768 are the same as the corresponding processes in the previous Fig. 75, so that explanation is omitted here.

The figure 79 a processing flow to reproduce or execute save data stored in the recording device by the processes in Fig. 78. The steps S771 to S774 are the same as the corresponding processes in Fig. 77.

An save data decryption key Ksav is created with the record reproducing identifier (IDdev) retrieved from the record reproducing player at the step S775. A save data decryption key Ksav is created based on the IDdev in such a way as to obtain the save data decryption key Ksav by DES (MKx, IDdev), by applying either the IDdev or a master key MKx stored in the internal memory of the record reproducing player 300 as the save data decryption key Ksav. With the processing algorithm corresponding to the encryption key creation processing applied to this decryption key creation processing, and applied to the encrypted data based on a certain record reproducing player identifier is a decryption key creation algorithm which can be decoded with a decryption key created based on that very record reproducing player identifier. Or, another encryption key different from other keys saved separately in the internal memory 307 of the record reproducing player 300 can be used as the save data encryption key Ksav.

The following steps S776 to S778 are the same as the corresponding steps in the previous Fig. 76.

According to the save data storage and reproduction processing flows shown in Figs. 78 and 79, encryption and decryption processing is executed with a record reproducing player identifier on save data with "Record reproducing player restricted" applied to, so that it (save data) can be used by a record reproducing player having the same record reproducing player identifier, namely, the same record reproducing player only.

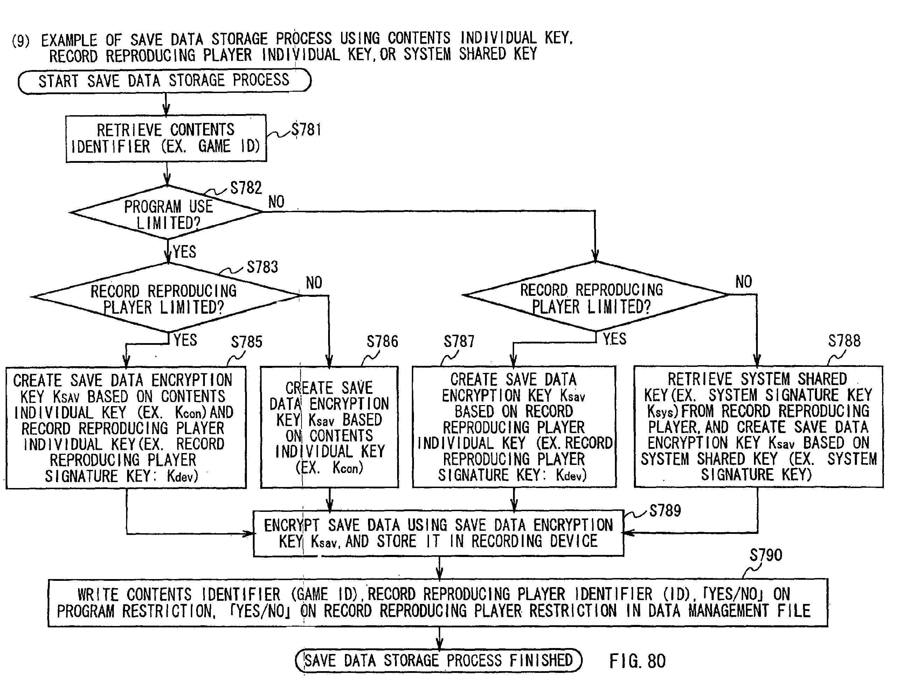

Explanation is given on the save data storage and reproduction processing, together with which the foregoing program use restriction and record reproducing player use restriction are executed, referring to Fig. 80 to 82.

The figure 80 is a save data storage processing flow. A content identifier is retrieved from the content data at the step S781, and program use restriction is judged at the step S782, and record reproducing player restriction at the step S783.

In the case of "Program use limited" as well as "Record reproducing player limited", a save data encryption key Ksav is created based on both the content's individual key (ex. Kcon) and record reproducing player's individual key (Kdev) at the step S785. This can be accomplished with, for instance, Ksave=(Kcon XOR KDEV), or Ksav=DES (MKx, Kcon XOR Kdev) by applying a master key MKx stored in the internal memory of the record reproducing player 300. Or, another encryption key different from other keys saved separately in the internal memory 307 of the record reproducing player 300 can be used as the save data encryption key Ksav.

In the case of "Program use limited" and "Record reproducing player NOT limited", a content's individual key (ex. Kocn) is defined as the save data encryption key Ksav, or the save data encryption key Ksav is created based on the content's individual key (ex. Kcon) at the step S786.

In the case of "Program use NOT limited" and "Record reproducing player limited", the record reproducing player's individual key (Kdev) may be defined as the save data encryption key Ksav, or the save data encryption key Ksav may be created based on the record reproducing player's individual key (Kdev) at the step S787. Or, another encryption key different from other keys saved separately in the internal memory 307 of the record reproducing player 300 can be used as the save data encryption key Ksav.

Furthermore, in the case of "Program use NOT limited" and "Record reproducing player NOT limited", a system-shard key, e.g., a system signature key Ksys may be defined as the save data encryption key Ksav, or the save data encryption key Ksav may be created based on the system signature key Ksys at the step S787. Or, another encryption key different from other keys saved separately in the internal memory 307 of the record reproducing player 300 can be used as the save data encryption key Ksav.

At the step S789 save data is encrypted with the save data encryption key Ksav created at any of the steps 785 to 788, which (encrypted save data) is stored in a recording device.

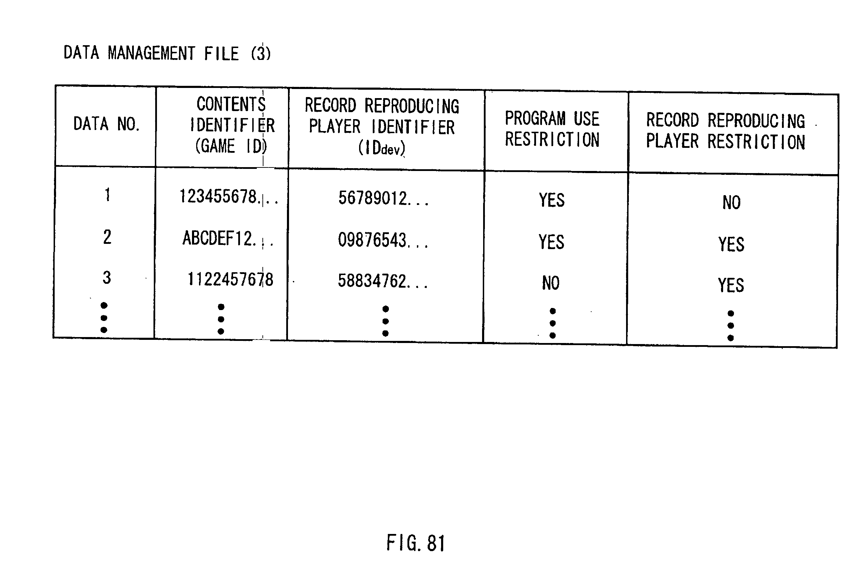

Further, at the step S790 the restriction information set up at the steps S782 and S783, is stored in the data management file. The data management file is structured as shown in Fig. 81, and includes the items of a data number, content identifier, record reproducing player identifier, program use restriction and record reproducing player restriction.

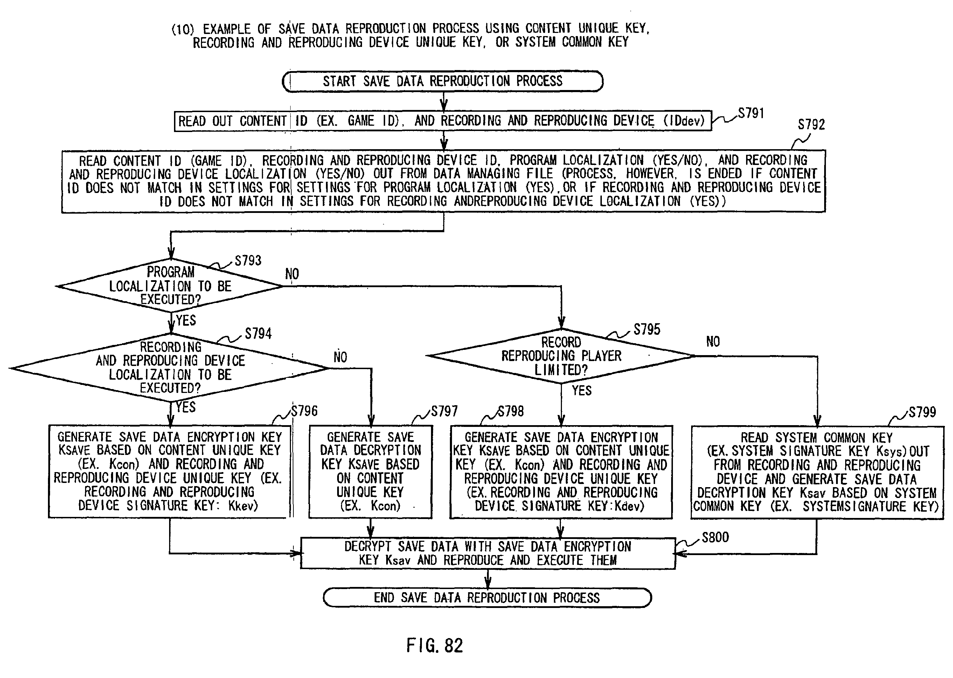

The Fig. 82 shows processing flow to reproduce or execute save data stored in a recording device by the processing of Fig. 80. The content identifier and record reproducing player identifier of an executable program are retrieved at the step S791, and a content identifier, record reproducing player identifier, program use restriction, and record reproducing player restriction information from the data management file shown in Fig. 81 at the step S792. In this case, if the content identifier is not identified with the program use restriction set to "Yes", or if the record reproducing player identifier is not identified with the record reproducing player restriction information set to "Yes", the processing terminates.

Next, decryption key creation processing is set up to any of the four modes of the steps S796 to 799 according to the recorded data in the data management file at the steps S793, S794 and S795.

In the case of "Program use restricted" as well as "Record reproducing player restricted", a save data decryption key Ksav is created based on both the content's individual key (ex. Kcon) and record reproducing player's individual key (Kdev) at the step S796. Or, another encryption key different from other keys saved separately in the internal memory 307 of the record reproducing player 300 can be used as the save data encryption key Ksav. In the case of "Program use restricted" and "Record reproducing player NOT restricted", the content's individual key (ex. Kcon) may be defined as the save data decryption key Ksav, or the save data decryption key Ksav may be created based on the content's individual key (ex. Kcon) at the step S797. Or, another encryption key different from other keys saved separately in the internal memory 307 of the record reproducing player 300 can be used as the save data encryption key Ksav.

In the case of "Program use NOT limited" and "Record reproducing player limited", the record reproducing player's individual key (Kdev) may be defined as the save data decryption key Ksav, or the save data decryption key Ksav is created based on the record reproducing player's individual key (Kdev) at the step S798. Or, another encryption key different from other keys saved separately in the internal memory 307 of the record reproducing player 300 may be used as the save data encryption key Ksav. Furthermore, in the case of "Program use NOT limited" and "Record reproducing player NOT limited", a system-shard key, e.g., a system signature key Ksys may be defined as the save data decryption key Ksav, or the save data decryption key Ksav may be created based on the system signature key Ksys at the step S799. Or, another encryption key different from other keys saved separately in the internal memory 307 of the record reproducing player 300 can be used as the save data encryption key Ksav.

With the processing algorithm corresponding to the encryption key creation processing applied to these decryption key creation processes, and applied to the encrypted data based on the same content's individual key and record reproducing player's individual key is a decryption key creation algorithm which can be decoded with a decryption key created based on that very content's individual key and record reproducing player's individual key.

Decryption processing is executed at the step S800, with the use of the save data decryption key created at any of the above steps S796 to S799, and the decrypted save data is reproduced or executed by the record reproducing player 300.

According to the save data storage and reproduction processing flows shown in Figs. 80 and 82, encryption and decryption processing is executed on save data with the content's individual key, with "Program use restricted" applied to, so that content data having the same content's individual key can be decrypted for use. Also, encryption and decryption processing is executed with a record reproducing player identifier on save data with "Record reproducing player restricted" applied to, so that it (save data) can be used by a record reproducing player having the same record reproducing player identifier, namely, the same record reproducing player only. Accordingly use restriction can be set with both the content and record reproducing player, thereby increasing the security of save data.

Shown in Figs. 80 and 82 are the creation structure of a save data encryption key and decryption key using a content's individual key and record reproducing player's individual key. However, another structure can be employed to execute the creation of save data encryption keys and decryption keys based on a content identifier instead of a content's individual key, and a record reproducing player identifier instead of a record reproducing player's individual key.

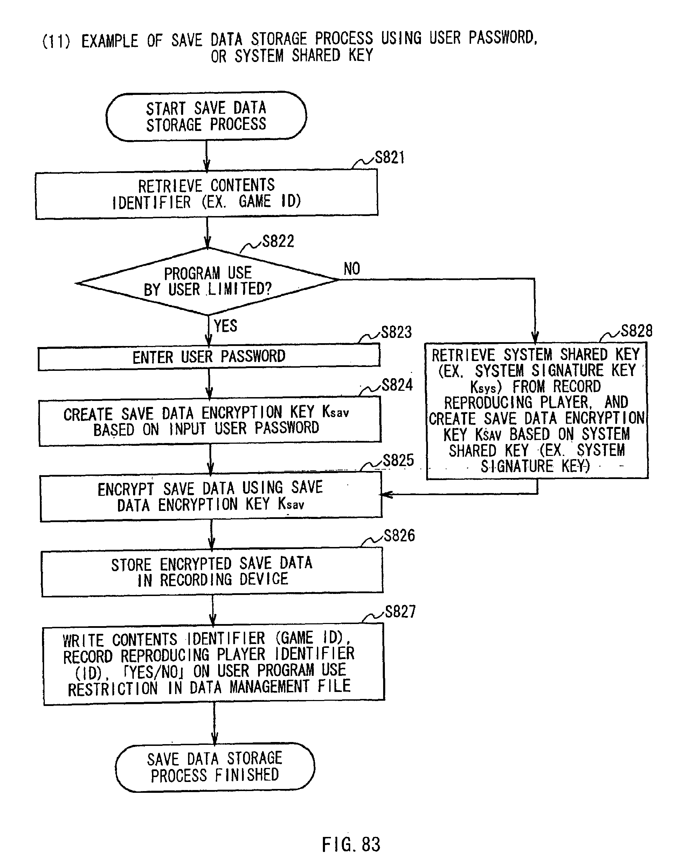

Next, explanation is given on the creation of an encryption key and decryption key for save data based on a password input by a user, referring to Figs. 83 to 85.

The figure 83 is a processing flow to create an encryption key for save data based on a password input by a user, and to save it in a recording device.

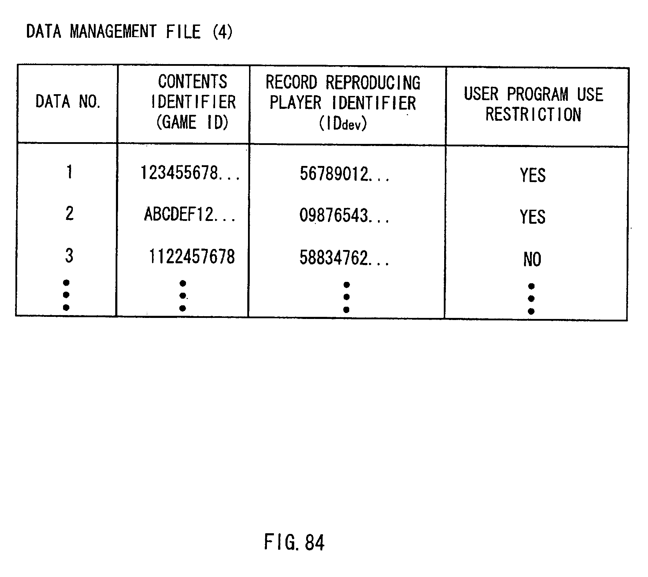

The step S821 is a process to retrieve a content identifier from content data. The step S822 is a step to determine whether program use restriction is set up by a user. The data management file set up in the present structure is similar to that in Fig. 84 for example.

As shown in Fig. 84, data includes a data number, content identifier, record reproducing player identifier, and, furthermore, program use restriction information set up by a user. The "user-set program use restriction information" is an item to determine whether to restrict users who use programs.

When the "Use restriction" is set to "Yes" at the step S822 in the processing flow in Fig. 83, a user password is to be entered at the step S823. This input is done by means of input means such as the keyboard shown in Fig. 2.

The password keyed in is output at the encryption processing unit 302 under the control of the main CPU106 and the control unit 301, and a save data encryption key Ksav is created based on the input user password (process at the step S824). The creation processing of the save data encryption key Ksav can be such that the password itself can be defined as en encryption key Ksav, or that the save data encryption key Ksav can be created with the save data encryption key Ksav = DES (MKx, password) with the use of the master key MKx of a record reproducing player. Or, an encryption key can be created based on the output obtained by utilizing a unidirectional function with a password as input.

If the use restriction is set to "No" at the step S822, a save data encryption key is created based on the system-shared key of a record reproducing player 300 at the step S828.

Furthermore, encryption processing is conducted at the step S825 on save data with the use of the save data encryption key Ksav created at the S824 or S828, and the save data processed with encryption at the step S826 is stored into a recording device.

Further, at the step S827 the program restriction information set up by a user at the step S822 is written into the data management file in Fog. 84, oriented to the content identifier and record reproducing player identifier.

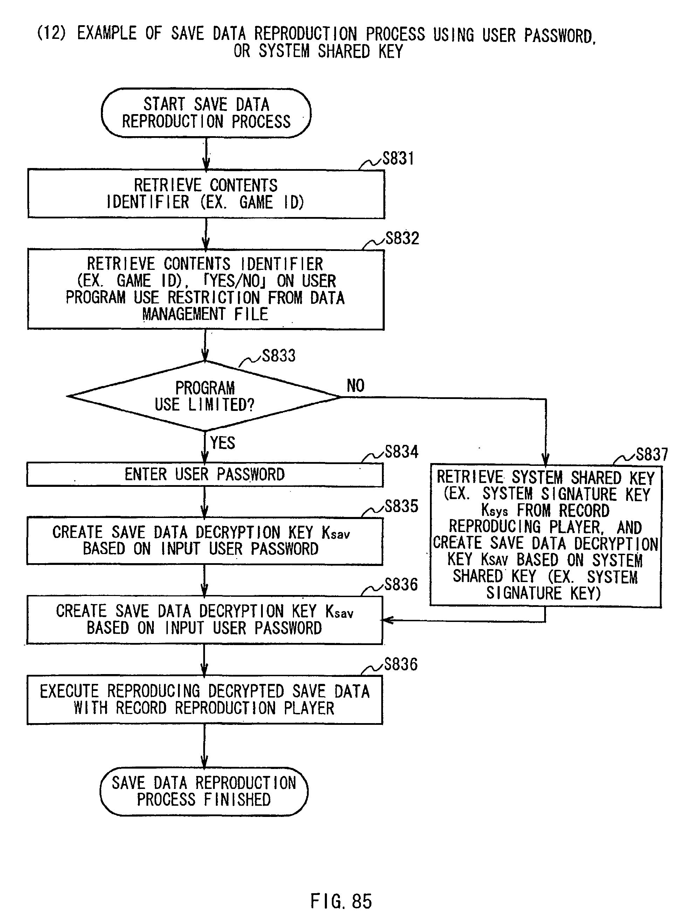

The figure 85 is a diagram to show the reproduction processing flow of save data stored by the processing in Fig. 83. The content identifier is retrieved from the content data at the step S831, and the content identifier and program user restriction information are retrieved from the data management file shown Fig. 84 at the step S832.

Judgment is made based on the data inside the data management file at the step S833, and if "program user restricted" is set up, the input of the password is called for at the step S834, and then a decryption key is created based on the input password at the step S835. With the processing algorithm corresponding to the encryption key creation processing applied to this decryption key creation processing, and applied to the encrypted data based on a certain password is a decryption key creation algorithm which can be decoded with a decryption key created based on that very password.

If no program user restriction exists as a result of the judgment at the step S833, a save data decryption key Ksav is created at the step S837 with the use of a system-shared key, e.g., a system signature key Ksys, stored in the internal memory of a record reproducing player 300. Or, another encryption key different from other keys saved separately in the internal memory 307 of the record reproducing player 300 can be used as the save data encryption key Ksav.

At the step S836 the decryption of the save data stored in a recording device is performed with the use of the decryption key Ksav created at either step S835 or S837, and then the save data is reproduced or executed by the record reproducing player at the step S836.

According to the save data storage and reproduction processing flows shown in Figs. 83 and 85, encryption and decryption processing is executed on save data with "Program user restricted" applied to, with the key based on the user-input password, so that it (save data) can be decrypted for use only when the same password is entered, thereby increasing the security of the save data.

Explanation has been given on several modes of save data storage and reproduction processing. It is, however, possible to employ a mode merging the above processes, for example, combining a password, record reproducing player identifier, and content identifier, etc. adequately, for the creation of save data encryption and decryption keys.

(17) Structure of Revocation of Illegal Equipment

As explained hitherto, with the data processing system of the present invention, such processing as authentication and encryption, is conducted by a record reproducing player 300 on a variety of content data offered from media 500 (Fig. 3) and over communication means 600, which is stored in a recording device, thereby increasing the security of a content offered and allowing only legal users to use it.

As may be understood from the foregoing description, a variety of processing is conducted on input content with the use of various signature keys, master keys and check value creation keys (Cf. 18) stored in the internal memory 307 incorporated into the record reproducing player's encryption processing unit 302 of the record reproducing player 300: authentication processing, encryption processing, and decryption processing. As explained before, the internal memory 307 storing the key information, is comprised of semiconductor chips having a multi-layer construction so that access to them from without is basically hard. The memory inside is sandwiched by dummy layers such as aluminum layers, or located at the lowest. Also, it has so narrow an operating voltage range and/or frequency bandwidth that illegal retrieval of data from without is hard. However, should key data be leaked and duplicated into unlicensed, illegal record reproducing players with the content of the internal memory illegally retrieved, there is a possibility of content being used illegally with use of the copied key information.

Explanation is given hereunder on the structure to prevent against illegal use of content with illegally duplicated keys.

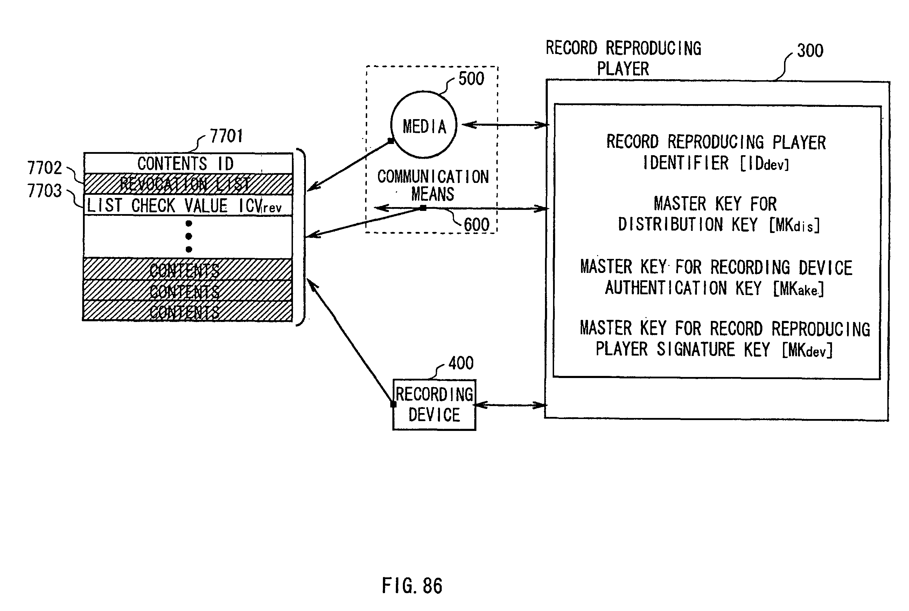

The figure 86 is a block diagram to describe the "(17) Structure of Revocation of Illegal Equipment". Being similar to the record reproducing players in Figs. 2 and 3, a record reproducing player 300 comprises an internal memory, variety of key data as explained before (Fig. 18), and furthermore, record reproducing player identifiers. It is assumed here that record reproducing player identifiers, key data and others duplicated by third parties, are not always stored into the internal memory 307 shown in Fig.3, and that key data and other information of the record reproducing player 300 shown in Fig. 86, are stored in a memory unit the encryption processing unit 302 (Cf. Figs. 2 and 3) can access, altogether or distributed.

To realize a revocation structure of illegal equipment structure is employed, in which the list of illegal record reproducing player identifiers of the header portion of content data is retained. As shown in Fig. 86, content data comprises a revocation list as an illegal record reproducing player identifier (IDdev) list. Furthermore, the list check value ICVrev is prepared to prevent against the tampering of the revocation list. The illegal record reproducing player identifier (IDdev) list is made by content providers or supervisors by tabulating the identifiers IDdev of illegal record reproducing players discerned by way of the distribution state and others of illegal duplications. This revocation list can be stored, encrypted with a distribution key Kdis for example. The decryption processing of the record reproducing player is similar to the mode of the content download processing in Fig. 22 for example.

To make understanding easier the revocation list is shown in content data in Fig. 86 as independent data, but can be included into the usage policy (Cf. Figs. 32 to 35), an element of the header portion of content data explained before by way of example. In this case tamper checking is conducted, with the use of the check value ICVa explained before, on the data of usage policy including the revocation list. When the revocation list is included into the usage policy, it is replaced with the checking of a check value A: ICVa so that the check value A creation key Kicva inside the record reproducing player is utilized, making it unnecessary to store a check value creation key Kicv-rev.

When the revocation list is included into the content data as independent data, the checking of the revocation list is conducted with the use of the list check value ICVrev for the tamper checking of the revocation list. At the same time, an intermediate check value is created from the list check value ICVrev' and other partial check values in content data, and subsequently, check processing is conducted on the intermediate check value.

The checking method of the revocation list with the use of the list check value ICVrev for the tampering check of the revocation list can be performed by a check method similar to the check value creation processing of the ICVa, ICVb and others explained before in Figs. 23, 24, and others. That is to say, with the check value creation key Kicv-rev stored in the internal memory 307 of the record reproducing player's encryption processing unit 302 as the key, and with the revocation list contained in the content data as the message, calculation is done following the ICV calculation method explained in Figs. 23, 24 and others. Comparison is made between the calculated check value ICV-rev and check value: ICV-rev stored inside the header, and if they agree, it is judged that no tampering is made.

With the total check value creation key Kicvt retained in the internal memory 307 of the record reproducing player's encryption processing unit 302 as the key, the intermediate value containing the list check value ICVrev is created by applying the ICV calculation method explained in Fig. 7 and others, to the message row, added to which are the check value A, check value B, and list check value ICVrev inside the checked header, and further more, a content check value according to a format type.

These revocation list and list check values are offered to a record reproducing player 300 via media 500 such as DVDs, CDs, and communication means 600, or through recording devices 400 such as memory cards. Two cases are assumed as to the record reproducing player 300; it comprises legal key data, or an illegally duplicated identifier ID.

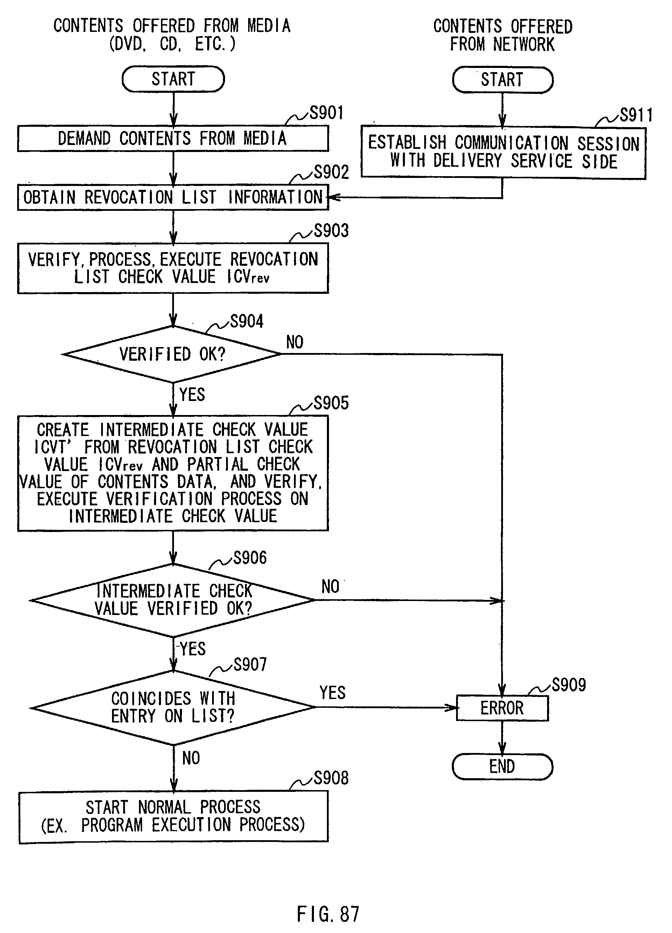

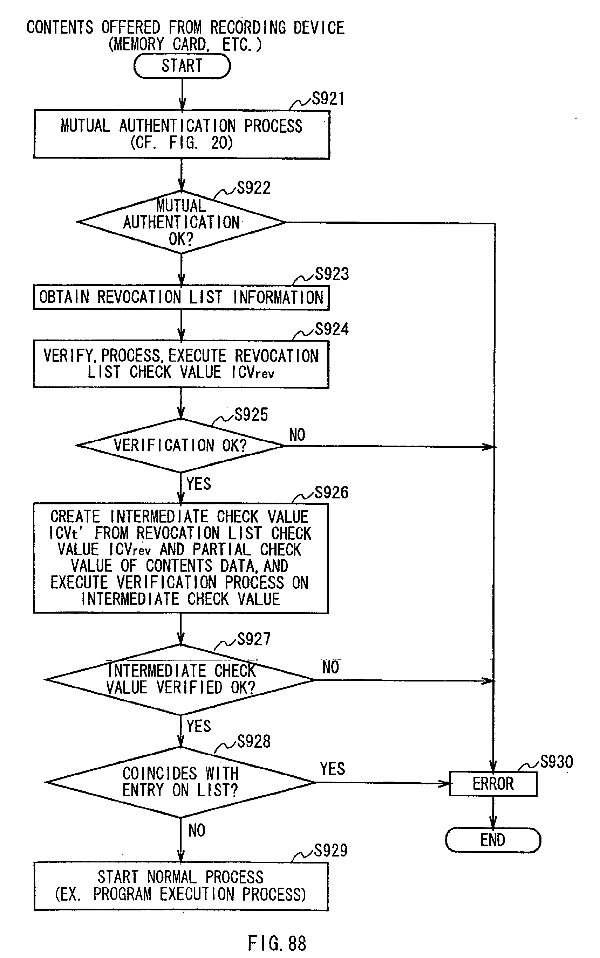

The figures 87 and 88 show the processing flows of the revocation process of illegal record reproducing players in the foregoing structures. The figure 87 is the revocation processing flow of illegal record reproducing players when content is offered from media 500 such as DVD and CDs, or over communication means 600, and the figure 88 the revocation processing flow of illegal record reproducing players when content is offered from recording devices 400 such as memory cards.

The processing flow in Fig. 87 is explained. The step 901 is a step to install a medium offering a content, that is, to demand reproduction processing and downloading. The process shown in Fig. 87 is executed as a preceding step before conducting processing such as downloading with media such as a DVD installed into a record reproducing player for example. The download processing is the same as one explained in the previous Fig. 22, and the processing in Fig. 87 is carried out as a preceding step before executing the processing flow of Fig. 22, or as a process inserted into the processing flow of Fig. 22.

When a record reproducing player 300 receives a content through communication means such as a network, a communication session is established with a content distribution service provider at the step S911, then it proceeds to the step S902.

The record reproducing player 300 obtains a revocation list (Cf. Fig. 86) from the header of content data at the step S902. The processing of obtaining this list is conducted in a way that the control unit 301 shown in Fig. 3 retrieves it from the medium through the read unit 304 when a content exists within the medium, and that when a content comes over communication means, the control unit 301 shown in Fig. 3 receives it from the content distribution service provider over communication unit 305.

Next, at the step S903 the control unit 301 hand the revocation list obtained from the medium 500 or over communication means 600 to the record reproducing player's encryption processing unit 302, which executes check value creation processing. Having a revocation check value creation key Kicv-rev inside, with the revocation list received as a message, the record reproducing player 300 calculates a check value ICV-rev' with the application of the revocation check value creation key Kicv-rev following the ICV calculation method explained in Figs. 23, 24 and others for example. Then, comparison is made between the result of the calculation and the check value: ICV-rev stored inside the header of the content data, and if they agree, it is judged that no tampering exists ("Yes" at the step S904). When they do not agree, it is judged that tampering exists, and it proceeds to the step S909, resulting in the termination of the processing as an error in processing.

Next, at the step S905 the control unit 306 of the record reproducing player's encryption processing unit 302 lets the encryption/decryption unit 308 of the record reproducing player's encryption processing unit 302 calculates a total check value ICVt'. As shown in Fig. 25, the total check value ICVt' is created by encrypting an intermediate check value with DES, with a system signature key Ksys stored in the internal memory 307 of the record reproducing player's encryption processing unit 302 as the key. Although the check processing of each of partial check values such as ICVa and ICVb is omitted from the processing flow in Fig. 87, the checking of partial check values conforming to each of data formats is conducted as in the processing flow explained before in Figs. 39 to 45.

Next, at the step S906 the total check value ICVt' created and the ICVt inside the header are compared, and when they agree ("Yes" at the step S906), it proceeds to the step S907. When they do not agree, it is judged that tampering is done, and it proceeds to the step S909, terminating the processing as a processing error.

As explained before, the total check value ICVt is a check value to check all the check values including the ICVa, ICVb, furthermore, partial check values contained in content data such as the check value of each content block according to data formats. However, a list check value ICVrev for the tamper checking of the revocation list is added to those partial check values as partial check values, all of which are checked against tampering in the ongoing processing. When the total check value created as a result of the above processing agrees with the check value: ICVt stored inside the header, it is judged that no tampering is done on all of the ICVa, ICVb, check value of each content block, and list check value ICVrev.

Furthermore, at the step S907 comparison is made between the revocation list judged as not tampered and the record reproducing player identifier (IDdev) stored in its own record reproducing player 300.

When the identifier IDdev of its own record reproducing player is contained in the list of illegal record reproducing player identifiers IDdev retrieved from the content data, that record reproducing player 300 is judged as having illegally duplicated key data, and it proceeds to the step S909, terminating further procedures. It is made impossible to go on with the procedure of content download processing in Fig. 22 by way of example.

When it is judged that the identifier IDdev of its own record reproducing player is not included into the list of illegal record reproducing player identifiers IDdev, that record reproducing player 300 is judged as having legal key data, and it proceeds to the step S908, making it possible to perform further procedures such as program execution processing, or content download processing in Fig. 22 for example.

The figure 88 shows the reproduction processing of content data stored in a recording device 400 such as a memory card. As explained before, mutual authentication processing (Step S921) explained in Fig. 20 is performed between recording devices 400 such as a memory card and a record reproducing player 300. Only when mutual authentication is passed at the step S922, it proceeds to the steps S923 and further, and if mutual authentication failed, an error results at the step S930, terminating further processing.

The record reproducing player 300 obtains the revocation list (Cf. Fig. 86) from the header of content data at the step S923. The processes at the step S924 to S930 are similar to the corresponding processes in Fig. 87. That is to say, as a result of the checking of the list with the list check vale (S924, 5925), the checking of total check value (S926, S927), and comparison between the entries on the list and its own record reproducing player identifier IDdev (S928), and when its own record reproducing player identifier IDev is included into the list of illegal record reproducing player identifiers retrieved from the content data, that record reproducing player 300 is judged as having illegally duplicated key data, and it proceeds to the step S930, terminating further procedures. It is made impossible to execute the reproduction processing of content shown in Fig, 28 for example. On the other hand, if it is judged that the identifier IDdev of its own record reproducing player is not included into the list of illegal record reproducing player identifiers IDdev, that record reproducing player is judged as having legal key data, and it proceeds to the step S929, continuing executing further procedures.

Thus, with the data processing system of the present invention, a content provider or supervisor offers to users of record reproducing players, data to identify illegal record reproducing players along with a content; with the revocation list tabulating illegal record reproducing player identifiers IDdev included as structural data of the header portion of content data. A user of a record reproducing player is to check the record reproducing player identifier IDdev stored in the memory of his/her own record reproducing player with the identifiers on the list prior to starting the use of a content with a record reproducing player. As a result, if agreeable data is found, no further processing is executed, so that it is possible to revoke the use of a content by an illegal record reproducing player storing duplicated key data in its memory.

(18) Structure and Manufacturing Method of Security Chips

As explained before, since the internal memory 307 of the record reproducing player's encryption processing unit 302, or the internal memory 405 of a recording device 400 retains important information such as encryption keys, they must be so structured that illegal retrieval from without is hard. Therefore, the record reproducing player's encryption processing unit 302 and recording device's encryption processing unit 401 are composed of semiconductor chips having an access-prohibiting multi-layer structure, the memory inside which is sandwiched by dummy layers such as aluminum layers or located at the lowest part. Also, they are designed as anti-tampering memories having characteristics making it hard to illegally retrieve data from without, such as a narrow range of operation voltages and a narrow frequency bandwidth.

However, as can be understood from the foregoing explanation, it becomes necessary to write different data, such as record reproducing player signature keys Kdev, in the internal memory 307 of the record reproducing player's encryption processing unit 302 for every record reproducing player. Also, it is necessary to write different individual information such as identification information ID or encryption information in a nonvolatile memory area inside every chip such as a flash memory and FeRAM so that it is extremely hard to rewrite or retrieve data after equipment is shipped for example.

Conventionally a data write command protocol is kept secret for example to make retrieving and rewriting processing hard. Another way to accomplish the purpose is such that the signal line receiving a data write command on a chip and the signal line for communication to be used after equipment is shipped, are structured separately, so that the data write command does not become effective unless a signal is supplied directly to a chip on the board.

However, even if those methods are employed, it is possible for those having professional knowledge on memory elements to have a signal output into the data write area on the ship, if they have facilities and technology to drive circuits. Also, there is always a possibility of them analyzing a protocol even if the data write command protocol is kept secret.

Distribution of such storage elements of encryption processing data including secret data being possibly altered may result in endangering the whole of an encryption processing system. It can be practical not to include a data read command itself into data to prevent against the retrieval of the data. However, it makes it impossible, even when the writing of legal data is executed, to confirm whether data is actually written into the memory, or to judge whether data is correctly written, entailing a possibility of chips with defective data being distributed.

Taking conventional technologies into account, the structure and manufacturing method of security chips are introduced here, that make it possible to write correct data into nonvolatile memories such as, a flash memory and FeRAM, and to make it hard to have data retrieved at the same time.

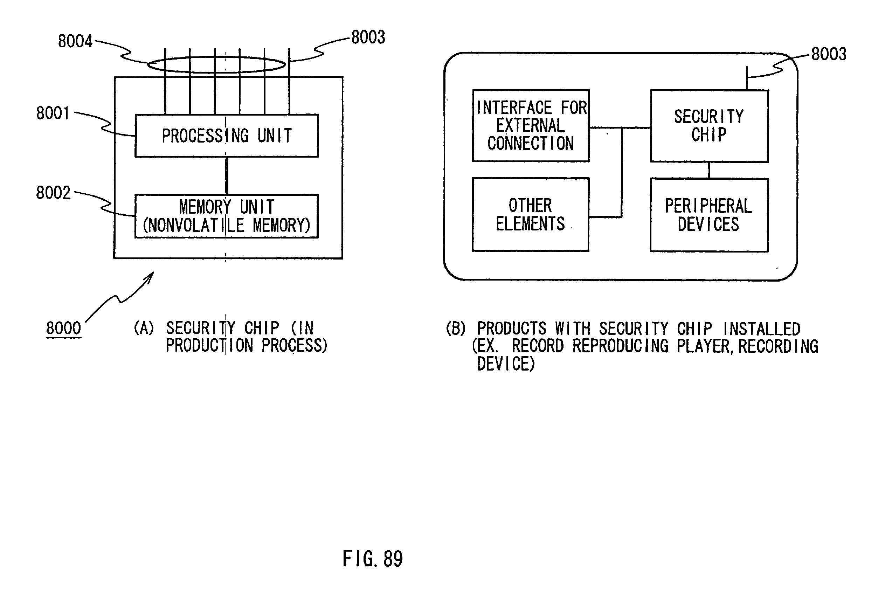

Shown in Fig. 89 is the structures of a security chip applicable to the record reproducing player's encryption processing unit 302, or the encryption processing unit 401 of a recording device 400 for example. Fig. 89(A) shows structure of a security chip in the process of manufacture, that is, in the process of writing data, and Fig. 89(B) shows an example of equipment such as a record reproducing player 300 and recording device 400, into which a security chip is installed.

Connected to the processing unit 8001 of a security chip in the process of manufacture are a mode assignment signal lines 8003 and various command signal lines 8004. The processing unit 8001 performs data write/read processing into/from the memory unit 8002, a nonvolatile memory according to a mode set up via the mode assignment signal line 8003, that is, a data write mode or data read mode.

On the other hand, as to a security chip-installed device in Fig. 89B, the security chip is connected to an external connection interface, peripheral equipment and other elements by means of a general-purpose signal line, with the mode signal line 8003 being in an unconnected state. Practical processes include; grounding the mode signal line 8003, lifting Vcc, cutting signal lines, sealing with insulated resin. Due to these processes, it is made hard to access the mode signal line of a security chip after finished products are shipped, resulting in increase of difficulty in retrieving/ writing data from/into a security chip.

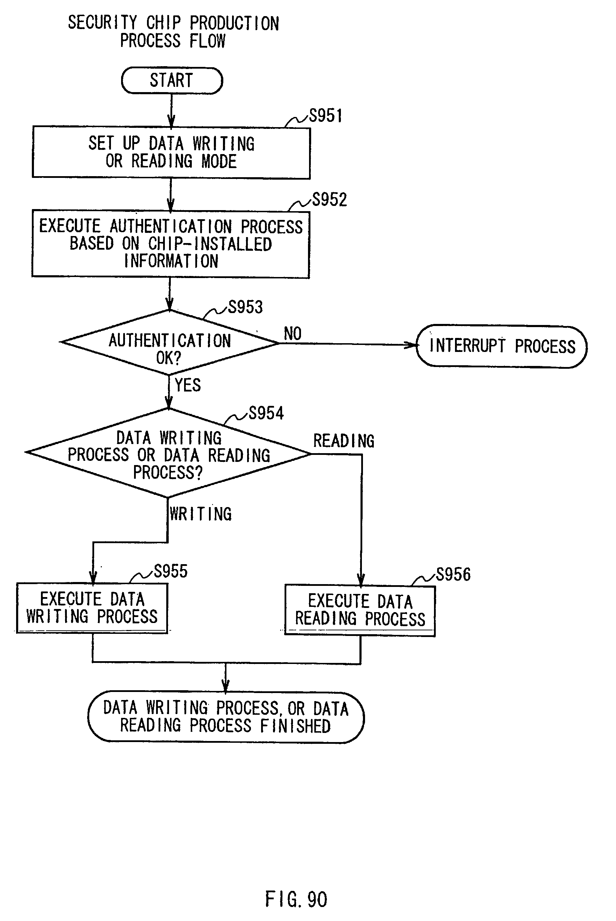

Furthermore, the security chip 8000 of the present structure is so constructed that it is very hard to write into the memory unit 8002 of data and to retrieve data written in it, so that even if a third party can successfully access the mode signal line 8003, illegal writing or reading can be prevented. Shown in Fig. 90 is the data write/read processing flow in a security chip having the present structure.

The step S951 is a step to set up a data write/ read mode into/from the mode signal line 8003.

The step S952 is a step to retrieve authentication information from a chip. Necessary processing information such as a password, key information for the authentication process in encryption technology, is stored in advance by means of wire and masked ROM into a security chip of the present structure. Authentication information is retrieved, and authentication processing is conducted at the step S952. When authentication processing is executed with a legal data write jig and data read device connected to the genera-purpose line, authentication approval ("Yes" at S953) is obtained, but when authentication processing is executed with an illegal data write jig and data read device connected to the general-purpose line, authentication processing fails ("No" at S953), terminating processing at that time. Authentication processing can be carried out following the mutual authentication processing protocol explained before in Fig. 13. The processing unit 8001 shown in Fig. 89A comprises a structure enabling authentication processing. This is made possible due to a similar structure to that of a command register incorporated into the control unit 403 of the encryption processing unit 401 of the recording device 400 explained before in Fig. 29 for instance. The processing unit of the chip in Fig. 89, for example, has a similar structure to that of the command register incorporated into the control unit 403 of the encryption processing unit 401 of the recording device 400, so that the corresponding processing is executed, enabling a authentication sequence to be carried out when given command numbers are entered from equipment connected to the various command lines 8004.

The processing unit 8001 accepts a data write command, or a data read command, only when authentication is done in authentication processing, and subsequently executes write processing of data (Step S955) and read processing of data (Step S956).

Since a security chip of the present structure is so structured that authentication processing is executed at the time of data writing and reading, it can prevent data being retrieved from or written into the memory of the security chip by a third party having no legal right.

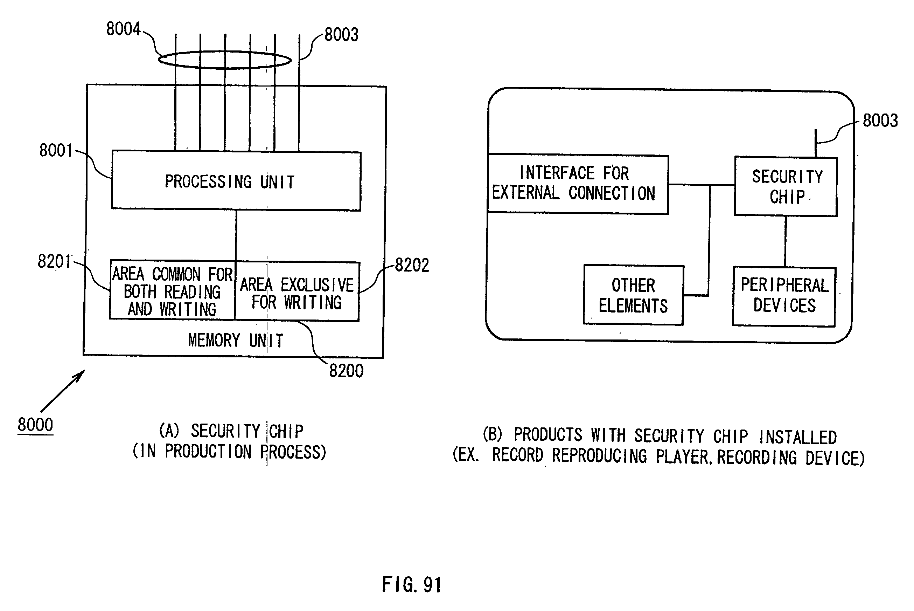

Next, furthermore, shown in Fig. 91 is a practical example of the structure of an element having higher security. In this example the memory unit 8200 of a security chip is separated into two areas; one is a read/ write area (RW: ReadWrite area) 8201, the other a write only area (WO: Write Only area) 8202.

With this structure, written into the write only area (WO: Write Only area) 8202 is data requiring a high level of security such as encryption key data and identifier data, and into the read/write area (RW: ReadWrite area) 8201 data requiring not so high a level of security such as check data by way of example.

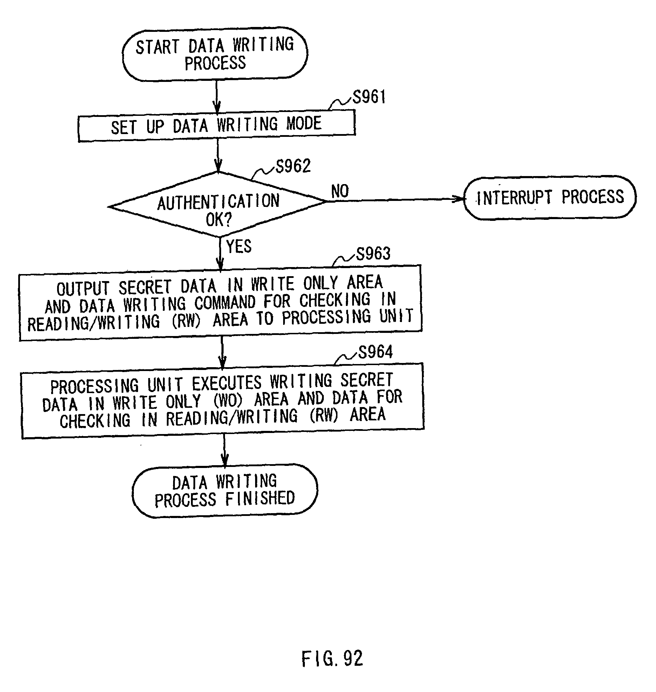

The processing unit 8001 performs data retrieval processing from the read/write area (RW: Read-Write area) 8201, along with authentication processing explained in Fig. 90. Data write processing is, however, executed according to the flows in Fig. 92.

The step S961 is a step to set the mode signal line 8003 to the write mode, and authentication processing is conducted at the step S962, similar to one explained previously in Fig. 90. With authentication processing done, it proceeds to the step S963, where information of a high level of security such as key information is written into the write only area (WO) 8202 and data requiring not so high a level of security such as check data into the read/write area (RW: ReadWrite area) 8201 through the command signal line 8004, resulting in outputting a data write command to the processing unit 8001.

At the step S964, upon receiving the command the processing unit 8001 executes data write processing against the write only area (WO: Write Only area) 8202 and the read/write area (RW: ReadWrite area) 8201 respectively.

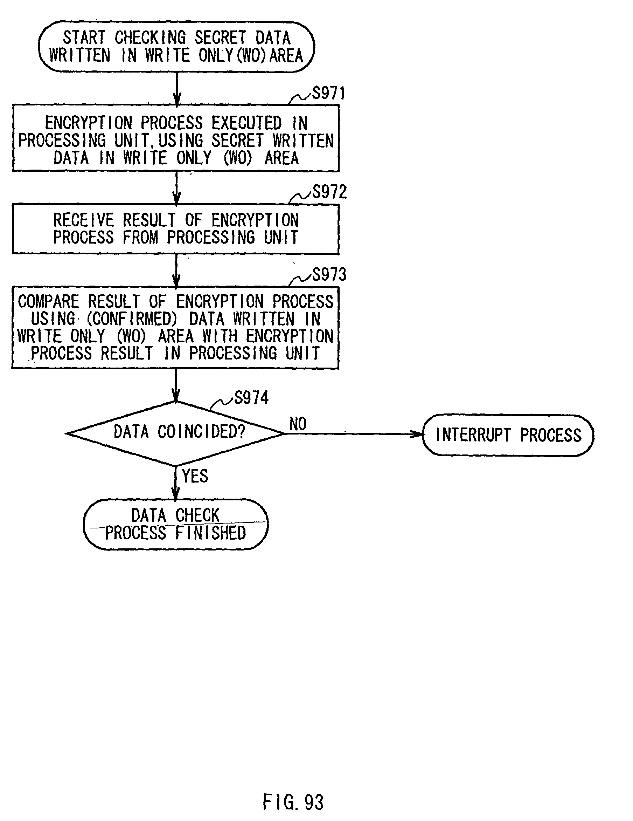

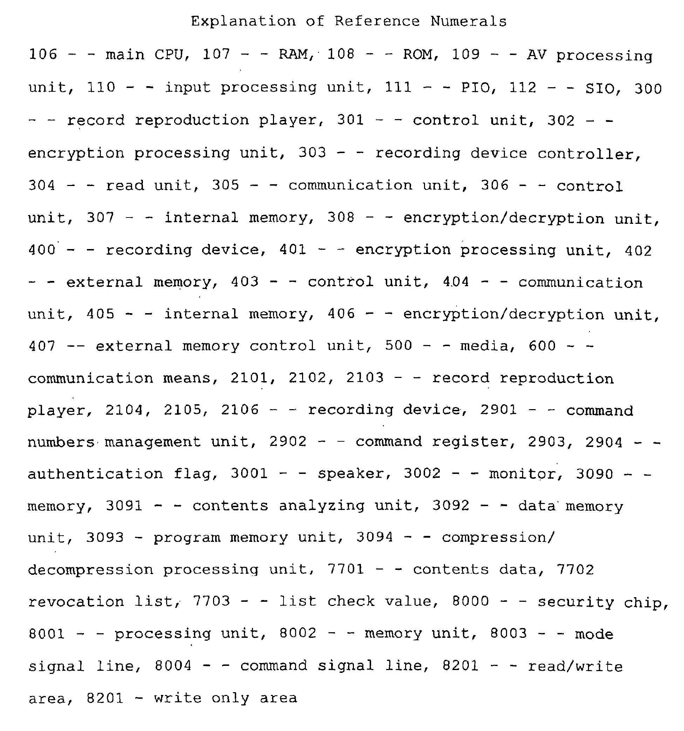

Shown in Fig. 93 is the check processing flow of data written into the write only area (WO) 8202.

Encryption processing is executed based on the data written into the write only (WO) area 8202 at the processing unit 8001 at the step S971 in Fig. 93. As with the previous authentication process execution structure, these processes are realized by carrying out a encryption processing sequence in order stored in the command register. An encryption processing algorithm executed at the processing unit 8001 is not particularly limited, but it can be so structured as to execute a DES algorithm explained before for example.

Next, a checking device connected to the security chip receives an encryption processing result from the processing unit 8001 at the step S972. Then, at the subsequent step S973 comparison is made between a result obtained as a result of applying encryption processing similar to the algorithm executed at the processing unit 8001 against legal write data when write processing was done at the memory unit before, and an encryption result from the processing unit 8001.

If the result of comparison is identical, it is judged that the data written into the write only (WO) area 8202 is correct.

With this structure, should a read command become executable with authentication processing broken, a data readout permitted area is limited to the read/write area (RW: ReadWrite area) 8201, so that it is impossible to retrieve data written in the write only (WO) area 8202, insuring a high level of security. Also, different from a chip disabling retrieval from a chip altogether, this ship is so constructed as to comprise the read/write area (RW: ReadWrite area) 8201, so that the legitimacy of access to the memory can be checked.

Elucidation has been given hitherto on the present invention, referring to the particular practical examples. It is apparent, however, that businesses in this field can modify those examples or make substitutes within the range not deviating from the substance of the present invention. This is, the present invention is disclosed in the form of presentation of practical examples, but should not be limited to them. Explanation is given, taking a record reproducing player capable of recording and reproducing a content as an typical example in the foregoing practical applications, however, the structure of the present invention is applicable to devices capable of only writing or reproducing data, so that the present invention can be used for a variety of other data processing systems in general, such as personal computers, game machines. It is recommended that the scope of the patent claims described at the very beginning should be considered in judging the substance of the present invention.

Industrial Applicability

The present invention can be utilized in apparatuses and systems which are capable of reproducing various contents such as sounds, images, games, and programs, which can be obtained via a storage medium, such as a DVD and a CD, or via various wired and radio communication means such as CATV, Internet, and satellite communication, in a recording and reproducing a user has, and storing the contents in a special recording device, such as a memory card, a hard disk, and a CD-R, and at the same time, of storing or reproducing save data such as game data under progress, in or from the recording device, with sufficient security and various utilization limitation.

## Claims

1. A data record reproducing player **characterized by** the capability of executing reproduction of a program content; comprising:

   a recording device to record save data of said program content;
   an encryption processing unit to execute an encryption process on save data to be stored in said recording device and a decryption process on said save data to reproduce, retrieved from said recording device;
   input means to enter use restriction information on save data; and
   a control unit to determine an encryption processing method or a decryption processing method for save data,

   wherein said control unit comprises a structure to determine an encryption processing method for save data to be stored in said recording device following use restriction information input from said input means, and to determine a decryption processing method for save data to reproduce, retrieved from said recording device, according to save data use restriction information set up in a data management file stored in a memory or a recording device said control unit can access, and
   wherein said encryption processing unit comprises a structure to execute encryption processing or decryption processing on save data with the use of different encryption keys suitable to an encryption processing method or a decryption processing method determined by said control unit.

2. The data record reproducing player according to claim 1
   wherein said save data use restriction information is a program restriction allowing the use of save data on condition of the identity of a content program, and said data management file is structured as a table storing program restriction information oriented to the identifier of the content program, and
   wherein said encryption processing unit,

   when the input use restriction information from said input means or use restriction information set up in said data management file is entered or set to restrict a program, executes encryption processing or decryption processing on save data with the use of a program's individual save data encryption key created based on at least either said content program's individual encryption key, or content program's individual encryption key or individual information; and when the input use restriction information from said input means or use restriction information set up in said data management file is entered or set not to restrict a program, executes encryption processing or decryption processing on save data with the use of a system-shared encryption key stored in said data record reproducing player or a system save data encryption key created based on the system shared encryption key.

3. The data record reproducing player according to claim 2 wherein said content program's individual encryption key is a content key Kcon stored in the header portion of content data including said content program; and

     said system-shared encryption key is a system signature key Ksys stored in common into a plurality of different data record reproducing players.

4. The data record reproducing player according to claim 1 wherein

     said save data use restriction information is a record reproducing player restriction allowing the use of save data on condition of the identity of a data record reproducing player, and said data management file is structured as a table storing record reproducing player restriction information oriented to the identifier of a content program, and wherein said encryption processing unit, when the input use restriction information from said input means or use restriction information set up in said data management file is entered or set to restrict record reproducing player, executes encryption processing or decryption processing on save data with the use of a record reproducing player's individual save data encryption key created based on at least either said data record reproducing player's individual encryption key, or data record reproducing player's individual encryption key or individual information, and when the input use restriction information from said input means or use restriction information set up in said data management file is entered or set not to restrict a program, executes encryption processing or decryption processing on save data with the use of a system-shared encryption key stored in said data record reproducing player or a shared save data encryption key created based on the system-shared encryption key.

5. The data record reproducing player according to claim 4 wherein

     said data record reproducing player's individual encryption key is the corresponding data record reproducing player's individual signature key Kdev stored in said data record reproducing player, and said system-shared encryption key is a system signature key Ksys stored in common into a plurality of data record reproducing players.

6. The data record reproducing player according to claim 1 wherein

     said save data use restriction information is, a user restriction allowing the use of save data on condition of the identity of a user, and said data management file is structured as a table storing a user restriction information oriented to the identifier of a content program, and wherein said encryption processing unit, when the input use restriction information from said input means or use restriction information set up in said data management file is entered or set to restrict a user, executes encryption processing or decryption processing on save data with the use of a user's individual save data encryption key created based on a password input from said input means, or a user's individual save data encryption key created based on said password, and when the input use restriction information from said input means or use restriction information set up in said data management file is entered or set not to restrict a user, executes encryption processing or decryption processing on save data with the use of a system-shared encryption key stored in said record reproducing player or a shared save data encryption key created based on the system-shared encryption key.

7. The data record reproducing player according to claim 6 wherein

     said system-shared encryption key is a system signature key Ksys stored in common into a plurality of record reproducing players.

8. A save data processing method in a data record reproducing player capable of reproducing a program content comprising:

     an encryption processing mode determining step to determine an encryption processing mode to store save data into a recording device according to input use restriction information from input means; and

an encryption key selection step to select an encryption key applied to encryption processing according to the encryption processing mode determined at said encryption processing mode determining step, and

wherein encryption processing is performed on save data with the use of the encryption key selected at said encryption key selection step.

9. The save data processing method according to claim 8 wherein

said save data use restriction information is a program restriction allowing the use of save data on condition of the identity of a content program, and
in the case of restricting a program, at the said encryption key selection step, an encryption key applied in encryption processing is selected out of said content program's individual encryption key, or a program's individual save data encryption key created based on at least either a content program's individual encryption key or individual information, and
in the case of not restricting a program, en encryption key applied in encryption processing is selected out of a system-shared encryption key stored in said data record reproducing player, or a shared save data encryption key created based the system-shared key.

10. The save data processing method according to claim 8 wherein

said save data use restriction information is a record reproducing player restriction allowing the use of save data on condition of the identity of a data record reproducing player, and
in the case of restricting a record reproducing player, at said encryption key selection step, an encryption key applied to encryption processing is selected out of said data record reproducing player's individual encryption key, or a record reproducing player's individual save data encryption key created based on at least either the data record reproducing player's individual encryption key or individual information; and
in the case of not restricting a record reproducing player, an encryption key is selected out of a system-shared encryption key stored in said data record reproducing player, or a shared save data encryption key created based on the system shared encryption key as the key applied to encryption processing..

11. The save data processing method according to claim 8 wherein

said save data use restriction information is a user restriction allowing the use of save data on condition of the identity of a user, and
in the case of restricting a user, at said encryption key selection step, an encryption key applied to encryption processing is selected our of a user-input password, or a user's individual save data encryption key creased based on said password; and
in the case of not restricting a record reproducing player, an encryption key applied in encryption processing is selected out of a system-shared encryption key stored in said data record reproducing player, or a shared save data encryption key created based on the system shared encryption key.

12. A save data processing method in a data record reproducing player capable of reproducing a program content comprising;

a decryption processing mode determining step to determine a decryption processing mode to reproduce save data retrieved from a recording device, according to the set use restriction information set up a data management file stored in a memory means or a recording device; and
a decryption key selection step to select a decryption key according to the decryption processing mode determined at said decryption processing mode determining step, and
wherein decryption processing is executed on save data with the use of a decryption key selected at said decyption key selection step.

13. The save data processing method according to claim 12 wherein

said save data use restriction information is a program restriction allowing the use of save data on condition of the identity of a content program, and
in the case of restricting a program, at said decryption key selection step, a decryption key applied to decryption processing is selected out of said content program's individual encryption key, or program's individual save data decryption key created based on at least either the content program's individual encryption key or individual information; and

in the case of not restricting a program, a decryption key applied in decryption processing is selected out of a system-shared encryption key stored in said data record reproducing player, or a shared save data encryption key created based on the system-shared encryption key.

**14.** The save data processing method according to claim 12 wherein

said save data use restriction information is a record reproducing player restriction allowing the use of save data on condition of the identity of a data record reproducing player, and in case the of restricting a record reproducing player, at said decryption key selection step, decryption key applied in decryption processing is selected out of said data record reproducing player's individual encryption key, or the record reproducing player's individual save data decryption key created based on at least either the data record reproducing player's individual encryption key or individual information; and in the case of not restricting a record reproduction player, a decryption key applied in decryption processing is selected out of a system-shared encryption key stored in said data record reproducing player, or a shared save data decryption key created based on the system-shared encryption key.

**15.** The save data processing method described in claim 12 wherein

said save data use restriction information is a user restriction allowing the use of save data on condition of the identity of a user, and in the case of restricting a user, at said decryption key selection step, a decryption key applied to a decryption process is selected out of a user-input password, or the user's individual save data decryption key created based on said password; and in the case of not restricting a record reproducing player, a decryption key applied in decryption processing is selected out of a system-shared encryption key stored in said data record reproducing player, or a shared save data decryption key created based on the system-shared encryption key.

**16.** A program providing medium that provides a computer program to have a save data process executed in a data record reproducing player capable of reproducing a program content on a computer system, said program comprising:

an encryption processing mode determining step to determine an encryption processing mode to store save data into a recording device, according to input use restriction information from input means; an encryption key selection step to select an encryption key applied to an encryption process oriented to the encryption processing mode determined at said encryption processing mode determining step; and a step to execute save data encryption processing with the use of an encryption key selected at said encryption key selection step.

**17.** A program providing medium that offers a computer program to execute save data processing in a data record reproducing player capable of reproducing the program content on a computer system, said computer program comprising:

a decryption processing mode determining step to determine a decryption processing mode to reproduce save data retrieved from a recording device, according to set use restriction information set up in a data management file stored in memory means or a recording device; a decryption key selection step to select decryption key applied in decryption processing oriented to the decryption processing mode determined at said decryption processing mode determining step; and a step to execute save data decryption processing with the use of a decryption key selected at said decryption key selection step.

FIG. 1

EP 1 195 684 A1

FIG. 2

FIG. 3

RECORDING DEVICE 400

401

403 CONTROL UNIT

ENCRYPTION PROCESSING UNIT

405 INTERNAL MEMORY

406 ENCRYPTION/DECRIPTION UNIT

407 EXTERNAL MEMORY CONTROL UNIT

404 COMMUNICATION UNIT

402 EXTERNAL MEMORY

RECORD REPRODUCING PLAYER 300

301 CONTROL UNIT

303 RECORDING DEVICE CONTROLLER

302 ENCRYPTION PROCESSING UNIT

306 CONTROL UNIT

307 INTERNAL MEMORY

308 ENCRYPTION/DECRIPTION UNIT

304 READING UNIT (I/F)

305 COMMUNICATION UNIT

MEDIA 500

IDENTIFICATION INFORMATION
USAGE POLICY
BLOCK INFORMATION
KEY DATA
CONTENT BLOCK

COMMUNICATION MEANS 600
Internet/Cable/Satellite

IDENTIFICATION INFORMATION
USAGE POLICY
BLOCK INFORMATION
KEY DATA
CONTENT BLOCK

ORDINARY MESSAGE DATA

ENCRYPTED MESSAGE (CRYPTOGRAM) DATA

69

| |
|---|
| IDENTIFICATION DATA (CONTENTS ID) |
| USAGE POLICY (USAGE POLICY) |
| CHECK VALUE A (ICVa) |
| BLOCK INFORMATION KEY (Kbit) |
| CONTENTS KEY (Kcon) |
| BLOCK INFORMATION (BLOCK INFORMATION TABLE) |
| CHECK VALUE B (ICVb) |
| TOTAL CHECK VALUE (ICVt) |
| CONTENT BLOCK 1 |
| CONTENT BLOCK 2 |
| ... |
| CONTENT BLOCK i |
| ... |
| CONTENT BLOCK N |

Kdis · (Block Information Key)
Kdis (Contents Key)
Kbit (Block Information)

} HEADER PORTION

Kcon (Content Block 2)
Kcon (Content Block i)

} CONTENT PORTION

ENCRYPTED MESSAGE (CRYPTOGRAM) DATA

ORDINARY MESSAGE DATA

SIGNATURE DATA

DATA FORMAT ON MEDIA & COMMUNICATIONS ROUTE

FIG. 4

| HEADER LENGTH |
|---|
| CONTENT LENGTH |
| FORMAT VERSION |
| FORMAT TYPE |
| CONTENT TYPE |
| OPERATION PRIORITY |
| LOCALIZATION FIELD |
| COPY PERMISSION |
| MOVE PERMISSION |
| ENCRYPTION ALGORITHM |
| ENCRYPTION MODE |
| INTEGRITY CHECK METHOD |

USAGE POLICY

FIG. 5

Kbit

| | BLOCK NUMBER |
|---|---|
| BLOCK 1 | BLOCK LENGTH |
| | ENCRYPTION FLAG |
| | ICV FLAG |
| | ICV1 |
| | . |
| | . |
| | . |
| | . |
| BLOCK N | BLOCK LENGTH |
| | ENCRYPTION FLAG |
| | ICV FLAG |
| | ICVN |

BLOCK INFORMATION

FIG. 6

MESSAGE M1 (FIRST 8 BYTES)   MESSAGE M2 (NEXT 8 BYTES)   MESSAGE M3 (NEXT 8 BYTES)   - - - - - -   MESSAGE MN (LAST 8 BYTES)

INITIAL VALUE: IV

KEY (K1)

DES ENCRYPTION    DES ENCRYPTION    DES ENCRYPTION    DES ENCRYPTION

I1    I2    I3    IN

E1    E2    E3    - - - -   MESSAGE AUTHENTICATION CODE: MAC

⊕ : EXCLUSIVE OR (XOR) PROCESS (8-BYTE UNIT)

FIG. 7

EP 1 195 684 A1

MESSAGE M1
(FIRST 8 BYTES)

MESSAGE M2
(NEXT 8 BYTES)

MESSAGE M3
(NEXT 8 BYTES)

MESSAGE MN
(LAST 8 BYTES)

INITIAL
VALUE:IV

I1

I2

I3

IN

KEY(K1)

TRIPLE DES
ENCRYPTION

TRIPLE DES
ENCRYPTION

TRIPLE DES
ENCRYPTION

TRIPLE DES
ENCRYPTION

E1

E2

E3

MESSAGE AUTHENTICATION CODE:MAC

FIG. 8

ORDINARY MESSAGE
(8 BYTES)

KEY1 → DES ENCRYPTION

KEY2 → DES ENCRYPTION

KEY1 → DES ENCRYPTION

CRYPTOGRAM
(8 BYTES)

(A)

ORDINARY MESSAGE
(8 BYTES)

KEY1 → DES ENCRYPTION

KEY2 → DES ENCRYPTION

KEY3 → DES ENCRYPTION

CRYPTOGRAM
(8 BYTES)

(B)

FIG. 9

EP 1 195 684 A1

MESSAGE M1
(FIRST 8 BYTES)

MESSAGE M2
(NEXT 8 BYTES)

MESSAGE M3
(NEXT 8 BYTES)

MESSAGE MN
(LAST 8 BYTES)

INITIAL
VALUE:IV

I1

I2

I3

IN

KEY 1(K1)

DES
ENCRYPTION

DES
ENCRYPTION

DES
ENCRYPTION

DES
ENCRYPTION

E1

E2

E3

KEY 2

DES
ENCRYPTION

KEY 1

DES
ENCRYPTION

DIGITAL SIGNATURE

FIG. 10

EP 1 195 684 A1

GENERATION OF SIGNATURE

ASSUME, p IS A CHARACTERISTIC;
a, b ARE THE COEFFICIENTS OF AN ELLIPTIC CURVE,
THE ELLIPTIC CURVE IS $y^2 = X^3 + ax + b$;
G IS THE BASE POINT ON THE CURVE;
r IS THE ORDER OF G; M IS A MESSAGE;
Ks IS A PRIVATE KEY; G, Ks X G ARE THE PUBLIC KEYS        S1

CALCULATE f = Hash(M)        S2

GENERATE A 'u' SATISFYING $0 < u < r$,
WITH THE USE OF THE RANDOM NUMBERS GENERATOR        S3

CALCULATE V = u x G = (XV, YV)        S4

CALCULATE c = Xvmod r        S5

c = 0?        S6   Yes

↓ No

CALCULATE d = [(f + cKs)/u]  mod r        S7

d = 0?        S8   Yes

↓ No

THE SIGNATURE DATA IS DEFINED AS (c, d)        S9

GENERATION OF SIGNATURE (IEEE P1363/D3)

FIG. 11

AUTHENTICATION OF SIGNATURE

ASSUME, p IS A CHARACTERISTIC;
a, b ARE THE COEFFICIENTS OF AN ELLIPTIC CURVE,
THE ELLIPTIC CURVE IS $y^2 = X^3 + ax + b$;
G IS THE BASE POINT ON THE CURVE;
r IS THE ORDER OF G;M IS A MESSAGE;
(c, d) IS THE SIGNATURE;G, Ks X G ARE THE PUBLIC KEYS      ∿ S11

$0 < c < r$ AND $0 < d < r$?      ∿ S12

CALCULATE f = Hash(M)      ∿ S13

CALCULATE h = 1/d mod r      ∿ S14

CALCULATE h1 = fh mod r, h2 = ch mod r      ∿ S15

CALCULATE POINT P = ($X_P$, $Y_P$) = h1 x G + h2·Ks x G      ∿ S16

IS THE POINT P A POINT AT INFINITY?      ∿ S17 Yes

DOES AN EXPRESSION 'c = $X_P$ mod r' HOLD GOOD?      ∿ S18 Yes

No

THE SIGNATURE IS AUTHENTIC      ∿ S19

THE SIGNATURE IS WRONG      S20

AUTHENTICATION OF SIGNATURE (IEEE P1363/D3)

FIG. 12

Kab

A

B

Kab

GENERATE A RANDOM NUMBER $R_A$ OF 64 BITS
CALCULATE TOKEN-AB=DES($K_{ab}$, $R_a$ || $R_b$ || ID(b))

SEND $R_b$ || ID(b)

GENERATE A RANDOM NUMBER $R_b$ OF 64 BITS

SEND Token-AB

DECRYPT Token-AB USING $K_{ab}$
VERIFY THE AUTHENTICATION OF $R_b$ AND ID(b)
GENERATE A RANDOM NUMBER $K_{ses}$ OF 64 BITS
CALCULATE Token-BA=DES($K_{ab}$, $R_b$ || $R_a$ || $K_{ses}$)

DECRYPT Token-BA USING $K_{ab}$
VERIFY THE AUTHENTICATION OF $R_b$ AND $R_a$

SEND Token-BA

$K_{ses}$ IS DEFINED AS A SESSION KEY

EP 1 195 684 A1

ISO/IEC 9798-2 MUTUAL AUTHENTICATION AND SHARED KEY DEVICE USING SYMMETRIC ENCIPHERMENT ALGORITHMS (SYMMETRIC KEY ENCRIPTION TECHNOLOGY)

FIG. 13

CERTIFICATE OF THE PUBLIC KEY

| |
|---|
| VERSION NUMBER OF THE CERTIFICATE |
| A SERIAL NUMBER OF THE CERTIFICATE ASSIGNED BY THE AUTHENTICATING AUTHORITIES |
| ALGORITHMS AND PARAMETERS USED IN SIGNATURE |
| NAME OF THE AUTHENTICATING AUTHORITIES |
| VALID PERIOD OF THE CERTIFICATE |
| NAME (ID) OF THE HOLDER OF THE CERTIFICATE |
| PUBLIC KEY OF THE HOLDER OF THE CERTIFICATE |

THE WHOLE OF A MESSAGE

PRIVATE KEY OF THE AUTHENTICATING AUTHORITIES

HASH FUNCTION

THE WHOLE OF A MESSAGE

DIGITAL SIGNATURE

CERTIFICATE OF PUBLIC KEY

FIG. 14

EP 1 195 684 A1

A.Sig.Gen.Key
(A'S PRIVATE KEY)
A.Certificate
(A'S CERTIFICATE OF THE PUBLIC KEY)
p, G

B.Sig.Gen.Key
(B'S PRIVATE KEY)
B.Certificate
(B'S CERTIFICATE OF THE PUBLIC KEY)
p, G

A

B

GENERATE A RANDOM NUMBER Ra of 64 BITS
GENERATE A RANDOM NUMBER Ak (0<Ak<p)
CALCULATE Av = Ak × G
CALCULATE A.Sig=
Sign(A.Sig.Gen.Key, Ra || Rb || Av)

GENERATE A RANDOM NUMBER Rb OF 64 BITS

SEND Rb

VERIFY IF Rb SENT FROM A COINCIDES
WITH WHAT IS GENERATED
VERIFY A'S PUBLIC KEY CERTIFICATE
WITH THE PUBLIC KEY OF THE
AUTHENTICATING AUTHORITIES
OBTAIN A.Sig.Ver.Key (A'S PUBLIC KEY)
VERIFY A.Sig. WITH A.Sig.Ver.Key

SEND A.Certificate || Ra || Rb || Av || A.Sig

VERIFY IF Ra SENT FROM B COINCIDES
WITH WHAT IS GENERATED
VERIFY B's PUBLIC KEY CERTIFICATE
WITH THE PUBLIC KEY OF THE
AUTHENTICATING AUTHORITIES
OBTAIN B.Sig.Ver.Key (B's PUBLIC KEY)
VERIFY B.Sig. WITH B.Sig.Ver.Key
CALCULATE Ak × Bv, AND THE 64 BIT OF THE
X COORDINATE IS DEFINED AS SESSION KEY

GENERATE A RANDOM NUMBER Bk (0<Bk<p)
CALCULATE Bv=Bk × G
CALCULATE B.Sig=
Sign(B.Sig.Gen.Key, Rb || Ra || Bv)
CALCULATE Bk × Av, AND THE 64 BIT OF THE
X COORDINATE IS DEFINED AS SESSION KEY

SEND B.Certificate || Rb || Ra || Bv || B.Sig

ISO/IEC 9798-3 |MUTUAL AUTHENTICATION AND SHARED KEY SYSTEM USING SYMMETRIC
ENCIPHERMENT ALGORITHMS (SYMMETRIC KEY ENCRYPTION TECHNOLOGY)

FIG. 15

## ENCYPTION

ASSUME, p IS A CHARACTERISTIC;
a, b ARE THE COEFFICIENTS OF AN ELLIPTIC CURVE,
THE ELLIPTIC CURVE IS $y^2 = X^3 + ax + b$;
G IS THE BASE POINT ON THE CURVE;
r IS THE ORDER OF G; Mx, My ARE MESSAGES;
G, Ks X G ARE THE PUBLIC KEYS
— S21

GENERATE A 'u' SATISFYING $0 < u < r$,
WITH THE USE OF THE RANDOM NUMBERS GENERATOR
— S22

CALCULATE $V = u(Ks \times G) = (X_v, Y_v)$
— S23

CALCULATE $XO = X_v \times Mx \bmod p$
— S24

CALCULATE $YO = Y_v \times My \bmod p$
— S25

CALCULATE $u \times G$
— S26

ENCRYPTED MESSAGE IS DEFINED AS 'u × G, (XO, YO)'
— S27

ENCRYPTION USING  ELLIPTIC CURVE ENCRYPTION METHOD (MENEZES–VANSTONE)

## FIG. 16

DECRYPTION

ASSUME, p IS A CHARACTERISTIC;
a, b ARE THE COEFFICIENTS OF AN ELLIPTIC CURVE,
THE ELLIPTIC CURVE IS $y^2 = X^3 + ax + b$;
G IS THE BASE POINT ON THE CURVE;
r IS THE ORDER OF G; u x G (X0, Y0) ARE
ENCRYPTED MESSAGES;
Ks IS DEFINED AS A PRIVATE KEY $\quad$ S31

CALCULATE Ks x (u x G) = (Xv, Yv) $\quad$ S32

CALCULATE X1 = X0/Xv mod p $\quad$ S33

CALCULATE Y1 = Y0/Yv mod p $\quad$ S34

OBTAIN A DECRYPTED MESSAGE (X1, Y1) = (Mx, My) $\quad$ S35

DECRYPTION USING ELLIPTIC CURVE ENCRYPTION MTHOD (MENEZES-VANSTONE)

FIG. 17

RECORD REPRODUCING PLAYER 300

304 301 303

CONTROL UNIT

302

ENCRYPTION PROCESSING UNIT 306

CONTROL UNIT

307 308

INTERNAL MEMORY

MASTER KEY FOR RECORDING DEVICE AUTHENTICATION KEY -MKate,
INITIAL VALUE FOR RECORDING DEVICE AUTHENTICATION KEY - IVake,
MASTER KEY FOR DISTRIBUTION KEY - MKdis,
INITIAL VALUE FOR DISTRIBUTION KEY - IVdis,
CREATION KEY FOR CHECK VALUE A - Kicva,
CREATION KEY FOR CHECK VALUE B - Kicvb,
CREATION KEY FOR CONTENTS CHECK VALUE - Kicvc,
CREATION KEY FOR TOTAL CHECK VALUE - Kicvt
SYSTEM SIGNATURE KEY - Ksys
RECORD REPRODUCTION PLAYER SIGNATURE KEY - Kdev,
INITIAL VALUE FOR MUTAUL AUTHENTICATION PROCESSING - IVmem

RETRIEVING UNIT

305

COMMUNICATION UNIT

ENCRYPTION/DECRYPTION UNIT

RECORDING DEVICE CONTROLLER

DATA RETAINING STATE ON RECORD REPRODUCING PLAYER

FIG. 18

EP 1 195 684 A1

84

RECORDING DEVICE ~400

ENCRYPTION PROCESSING UNIT ~401

EXTERNAL MEMORY ~402

CONTROL UNIT ~403  407

~404

~406  ~405

COMMUNICATION UNIT

ENCRYPTION/DECRYPTION UNIT

INTERNAL MEMORY

KEY BLOCK 1
RECORDING DEVICE CONTENTS ID 1,
AUTHENTICATION KEY 1,
INITIAL VALUE 1, STORAGE KEY 1,
RANDOM NUMBER CREATION KEY 1,
SPECIES 1

KEY BLOCK 2
RECORDING DEVICE CONTENTS ID 2,
AUTHENTICATION KEY 2,
INITIAL VALUE 2, STORAGE KEY 2,
RANDOM NUMBER CREATION KEY 2,
SPECIES 2

KEY BLOCK N
RECORDING DEVICE CONTENTS ID N,
AUTHENTICATION KEY N,
INITIAL VALUE N, STORAGE KEY N,
RANDOM NUMBER CREATION KEY N,
SPECIES N

EXTERNAL MEMORY CONTROL UNIT

CONTENTS 1
CONTENTS ID 1, USAGE POLICY 1,
CHECK VALUE A1,
BLOCK INFORMATION KEY 1,
CONTENTS KEY 1, BLOCK INFORMATION 1,
CHECK VALUE B1, TOTAL CHECK VALUE 1,
CONTENTS BLOCK 1

CONTENTS 2
CONTENTS ID 2, USAGE POLICY 2,
CHECK VALUE A2,
BLOCK INFORMATION KEY 2,
CONTENTS KEY 2, BLOCK INFORMATION 2,
CHECK VALUE B2, TOTAL CHECK VALUE 2,
CONTENTS BLOCK 2

CONTENTS M
CONTENTS ID M, USAGE POLICY M,
CHECK VALUE AM,
BLOCK INFORMATION KEY M,
CONTENTS KEY M, BLOCK INFORMATION M,
CHECK VALUE BM, TOTAL CHECK VALUE M,
CONTENTS BLOCK M

DATA RETAINING STATE ON RECORDING DEVICE

FIG. 19

START AUTHENTICATION
PROCESSING

↓

INSERT RECORDING DEVICE INTO
RECORD REPRODUCING PLAYER — S41

↓

TRANSMIT INITIALIZATION COMMAND
TO RECORDING DEVICE — S42

↓

TRANSMIT INITIALIZATION COMMAND
TO ENCRYPTION PROCESSING UNIT — S43

↓

DESIGNATE KEY BLOCKS OF
RECORDING DEVICE — S44

↓

RETRIEVE RECORDING
DEVICE CONTENTS ID $ID_{MEM}$ — S45

↓

CREATE AUTHENTICATION KEY $K_{AKE}$ — S46

↓

CREATE MUTUAL AUTHENTICATION
AND SESSION KEYS $K_{SES}$ — S47

↓

MUTUAL AUTHENTICATION OK? — S48

↓ → AUTHENTICATION FAILED — S50

AUTHENTICATION SUCCESSFUL — S49

↓

RETURN

MUTUAL AUTHENTICATION BETWEEN RECORD REPRODUCTION AND RECORDING DEVICE

FIG. 20

RECORD REPRODUCING
PLAYER 1                    2101

JAPAN   DESIGNATABLE BLOCKS 1, 4

MASTER KEY:MKake 1, 4

RECORDING DEVICE A          2104

| KEY BLOCK 1 |
| KEY BLOCK 2 |
| KEY BLOCK 3 |
| KEY BLOCK 4 |

EXTERNAL
MEMORY


RECORD REPRODUCING
PLAYER 2                    2102

US   DESIGNATABLE BLOCKS 2, 4

MASTER KEY:MKake 2, 4

RECORDING DEVICE B          2105

| KEY BLOCK 1 |
| KEY BLOCK 2 |
| KEY BLOCK 3 |
| KEY BLOCK 4 |

EXTERNAL
MEMORY


RECORD REPRODUCING
PLAYER 3                    2103

EU   DESIGNATABLE BLOCKS 3, 4

MASTER KEY:MKake 3, 4

RECORDING DEVICE C          2106

| KEY BLOCK 1 |
| KEY BLOCK 2 |
| KEY BLOCK 3 |
| KEY BLOCK 4 |

EXTERNAL
MEMORY


FIG. 21

EP 1 195 684 A1

```
        ┌──────────────────────────┐
        │    START DOWNLOADING      │
        │    PROCESS ON CONTENTS    │
        └──────────────────────────┘
                     │
                     ▼
        ┌──────────────────────────┐
        │ TRANSMIT HEADER TO ENCRYPTION │ ～S51
        │    PROCESSING UNIT        │
        └──────────────────────────┘
                     │                    S52
                     ▼                    NO
        ◁ CALCULATE CHECK VALUE A TO ▷─────────────┐
          BE COMPARED WITH ICVa                    │
                     │ YES                          │
                     ▼                              │
        ┌──────────────────────────┐ ～S53          │
        │   CREATE DISTRIBUTION KEY │               │
        └──────────────────────────┘               │
                     │                              │
                     ▼                              │
        ┌──────────────────────────┐ ～S54          │
        │ DECRYPT BLOCK INFORMATION KEY AND │       │
        │ CONTENTS KEY WITH DISTRIBUTION KEY│       │
        └──────────────────────────┘               │
                     │                              │
                     ▼                              │
        ┌──────────────────────────┐ ～S55          │
        │  DECRYPT BLOCK INFORMATION │              │
        └──────────────────────────┘               │
                     │                    S56        │
                     ▼                    NG         │
        ◁ CREATE CHECK VALUE B FROM BLOCK ▷─────────┤
          INFORMATION KEY,CONTENTS KEY AND          │
              BLOCK INFORMATION                      │
                     │ OK                            │
                     ▼                    S57        │
        ◁ CALCULATE TOTAL CHECK VALUE FROM ▷ NG─────┤
          ICVa, ICVb AND CONTENTS CHECK VALUE       │
                     │ OK                  S58        │
                     ▼                    NG         │
        ◁ VERIFY ICV OF CONTENTS BLOCK ▷────────────┤
                     │ OK                            │
                     ▼                              │
        ┌──────────────────────────┐ ～S59          │
        │  ENCRYPT BLOCK INFORMATION KEY │          │
        │  AND CONTENTS KEY WITH SESSION KEY │      │
        └──────────────────────────┘               │
                     │                              │
                     ▼                         ┌─────────┐
        ┌──────────────────────────┐ ～S60      │  ERROR  │ ～S64
        │  ENCRYPT BLOCK INFORMATION KEY │      └─────────┘
        │  AND CONTENTS KEY WITH STORAGE KEY │      │
        └──────────────────────────┘               │
                     │                    S61        │
                     ▼                    NO         │
        ◁ IS USE RESTRICTION ▷──────────┐           │
          INFORMATION '1' ?             │           │
                     │ YES              │           │
                     ▼                  │           │
        ┌──────────────────────────┐ ～S62│          │
        │ CALCULATE INDIVIDUAL CHECK VALUE │         │
        │ ICVdev OF RECORD REPRODUCING PLAYER │      │
        └──────────────────────────┘   │           │
                     │◀─────────────────┘           │
                     ▼                              │
        ┌──────────────────────────┐ ～S63          │
        │ SAVE CONTENTS IN RECORDING DEVICE │       │
        └──────────────────────────┘               │
                     │                              │
                     ▼                              │
        ┌──────────────────────────┐               │
        │          RETURN          │◀──────────────┘
        └──────────────────────────┘
```

DOWNLOADING PROCESS OF CONTENTS

FIG. 22

MESSAGE M1 (FIRST 8 BYTES)　MESSAGE M2 (NEXT 8 BYTES)　MESSAGE M3 (NEXT 8 BYTES)　MESSAGE Mn (LAST 8 BYTES)

INITIAL VALUE: IV

CHECK VALUE A CREATION KEY (Kicva)

DES ENCRYPTION　DES ENCRYPTION　DES ENCRYPTION　DES ENCRYPTION

$I1$　$I2$　$I3$　$IN$

$E1$　$E2$　$E3$

CHECK VALUE A: ICVa

MESSAGE M1 - MN: CONTENTS ID, USAGE POLICY

$\oplus$:EXCLUSIVE OR (XOR) PROCESS (8-BYTE UNIT)

FIG. 23

EP 1 195 684 A1

MESSAGE M1
(FIRST 8 BYTES)

MESSAGE M2
(NEXT 8 BYTES)

MESSAGE M3
(NEXT 8 BYTES)

------

MESSAGE Mn
(LAST 8 BYTES)

------

CHECK VALUE B
CREATION KEY (Kicvb) →

DES
ENCRYPTION

CHECK VALUE B: ICVb

MESSAGE M1 − MN: BLOCK INFORMATION KEY Kbit, CONTENTS KEY Kcon, BLOCK INFORMATION
⊕:EXCLUSIVE OR (XOR) PROCESS (8-BYTE UNIT)

FIG. 24

ICVa
(CHECK VALUE A)

ICVb
(CHECK VALUE B)

ICV1
(CONTENTS CHECK VALUE)

ICVN
(CONTENTS CHECK VALUE)

INITIAL VALUE:
IV=0 OR IV=IVt

I1

I2

I3

IN

TOTAL CHECK VALUE
CREATION KEY (Kicvt)

DES
ENCRYPTION

DES
ENCRYPTION

DES
ENCRYPTION

DES
ENCRYPTION

E1

E2

E3

INTERMEDIATE
CHECK VALUE: ICV

RECORD REPRODUCING
PLAYER SIGNATURE KEY (Kdev)

DES
ENCRYPTION

SYSTEM SIGNATURE
KEY (Ksys)

DES
ENCRYPTION

RECORD REPRODUCING PLAYER
INDIVIDUAL CHECK VALUE: ICVdev

TOTAL CHECK VALUE: ICVt

⊕: EXCLUSIVE OR (XOR) PROCESS (8-BYTE UNIT)

FIG. 25

EP 1 195 684 A1

91

| CONTENTS INFORMATION (CONTENTS ID) |
|---|
| USAGE POLICY |
| CHECK VALUE A (ICVa) |

Kstr BLOCK INFORMATION KEY (Kbic)

Kstr CONTENTS KEY (Kcon)

Kbit BLOCK INFORMATION (BLOCK INFORMATION TABLE)

| CHECK VALUE B (ICVb) |
|---|
| TOTAL CHECK VALUE (ICVt) |
| CONTENTS BLOCK 1 |

Kcon CONTENTS BLOCK 2

· · ·

Kcon CONTENTS BLOCK i

· · ·

| CONTENTS BLOCK N |
|---|

CONTENTS SAVED IN RECORDING DEVICE
(USE RESTRICTION INFORMATION = 0)

ENCRYPTED DATA

ORDINARY DATA

SIGNATURE DATA

FIG. 26

| CONTENTS INFORMATION (CONTENTS ID) |
|---|
| USAGE POLICY (USAGE POLICY) |
| CHECK VALUE A (ICVa) |
| BLOCK INFORMATION KEY (Kbit) |
| CONTENTS KEY (Kcon) |
| BLOCK INFORMATION (BLOCK INFORMATION TABLE) |
| CHECK VALUE B (ICVb) |
| RECORD REPRODUCING PLAYER'S INDIVIDUAL CHECK VALUE (ICVdev) |
| CONTENT BLOCK 1 |
| CONTENT BLOCK 2 |
| ... |
| CONTENT BLOCK 1 |
| ... |
| CONTENT BLOCK N |

Kstr
Kstr
Kbit

Kcon

Kcon

ENCRYPTED DATA

ORDINARY DATA

SIGNATURE DATA

CONTENTS SAVED IN RECORDING DEVICE
(USE RESTRICTION INFORMATION = 1)

FIG. 27

START REPRODUCTION PROCESS OF CONTENTS

TRANSMIT HEADER TO ENCRYPTION PROCESSING UNIT — S71

CALCULATE CHECK VALUE A TO BE COMPARED WITH ICVa — S772 NG

OK

DECRYPT BLOCK INFORMATION KEY AND CONTENTS KEY WITH DISTRIBUTION KEY, AND ENCRYPT THEM AGAIN WITH SESSION KEY — S73

DECRYPT BLOCK INFORMATION KEY AND CONTENTS KEY WITH SESSION KEY, AND DECRYPT BLOCK INFORMATION — S74

CREATE CHECK VALUE B FROM BLOCK INFORMATION KEY, CONTENTS KEY AND BLOCK INFORMATION, TO BE COMPARED WITH ICVb — S75 NG

OK

CALCULATE INTERMEDIATE CHECK VALE FROM ICVa, ICVB AND CONTENTS CHECK VALUE — S76

IS USE RESTRICTION INFORMATION '1' ? — S77

NO

YES

CALCULATE TOTAL CHECK VALUE ICVt — S78

CALCULATE CHECK VALUE ICVdev — S80

VERIFY TOTAL CHECK VALUE ICVt — S79 NG

VERIFY CHECK VALUE ICVdev — S81 NG

OK

OK

DECRYPT CONTENTS BLOCK — S82

VERIFY ICV OF CONTENTS BLOCK — S83 NG

ERROR — S84

ERROR — S84

OK

RETURN

REPRODUCTION PROCESS OF CONTENTS

FIG. 28

FIG. 29

RECORDING DEVICE 400

ENCRYPTION PROCESSING UNIT 401

CONTROLLING UNIT 403

2901 COMMAND NUMBER MANAGING UNIT

2902 COMMAND REGISTER

2903 AUTHENTICATION FLAG

COMMUNICATION UNIT (RECEIVING REGISTER) 404

EXTERNAL MEMORY CONTROL UNIT 407

ENCRYPTION/ DECRYPTION UNIT 406

EXTERNAL MEMORY 402

RECORD REPRODUCING PLAYER

CONTROL UNIT 300

301

RECORDING DEVICE CONTROLLER 303

COMMAND NO.

ENCRYPTION PROCESSING UNIT 302

| 1 | AUTHENTICATION FLAG |
| 2 | AUTHENTICATION FLAG |
| 3 | AUTHENTICATION FLAG |

2904

| NO. | COMMANDS |
|-----|----------|
| o l k | AUTHENTICATION PROCESS COMMAND SEQUENCE |
| p l s | DECRYPTION, KEY EXCHANGE, ENCRYPTION PROCESS COMMAND SEQUENCE 1 |
| u l y | DECRYPTION, KEY EXCHANGE, ENCRYPTION PROCESS COMMAND SEQUENCE 2 |

EP 1 195 684 A1

RECEIVE DATA ENCRYPTED WITH THE SESSION KEY $K_{ses}$ (EX. BLOCK INFORMATION KEY $K_{bit}$, CONTENTS KEY $K_{con}$) FROM THE RECORD REPRODUCING PLAYER — S3001

COMMAND Nos. p-s

STORE IN THE REGISTER DATA ENCRYPTED WITH THE SESSION KEY $K_{ses}$ (EX. STORAGE OF BLOCK INFORMATION KEY $K_{bit}$, CONTENTS KEY $K_{con}$) THE RECORDING DEVICE RECEIVED FROM THE RECORD REPRODUCING PLAYER — S3002

RETRIEVE DATA ENCRYPTED WITH THE SESSION KEY $K_{ses}$ (EX. BLOCK INFORMATION KEY $K_{bit}$, CONTENTS KEY $K_{con}$) FROM THE REGISTER, WHICH IS DECRYPTED WITH THE SESSION KEY $K_{ses}$ — S3003

ENCRYPT DATA DECRYPTED WITH THE SESSION KEY $K_{ses}$ (EX. BLOCK INFORMATION KEY $K_{bit}$, CONTENTS KEY $K_{con}$) WITH THE STORAGE KEY $K_{str}$ — S3004

STORE IN THE MEMORY OF THE RECORDING DEVICE DATA (EX. BLOCK INFORMATION KEY $K_{bit}$, CONTENTS KEY $K_{con}$) ENCRYPTED WITH THE STORAGE KEY KSTR — S3005

FIG. 30

RETRIEVE DATA ENCRYPTED WITH THE STORAGE KEY $K_{str}$
(EX. BLOCK INFORMATION KEY $K_{bit}$, CONTENTS KEY $K_{con}$)
FROM THE MEMORY OF THE RECORDING DEVICE ∽S3101

COMMAND Nos. u-y

STORE IN THE REGISTER DATA ENCRYPTED WITH THE
STORAGE KEY $K_{str}$
(EX. STORAGE OF BLOCK INFORMATION KEY $K_{bit}$,
CONTENTS KEY $K_{con}$)
RETRIEVED FROM THE MEMORY OF THE RECORDING DEVICE ∽S3102

RETRIEVE FROM THE REGISTER DATA
(EX. BLOCK INFORMATION KEY $K_{bit}$, CONTENTS KEY $K_{con}$)
ENCRYPTED WITH THE STORAGE KEY $K_{str}$,
WHICH IS DECRYPTED WITH THE STORAGE KEY $K_{str}$ ∽S3103

ENCRYPT WITH THE SESSION KEY $K_{ses}$ DATA
(EX. BLOCK INFORMATION KEY $K_{bit}$, CONTENTS KEY $K_{con}$)
DECRYPTED WITH THE STORAGE KEY $K_{str}$ ∽S3104

TRANSMIT DATA ENCRYPTED WITH THE
SESSION KEY $K_{ses}$ DATA
(EX. BLOCK INFORMATION KEY $K_{bit}$, CONTENTS KEY $K_{con}$)
FROM THE RECORDING DEVICE TO RECORD
REPRODUCING PLAYER ∽S3105

FIG. 31

FORMAT TYPE 0

| | CONTENTS INFORMATION (CONTENTS ID) |
|---|---|
| | USAGE POLICY (USAGE POLICY) |
| | CHECK VALUE A (ICVa) |
| Kdis | BLOCK INFORMATION KEY (Kbit) |
| Kdis | CONTENTS KEY (Kcon) |
| Kbit | BLOCK INFORMATION (BLOCK INFORMATION TABLE) |
| | CHECK VALUE B (ICVb) |
| | TOTAL CHECK VALUE (ICVt) |
| Kcon | CONTENTS BLOCK 1 |
| | CONTENTS BLOCK 2 |
| Kcon | ... |
| | CONTENTS BLOCK i |
| | ... |
| | CONTENTS BLOCK N |

DATA FORMAT ON MEDIA AND COMMUNICATION ROUTE

| | CONTENTS INFORMATION (CONTENTS ID) |
|---|---|
| | USAGE POLICY (USAGE POLICY) |
| | CHECK VALUE A (ICVa) |
| Kstr | BLOCK INFORMATION KEY (Kbit) |
| Kstr | CONTENTS KEY (Kcon) |
| Kbit | BLOCK INFORMATION (BLOCK INFORMATION TABLE) |
| | CHECK VALUE B (ICVb) |
| | TOTAL CHECK VALUE (ICVT) OR INDIVIDUAL CHECK VALUE (ICVdev) |
| Kcon | CONTENTS BLOCK 1 |
| | CONTENTS BLOCK 2 |
| Kcon | ... |
| | CONTENTS BLOCK i |
| | ... |
| | CONTENTS BLOCK N |

CONTENTS SAVED ON RECORDING DEVICE

| ENCRYPTED DATA | ORDINARY DATA | SIGNATURE DATA |
|---|---|---|

FIG. 32

FORMAT TYPE 1

| CONTENTS INFORMATION (CONTENTS ID) |
| USAGE POLICY (USAGE POLICY) |
| CHECK VALUE A (ICVa) |

Kdis — BLOCK INFORMATION KEY (Kbit)
Kdis — CONTENTS KEY (Kcon)
Kbit — BLOCK INFORMATION (BLOCK INFORMATION TABLE)

| CHECK VALUE B (ICVb) |
| TOTAL CHECK VALUE (ICVt) |

Kcon — ENCRYPTION CONTENTS PART 1 } BLOCK 1
ORDINARY CONTENTS PART 1

...

Kcon — ENCRYPTION CONTENTS PART I } BLOCK I
ORDINARY CONTENTS PART I

...

Kcon — ENCRYPTION CONTENTS PART N } BLOCK N
ORDINARY CONTENTS PART N

DATA FORMAT ON MEDIA AND COMMUNICATION ROUTE

| CONTENTS INFORMATION (CONTENTS ID) |
| USAGE POLICY (USAGE POLICY) |
| CHECK VALUE A (ICVa) |

Kstr — BLOCK INFORMATION KEY (Kbit)
Kstr — CONTENTS KEY (Kcon)
Kbit — BLOCK INFORMATION (BLOCK INFORMATION TABLE)

| CHECK VALUE B (ICVb) |
| TOTAL CHECK VALUE (ICVT) OR INDIVIDUAL CHECK VALUE (ICVdev) |

Kcon — ENCRYPTION CONTENTS PART 1 } BLOCK 1
ORDINARY CONTENTS PART 1

...

Kcon — ENCRYPTION CONTENTS PART I } BLOCK I
ORDINARY CONTENTS PART I

...

Kcon — ENCRYPTION CONTENTS PART N } BLOCK N
ORDINARY CONTENTS PART N

CONTENTS SAVED ON RECORDING DEVICE

| ENCRYPTED DATA | ORDINARY DATA | SIGNATURE DATA |

FIG. 33

EP 1 195 684 A1

FORMAT TYPE 2

| | |
|---|---|
| | CONTENTS INFORMATION (CONTENTS ID) |
| | USAGE POLICY (USAGE POLICY) |
| | CHECK VALUE A (ICVA) |
| Kdis | BLOCK INFORMATION KEY (Kbit) |
| Kdis | CONTENTS KEY (Kcon) |
| Kbit | BLOCK INFORMATION (BLOCK INFORMATION TABLE) |
| | CHECK VALUE B (ICVb) |
| | TOTAL CHECK VALUE (ICVt) |
| Kcon | BLOCK KEY Kblc } BLOCK 1 |
| Kblc | CONTENTS DATA |
| | ... |
| Kcon | BLOCK KEY Kblc } BLOCK I |
| Kblc | CONTENTS DATA |
| | ... |
| Kcon | BLOCK KEY Kblc } BLOCK N |
| Kblc | CONTENTS DATA |

DATA FORMAT ON MEDIA AND COMMUNICATION ROUTE

| | |
|---|---|
| | CONTENTS INFORMATION (CONTENTS ID) |
| | USAGE POLICY (USAGE POLICY) |
| | CHECK VALUE A (ICVa) |
| Kstr | BLOCK INFORMATION KEY (Kbit) |
| Kstr | CONTENTS KEY (Kcon) |
| Kbit | BLOCK INFORMATION (BLOCK INFORMATION TABLE) |
| | CHECK VALUE B (ICVb) |
| | TOTAL CHECK VALUE (ICVt) OR INDIVIDUAL CHECK VALUE (ICVdev) |
| Kcon | BLOCK KEY Kblc } BLOCK 1 |
| Kblc | CONTENTS DATA |
| | ... |
| Kcon | BLOCK KEY Kblc } BLOCK I |
| Kblc | CONTENTS DATA |
| | ... |
| Kcon | BLOCK KEY Kblc } BLOCK N |
| Kblc | CONTENTS DATA |

CONTENTS SAVED ON RECORDING DEVICE

| ENCRYPTED DATA | ORDINARY DATA | SIGNATURE DATA |

FIG. 34

EP 1 195 684 A1

FORMAT TYPE 3

| CONTENTS INFORMATION (CONTENTS ID) |
|---|
| USAGE POLICY (USAGE POLICY) |
| CHECK VALUE A (ICVa) |
| BLOCK INFORMATION KEY (Kbit) |
| BLOCK INFORMATION (BLOCK INFORMATION TABLE) |
| CHECK VALUE B (ICVb) |
| TOTAL CHECK VALUE (ICVt) |

Kdis
Kbit

Kdis / Kblc — BLOCK KEY Kblc / CONTENTS DATA — BLOCK 1

...

Kdis / Kblc — BLOCK KEY Kblc / CONTENTS DATA — BLOCK I

...

Kdis / Kblc — BLOCK KEY Kblc / CONTENTS DATA — BLOCK N

DATA FORMAT ON MEDIA AND COMMUNICATION ROUTE

| CONTENTS INFORMATION (CONTENTS ID) |
|---|
| USAGE POLICY (USAGE POLICY) |
| CHECK VALUE A (ICVa) |
| BLOCK INFORMATION KEY (Kbit) |
| BLOCK INFORMATION (BLOCK INFORMATION TABLE) |
| CHECK VALUE B (ICVb) |
| TOTAL CHECK VALUE (ICVT) OR INDIVIDUAL CHECK VALUE (ICVdev) |

Kstr
Kbit

Kstr / Kblc — BLOCK KEY Kblc / CONTENTS DATA — BLOCK 1

...

Kstr / Kblc — BLOCK KEY Kblc / CONTENTS DATA — BLOCK I

...

Kstr / Kblc — BLOCK KEY Kblc / CONTENTS DATA — BLOCK N

CONTENTS SAVED ON RECORDING DEVICE

| ENCRYPTED DATA | ORDINARY DATA | SIGNATURE DATA |
|---|---|---|

FIG. 35

EP 1 195 684 A1

EP 1 195 684 A1

MESSAGE M1
(FIRST 8 BYTES)

MESSAGE M2
(NEXT 8 BYTES)

MESSAGE M3
(NEXT 8 BYTES)

- - - - - -

MESSAGE MN
(LAST 8 BYTES)

INITIAL
VALUE: IV

CONTENTS CHECK VALUE
CREATION KEY (K$_{icvc}$)

I1

DES
ENCRYPTION

I2

DES
ENCRYPTION

I3

DES
ENCRYPTION

IN

DES
ENCRYPTION

E1

E2

E3 - - - - -

CONTENTS CHECK VALUE: ICV$_i$

MESSAGE M1 – MN: CONTENTS DATE OF CONTENTS I

$\oplus$ : EXCLUSIVE OR (XOR) PROCESS (8-BYTE UNIT)

FIG. 36

EP 1 195 684 A1

P-ICVi, K  (PART K CHECK VALUE)   P-ICVi, M  (PART M CHECK VALUE)   P-ICVi, N  (PART N CHECK VALUE)   P-ICVi, R  (PART R CHECK VALUE)

INITIAL
VALUE: IV

CONTENTS CHECK VALUE
CREATION KEY (Kicvc)

I1   I2   I3   IN

DES ENCRYPTION   DES ENCRYPTION   DES ENCRYPTION   DES ENCRYPTION

E1   E2   E3   CONTENTS CHECK VALUE: ICVI

⊕: EXCLUSIVE OR (XOR) PROCESS (8-BYTE UNIT)

FIG. 37

FIG. 38

EP 1 195 684 A1

FORMAT TYPE 0, 1 DOWNLOADING PROCESS

START

MUTUAL AUTHENTICATION AND SESSION KEY SHARED WITH RECORDING DEVICE (CF. FIG. 20) — S101

RETRIEVE HEADER — S102

CREATE ICVa' FROM CONTENT INFORMATION, USAGE POLICY — S103

ICVa=ICVa'? — S104 — NO / YES

RETRIEVE OR CREATE DISTRIBUTION KEY Kdis — S105

DECRYPT BLOCK INFORMATION KEY Kbit, CONTENTS KEY Kcon — S106

DECRYPT BLOCK INFORMATION — S107

CREATE ICVb' FROM BLOCK INFORMATION KEY Kbit, CONTENTS KEY Kcon, BLOCK INFORMATION — S108

ICVb=ICVb'? — S109 — NO / YES

CREATES INTERMEDIATE CHECK VALUE FROM ICVa, ICVb, ICV1...ICVN — S110

CREATES TOTAL ICVT FROM INTERMEDIATE CHECK VALUE — S111

ICVt=ICVt'? — S112 — NO / YES

RETRIEVE BLOCK DATA — S113

DECRYPT BLOCK DATA, CREATE ICVi' — S114

ICVi=ICVi'? — S115 — NO / YES

RETRIEVE ALL BLOCKS — S116 — NO / YES

ENCRYPT BLOCK INFORMATION KEY Kbit, CONTENTS KEY Kcon WITH SESSION KEY Kses, AND TRANSMIT THEM TO RECORDING DEVICE — S117

RECEIVE BLOCK INFORMATION KEY Kbit, CONTENTS KEY Kcon ENCRYPTED WITH STORAGE KEY Kstr FROM RECORDING DEVICE — S118

LOCALIZATION FLAG=1? — S119 — NO / YES

CREATE INDIVIDUAL CHECK VALUE ICVdev FROM INTERMEDIATE CHECK VALUE — S120

FORM DATA FORMAT TO BE STORED IN EXTERNAL MEMORY OF RECORDING DEVICE — S121

TRANSMIT DATA TO RECORDING DEVICE AND STORE IT IN EXTERNAL MEMORY LOCATED INSIDE THE DEVICE — S122

END

FIG. 39

FORMAT TYPE 2 DOWNLOADING PROCESS

FIG. 40

FORMAT TYPE 3 DOWNLOADING PROCESS

START

S101 MUTUAL AUTHENTICATION AND SESSION KEY SHARED WITH RECORDING DEVICE (CF. FIG. 20)

S102 RETRIEVE HEADER

S103 CREATE ICVa' FROM CONTENT INFORMATION, USAGE POLICY

S104 ICVa=ICVa'? — NO

YES

S105 RETRIEVE OR CREATE DISTRIBUTION KEY Kdis

S161 DECRYPT BLOCK INFORMATION KEY Kbit

S107 DECRYPT BLOCK INFORMATION

S162 CREATE ICVb' FROM BLOCK INFORMATION KEY Kbit BLOCK INFORMATION

S109 ICVb=ICVb'?

S151 RETRIEVE ALL CONTENTS DATA

S152 CREATES INTERMEDIATE CHECK VALUE FROM ICVa, ICVb, CONTENTS DATA

S111 CREATES TOTAL ICVt' FROM INTERMEDIATE CHECK VALUE

S112 ICVt=ICVt'? — NO

YES

S163 DECRYPT BLOCK KEY Kblc

S164 ENCRYPT BLOCK INFORMATION KEY Kbit, BLOCK KEY Kblc WITH SESSION KEY Kses, AND TRANSMIT THEM TO RECORDING DEVICE

S165 RECEIVE BLOCK INFORMATION KEY Kbit, BLOCK KEY Kblc ENCRYPTED WITH STORAGE KEY Kstr FROM RECORDING DEVICE

S119 LOCALIZATION FLAG=1? — NO

YES

S120 CREATE INDIVIDUAL CHECK VALUE ICVdev FROM INTERMEDIATE CHECK VALUE

S121 FORM DATA FORMAT TO BE STORED IN EXTERNAL MEMORY OF RECORDING DEVICE

S122 TRANSMIT DATA TO RECORDING DEVICE AND STORE IT IN EXTERNAL MEMORY LOCATED INSIDE THE DEVICE

END

FIG. 41

FORMAT TYPE 4 DOWNLOADING PROCESS

START

S201 MUTUAL AUTHENTICATION AND SESSION KEY SHARED WITH RECORDING DEVICE (CF. FIG. 20)

S202 RETRIEVE HEADER

S203 CREATE ICV$_a$' FROM CONTENTS INFORMATION, USAGE POLICY

S204 ICV$_a$=ICV$_a$'? — NO → (B)

YES

S205 TRANSMIT BLOCK INFORMATION KEY K$_{bit}$, CONTENTS KEY K$_{con}$ ENCRYPTED WITH STORAGE KEY K$_{str}$ TO RECORDING DEVICE

S206 RECEIVE BLOCK INFORMATION KEY K$_{bit}$, CONTENTS KEY K$_{con}$ ENCRYPTED WITH SESSION KEY K$_{ses}$ FROM RECORDING DEVICE

S207 DECRYPT BLOCK INFORMATION KEY K$_{bit}$, CONTENTS KEY K$_{con}$

S208 DECRYPT BLOCK INFORMATION

S209 CREATES ICV$_B$' FROM BLOCK INFORMATION KEY K$_{bit}$, CONTENTS KEY K$_{con}$, BLOCK INFORMATION

S210 ICV$_b$=ICV$_b$'? — NO → (B)

YES

S211 CREATE INTERMEDIATE CHECK VALUE FROM ICV$_A$, ICV$_B$, ICV1...ICVN

S212 LOCALIZATION FLAG =1? — NO → S215

YES

S213 CREATE INDIVIDUAL CHECK VALUE ICV$_{dev}$ FROM INTERMEDIATE CHECK VALUE

S214 ICV$_{dev}$=ICV$_{dev}$'? — NO → (B)

YES → (A)

S215 CREATES TOTAL ICV$_t$' FROM INTERMEDIATE CHECK VALUE

S216 ICV$_t$=ICV$_t$'? — NO → (B)

YES → (A)

(A)

S217 RETRIEVE BLOCK DATA

S218 ENCRYPTED? — NO

YES

S219 DECRYPT BLOCK DATA

S220 OBJECT FOR CHECK (ICV)? — NO

YES

S221 CREATE ICV$_i$'

S222 ICV$_i$=ICV$_i$'? — NO

YES

S223 FORM CONTENTS ORDINARY MESSAGE DATA FOR EXECUTION (REPRODUCTION) ON SYSTEM RAM

S224 RETRIEVE ALL BLOCKS? — NO

YES

S225 EXECUTE REPRODUCING CONTENTS (PROGRAMS, DATA)

(B)

END

FIG. 42

FORMAT TYPE 1 REPRODUCTION PROCESS

START

S201 MUTUAL AUTHENTICATION AND SESSION KEY SHARED WITH RECORDING DEVICE (CF. FIG. 20)

S202 RETRIEVE HEADER

S203 CREATE ICVa' FROM CONTENTS INFORMATION, USAGE POLICY

S204 ICVa=ICVa'? — NO

YES

S205 TRANSMIT BLOCK INFORMATION KEY Kbit, CONTENTS KEY Kcon ENCRYPTED WITH STORAGE KEY Kstr TO RECORDING DEVICE

S206 RECEIVE BLOCK INFORMATION KEY Kbit, CONTENTS KEY Kcon ENCRYPTED WITH SESSION KEY Kses FROM RECORDING DEVICE

S207 DECRYPT BLOCK INFORMATION KEY Kbit, CONTENTS KEY Kcon

S208 DECRYPT BLOCK INFORMATION

S209 CREATES ICVb' FROM BLOCK INFORMATION KEY Kbit, CONTENTS KEY Kcon, BLOCK INFORMATION

S210 ICVb=ICVb'? — NO

YES

S211 CREATE INTERMEDIATE CHECK VALUE FROM ICVa, ICVb, ICV1...ICVN

S212 LOCALIZATION FLAG =1? — NO

YES

S213 CREATE INDIVIDUAL CHECK VALUE ICVdev FROM INTERMEDIATE CHECK VALUE

S214 ICVdev=ICVdev'? — NO

YES

(B)    (A)

(A)

S217 RETRIEVE BLOCK DATA

S231 DECRYPT ENCRYPTION PART, CREATE PART ICV

YES

S232 CREATE BLOCK ICVi'

S222 ICVi=ICVi'? — NO

YES

S223 FORM CONTENTS ORDINARY MESSAGE DATA FOR EXECUTION (REPRODUCTION) ON SYSTEM RAM

S224 RETRIEVE ALL BLOCKS? — NO

YES

S225 EXECUTE REPRODUCING CONTENTS (PROGRAMS, DATA)

(B)

END

S215 CREATES TOTAL ICVt' FROM INTERMEDIATE CHECK VALUE

S216 ICVt=ICVt'? — NO

YES

(B)    (A)

FIG. 43

START

S201
MUTUAL AUTHENTICATION AND SESSION KEY SHARED WITH RECORDING DEVICE(CF. FIG. 20)

S202
RETRIEVE HEADER

S203
CREATE ICVa' FROM CONTENTS INFORMATION, USAGE POLICY

S204
ICVa=ICVa'?
NO → (B)
YES

S205
TRANSMIT BLOCK INFORMATION KEY $K_{bit}$, CONTENTS KEY $K_{con}$ ENCRYPTED WITH STORAGE KEY $K_{str}$ TO RECORDING DEVICE

S206
RECEIVE BLOCK INFORMATION KEY $K_{bit}$, CONTENTS KEY $K_{con}$ ENCRYPTED WITH SESSION KEY $K_{ses}$ FROM RECORDING DEVICE

S207
DECRYPT BLOCK INFORMATION KEY $K_{bit}$, CONTENTS KEY $K_{con}$

S208
DECRYPT BLOCK INFORMATION

S209
CREATES ICVb' FROM BLOCK INFORMATION KEY $K_{bit}$, CONTENTS KEY $K_{con}$, BLOCK INFORMATION

S210
ICVb=ICVb'?
NO → (B)
YES → (A)

(A)
S217
RETRIEVE BLOCK DATA

S241
DECRYPT BLOCK KEY $K_{blc}$

S242
DECRYPT BLOCK DATA

S243
EXECUTE REPRODUCING CONTENTS (PROGRAM, DATA)

S244
RETRIEVE ALL BLOCKS?
NO → (A)
YES

(B) → YES

END

FIG. 44

110

FORMAT TYPE 3 REPRODUCTION PROCESS

START

S201 MUTUAL AUTHENTICATION AND SESSION KEY SHARED WITH RECORDING DEVICE (CF. FIG. 20)

S202 RETRIEVE HEADER

S203 CREATE ICVa' FROM CONTENTS INFORMATION, USAGE POLICY

S204 ICVa=ICVa'? — NO

YES

S251 TRANSMIT BLOCK INFORMATION KEY KBIT ENCRYPTED WITH STORAGE KEY KSTR TO RECORDING DEVICE

S252 RECEIVE BLOCK INFORMATION KEY $K_{bit}$ ENCRYPTED WITH SESSION KEY $K_{ses}$ FROM RECORDING DEVICE

S253 DECRYPT BLOCK INFORMATION KEY $K_{bit}$

S208 DECRYPT BLOCK INFORMATION

S25 CREATES ICVb' FROM BLOCK INFORMATION KEY $K_{bit}$, BLOCK INFORMATION

S210 ICVb=ICVb'? — NO

YES

(B)   (A)

(A)

S217 RETRIEVE BLOCK DATA

S255 TRANSMIT BLOCK KEY $K_{blc}$ ENCRYPTED WITH STORAGE KEY $K_{str}$ TO RECORDING DEVICE

S256 RECEIVE BLOCK KEY $K_{blc}$ ENCRYPTED WITH SESSION KEY $K_{ses}$ FROM RECORDING DEVICE

S257 DECRYPT BLOCK KEY $K_{blc}$

S242 DECRYPT BLOCK DATA

S243 EXECUTE, REPRODUCE CONTENTS (PROGRAM, DATA)

S244 RETRIEVE ALL BLOCKS? — NO

YES

(B)

END

FIG. 45

111

ICV CREATION
(EX. CONTENTS OFFERER)

ICV VERIFIER
(EX. CONTENTS USER)

ICV CREATION

SHARED KEY
Kicv FOR ICV

DATA FOR VERIFICATION,
E. G.., CONTENTS, ETC.

DELIVER →

DATA FOR VERIFICATION,
E. G.., CONTENTS, ETC.

ICV CREATION

SHARED KEY
Kicv FOR ICV ↓

ICV

DELIVER →

ICV

COMPARE
=?

ICV'

FIG. 46

ICV CREATION
(EX. CONTENTS OFFERER)

ICV VERIFIER
(EX. CONTENTS USER)

CALCULATE

DATA FOR VERIFICATION,
E. G.., CONTENTS, ETC.

DELIVER →

DATA FOR VERIFICATION,
E. G.., CONTENTS, ETC.

VERIFIED
VALUE

CREATION'S
PRIVATE
KEY KPRI

ICV CREATION

CREATION'S
PUBLIC KEY Kpub

‖ ? COMPARE

ICV

DELIVER →

ICV

CALCULATE

VERIFIED
VALUE'

FIG. 47

112

## CERTIFICATION CENTER

ICV VERIFIER
(EX. CONTENTS USER)

| ICV PUBLIC KEY ($K_{pub}$) | DELIVER → | PUBLIC KEY ($K_{pub}$) | CALCULATE → | VERIFIED VALUE 1 |

CENTER PRIVATE KEY FOR CREATION OF PUBLIC KEY CERTIFICATE $SK_{pri}$

CENTER PUBLIC KEY $SK_{pub}$ || ? COMPARE

| CERTIFICATE (= CENTER SIGNATURE) | → DELIVER | CERTIFICATE (= CENTER SIGNATURE) | → CALCULATE | VERIFIED VALUE 1' |

ICV CREATION
(EX. CONTENTS OFFERER)

| DATA FOR VERIFICATION, E.G.., CONTENTS, ETC. | DELIVER → | DATA FOR VERIFICATION, E.G.., CONTENTS, ETC. | CALCULATE → | VERIFIED VALUE 2 |

CREATION'S PRIVATE KEY $K_{pri}$    ICV CREATION

VERIFIED CREATION'S PUBLIC KEY $K_{pub}$ || ? COMPARE

| ICV | → DELIVER | ICV | → CALCULATE | VERIFIED VALUE 2' |

FIG. 48

EP 1 195 684 A1

RECORD REPRODUCING
PLAYER    300

RECORDING DEVICE    400

MEDIA    500

DISTRIBUTION
KEY Kdis

| CONTENTS ID | |
|---|---|
| CONTENTS KEY KCON | |
| Kcon | CONTENTS |
| Kcon | CONTENTS |
| Kcon | CONTENTS |

**RECORD REPRODUCING PLAYER
IDENTIFIER [IDdev]**

**MASTER KEY FOR
DISTRIBUTION KEY [MKdis]**

**MASTER KEY FOR RECORDING DEVICE
AUTHENTICATION KEY [MKake]**

**MASTER KEY FOR RECORD REPRODUCING
PLAYER SIGNATURE KEY [MKdev]**

**KEY BLOCK 1**

RECORDING DEVICE CONTENTS ID 1,
AUTHENTICATION KEY 1,
INITIAL VALUE 1, STORAGE KEY 1
RANDOM NUMBER CREATION KEY 1
SPECIES 1

**KEY BLOCK 2**

RECORDING DEVICE CONTENTS ID 2
AUTHENTICATION KEY 2
INITIAL VALUE 2, STORAGE KEY 2
RANDOM NUMBER CREATION KEY 2
SPECIES 2

COMMUNICATION
MEANS

600

(RECORDING DEVICE CONTENTS ID = IDMEM)

DISTRIBUTION KEY : $K_{DIS}$ = DES (MKdis, CONTENTS ID)

AUTHENTICATION KEY : $K_{ake}$ = DES (MKake, IDmem)

RECORD REPRIDUCING
PLAYER SIGNATURE KEY : $K_{dev}$ = DES (MKdev, IDdev)

FIG. 49

METHOD TO CREATE INDIVIDUAL KEYS FROM MASTER KEY-(1)

[BASIC FLOW]

CONTENTS CREATION OR ADMINISTRATOR · USER DEVICE

```
┌─────────────────────────────┐      ┌─────────────────────────────┐
│   START CREATING CONTENTS   │      │    START USING CONTENTS     │
└─────────────────────────────┘      └─────────────────────────────┘
              │  ⌇S501                            │  ⌇S504
              ▼                                    ▼
┌─────────────────────────────┐      ┌─────────────────────────────┐
│  DETERMINED ID (CONTENTS ID)│      │     RETRIEVE CONTENTS ID    │
│        FOR CONTENTS         │      └─────────────────────────────┘
└─────────────────────────────┘                    │  ⌇S505
              │  ⌇S502                              ▼
              ▼                      ┌─────────────────────────────┐
┌─────────────────────────────┐      │ CREATE KEYS(EX. DISTRIBUTION│
│ CREATE KEYS(EX. DISTRIBUTION│      │  KEY Kdis) FROM CONTENTS ID,│
│   KEY Kdis) FROM MASTER KEY │      │   MASTER KEY (EX. MASTER KEY│
│  (EX. MASTER KEY FOR CREATING│     │   FOR CREATING DISTRIBUTION │
│ DISTRIBUTION KEY: MKdis) AND│      │        KEY: MKdis)          │
│         CONTENTS ID         │      └─────────────────────────────┘
└─────────────────────────────┘                    │  ⌇S506
              │  ⌇S503                              ▼
              ▼                      ┌─────────────────────────────┐
┌─────────────────────────────┐      │  DECRYPT ENCRYPTED PART OF  │
│  ENCRYPT PART OR WHOLE OF   │      │    CONTENTS WITH A KEY      │
│     CONTENTS USING A KEY    │      │ (EX. DISTRIBUTION KEY Kdis) │
│ (EX. DISTRIBUTION KEY Kdis) │      └─────────────────────────────┘
└─────────────────────────────┘                    │  ⌇S507
              │                                     ▼
              ▼                      ┌─────────────────────────────┐
┌─────────────────────────────┐      │        USE CONTENTS         │
│  CONTENTS CREATION FINISHED │      └─────────────────────────────┘
└─────────────────────────────┘                    │
                                                    ▼
                                     ┌─────────────────────────────┐
                                     │  CONTENTS CREATION FINISHED │
                                     └─────────────────────────────┘
```

[KEY POSSESSION COMPOSITION]

CONTENTS CREATION OR ADMINISTRATOR                USER DEVICE

```
┌─────────────────────────────┐              ┌─────────────────────────────┐
│    MASTER KEY(EX. MASTER    │    SHARE     │    MASTER KEY(EX. MASTER    │
│     KEY FOR CREATING        │ ◄─────────►  │      KEY FOR CREATING       │
│ DISTRIBUTION KEY: MKdis)    │              │  DISTRIBUTION KEY: MKdis)   │
└─────────────────────────────┘              └─────────────────────────────┘
```

```
┌──────────────────┐
│   CONTENTS ID    │
└──────────────────┘

┌──────────────────┐
│  ID PROTECTION   │
│    CONTENTS      │
└──────────────────┘
```

FIG. 50

METHOD TO CREATE INDIVIDUAL KEYS FROM MASTER KEY-(2)

[BASIC FLOW]

CONTENTS CREATION OR ADMINISTRATOR      USER DEVICE

( START CREATING CONTENTS )      ( START USING CONTENTS )

S511

DETERMINED ID (CONTENTS ID) FOR CONTENTS

S512

SELECT MASTER KEY (EX. MASTER KEY FOR CREATING DISTRIBUTION KEY: $MK_{dis}$ 1...N) FOR EQUIPMENT WITH WHICH USE OF CONTENTS IS PERMITTED

S513

CREATE KEYS (EX. DISTRIBUTION KEY KDIS 1...N) FROM MASTER KEY (EX. MASTER KEY FOR CREATING DISTRIBUTION KEY: $MK_{DIS}$ 1...N) FOR EQUIPMENT WITH WHICH USE OF CONTENTS IS PERMITTED AND CONTENTS ID

S514

MAKE PART OR WHOLE OF CONTENTS ENCRYPTED CONTENTS C1...N USING KEY (EX. DISTRIBUTION KEY $K_{dis}$ 1...N)

S515

CONTENTS ID, MASTER KEY CONTENTS ID, ENCRYPTED CONTENTS PUT TOGETHER AS A DELIVERY UNIT, CONTENTS CREATION FINISHED

( CONTENTS CREATION FINISHED )

S516

DELIVERED MASTER KEY CONTENTS ID AND USER'S OWN MASTER KEY COORDINATED? → END

S517

RETRIEVE CONTENTS ID

S518

CREATE KEY (EX. DISTRIBUTION KEY $K_{disi}$) FROM CONTENTS ID AND MASTER KEY (EX. MASTER KEY FOR CREATING DISTRIBUTION KEY: $MK_{dis}$)

S519

DECRYPT ENCRYPTED PART OF CONTENTS USING KEY (EX. DISTRIBUTION KEY $K_{dis}$)

S520

USE CONTENTS

( CONTENTS CREATION FINISHED )

[KEY POSSESSION COMPOSITION]

CONTENTS CREATION OR ADMINISTRATOR      USER DEVICE

| MASTER KEY (EX. MASTER KEY FOR CREATING DISTRIBUTION KEY: $MK_{dis}$) | ← SHARE → | MASTER KEY (EX. MASTER KEY FOR CREATING DISTRIBUTION KEY: $MK_{disi}$) |

CONTENTS ID

ID PROTECTION CONTENTS

FIG. 51

CONTENTS PROVIDERS! ADMINISTRATORS

USER DEVICES FOR JAPAN

| MASTER KEYS | ZONES | ENCRYPTED KEYS | ENCRYPTION (CONTENTS) |
|---|---|---|---|
| MK1 | JAPAN | (MK1, CONTENTS ID)→K1 | K1 (CONTENTS) |
| MK2 | U.S. | (MK2, CONTENTS ID)→K2 | K2 (CONTENTS) |
| MK3 | EU | (MK3, CONTENTS ID)→K3 | K3 (CONTENTS) |
| MK4 | : | : | : |
| : | : | : | : |

DECRYPT OK

INTERNAL MEMORY

MK1

DECRYPT NO

DECRYPT NO

USER DEVICES FOR U.S.

INTERNAL MEMORY

MK2

DECRYPT OK

USER DEVICES FOR EU

INTERNAL MEMORY

MK3

DECRYPT OK

FIG. 52

EP 1 195 684 A1

METHOD TO CREATE INDIVIDUAL KEYS FROM MASTER KEY – (3)

[BASIC FLOW]

MEDIA CREATION OR ADMINISTRATOR                    USER DEVICE

```
(    START CREATING MEDIA    )         (    START USING MEDIA    )
            │                                      │
            ▼          ~S521                       ▼          ~S524
┌───────────────────────────┐         ┌───────────────────────────┐
│   DETERMINED ID (MEDIA ID) │         │      RETRIEVE MEDIA ID     │
│         FOR MEDIA          │         └───────────────────────────┘
└───────────────────────────┘                     │          ~S525
            │          ~S522                       ▼
            ▼                             ┌───────────────────────────┐
┌───────────────────────────┐           │CREATE A KEY(EX. DISTRIBUTION│
│CREATE A KEY(EX. DISTRIBUTION│          │  KEY Kdis) FROM MEDIA ID,  │
│  KEY Kdis) FROM MASTER KEY │          │  MASTER KEY (EX. MASTER KEY│
│ (EX. MASTER KEY FOR CREATING│         │  FOR CREATING DISTRIBUTION │
│ DISTRIBUTION KEY: MKdis)   │          │        KEY: MKdis)         │
│       AND MEDIA ID         │          └───────────────────────────┘
└───────────────────────────┘                     │          ~S526
            │          ~S523                       ▼
            ▼                             ┌───────────────────────────┐
┌───────────────────────────┐           │ DECRYPT ENCRYPTED PART OF  │
│   ENCRYPT PART OR WHOLE OF │           │    CONTENTS WITH A KEY     │
│    CONTENTS USING A KEY    │           │ (EX. DISTRIBUTION KEY Kdis)│
│ (EX. DISTRIBUTION KEY Kdis)│           └───────────────────────────┘
└───────────────────────────┘                     │          ~S527
            │                                      ▼
            ▼                             ┌───────────────────────────┐
(   MEDIA CREATION FINISHED   )          │       USE CONTENTS         │
                                         └───────────────────────────┘
                                                   │
                                                   ▼
                                         (    MEDIA USE FINISHED    )
```

[KEY POSSESSION COMPOSITION]

MEDIA CREATION OR ADMINISTRATOR                    USER DEVICE

```
┌───────────────────────────┐              ┌───────────────────────────┐
│  MASTER KEY(EX. MASTER KEY │   SHARE     │  MASTER KEY(EX. MASTER KEY │
│ FOR CREATING DISTRIBUTION  │◄─────────►  │ FOR CREATING DISTRIBUTION  │
│       KEY: MKdis)          │             │       KEY: MKdis)          │
└───────────────────────────┘              └───────────────────────────┘
```

```
        ╭───────────────────╮
        │  ┌─────────────┐   │
        │  │  MEDIA ID   │   │
        │  └─────────────┘   │
        │  ┌─────────────┐   │
        │  │  ENCRYPTED  │   │
        │  │  CONTENTS   │   │
        │  └─────────────┘   │
        ╰───────────────────╯
```

FIG. 53

METHOD TO CREATE INDIVIDUAL KEYS FROM MASTER KEY-(4)

[BASIC FLOW]

RECORD REPRODUCING PLAYER USER          SYSTEM ADMINISTRATOR

( START STORING CONTENTS )              ( START RESTORING PROCESS
                                          ON STORED DATA )

S531                                    S534

CREATE A KEY (EX. CONTENTS              RETRIEVE RECORD REPRODUCING
KEY Kcon) FROM MASTER KEY               PLAYER ID
(EX. MASTER KEY FOR CREATING
CONTENTS KEY: MKcon) AND                S535
RECORD REPRODUCTION
PLAYER ID                               CREATE A KEY (EX. CONTENTS
                                        KEY Kcon) FROM RECORD
S532                                    REPRODUCING PLAYER ID AND
                                        MASTER KEY (EX. MASTER
ENCRYPT PART OR WHOLE OF                KEY FOR CREATING CONTENTS
CONTENTS USING KEY                      KEY: MKcon)
(EX. CONTENTS KEY Kcon)
                                        S536
S533
                                        DECRYPT ENCRYPTED PART OF
STORE ENCRYPTED CONTENTS                CONTENTS USING A KEY
IN RECORDING MEDIUM                     (EX. CONTENTS KEY Kcon)

( CONTENTS STORAGE FINISHED )           ( RESTORING PROCESS FOR
                                          STORED DATA FINISHED )

[KEY POSSESSION COMPOSITION]

RECORD REPRODUCING PLAYER USER          SYSTEM ADMINISTRATOR

MASTER KEY (EX. MASTER KEY    SHARE    MASTER KEY (EX. MASTER KEY
FOR CREATING CONTENTS                  FOR CREATING CONTENTS
KEY: MKcon)                            KEY: Mcon)

RECORD
REPRODUCING
PLAYER ID

ENCRYPTED
CONTENTS

FIG. 54

METHOD TO CREATE INDIVIDUAL KEYS FROM MASTER KEY-(5)

[BASIC FLOW]

SLAVE DEVICE
(EX. RECORDING DEVICE)

HOST DEVICE
(EX. RECORD REPRODUCING PLAYER)

```
┌──────────────────────────┐        ┌──────────────────────────┐
│   START INITIALIZATION    │        │      START MUTUAL         │
│  PROCESS ON SLAVE DEVICE  │        │  AUTHENTICATION PROCESS   │
└──────────────────────────┘        └──────────────────────────┘
             │ ～S541                            │ ～S543
             ▼                                   ▼
┌──────────────────────────┐        ┌──────────────────────────┐
│ CREATE A KEY (AUTHENTICATION│      │  RETRIEVE SLAVE DEVICE ID │
│  KEY Kake FROM MASTER KEY │        └──────────────────────────┘
│  (MASTER KEY FOR CREATING │                     │ ～S544
│ AUTHENTICATION KEY: MKake │                     ▼
│    AND SLAVE DEVICE ID    │        ┌──────────────────────────┐
└──────────────────────────┘        │ CREATE A KEY(AUTHENTICATION│
             │ ～S542               │  KEY Kake FROM SLAVE DEVICE│
             ▼                      │  ID AND MASTER KEY (MASTER │
┌──────────────────────────┐        │     KEY FOR CREATING      │
│  STORE AUTHENTICATION KEY │        │ AUTHENTICATION KEY: MKake)│
│   IN THE MEMORY INSIDE    │        └──────────────────────────┘
│      SLAVE DEVICE         │                     │ ～S545
└──────────────────────────┘                     ▼
             │                      ┌──────────────────────────┐
             ▼                      │  EXECUTE AUTHENTICATION   │
┌──────────────────────────┐        │   PROCESS (CF. FIG. 20)   │
│ SLAVE DEVICE INITIALIZATION│      │  USING A KEY (AUTHENTICATION│
│        FINISHED           │        │       KEY Kake)           │
└──────────────────────────┘        └──────────────────────────┘
                                                  │
                                                  ▼
                                     ┌──────────────────────────┐
                                     │   MUTUAL AUTHENTICATION   │
                                     │     PROCESS FINISHED      │
                                     └──────────────────────────┘
```

[KEY POSSESSION COMPOSITION]

SLAVE DEVICE
(EX. RECORDING DEVICE)

HOST DEVICE
(EX. RECORD REPRODUCING PLAYER)

```
┌──────────────────────────┐              ┌──────────────────────────┐
│ MASTER KEY(MASTER KEY FOR │    SHARE     │ MASTER KEY(MASTER KEY FOR │
│  CREATING AUTHENTICATION  │ ◄────────►   │  CREATING AUTHENTICATION  │
│      KEY: MKake)          │              │      KEY: Make)           │
└──────────────────────────┘              └──────────────────────────┘

              ┌────────────────────┐
              │  ┌──────────────┐  │
              │  │    SLAVE     │  │
              │  │  DEVICE ID   │  │
              │  └──────────────┘  │
              │  ┌──────────────┐  │
              │  │AUTHENTICATION│  │
              │  │     KEY      │  │
              │  └──────────────┘  │
              └────────────────────┘
```

FIG. 55

STORING (DOWNLOADING) PROCESS OF
TRIPLE DES-APPLIED CONTENTS KEYS: Kc1, Kc2, (Kc3)

| PROCESSES ON PART OF<br>RECORD REPRODUCING PLAYER 300 | PROCESSES ON PART OF<br>RECORDING DEVICE 400 |
|---|---|
| AUTHENTICATION PROCESS &<br>CREATION OF SESSION KEY Kses | AUTHENTICATION PROCESS &<br>CREATION OF SESSION KEY Kses |

S302
CREATE, COLLATE
EACH CHECK VALUE ICV

S301

S303
DECRIPT CONTENTS Kc1, Kc2, (Kc3)
ENCRIPTED WITH DISTRIBUTION
KEY Kdis

S304
ENCRYPT CONTENTS KEY Kc1 WITH
SESSION KEY Kses AND TRANSMIT
IT TO MEMORY DEVICE

S305
DECRYPT CONTENTS KEY Kc1
WITH SESSION KEY Kses

S306
ENCRYPT CONTENTS KEY Kc1 WITH
SESSION KEY Kstr AND TRANSMIT
IT TO RECORD REPRODUCING PLAYER

S307
ENCRYPT CONTENTS KEY KC2
WITH SESSION KEY Kses AND
TRANSMIT IT TO MEMORY DEVICE

S308
DECRYPT CONTENTS KEY Kc2
WITH SESSION KEY Kses

S309
ENCRYPT CONTENTS KEY Kc2 WITH
SESSION KEY Kstr AND TRANSMIT
IT TO RECORD REPRODUCING PLAYER

S310
ENCRYPT CONTENTS KEY Kc3 WITH
SESSION KEY Kses AND TRANSMIT
IT TO MEMORY DEVICE

S311
DECRYPT CONTENTS KEY Kc3
WITH SESSION KEY Kses

S312
ENCRYPT CONTENTS KEY Kc3 WITH
SESSION KEY Kstr AND TRANSMIT
IT TO RECORD REPRODUCING PLAYER

S313
FROM DATA FORMAT AND TRANSMIT
IT TO RECORDING DEVICE

S314
STORE RECEIVED DATA
(CONTENTS KEYS: Kc1, Kc2 (Kc3)
ENCRYPTED WITH STRAGE KEY Kstr)
IN EXTRNAL MEMORY OF
RECORDING DEVICE

FIG. 56

START

EXECUTE AUTHENTICATION PROCESS
(CF. FIG. 20) ON EACH OF RECORDING
DEVICES INSTALLED ~S611

EXTRACT DRIVE ENABLE PROGRAMS
(TYPES OF CONTENTS ARE PROGRAMS)
OUT OF RECORDING MEDIA OF
AUTHENTICATED RECORDING DEVICES ~S612

SELECT A PROGRAM CONTAINING INFORMATION
OF THE HIGHEST PRIORITY ORDER FROM
AMONG EXTRACTED DRIVE ENABLE PROGRAMS ~S613

DRIVE SELECTED PROGRAM ~S614

END

FIG. 57

EP 1 195 684 A1

START

EXECUTE AUTHENTICATION PROCESS
(CF. FIG. 20) ON RECORDING DEVICE (I)
INSTALLED — S621

AUTHENTICATION SUCCESSFUL — S622 — NO

YES

RETRIEVE DRIVE ENABLE PROGRAMS
(TYPES OF CONTENTS ARE PROGRAMS)
FROM RECORDING MEDIA OF
AUTHENTICATED RECORDING DEVICE (I) — S623

ARE THERE DRIVE ENABLE PROGRAMS
(TYPES OF CONTENTS ARE PROGRAMS)
IN RECORDING MEDIA OF AUTHENTICATED
RECORDING DEVICE (I)? — S624 — NO

YES

SELECT A PROGRAM OF THE HIGHEST
DRIVE PRIORITY — S625

DRIVE SELECTED PROGRAM — S626

END

S628 — I=i+1

CONTENTS-SEARCHING
FINISHED ON RECORDING
DEVICES INSTALLED — S627 — NO

YES

FIG. 58

123

```
                    ┌──────────────┐
                    │    START     │
                    └──────────────┘
                           │
                           ▼                    S651
        ┌──────────────────────────────────────┐
        │   EXECUTE AUTHENTICATION PROCESS      │
        │  (CF. FIG. 20) ON EACH OF RECORDING   │
        │        DEVICES INSTALLED              │
        └──────────────────────────────────────┘
                           │
                           ▼                    S652
        ┌──────────────────────────────────────┐
        │    EXTRACT DRIVE ENABLE PROGRAMS      │
        │  (TYPES OF CONTENTS ARE PROGRAMS)     │
        │     OUT OF RECORDING MEDIA OF         │
        │   AUTHENTICATED RECORDING DEVICES     │
        └──────────────────────────────────────┘
                           │
                           ▼                    S653
        ┌──────────────────────────────────────┐
        │  DISPLAY INFORMATION OF EXTRACTED DRIVE│
        │   ENABLE PROGRAMS ON DISPLAY MEANS    │
        └──────────────────────────────────────┘
                           │
                           ▼                    S654
        ┌──────────────────────────────────────┐
        │    RECEIVE SELECTED DRIVE PROGRAMS    │
        │           INPUT BY USER               │
        └──────────────────────────────────────┘
                           │
                           ▼                    S655
        ┌──────────────────────────────────────┐
        │   DRIVE PROGRAMS SELECTED BY USER     │
        └──────────────────────────────────────┘
                           │
                           ▼
                    ┌──────────────┐
                    │     END      │
                    └──────────────┘
```

FIG. 59

EP 1 195 684 A1

500 — MEDIA

600 — COMMUNICATION MEANS

400 — RECORDING DEVICE

300

301 — CONTROL UNIT

302 — ENCRYPTION PROCESSING UNIT

106 — MAIN CPU

110 — INPUT I/F

CONTROLLER

KEYBOARD

MOUSE

SWITCH

109 — AV PROCESSING UNIT

3090 — MEMORY

3091 — CONTENTS ANALYZING UNIT

3093 — PROGRAM MEMORY UNIT

3092 — DATA MEMORY UNIT

3094 — COMPRESSION/DECOMPRESSION PROCESSING UNIT

3001

3002

FIG. 60

125

EXAMPLE OF CONTENTS COMPOSITION (1)

|  |  |
|---|---|
| VOICE DATA DECODE (DECOMPRESSION) PROGRAM EX. MP3 DECODER ~6101 | COMPRESSED VOICE DATA EX. MP3 ~6102 |
| VOICE DATA DECODE (DECOMPRESSION) PROGRAM EX. MP3 DECODER | COMPRESSED VOICE DATA EX. MP3 |

FIG. 61

EP 1 195 684 A1

START DATA
REPRODUCTION PROCESS

S671

DISPLAY REPRODUCTION DATA INFORMATION
(EX. NAME OF A TUNE) EXISTING IN MEMORY
ON THE MONITOR

S672

RECEIVE DATA SELECTED BY A USER FROM
AMONG REPRODUCTION DATA INFORMATION
DISPLAYED ON THE MONITOR

S673

SELECT A PIECE OF DATA FROM DATA STORED
IN THE MEMORY ACCORDING TO USER SELECTION,
AND EXECUTE REPRODUCTION (DECOMPRESSION)
PROCESS ON IT

DATA REPRODUCTION
PROCESS FINISHED

FIG. 62

EXAMPLE OF CONTENTS COMPOSITION (2)

| HEADER | VOICE DATA DECODE (DECOMPRESSION) PROGRAM EX. MP3 DECODER |
|---|---|

6201 6202

CONTENTS ID
(PROGRAM)
(MP3 DECODER)

| HEADER | VOICE DATA DECODE (DECOMPRESSION) PROGRAM EX. MP3 DECODER |
|---|---|

6203 6204

CONTENTS ID
(VOICE DATA)
(MP3 COMPRESSION)

| HEADER | COMPRESSED VOICE DATA EX. MP3 |
|---|---|

FIG. 63

START DATA
REPRODUCTION PROCESS

S675

DISPLAY REPRODUCTION DATA INFORMATION
(EX. NAME OF A TUNE) EXISTING IN MEMORY
ON THE MONITOR

S676

RECEIVE DATA SELECTED BY A USER FROM
AMONG REPRODUCTION DATA INFORMATION
DISPLAYED ON THE MONITOR

S677

SEARCH PROGRAM OFFERING MEANS WHICH
MEMORY AND REPRODUCTION EQUIPMENT CAN
MAKE ACCESS TO FOR A REPRODUCTION PROGRAM
OF DATA ACCORDING TO USER SELECTION

S678

PROGRAM
DETECTION OK?

NO → INTERRUPT
PROCESSING

S679

EXTRACT USER-SELECTED DATA FROM MEMORY
AND EXECUTE REPRODUCTION (DECOMPRESSION)
PROCESS ON IT

DATA REPRODUCTION
PROCESS FINISHED

FIG. 64

EXAMPLE OF CONTENTS COMPOSITION (3)

| HEADER | VOICE DATA DECODE (DECOMPRESSION) PROGRAM EX. PM3 DECODER | COMPRESSED VOICE DATA EX. MP3 |
|---|---|---|

6301     6302     6303

CONTENTS ID
COMPOSITION INFORMATION
REPRODUCTION PRIORITY INFORMATION

FIG. 65

EP 1 195 684 A1

START DATA
REPRODUCTION PROCESS

S681

SET REPRODUCTION DATA INFORMATION
(EX. NAME OF A TUNE) EXISTING IN MEMORY
AS SEARCH LIST

S682

SELECT A PIECE OF DATA OF HIGH
PRIORITY ORDER FROM SEARCH LIST

S683

SELECT A PIECE OF DATA FROM DATA STORED
IN THE MEMORY ACCORDING TO USER SELECTION,
AND EXECUTE REPRODUCTION (DECOMPRESSION)
PROCESS ON IT

DATA REPRODUCTION
PROCESS FINISHED

FIG. 66

EXAMPLE OF CONTENTS COMPOSITION (4)

6401          6402

| HEADER | VOICE DATA DECODE<br>(DECOMPRESSION) PROGRAM<br>EX. MP3 DECODER |
|---|---|

CONTENTS ID
(PROGRAM)
(MP3 DECODER)

6403          6404

| HEADER | COMPRESSED VOICE DATA<br>EX. PM3 |
|---|---|

CONTENTS ID
(VOICE DATA)
(MP3 COMPRESSION)
REPRODUCTION PRIORITY
INFORMATION

| HEADER | COMPRESSED VOICE DATA<br>EX. MP3 |
|---|---|

FIG. 67

EP 1 195 684 A1

START DATA
REPRODUCTION PROCESS

S691

SET REPRODUCTION DATA INFORMATION
(EX. NAME OF A TUNE) EXISTING IN MEMORY
AS SEARCH LIST

S692

SELECT A PIECE OF DATA OF HIGH
PRIORITY ORDER FROM SEARCH LIST

S693

SEARCH PROGRAM OFFERING MEANS WHICH
MEMORY AND REPRODUCTION EQUIPMENT CAN
MAKE ACCESS TO FOR A REPRODUCTION PROGRAM
OF DATA ACCORDING TO USER SELECTION

S694

PROGRAM
DETECTION OK?

NO

S696

DELETE DATA TO WHICH
THE SAME PROGRAM IS
APPLIED, FROM SEARCH LIST

YES

S695

EXTRACT USER-SELECTED DATA FROM MEMORY
AND EXECUTE REPRODUCTION (DECOMPRESSION)
PROCESS ON IT

S697

IS SEARCH
LIST VACANT?

NO

YES

DATA REPRODUCTION
PROCESS FINISHED

FIG. 68

EP 1 195 684 A1

SAVE DATA ENCRYPTION KEY: $K_{sav} = K_{con}$
SAVE DATA ENCRYPTION KEY: $K_{sav} = K_{sys}$
SAVE DATA ENCRYPTION KEY: $K_{sav} = K_{dev}$
SAVE DATA ENCRYPTION KEY: $K_{sav} =$ CONTENTS ID, (MKx, CONTENTS ID)
SAVE DATA ENCRYPTION KEY: $K_{sav} =$ RECORD REPRODUCING PLAYER ID (IDDEV)
SAVE DATA ENCRYPTION KEY: $K_{sav} = (K_{con}\hat{}K_{dev})$ or DES (MKx, $K_{con}\hat{}K_{dev}$)
SAVE DATA ENCRYPTION KEY: $K_{sav} = ($ CONTENT ID$\hat{}K_{dev})$ or DES (MKx, CONTENT ID$\hat{}K_{dev}$)
SAVE DATA ENCRYPTION KEY: $K_{sav} = ($ KCON$\hat{}$RECORD REPRODUCING PLAYER ID) orDES (MKx, Kcon$\hat{}$RECORD REPRODUCING PLAYER ID)
SAVE DATA ENCRYPTION KEY: $K_{sav} = ($ CONTENTS ID$\hat{}$RECORD REPRODUCING PLAYER ID) orDES
(MKx, CONTENTS ID$\hat{}$RECORD REPRODUCING PLAYER ID)
SAVE DATA ENCRYPTION KEY: $K_{sav} =$ PASSWORD OR DES (MKx, PASSWORD) ETC.

FIG. 69

(1) EXAMPLE OF SAVE DATA STORAGE PROCESS USING
CONTENTS INDIVIDUAL KEY, OR SYSTEM SHARED KEY

```
        ┌─────────────────────┐
        │   START SAVE DATA    │
        │   STORAGE PROCESS    │
        └─────────────────────┘
                   │
                   ▼                              ～S701
        ┌─────────────────────────────────┐
        │      RETRIEVE CONTENTS          │
        │   IDENTIFIER (EX. GAME ID)      │
        └─────────────────────────────────┘
                   │
                   ▼          ～S702
              ╱─────────────╲        NO
             ╱ USE OF PROGRAM ╲──────────────────┐
             ╲   LIMITED?     ╱                   │
              ╲─────────────╱                     │
                   │ YES                          │
                   ▼              ～S703          ▼                    ～S707
    ┌──────────────────────────────────┐  ┌──────────────────────────────┐
    │  RETRIEVE CONTENTS INDIVIDUAL KEY │  │ RETRIEVE SYSTEM SHARED KEY   │
    │ (EX. CONTENTS KEY Kcon),AND CREATE │  │ (EX. SYSTEM SIGNATURE KEY    │
    │  SAVE DATA ENCRYPTION KEY Ksav     │  │ Ksys),AND CREATE SAVE DATA   │
    │  BASED ON CONTENTS INDIVIDUAL KEY  │  │ ENCRYPTION KEY Ksav BASED    │
    │       (EX. CONTENTS KEY)           │  │ ON SYSTEM SHARED KEY         │
    │                                   │  │ (EX. SYSTEM SIGNATURE KEY)   │
    └──────────────────────────────────┘  └──────────────────────────────┘
                   │                              │
                   ▼              ～S704          │
    ┌──────────────────────────────────┐        │
    │  ENCRYPT SAVE DATA WITH SAVE DATA │◄───────┘
    │       ENCRYPTION KEY Ksav         │
    └──────────────────────────────────┘
                   │
                   ▼              ～S705
    ┌──────────────────────────────────┐
    │     STORE ENCRYPTED SAVE DATA    │
    │        IN RECORDING DEVICE       │
    └──────────────────────────────────┘
                   │
                   ▼              ～S706
    ┌──────────────────────────────────┐
    │ WRITE CONTENTS IDENTIFIER (GAME ID),│
    │ 「YES/NO」ON PROGRAM USE RESTRICTION│
    │      IN DATA MANAGEMENT FILE      │
    └──────────────────────────────────┘
                   │
                   ▼
        ┌─────────────────────┐
        │  SAVE DATA STORAGE  │
        │  PROCESS FINISHED   │
        └─────────────────────┘
```

FIG. 70

DATA MANAGEMENT FILE (1)

| DATA NO. | CONTENTS IDENTIFIER (GAME ID) | RECORD REPRODUCING PLAYER IDENTIFIER (IDdev) | PROGRAM USE RESTRICTION |
|---|---|---|---|
| 1 | 12345678... | 56789012... | YES |
| 2 | ABCDEF12... | 09876543... | YES |
| 3 | 12245678... | 58834762... | NO |
| : | | : | : |

FIG. 71

EP 1 195 684 A1

(2) EXAMPLE OF SAVE DATA REPRODUCTION PROCESS USING CONTENTS
INDIVIDUAL KEY, OR SYSTEM SHARED KEY

START SAVE DATA
REPRODUCTION PROCESS

S711
RETRIEVE CONTENTS IDENTIFIER
(EX. GAME ID)

S712
RETRIEVE CONTENTS IDENTIFIER (GAME ID),
「YES/NO」 ON PROGRAM USE RESTRICTION FROM
DATA MANAGEMENT FILE

S713
PROGRAM USE
LIMITED?

NO

YES

S714
RETRIEVE CONTENTS INDIVIDUAL KEY
(EX. CONTENTS KEY Kcon) FROM CONTENTS
DATA, AND CREATE SAVE DATA DECRYPTION
KEY Ksav BASED ON CONTENTS INDIVIDUAL
KEY (EX. CONTENTS KEY)

S717
RETRIEVE SYSTEM SHARED KEY
(EX. SYSTEM SIGNATURE KEY
Ksys FROM RECORD
REPRODUCING PLAYER, AND
CREATE SAVE DATA DECRYPTION
KEY Ksav BASED ON SYSTEM
SHARED KEY (EX. SYSTEM
SIGNATURE KEY)

S715
DECRYPT SAVE DATA WITH SAVE DATA
DECRYPTION KEY Ksav

S716
REPRODUCE, EXECUTE DECRYPTED SAVE DATA
BY RECORD REPRODUCING PLAYER

SAVE DATA REPRODUCING
PROCESS FINSIHED

FIG. 72

(3) EXAMPLE OF SAVE DATA STORAGE PROCESS USING
CONTENTS ID, OR SYSTEM SHARED KEY

START SAVE DATA
STORAGE PROCESS

S721
RETRIEVE CONTENTS
IDENTIFIER (EX. GAME ID)

S722
PROGRAM
USE LIMITED — NO

YES

S723
RETRIEVE CONTENTS IDENTIFIER
(EX. GAME ID) FROM CONTENTS DATA, AND
CREATE SAVE DATA ENCRYPTION KEY Ksav
BASED ON CONTENTS IDENTIFIER
(EX. GAME ID)

S727
RETRIEVE SYSTEM SHARED KEY
(EX. SYSTEM SIGNATURE KEY
Ksys FROM RECORD
REPRODUCING PLAYER, AND
CREATE SAVE DATA ENCRYPTION
KEY Ksav BASED ON SYSTEM
SHARED KEY
(EX. SYSTEM SIGNATURE KEY)

S724
ENCRYPT SAVE DATA USING SAVE
DATA ENCRYPTION KEY Ksav

S725
STORE ENCRYPTED SAVE DATA
IN RECORDING DEVICE

S726
WRITE CONTENTS IDENTIFIER (GAME ID),
「YES/NO」 ON PROGRAM USE RESTRICTION
IN DATA MANAGEMENT FILE

SAVE DATA STORAGE
PROCESS FINISHED

FIG. 73

138

(4) EXAMPLE OF SAVE DATA REPRODUCTION PROCESS USING CONTENTS ID, OR SYSTEM SHARED KEY

START SAVE DATA REPRODUCTION PROCESS

S731
RETRIEVE CONTENTS IDENTIFIER (EX. GAME ID)

S732
RETRIEVE CONTENTS IDENTIFIER (GAME ID), 「YES/NO」 ON PROGRAM USE RESTRICTION FROM DATA MANAGEMENT FILE

S733
PROGRAM USE LIMITED?

NO

YES

S734
RETRIEVE CONTENTS IDENTIFIER (EX. GAME ID) FROM CONTENTS DATA, AND CREATE SAVE DATA DECRYPTION KEY Ksav BASED ON CONTENTS IDENTIFIER (EX. GAME ID)

S737
RETRIEVE SYSTEM SHARED KEY (EX. SYSTEM SIGNATURE KEY Ksys FROM RECORD REPRODUCING PLAYER, AND CREATE SAVE DATA DECRYPTION KEY Ksav BASED ON SYSTEM SHARED KEY (EX. SYSTEM SIGNATURE KEY)

S735
DECRYPT SAVE DATA WITH SAVE DATA DECRYPTION KEY Ksav

S736
EXECUTE REPRODUCING DECRYPTED SAVE DATA BY RECORD REPRODUCING PLAYER

SAVE DATA STORAGE PROCESS FINISHED

FIG. 74

EP 1 195 684 A1

(5) EXAMPLE OF SAVE DATA STORAGE PROCESS USING RECORD REPRODUCING
PLAYER INDIVIDUAL KEY, OR SYSTEM SHARED KEY

START SAVE DATA
STORAGE PROCESS

S741
RETRIEVE CONTENTS
IDENTIFIER (EX. GAME ID)

S742
RECORD REPRODUCING
PLAYER LIMITED

NO →

YES

S743
RETRIEVE RECORD REPRODUCING PLAYER
INDIVIDUAL KEY (EX. RECORD REPRODUCING
PLAYER SIGNATURE KEY Kdev) FROM RECORD
REPRODUCTION PLAYER, AND CREATE SAVE
DATA ENCRYPTION KEY Ksav BASED ON RECORD
REPRODUCTION PLAYER INDIVIDUAL KEY
(EX. RECORD REPRODUCING PLAYER
SIGNATURE KEY Kdev)

S747
RETRIEVE SYSTEM SHARED KEY
(EX. SYSTEM SIGNATURE KEY
Ksys FROM RECORD
REPRODUCING PLAYER, AND
CREATE SAVE DATA ENCRYPTION
KEY Ksav BASED ON SYSTEM
SHARED KEY (EX. SYSTEM
SIGNATURE KEY)

S744
ENCRYPT SAVE DATA USING SAVE
DATA ENCRYPTION KEY Ksav

S745
STORE ENCRYPTED SAVE DATA
IN RECORDING DEVICE

S746
WRITE CONTENTS IDENTIFIER (GAME ID),
「YES/NO」 ON RECORD REPRODUCING PLAYER
RESTRICTION IN DATA MANAGEMENT FILE

SAVE DATA STORAGE
PROCESS FINISHED

FIG. 75

140

DATA MANAGEMENT FILE (2)

| DATA NO. | CONTENTS IDENTIFIER (GAME ID) | RECORD REPRODUCING PLAYER IDENTIFIER (IDdev) | RECORD REPRODUCING PLAYER RESTRICTION |
|---|---|---|---|
| 1 | 12345678... | 56789012... | NO |
| 2 | ABCDEF12... | 09876543... | YES |
| 3 | 12245678... | 58834762... | YES |
| : | : | : | : |

FIG. 76

EP 1 195 684 A1

(6) EXAMPLE OF SAVE DATA REPRODUCTION PROCESS USING RECORD REPRODUCING PLAYER INDIVIDUAL KEY, OR SYSTEM SHARED KEY

```
        ┌─────────────────────────┐
        │   START SAVE DATA        │
        │  REPRODUCTION PROCESS    │
        └─────────────────────────┘
                    │
                    ▼                          ~S751
        ┌─────────────────────────┐
        │   RETRIEVE CONTENTS      │
        │  IDENTIFIER (EX. GAME ID)│
        └─────────────────────────┘
                    │
                    ▼                          ~S752
        ┌─────────────────────────┐
        │ RETRIEVE RECORD REPRODUCING│
        │  PLAYER IDENTIFIER (IDdev)│
        └─────────────────────────┘
                    │
                    ▼                          ~S753
```

S753: RETRIEVE CONTENTS IDENTIFIER, (GAME ID), RECORD REPRODUCING PLAYER IDENTIFIER, 「YES/NO」 ON RECORD REPRODUCING PLAYER RESTRICTION FROM DATA MANAGEMENT FILE (HOWEVER, IN CASE RECORD REPRODUCING PLAYER IDENTIFIER IS NOT IDENTIFIED IN THE SETTING FOR 「YES/NO」 ON RECORD REPRODUCTION PLAYER RESTRICTION, THEN END)

S754: RECORD REPRODUCING PLAYER LIMITED? — NO → S758 / YES → S755

S755: RETRIEVE RECORD REPRODUCING PLAYER SIGNATURE KEY (EX. RECORD REPRODUCING PLAYER SIGNATURE KEY Kdev), AND CREATE SAVE DATA DECRYPT KEY Ksav BASED ON RECORD REPRODUCING PLAYER INDIVIDUAL KEY (EX. RECORD REPRODUCING PLAYER SIGNATURE KEY)

S758: RETRIEVE SYSTEM SHARED KEY (EX. SYSTEM SIGNATURE KEY Ksys FROM RECORD REPRODUCING PLAYER, AND CREATE SAVE DATA DECRYPTION KEY Ksav BASED ON SYSTEM SHARED KEY (EX. SYSTEM SIGNATURE KEY)

S756: DECRYPT SAVE DATA USING SAVE DATA DECRYPT KEY Ksav

S757: EXECUTE REPRODUCING DECRYPTED SAVE DATA BY RECORD REPRODUCING PLAYER

SAVE DATA REPRODUCING PROCESS FINISHED

FIG. 77

(7) EXAMPLE OF SAVE DATA STORAGE PROCESS USING RECORD REPRODUCING PLAYER IDENTIFIER, OR SYSTEM SHARED KEY

```
        ┌──────────────────────┐
        │   START SAVE DATA     │
        │   STORAGE PROCESS     │
        └──────────────────────┘
                   │
                   ▼                        S761
        ┌──────────────────────┐
        │  RETRIEVE CONTENTS    │
        │ IDENTIFIER (EX. GAME ID)│
        └──────────────────────┘
                   │
                   ▼                        S762
        ┌──────────────────────┐
        │ RETRIEVE RECORD REPRODUCING│
        │ PLAYER IDENTIFIER (IDDEV)│
        └──────────────────────┘
                   │
                   ▼          S763
              RECORD REPRODUCING      NO
              PLAYER LIMITED? ────────────────┐
                   │                          │
                   │ YES                      │
                   ▼            S764          ▼           S768
    ┌──────────────────────────┐  ┌──────────────────────────┐
    │ CREATE SAVE DATA ENCRYPTION│  │ RETRIEVE SYSTEM SHARED KEY │
    │ KEY Ksav BASED ON RECORD  │  │ (EX. SYSTEM SIGNATURE KEY  │
    │ REPRODUCING PLAYER        │  │ Ksys FROM RECORD          │
    │ IDENTIFIER (IDdev) RETRIEVED│ │ REPRODUCING PLAYER, AND   │
    │ FROM RECORD REPRODUCING   │  │ CREATE SAVE DATA ENCRYPTION│
    │ PLAYER                    │  │ KEY Ksav BASED ON SYSTEM  │
    └──────────────────────────┘  │ SHARED KEY (EX. SYSTEM     │
                   │              │ SIGNATURE KEY)            │
                   │              └──────────────────────────┘
                   ▼            S765          │
    ┌──────────────────────────┐             │
    │ ENCRYPT SAVE DATA USING SAVE│◄──────────┘
    │ DATA ENCRYPTION KEY Ksav  │
    └──────────────────────────┘
                   │
                   ▼            S766
    ┌──────────────────────────┐
    │ STORE ENCRYPTED SAVE DATA │
    │ IN RECORDING DEVICE       │
    └──────────────────────────┘
                   │
                   ▼            S767
    ┌──────────────────────────┐
    │ WRITE CONTENTS IDENTIFIER (GAME ID),│
    │ RECORD REPRODUCING PLAYER IDENTIFIER│
    │ (ID),「YES/NO」ON RECORD REPRODUCING│
    │ PLAYER RESTRICTION IN DATA│
    │ MANAGEMENT FILE           │
    └──────────────────────────┘
                   │
                   ▼
        ┌──────────────────────┐
        │   SAVE DATA STORAGE   │
        │   PROCESS FINISHED    │
        └──────────────────────┘
```

FIG. 78

(8) EXAMPLE OF SAVE DATA REPRODUCTION PROCESS USING RECORD
REPRODUCING PLAYER IDENTIFIER, OR SYSTEM SHARED KEY

```
        ┌─────────────────────────┐
        │     START SAVE DATA      │
        │   REPRODUCTION PROCESS   │
        └─────────────────────────┘
                     │
                     ▼                          ⌇S771
        ┌─────────────────────────────────────┐
        │        RETRIEVE CONTENTS            │
        │      IDENTIFIER (EX. GAME ID)       │
        └─────────────────────────────────────┘
                     │
                     ▼                          ⌇S772
        ┌─────────────────────────────────────┐
        │   RETRIEVE RECORD REPRODUCING       │
        │    PLAYER IDENTIFIER (IDdev)        │
        └─────────────────────────────────────┘
                     │
                     ▼                          ⌇S773
        ┌─────────────────────────────────────┐
        │ RETRIEVE CONTENTS IDENTIFIER, (GAME ID),│
        │  RECORD REPRODUCING PLAYER IDENTIFIER,  │
        │  「YES/NO」 ON RECORD REPRODUCING PLAYER  │
        │  RESTRICTION FROM DATA MANAGEMENT FILE  │
        │   (HOWEVER, IN CASE RECORD REPRODUCING  │
        │  PLAYER IDENTIFIER IS NOT IDENTIFIED IN │
        │    THE SETTING FOR 「YES/NO」 ON RECORD   │
        │  REPRODUCING PLAYER RESTRICTION, THEN END)│
        └─────────────────────────────────────┘
                     │ YES
                     ▼                 ⌇S774
              ◇─────────────────◇          NO
             ◇ RECORD REPRODUCING ◇────────────────────┐
              ◇ PLAYER LIMITED?  ◇                      │
               ◇───────────────◇                        │
                     │                                  │
                     ▼           ⌇S775                  ▼           ⌇S778
        ┌─────────────────────────────┐   ┌─────────────────────────────┐
        │ CREATE SAVE DATA DECRYPT KEY │   │  RETRIEVE SYSTEM SHARED KEY  │
        │ Ksav BASED ON RECORD         │   │   (EX. SYSTEM SIGNATURE KEY  │
        │ REPRODUCING PLAYER IDENTIFIER│   │     Ksys) FROM RECORD        │
        │ (IDdev) RETRIEVED FROM RECORD│   │  REPRODUCING PLAYER, AND     │
        │ REPRODUCING PLAYER           │   │ CREATE SAVE DATA ENCRYPTION  │
        └─────────────────────────────┘   │ KEY Ksav BASED ON SYSTEM     │
                     │                     │ SHARED KEY (EX. SYSTEM       │
                     │                     │   SIGNATURE KEY)             │
                     │                     └─────────────────────────────┘
                     ▼           ⌇S776                  │
        ┌─────────────────────────────┐                │
        │ DECRYPT SAVE DATA USING SAVE │◀───────────────┘
        │   DATA DECRYPT KEY Ksav      │
        └─────────────────────────────┘
                     │
                     ▼           ⌇S777
        ┌─────────────────────────────┐
        │ EXECUTE REPRODUCING DECRYPTED SAVE DATA │
        │   BY RECORD REPRODUCING PLAYER │
        └─────────────────────────────┘
                     │
                     ▼
        ┌─────────────────────────┐
        │    SAVE DATA STORAGE     │        FIG. 79
        │    PROCESS FINISHED      │
        └─────────────────────────┘
```

(9) EXAMPLE OF SAVE DATA STORAGE PROCESS USING CONTENTS INDIVIDUAL KEY, RECORD REPRODUCING PLAYER INDIVIDUAL KEY, OR SYSTEM SHARED KEY

FIG. 80

EP 1 195 684 A1

DATA MANAGEMENT FILE (3)

| DATA NO. | CONTENTS IDENTIFIER (GAME ID) | RECORD REPRODUCING PLAYER IDENTIFIER (IDdev) | PROGRAM USE RESTRICTION | RECORD REPRODUCING PLAYER RESTRICTION |
|---|---|---|---|---|
| 1 | 123455678... | 56789012... | YES | NO |
| 2 | ABCDEF12... | 09876543... | YES | YES |
| 3 | 1122457678 | 58834762... | NO | YES |
| ⋮ | ⋮ | ⋮ | ⋮ | ⋮ |

FIG. 81

(10) EXAMPLE OF SAVE DATA REPRODUCTION PROCESS USING CONTENT UNIQUE KEY,
RECORDING AND REPRODUCING DEVICE UNIQUE KEY, OR SYSTEM COMMON KEY

( START SAVE DATA REPRODUCTION PROCESS )

READ OUT CONTENT ID (EX. GAME ID), AND RECORDING AND REPRODUCING DEVICE (IDdev) — S791

S792

READ CONTENT ID (GAME ID), RECORDING AND REPRODUCING DEVICE ID, PROGRAM LOCALIZATION (YES/NO), AND RECORDING
AND REPRODUCING DEVICE LOCALIZATION (YES/NO) OUT FROM DATA MANAGING FILE (PROCESS, HOWEVER, IS ENDED IF CONTENT
ID DOES NOT MATCH IN SETTINGS FOR SETTINGS FOR PROGRAM LOCALIZATION (YES), OR IF RECORDING AND REPRODUCING DEVICE
ID DOES NOT MATCH IN SETTINGS FOR RECORDING ANDREPRODUCING DEVICE LOCALIZATION (YES))

S793
PROGRAM
LOCALIZATION TO BE      NO
EXECUTED?

|YES

S794
RECORDING
AND REPRODUCING DEVICE      NO
LOCALIZATION TO BE
EXECUTED?

|YES        S796          S797       S798

S795
RECORD
REPRODUCING PLAYER      NO
LIMITED?

YES

S799

| GENERATE SAVE DATA ENCRYPTION KEY KSAVE BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kkev) | GENERATE SAVE DATA DECRYPTION KEY KSAVE BASED ON CONTENT UNIQUE KEY (EX. Kcon) | GENERATE SAVE DATA ENCRYPTION KEY KSAVE BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kdev) | READ SYSTEM COMMON KEY (EX. SYSTEM SIGNATURE KEY Ksys) OUT FROM RECORDING AND REPRODUCING DEVICE AND GENERATE SAVE DATA DECRYPTION KEY Ksav BASED ON SYSTEM COMMON KEY (EX. SYSTEMSIGNATURE KEY) |

DECRYPT SAVE DATA WITH SAVE DATA ENCRYPTION
KEY Ksav AND REPRODUCE AND EXECUTE THEM      S800

( END SAVE DATA REPRODUCTION PROCESS )

FIG. 82

EP 1 195 684 A1

(11) EXAMPLE OF SAVE DATA STORAGE PROCESS USING USER PASSWORD,
OR SYSTEM SHARED KEY

```
        ╭─────────────────────╮
        │   START SAVE DATA    │
        │   STORAGE PROCESS    │
        ╰─────────────────────╯
                  │
                  ▼                          ~S821
   ┌──────────────────────────────┐
   │     RETRIEVE CONTENTS         │
   │  IDENTIFIER (EX. GAME ID)     │
   └──────────────────────────────┘
                  │
                  ▼           ~S822
            ◇─────────────────◇         NO
           ◇   PROGRAM USE     ◇───────────────┐
            ◇ BY USER LIMITED? ◇               │
             ◇───────────────◇                 │
                  │ YES                         │
                  ▼              ~S823          ▼              ~S828
   ┌──────────────────────────────┐   ┌──────────────────────────────┐
   │     ENTER USER PASSWORD       │   │ RETRIEVE SYSTEM SHARED KEY    │
   └──────────────────────────────┘   │ (EX. SYSTEM SIGNATURE KEY     │
                  │                     │  Ksys) FROM RECORD            │
                  ▼              ~S824  │ REPRODUCING PLAYER, AND       │
   ┌──────────────────────────────┐   │ CREATE SAVE DATA ENCRYPTION    │
   │ CREATE SAVE DATA ENCRYPTION   │   │ KEY Ksav BASED ON SYSTEM      │
   │ KEY Ksav BASED ON INPUT       │   │ SHARED KEY (EX. SYSTEM        │
   │ USER PASSWORD                 │   │ SIGNATURE KEY)                │
   └──────────────────────────────┘   └──────────────────────────────┘
                  │              ~S825           │
                  ▼                              │
   ┌──────────────────────────────┐◄────────────┘
   │   ENCRYPT SAVE DATA USING SAVE │
   │   DATA ENCRYPTION KEY Ksav     │
   └──────────────────────────────┘
                  │              ~S826
                  ▼
   ┌──────────────────────────────┐
   │   STORE ENCRYPTED SAVE DATA   │
   │     IN RECORDING DEVICE       │
   └──────────────────────────────┘
                  │              ~S827
                  ▼
   ┌──────────────────────────────┐
   │ WRITE CONTENTS IDENTIFIER     │
   │ (GAME ID), RECORD REPRODUCING │
   │ PLAYER IDENTIFIER (ID),       │
   │ 「YES/NO」ON USER PROGRAM USE   │
   │ RESTRICTION IN DATA           │
   │ MANAGEMENT FILE               │
   └──────────────────────────────┘
                  │
                  ▼
        ╭─────────────────────╮
        │  SAVE DATA STORAGE   │
        │  PROCESS FINISHED    │
        ╰─────────────────────╯
```

FIG. 83

DATA MANAGEMENT FILE (4)

| DATA NO. | CONTENTS IDENTIFIER (GAME ID) | RECORD REPRODUCING PLAYER IDENTIFIER ($ID_{dev}$) | USER PROGRAM USE RESTRICTION |
|---|---|---|---|
| 1 | 123455678... | 56789012... | YES |
| 2 | ABCDEF12... | 09876543... | YES |
| 3 | 1122457678 | 58834762... | NO |
| ⋮ | ⋮ | ⋮ | ⋮ |

FIG. 84

EP 1 195 684 A1

(12) EXAMPLE OF SAVE DATA REPRODUCTION PROCESS USING USER PASSWORD,
OR SYSTEM SHARED KEY

```
        ┌─────────────────────────┐
        │   START SAVE DATA        │
        │ REPRODUCTION PROCESS     │
        └─────────────────────────┘
                    │
                    ▼                          ∿S831
        ┌─────────────────────────┐
        │    RETRIEVE CONTENTS     │
        │  IDENTIFIER (EX. GAME ID)│
        └─────────────────────────┘
                    │
                    ▼                          ∿S832
        ┌─────────────────────────┐
        │ RETRIEVE CONTENTS IDENTIFIER │
        │  (EX. GAME ID), 「YES/NO」ON USER│
        │ PROGRAM USE RESTRICTION FROM DATA│
        │     MANAGEMENT FILE      │
        └─────────────────────────┘
                    │
                    ▼              ∿S833
              ╱────────────╲          NO
             ╱   PROGRAM    ╲─────────────────┐
             ╲  USE LIMITED? ╱                │
              ╲────────────╱                  │
                    │ YES                     │
                    ▼              ∿S834       ▼              ∿S837
        ┌─────────────────────────┐  ┌─────────────────────────┐
        │   ENTER USER PASSWORD    │  │  RETRIEVE SYSTEM SHARED KEY │
        └─────────────────────────┘  │  (EX. SYSTEM SIGNATURE KEY  │
                    │                 │   Ksys FROM RECORD          │
                    ▼              ∿S835  REPRODUCING PLAYER, AND    │
        ┌─────────────────────────┐  │ CREATE SAVE DATA DECRYPTION │
        │ CREATE SAVE DATA DECRYPTION KEY Ksav │ KEY Ksav BASED ON SYSTEM │
        │  BASED ON INPUT USER PASSWORD │  │ SHARED KEY (EX. SYSTEM   │
        └─────────────────────────┘  │   SIGNATURE KEY)            │
                    │                 └─────────────────────────┘
                    ▼              ∿S836       │
        ┌─────────────────────────┐          │
        │ CREATE SAVE DATA DECRYPTION KEY Ksav │◄─────────┘
        │  BASED ON INPUT USER PASSWORD │
        └─────────────────────────┘
                    │
                    ▼              ∿S836
        ┌─────────────────────────┐
        │ EXECUTE REPRODUCING DECRYPTED SAVE DATA │
        │   WITH RECORD REPRODUCTION PLAYER │
        └─────────────────────────┘
                    │
                    ▼
        ┌─────────────────────────┐
        │  SAVE DATA REPRODUCTION  │
        │    PROCESS FINISHED      │
        └─────────────────────────┘
```

FIG. 85

EP 1 195 684 A1

RECORD REPRODUCING
PLAYER 〜300

RECORD REPRODUCING PLAYER
IDENTIFIER [IDdev]

MASTER KEY FOR
DISTRIBUTION KEY [MKdis]

MASTER KEY FOR RECORDING DEVICE
AUTHENTICATION KEY [MKake]

MASTER KEY FOR RECORD REPRODUCING
PLAYER SIGNATURE KEY [MKdev]

MEDIA 〜500

COMMUNICATION
MEANS
〜600

RECORDING
DEVICE 〜400

7701
CONTENTS ID
7702 REVOCATION LIST
7703 LIST CHECK VALUE ICVrev
・
・
・
CONTENTS
CONTENTS
CONTENTS

151

FIG. 86

CONTENTS OFFERED FROM MEDIA
(DVD, CD, ETC.)

CONTENTS OFFERED
FROM NETWORK

START

START

S901
DEMAND CONTENTS FROM MEDIA

S911
ESTABLISH COMMUNICATION SESSION
WITH DELIVERY SERVICE SIDE

S902
OBTAIN REVOCATION LIST INFORMATION

S903
VERIFY, PROCESS, EXECUTE REVOCATION
LIST CHECK VALUE ICV$_{rev}$

S904
VERIFIED OK? — NO

YES

S905
CREATE INTERMEDIATE CHECK VALUE
ICVT' FROM REVOCATION LIST CHECK
VALUE ICV$_{rev}$ AND PARTIAL CHECK
VALUE OF CONTENTS DATA, AND VERIFY,
EXECUTE VERIFICATION PROCESS ON
INTERMEDIATE CHECK VALUE

S906
INTERMEDIATE CHECK
VALUE VERIFIED OK? — NO

YES

S907
COINCIDES WITH
ENTRY ON LIST? — YES

NO

S909
ERROR

END

S908
START NORMAL PROCESS
(EX. PROGRAM EXECUTION PROCESS)

FIG. 87

152

CONTENTS OFFERED FROM RECORDING DEVICE
(MEMORY CARD, ETC.)

START

~S921

MUTUAL AUTHENTICATION PROCESS
(CF. FIG. 20)

~S922

MUTUAL
AUTHENTICATION
OK?

~S923

OBTAIN REVOCATION LIST INFORMATION

~S924

VERIFY, PROCESS, EXECUTE REVOCATION
LIST CHECK VALUE ICVrev

~S925

VERIFICATION OK? — NO

YES

~S926

CREATE INTERMEDIATE CHECK VALUE
ICVt' FROM REVOCATION LIST CHECK
VALUE ICVrev AND PARTIAL CHECK
VALUE OF CONTENTS DATA, AND
EXECUTE VERIFICATION PROCESS ON
INTERMEDIATE CHECK VALUE

~S927

INTERMEDIATE CHECK
VALUE VERIFIED OK? — NO

YES

~S928

COINCIDES WITH
ENTRY ON LIST? — YES

NO

~S929

START NORMAL PROCESS
(EX. PROGRAM EXECUTION PROCESS)

~S930

ERROR

END

FIG. 88

8004  8003

8001 PROCESSING UNIT

8002 MEMORY UNIT
(NONVOLATILE MEMORY)

8000 (A) SECURITY CHIP (IN
PRODUCTION PROCESS)

8003

INTERFACE FOR
EXTERNAL
CONNECTION

SECURITY
CHIP

OTHER
ELEMENTS

PERIPHERAL
DEVICES

(B) PRODUCTS WITH SECURITY CHIP INSTALLED
(EX. RECORD REPRODUCING PLAYER, RECORDING
DEVICE)

FIG. 89

EP 1 195 684 A1

SECURITY CHIP PRODUCTION
PROCESS FLOW

FIG. 90

(A) SECURITY CHIP
(IN PRODUCTION PROCESS)

(B) PRODUCTS WITH SECURITY CHIP INSTALLED
(EX. RECORD REPRODUCING PLAYER, RECORDING DEVICE)

FIG. 91

EP 1 195 684 A1

START DATA WRITING
PROCESS

↓

SET UP DATA WRITING MODE　～S961

↓

～S962

AUTHENTICATION
OK?　　NO　　→　　INTERRUPT PROCESS

↓ YES

～S963

OUTPUT SECRET DATA IN WRITE ONLY AREA
AND DATA WRITING COMMAND FOR CHECKING IN
READING/WRITING (RW) AREA TO PROCESSING UNIT

↓

～S964

PROCESSING UNIT EXECUTES WRITING SECRET
DATA IN WRITE ONLY (WO) AREA AND DATA FOR
CHECKING IN READING/WRITING (RW) AREA

↓

DATA WRITING
PROCESS FINISHED

FIG. 92

START CHECKING SECRET DATA
WRITTEN IN WRITE ONLY(WO)AREA

S971

ENCRYPTION PROCESS EXECUTED IN
PROCESSING UNIT,USING SECRET WRITTEN
DATA IN WRITE ONLY (WO) AREA

S972

RECEIVE RESULT OF ENCRYPTION
PROCESS FROM PROCESSING UNIT

S973

COMPARE RESULT OF ENCRYPTION PROCESS
USING (CONFIRMED) DATA WRITTEN IN
WRITE ONLY (WO) AREA WITH ENCRYPTION
PROCESS RESULT IN PROCESSING UNIT

S974

DATA COINCIDED?

NO → INTERRUPT PROCESS

YES

DATA CHECK
PROCESS FINISHED

FIG. 93

Explanation of Reference Numerals

106 - - main CPU, 107 - - RAM, 108 - - ROM, 109 - - AV processing unit, 110 - - input processing unit, 111 - - PIO, 112 - - SIO, 300 - - record reproduction player, 301 - - control unit, 302 - - encryption processing unit, 303 - - recording device controller, 304 - - read unit, 305 - - communication unit, 306 - - control unit, 307 - - internal memory, 308 - - encryption/decryption unit, 400 - - recording device, 401 - - encryption processing unit, 402 - - external memory, 403 - - control unit, 404 - - communication unit, 405 - - internal memory, 406 - - encryption/decryption unit, 407 -- external memory control unit, 500 - - media, 600 - - communication means, 2101, 2102, 2103 - - record reproduction player, 2104, 2105, 2106 - - recording device, 2901 - - command numbers management unit, 2902 - - command register, 2903, 2904 - - authentication flag, 3001 - - speaker, 3002 - - monitor, 3090 - - memory, 3091 - - contents analyzing unit, 3092 - - data memory unit, 3093 - program memory unit, 3094 - - compression/ decompression processing unit, 7701 - - contents data, 7702 revocation list, 7703 - - list check value, 8000 - - security chip, 8001 - - processing unit, 8002 - - memory unit, 8003 - - mode signal line, 8004 - - command signal line, 8201 - - read/write area, 8201 - write only area

## INTERNATIONAL SEARCH REPORT

| | International application No. |
|---|---|
| | PCT/JP01/00525 |

| A. CLASSIFICATION OF SUBJECT MATTER |
|---|
| Int.Cl$^7$ G06F12/14, G09C1/00, H04L9/00 |

According to International Patent Classification (IPC) or to both national classification and IPC

| B. FIELDS SEARCHED |
|---|
| Minimum documentation searched (classification system followed by classification symbols) |
| Int.Cl$^7$ G06F12/14, G09C1/00, H04L9/00 |

Documentation searched other than minimum documentation to the extent that such documents are included in the fields searched

| Jitsuyo Shinan Koho | 1922-1996 | Kokai Jitsuyo Shinan Koho | 1971-2001 |
|---|---|---|---|
| Jitsuyo Shinan Toroku Koho | 1996-2001 | Toroku Jitsuyo Shinan Koho | 1994-2001 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| EX | JP, 2000-181803, A (Fujitsu Limited),<br>30 June, 2000 (30.06.00) (Family: none) | 1,8,12,16,17 |
| EX | JP, 2000-330870, A (Toshiba Corporation),<br>30 November, 2000 (30.11.00) (Family: none) | 2,3,9,13 |
| EX | JP, 2000-341265, A (Matsushita Electric Ind. Co., Ltd.),<br>08 December, 2000 (08.12.00) (Family: none) | 4,5,10,14 |
| EX | JP, 2000-285026, A (Ricoh Company, Ltd.),<br>13 October, 2000 (13.10.00) (Family: none) | 6,7,11,15 |
| EX | JP, 2000-196582, A (Nippon Telegr. & Teleph. Corp. <NTT>),<br>14 July, 2000 (14.07.00) (Family: none) | 1,8,12,16,17 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 April, 2001 (18.04.01) | 01 May, 2001 (01.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)